(19) Europäisches Patentamt / European Patent Office / Office européen des brevets

(11) **EP 4 063 907 A1**

(12) **EUROPEAN PATENT APPLICATION**
published in accordance with Art. 153(4) EPC

(43) Date of publication:
**28.09.2022 Bulletin 2022/39**

(51) International Patent Classification (IPC):
**G01S 13/02** (2006.01)       **G01S 7/41** (2006.01)

(21) Application number: **20900934.9**

(52) Cooperative Patent Classification (CPC):
**G01S 7/02; G01S 7/41; G01S 13/02; G01S 13/08; G01S 13/58**

(22) Date of filing: **18.12.2020**

(86) International application number:
**PCT/CN2020/137456**

(87) International publication number:
**WO 2021/121358 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.12.2019 CN 201911330617**

(71) Applicant: **Huawei Technologies Co., Ltd.**
**Shenzhen, Guangdong 518129 (CN)**

(72) Inventors:
• **LIU, Chenchen**
  **Shenzhen, Guangdong 518129 (CN)**
• **YANG, Yang**
  **Chengdu, Sichuan 611756 (CN)**
• **LEI, Xianfu**
  **Chengdu, Sichuan 611756 (CN)**
• **WANG, Yong**
  **Chengdu, Sichuan 611756 (CN)**
• **DU, Rui**
  **Shenzhen, Guangdong 518129 (CN)**
• **HAN, Xiao**
  **Shenzhen, Guangdong 518129 (CN)**
• **YAN, Min**
  **Shenzhen, Guangdong 518129 (CN)**
• **LIN, Wei**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **DATA PROCESSING METHOD AND APPARATUS, AND DEVICE**

(57)    A data processing method and apparatus, and a device are provided. The method includes: obtaining a sequence set, where the sequence set includes a plurality of sequences, there is at least one first sequence in the plurality of sequences, an auto-ambiguity function of each first sequence is in a drawing pin form, and side lobe energy of a cross-ambiguity function between each first sequence and another sequence in the sequence set is less than a first threshold; and sending a signal based on a sequence in the sequence set, where the signal is used for velocity measurement and/or ranging. In this way, accuracy of performing measurement by a radar is improved.

FIG. 8

## Description

This application claims priority to Chinese Patent Application No. 201911330617.9, filed with the China National Intellectual Property Administration on December 20, 2019 and entitled "DATA PROCESSING METHOD AND APPARATUS, AND DEVICE", which is incorporated herein by reference in its entirety.

## TECHNICAL FIELD

This application relates to the field of communication technologies, and in particular, to a data processing method and apparatus, and a device.

## BACKGROUND

When velocity measurement or ranging is performed by a radar, the radar may usually send a signal based on a pre-designed sequence, to implement velocity measurement or ranging.

In a related technology, a phase of each element in the sequence may be first initialized, a derivative of the phase of each element may be found by using a sum of side lobe energy of an ambiguity function of the sequence, to obtain a phase derivative vector of the sequence, and the sequence may be updated by selecting an appropriate step length factor by using the vector, to obtain an updated sequence, and the radar sends a signal based on the updated sequence. However, in the foregoing process, only one sequence can be generated at a time, and generated sequences are independent of each other. Consequently, there is relatively low accuracy of performing measurement (for example, velocity measurement or ranging) by the radar based on the sequence.

## SUMMARY

This application provides a data processing method and apparatus, and a device, to improve accuracy of performing measurement by a radar.

According to a first aspect, an embodiment of this application provides a data processing method. The method includes: obtaining a sequence set, where the sequence set includes a plurality of sequences, there is at least one first sequence in the plurality of sequences, an auto-ambiguity function of each first sequence is in a drawing pin form, and side lobe energy of a cross-ambiguity function between each first sequence and another sequence in the sequence set is less than a first threshold; and sending a signal based on a sequence in the sequence set, where the signal is used for velocity measurement and/or ranging.

In the foregoing process, the auto-ambiguity function of the first sequence in the sequence set is in the drawing pin form, and therefore in a process of performing measurement (for example, velocity measurement or ranging) by a radar based on the first sequence, the following case may occur: When a delay added to a transmitted signal is the same as a delay to which a reflected signal is subject, and a Doppler frequency shift added to the transmitted signal is the same as a Doppler frequency shift to which the reflected signal is subject, there is a highest (a peak in the drawing pin form) correlation (an amplitude of an autocorrelation function) between the transmitted signal to which the delay and the Doppler frequency shift are added and the reflected signal. When a delay added to a transmitted signal is different from a delay to which a reflected signal is subject, or a Doppler frequency shift added to a transmitted signal is different from a Doppler frequency shift to which a reflected signal is subject, a correlation (an amplitude of an autocorrelation function) between the transmitted signal to which the delay and the Doppler frequency shift are added and the reflected signal is greatly reduced (a bottom in the drawing pin form). In this way, in the process of performing measurement (for example, velocity measurement or ranging) by the radar, an accurate delay and Doppler frequency shift may be determined, and therefore there may be relatively high precision of performing measurement (for example, velocity measurement or ranging) by the radar. The side lobe energy of the cross-ambiguity function between the first sequence in the sequence set and the another sequence in the sequence set is less than the first threshold. Therefore, when the radar simultaneously sends signals based on a plurality of sequences in the sequence set, there may be relatively weak interference between the signals, thereby improving accuracy of performing measurement (for example, velocity measurement or ranging) by the radar.

In a possible implementation, when a delay falls within a first preset range and a Doppler frequency shift falls within a second preset range, the auto-ambiguity function of the first sequence is in the drawing pin form, and the side lobe energy of the cross-ambiguity function between the first sequence and the another sequence in the sequence set is less than the first threshold.

In the foregoing process, it is required that only in a local range (the delay falls within the first preset range and the Doppler frequency shift falls within the second preset range), the auto-ambiguity function of the first sequence is in the drawing pin form, and the side lobe energy of the cross-ambiguity function between the first sequence and the another sequence in the sequence set is less than the first threshold. In this way, there may be relatively low difficulty in designing the first sequence.

In a possible implementation, that an auto-ambiguity function of the first sequence is in a drawing pin form may mean that when the delay is not equal to 0 or the Doppler frequency shift is not equal to 0, an amplitude of the auto-ambiguity function of the first sequence is less than an amplitude, of the auto-ambiguity function of the sequence, that exists when the delay is 0 and the Doppler frequency shift is 0.

In the foregoing process, when the auto-ambiguity function of the first sequence and the cross-ambiguity function meet the foregoing conditions, in the process of performing measurement (for example, velocity measurement or ranging) by the radar, when the delay added to the transmitted signal is exactly the same as the delay to which the reflected signal is subject, and the Doppler frequency shift added to the transmitted signal is exactly the same as the Doppler frequency shift to which the reflected signal is subject, there is a highest correlation between the transmitted signal to which the delay and the Doppler frequency shift are added and the reflected signal. Provided that the delay added to the transmitted signal is slightly different from the delay to which the reflected signal is subject, or the Doppler frequency shift added to the transmitted signal is slightly different from the Doppler frequency shift to which the reflected signal is subject, the correlation between the transmitted signal to which the delay and the Doppler frequency shift are added and the reflected signal is greatly reduced. In this way, in the process of performing measurement (for example, velocity measurement or ranging) by the radar, an accurate delay and Doppler frequency shift may be determined, and therefore there is relatively high precision of performing measurement (for example, velocity measurement or ranging) by the radar.

In a possible implementation, a quantity of first sequences is the same as a quantity of sequences included in the sequence set.

In the foregoing process, each sequence in the sequence set is a first sequence. That is, for any sequence in the sequence set, an auto-ambiguity function of the sequence is in the drawing pin form, and side lobe energy of a cross-ambiguity function between the sequence and another sequence in the sequence set is less than the first threshold. In this way, there is relatively high precision of performing measurement by the radar based on any sequence in the sequence set.

In a possible implementation, elements in any sequence in the sequence set have a same amplitude. In this way, difficulty in designing the sequence may be simplified, and the radar may perform measurement by using the sequence with relatively high convenience.

In a possible implementation, the first threshold is between 35 decibels and 45 decibels.

In a possible implementation, the first threshold is 40 decibels.

In the foregoing process, when the first threshold is between 35 decibels and 45 decibels, there may be relatively weak interference between different sequences, and therefore the radar may relatively accurately distinguish between the different sequences. When the first threshold is between 35 decibels and 45 decibels, there may further be relatively low difficulty in designing the plurality of sequences.

In a possible implementation, a length of the sequence is any one of the following lengths: 128, 256, 512, 1024, or 2048.

In a possible implementation, the sequence set includes two, three, or four sequences.

According to a second aspect, an embodiment of this application provides a sequence generation method. The method includes: obtaining a sequence set, where the sequence set includes M sequences, and M is an integer greater than 1; and updating an $m^{th}$ sequence in the sequence set based on the sequence set, and updating an updated $m^{th}$ sequence to the sequence set, where m is sequentially 1, 2, ..., and M, and side lobe energy of the updated $m^{th}$ sequence is less than or equal to side lobe energy of the $m^{th}$ sequence before the update.

In the foregoing process, the sequences in the initial sequence set are iteratively updated for a plurality of times, to obtain an updated sequence set. In each update iteration process, any sequence is updated based on another sequence in the sequence set. In a sequence generation process, a plurality of sequences in the sequence set may be simultaneously generated, so that there is relatively high sequence generation efficiency.

In a possible implementation, there is at least one first sequence in a plurality of sequences in the updated sequence set, an auto-ambiguity function of each first sequence is in a drawing pin form, and side lobe energy of a cross-ambiguity function between each first sequence and another sequence in the sequence set is less than a first threshold. In this way, when a radar performs measurement (for example, velocity measurement or ranging) by using a sequence in the sequence set, there may be relatively high measurement accuracy.

In a possible implementation, the side lobe energy of the $m^{th}$ sequence includes side lobe energy of an auto-ambiguity function of the $m^{th}$ sequence and side lobe energy of a cross-ambiguity function between the $m^{th}$ sequence and another sequence in the sequence set.

In a possible implementation, the updating an $m^{th}$ sequence in the sequence set based on the sequence set includes:

obtaining first information based on (M-1) sequences in the sequence set, where the (M-1) sequences are sequences other than the m$^{th}$ sequence in the sequence set;
obtaining second information based on the m$^{th}$ sequence; and
determining the updated m$^{th}$ sequence based on the first information and the second information.

In a possible implementation, the first information meets the following formula:

$$\mathbf{C}_{\mathbf{s}_m^{(t)}} = \frac{1}{|P|}\sum_{\substack{m'=1 \\ m'\neq m}}^{M}\sum_{p\in P}\sum_{k\in K} w_c(k,p)[\mathbf{U}_{k,p}^H \mathbf{s}_{m'}^{(t)}(\mathbf{s}_{m'}^{(t)})^H \mathbf{U}_{k,p} + \mathbf{U}_{k,p}\mathbf{s}_{m'}^{(t)}(\mathbf{s}_{m'}^{(t)})^H \mathbf{U}_{k,p}^H],$$

, where $C_{s_m^{(t)}}$ is the first information, $|P|$ is a quantity of Doppler frequency shifts included in a Doppler frequency shift set, M is a quantity of sequences included in the sequence set, $S_m^{(t)}$ is an m$^{th}$ sequence in a t$^{th}$ iteration process, $(*)^H$ is a conjugate transpose of $(*)$, $w_c(k,p)$ is a weight value of a cross-ambiguity function, $\mathbf{U}_{k,p} = \mathbf{J}_k\Lambda_p$, $\Lambda_p = \mathrm{Diag}\left(\left[e^{j2\pi\frac{p}{N}\cdot1}, e^{j2\pi\frac{p}{N}\cdot2}, \cdots, e^{j2\pi\frac{p}{N}\cdot N}\right]\right)$, N is a quantity of elements included in the sequence, and $J_k$ is a shift matrix of an identity matrix.

In a possible implementation, the second information meets the following formula: $\mathbf{A}_{\mathbf{s}_m^{(t)}} = \mathbf{Q}_{\mathbf{s}_m^{(t)}} + \left[\mathbf{Q}_{\mathbf{s}_m^{(t)}}\right]^H$,

where $A_{s_m^{(t)}}$ is the second information, $\mathbf{Q}_{\mathbf{s}_m^{(t)}} = \frac{1}{|P|}\sum_{p\in P}\sum_{k\in K} w_a(k,p)\left[\mathbf{s}_m^{(t)}\right]^H \mathbf{U}_{k,p}^H \mathbf{s}_m^{(t)}\mathbf{U}_{k,p} - \lambda_\mathbf{U}\mathbf{s}_m^{(t)}\left[\mathbf{s}_m^{(t)}\right]^H$, $|P|$ is the quantity of Doppler frequency shifts included in the Doppler frequency shift set, $S_m^{(t)}$ is the m$^{th}$ sequence in the t$^{th}$ iteration process, $(*)^H$ is the conjugate transpose of $(*)$, $w_a(k,p)$ is a weight value of an auto-ambiguity function,

$\mathbf{U}_{k,p} = \mathbf{J}_k\Lambda_p$, $\Lambda_p = \mathrm{Diag}\left(\left[e^{j2\pi\frac{p}{N}\cdot1}, e^{j2\pi\frac{p}{N}\cdot2}, \cdots, e^{j2\pi\frac{p}{N}\cdot N}\right]\right)$, N is the quantity of elements included in the sequence, $J_k$ is the shift matrix of the identity matrix, $\lambda_u$ is an eigenvalue greater than or equal to a maximum eigenvalue of a matrix U, the matrix U is $\mathbf{U} = \frac{1}{|P|}\sum_{p\in P}\sum_{k\in K} w_a(k,p)\,\mathrm{vec}(\mathbf{U}_{k,p})\,\mathrm{vec}(\mathbf{U}_{k,p})^H$, and vec() represents a column vectorization operation.

In a possible implementation, the determining the updated m$^{th}$ sequence based on the first information and the second information includes:

determining a first reference sequence and a second reference sequence based on the first information, the second information, and the m$^{th}$ sequence; and
determining the updated m$^{th}$ sequence based on the first reference sequence, the second reference sequence, and the m$^{th}$ sequence.

In a possible implementation, the first reference sequence meets the following formula:

$$\mathbf{s}_{ac1} = e^{j\arg((\lambda_m^{(t)}\mathbf{I}_N - (\mathbf{A}_{\mathbf{s}_m^{(t)}} + \mathbf{C}_{\mathbf{s}_{m'}^{(t)}})\mathbf{s}_m^{(t)}))}$$, where

$S_{ac1}$ is the first reference sequence, $\lambda_m^{(t)}$ is greater than or equal to a maximum eigenvalue of $\mathbf{A}_{\mathbf{s}_m^{(t)}} + \mathbf{C}_{\mathbf{s}_{m'}^{(t)}}$, $I_N$ is the identity matrix, $A_{s_m^{(t)}}$ is the second information, $C_{s_{m'}^{(t)}}$ is determined based on the formula met by the first information, and $S_m^{(t)}$ is the m$^{th}$ sequence in the t$^{th}$ iteration process.

In a possible implementation, the second reference sequence meets the following formula:

$$\mathbf{s}_{ac2} = e^{j\arg((\lambda_{ac1}\mathbf{I}_N - (\mathbf{A}_{\mathbf{s}_{ac1}} + \mathbf{C}_{\mathbf{s}_m^{(t)}})\mathbf{s}_{ac1}))}$$, where

$S_{ac2}$ is the second reference sequence, $S_{ac1}$ is the first reference sequence, $\lambda_{ac1}$ is a maximum eigenvalue of $\mathbf{A}_{\mathbf{s}_{ac1}} + \mathbf{C}_{\mathbf{s}_m^{(t)}}$

, $I_N$ is the identity matrix, $A_{S_{ac1}}$ is determined based on the formula met by the second information, $C_{S_{m'}^{(t)}}$ is determined based on the formula met by the first information, and $S_{m'}^{(t)}$ is an m'th sequence in the tth iteration process.

In a possible implementation, the updated mth sequence meets the following formula: $\mathbf{S}_{ac} = e^{j\arg(\mathbf{s}_m^{(t)} - 2\alpha\mathbf{r} + \alpha^2\mathbf{v})}$, where

$S_{ac}$ is the updated mth sequence, $S_m^{(t)}$ is the mth sequence in the tth iteration process, $\mathbf{r} = \mathbf{s}_{ac1} - \mathbf{s}_m^{(t)}$, $\mathbf{v} = \mathbf{s}_{ac2} - \mathbf{s}_{ac1} - \mathbf{r}$, $S_{ac2}$ is the second reference sequence, $S_{ac1}$ is the first reference sequence, and $\alpha = -\|\mathbf{r}\|/\|\mathbf{v}\|$.

In a possible implementation, the side lobe energy of the mth sequence before the update meets the following

formula: $\frac{1}{|P|}\sum_{p\in P}\sum_{k\in K}w_a(k,p)\left|(\mathbf{s}_m^{(t)})^H\mathbf{U}_{k,p}\mathbf{s}_m^{(t)}\right|^2 + (\mathbf{s}_m^{(t)})^H\mathbf{C}_{s_m^{(t)}}\mathbf{s}_m^{(t)}$, where

P is the quantity of Doppler frequency shifts included in the Doppler frequency shift set, $w_a(k,p)$ is the weight value of the auto-ambiguity function, $S_m^{(t)}$ is the mth sequence in the tth iteration process, $\mathbf{U}_{k,p} = \mathbf{J}_k\Lambda_p$,

$\Lambda_p = \mathrm{Diag}\left(\left[e^{j2\pi\frac{p}{N}\cdot 1}, e^{j2\pi\frac{p}{N}\cdot 2}, \cdots, e^{j2\pi\frac{p}{N}\cdot N}\right]\right)$, N is the quantity of elements included in the sequence, $J_k$ is the shift matrix of the identity matrix, $C_{s_m^{(t)}}$ is the first information, and $(*)^H$ is the conjugate transpose of $(*)$.

In a possible implementation, the side lobe energy of the updated mth sequence meets the following formula:

$\frac{1}{|P|}\sum_{p\in P}\sum_{k\in K}w_a(k,p)\left|(S_{ac})^H U_{k,p}S_{ac}\right|^2 + (S_{ac})^H C_{S_{ac}}S_{ac}$, where

$|P|$ is the quantity of Doppler frequency shifts included in the Doppler frequency shift set, $w_a(k,p)$ is the weight value of the auto-ambiguity function, $S_{ac}$ is the updated mth sequence, $\mathbf{U}_{k,p} = \mathbf{J}_k\Lambda_p$, $\Lambda_p = \mathrm{Diag}\left(\left[e^{j2\pi\frac{p}{N}\cdot 1}, e^{j2\pi\frac{p}{N}\cdot 2}, \cdots, e^{j2\pi\frac{p}{N}\cdot N}\right]\right)$

, N is the quantity of elements included in the sequence, $J_k$ is the shift matrix of the identity matrix, $C_{S_{ac}}$ is determined based on the formula met by the first information, and $(*)^H$ is the conjugate transpose of $(*)$.

According to a third aspect, an embodiment of this application provides a data processing apparatus, including a processing unit and a sending unit.

The processing unit is configured to obtain a sequence set. The sequence set includes a plurality of sequences, and there is at least one first sequence in the plurality of sequences. An auto-ambiguity function of each first sequence is in a drawing pin form, and side lobe energy of a cross-ambiguity function between each first sequence and another sequence in the sequence set is less than a first threshold.

The sending unit is configured to send a signal based on a sequence in the sequence set. The signal is used for velocity measurement and/or ranging.

In a possible implementation, when a delay falls within a first preset range and a Doppler frequency shift falls within a second preset range, the auto-ambiguity function of the first sequence is in the drawing pin form, and the side lobe energy of the cross-ambiguity function between the first sequence and the another sequence in the sequence set is less than the first threshold.

In a possible implementation, when the delay is not equal to 0 or the Doppler frequency shift is not equal to 0, an amplitude of the auto-ambiguity function of the first sequence is less than an amplitude, of the auto-ambiguity function of the sequence, that exists when the delay is 0 and the Doppler frequency shift is 0.

In a possible implementation, elements in any sequence in the sequence set have a same amplitude.

In a possible implementation, a quantity of first sequences is the same as a quantity of sequences included in the sequence set.

The data processing apparatus provided in the third aspect is configured to perform any one of the first aspect or the possible implementations of the first aspect. For specific details, refer to the any one of the first aspect or the possible implementations of the first aspect. Details are not described herein.

According to a fourth aspect, an embodiment of this application provides a data processing apparatus, including a processor and a transceiver that is internally connected to and communicates with the processor.

The processor is configured to obtain a sequence set. The sequence set includes a plurality of sequences, and there is at least one first sequence in the plurality of sequences. An auto-ambiguity function of each first sequence is in a drawing pin form, and side lobe energy of a cross-ambiguity function between each first sequence and another sequence in the sequence set is less than a first threshold.

The transceiver is configured to send a signal based on a sequence in the sequence set. The signal is used for velocity measurement and/or ranging.

In a possible implementation, when a delay falls within a first preset range and a Doppler frequency shift falls within a second preset range, the auto-ambiguity function of the first sequence is in the drawing pin form, and the side lobe energy of the cross-ambiguity function between the first sequence and the another sequence in the sequence set is less than the first threshold.

In a possible implementation, when the delay is not equal to 0 or the Doppler frequency shift is not equal to 0, an amplitude of the auto-ambiguity function of the first sequence is less than an amplitude, of the auto-ambiguity function of the sequence, that exists when the delay is 0 and the Doppler frequency shift is 0.

In a possible implementation, elements in any sequence in the sequence set have a same amplitude.

In a possible implementation, a quantity of first sequences is the same as a quantity of sequences included in the sequence set.

The data processing apparatus provided in the fourth aspect is configured to perform any one of the first aspect or the possible implementations of the first aspect. For specific details, refer to the any one of the first aspect or the possible implementations of the first aspect. Details are not described herein.

According to a fifth aspect, an embodiment of this application provides a data processing apparatus. The apparatus includes a processing circuit and an output interface that is internally connected to and communicates with the processing circuit. The processing circuit is configured to obtain a sequence set. The sequence set includes a plurality of sequences, and there is at least one first sequence in the plurality of sequences. An auto-ambiguity function of each first sequence is in a drawing pin form, and side lobe energy of a cross-ambiguity function between each first sequence and another sequence in the sequence set is less than a first threshold. The output interface is configured to send a signal based on a sequence in the sequence set. The signal is used for velocity measurement and/or ranging.

The data processing apparatus provided in the fifth aspect is configured to perform any one of the first aspect or the possible implementations of the first aspect. For specific details, refer to the any one of the first aspect or the possible implementations of the first aspect. Details are not described herein.

According to a sixth aspect, an embodiment of this application provides a computer-readable storage medium, configured to store a computer program. The computer program includes instructions used to perform any one of the first aspect or the possible implementations of the first aspect.

According to a seventh aspect, an embodiment of this application provides a computer program, and the computer program includes instructions used to perform any one of the first aspect or the possible implementations of the first aspect.

According to an eighth aspect, an embodiment of this application provides a sequence generation apparatus. The sequence generation apparatus includes a unit configured to perform any one of the second aspect or the possible implementations of the second aspect.

The sequence generation apparatus provided in the eighth aspect is configured to perform the any one of the second aspect or the possible implementations of the second aspect. For specific details, refer to the any one of the second aspect or the possible implementations of the second aspect. Details are not described herein.

According to a ninth aspect, an embodiment of this application provides a sequence generation apparatus, including a processor. The processor is configured to perform any one of the second aspect or the possible implementations of the second aspect.

The sequence generation apparatus provided in the ninth aspect is configured to perform the any one of the second aspect or the possible implementations of the second aspect. For specific details, refer to the any one of the second aspect or the possible implementations of the second aspect. Details are not described herein.

According to a tenth aspect, an embodiment of this application provides a sequence generation apparatus. The apparatus includes a processing circuit and an output interface that is internally connected to and communicates with the processing circuit. The processing circuit is configured to generate a sequence set based on any one of the second aspect or the possible implementations of the second aspect. The output interface is configured to output the sequence set.

The sequence generation apparatus provided in the tenth aspect is configured to perform the any one of the second aspect or the possible implementations of the second aspect. For specific details, refer to the any one of the second aspect or the possible implementations of the second aspect. Details are not described herein.

According to an eleventh aspect, an embodiment of this application provides a computer-readable storage medium, configured to store a computer program. The computer program includes instructions used to perform any one of the second aspect or the possible implementations of the second aspect.

## EP 4 063 907 A1

According to a twelfth aspect, an embodiment of this application provides a computer program, and the computer program includes instructions used to perform any one of the second aspect or the possible implementations of the second aspect.

The embodiments of this application provide the data processing method and apparatus, and the device. The method includes: obtaining a sequence set, where the sequence set includes a plurality of sequences, there is at least one first sequence in the plurality of sequences, an auto-ambiguity function of each first sequence is in a drawing pin form, and side lobe energy of a cross-ambiguity function between each first sequence and another sequence in the sequence set is less than a first threshold; and sending a signal based on a sequence in the sequence set, where the signal is used for velocity measurement and/or ranging. The auto-ambiguity function of the first sequence in the sequence set is in the drawing pin form, and therefore in a process of performing measurement (for example, velocity measurement or ranging) by a radar based on the first sequence, the following case may occur: When a delay added to a transmitted signal is the same as a delay to which a reflected signal is subject, and a Doppler frequency shift added to the transmitted signal is the same as a Doppler frequency shift to which the reflected signal is subject, there is a highest (a peak in the drawing pin form) correlation (an amplitude of an autocorrelation function) between the transmitted signal to which the delay and the Doppler frequency shift are added and the reflected signal. When a delay added to a transmitted signal is different from a delay to which a reflected signal is subject, or a Doppler frequency shift added to a transmitted signal is different from a Doppler frequency shift to which a reflected signal is subject, a correlation (an amplitude of an autocorrelation function) between the transmitted signal to which the delay and the Doppler frequency shift are added and the reflected signal is greatly reduced (a bottom in the drawing pin form). In this way, in the process of performing measurement (for example, velocity measurement or ranging) by the radar, an accurate delay and Doppler frequency shift may be determined, and therefore there may be relatively high precision of performing measurement (for example, velocity measurement or ranging) by the radar. The side lobe energy of the cross-ambiguity function between the first sequence in the sequence set and the another sequence in the sequence set is less than the first threshold. Therefore, when the radar simultaneously sends signals based on a plurality of sequences in the sequence set, there may be relatively weak interference between the signals, thereby improving accuracy of performing measurement (for example, velocity measurement or ranging) by the radar.

## BRIEF DESCRIPTION OF DRAWINGS

FIG. 1 is a schematic diagram of a working process of a radar according to an embodiment of this application;

FIG. 2A and FIG. 2B are a schematic flowchart of a sequence generation method according to an embodiment of this application;

FIG. 3 is a schematic diagram of an auto-ambiguity function of a sequence according to an embodiment of this application;

FIG. 4 is a schematic diagram of a cross-ambiguity function between sequences according to an embodiment of this application;

FIG. 5A is a schematic diagram of an auto-AF of a sequence 1 according to an embodiment of this application;

FIG. 5B is a schematic diagram of a cross-AF between a sequence 1 and a sequence 2 according to an embodiment of this application;

FIG. 5C is a schematic diagram of a cross-AF between a sequence 1 and a sequence 3 according to an embodiment of this application;

FIG. 6A is a schematic diagram of a cross-AF between a sequence 2 and a sequence 1 according to an embodiment of this application;

FIG. 6B is a schematic diagram of an auto-AF of a sequence 2 according to an embodiment of this application;

FIG. 6C is a schematic diagram of a cross-AF between a sequence 2 and a sequence 3 according to an embodiment of this application;

FIG. 7A is a schematic diagram of a cross-AF between a sequence 3 and a sequence 1 according to an embodiment of this application;

FIG. 7B is a schematic diagram of a cross-AF between a sequence 3 and a sequence 2 according to an embodiment of this application;

FIG. 7C is a schematic diagram of an auto-AF of a sequence 3 according to an embodiment of this application;

FIG. 8 is a schematic flowchart of a data processing method according to an embodiment of this application; and

FIG. 9 is a schematic diagram of a structure of a data processing apparatus according to an embodiment of this application.

7

**DESCRIPTION OF EMBODIMENTS**

For ease of understanding, concepts in this application are first described.

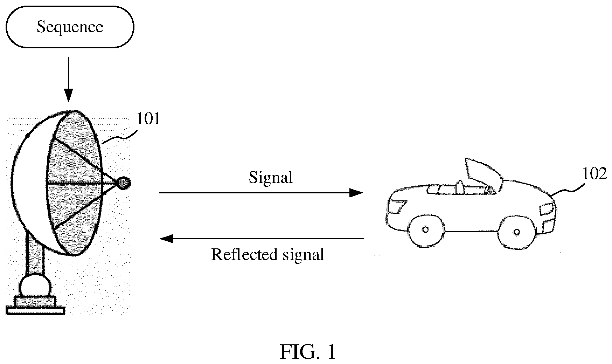

A radar is an electronic device that detects a target object by using an electromagnetic wave, and the radar may perform velocity measurement and/or ranging. For example, the target object may be a person, a vehicle, or an aircraft. A working process of the radar is described below with reference to FIG. 1.

FIG. 1 is a schematic diagram of a working process of a radar according to an embodiment of this application. FIG. 1 includes a radar 101 and a target object 102, In FIG. 1, description is provided by using an example in which the target object 102 is a vehicle. A sequence may be input into the radar 101. When the radar measures a velocity and/or a range of the target object 102, the radar may generate a signal based on the sequence, and transmit (or send) the signal. After the signal reaches the target object 102, the signal is reflected to the radar 101. The radar 101 may measure a range between the radar 101 and the target object 102 or the velocity of the target object 102 based on the transmitted signal and a received reflected signal.

The radar may measure the range and/or the velocity based on the transmitted signal (transmitted signal) and the reflected signal in the following manner: After the radar receives the reflected signal from the target object, the radar may add a delay and a Doppler frequency shift to the transmitted signal, and obtain a correlation between the signal to which the delay and the Doppler frequency shift are added and the reflected signal. For example, when the delay and the Doppler frequency shift are added to the transmitted signal, all delays and Doppler frequency shifts may be traversed until it is determined, when the correlation between the signal to which the delay and the Doppler frequency shift are added and the reflected signal is greater than a preset threshold, that the delay and the Doppler frequency shift added to the transmitted signal are correct, and then the velocity and/or the range of the target object may be determined based on the delay and the Doppler frequency shift.

A sequence includes a plurality of elements, and each element may have an amplitude and a phase. A length of the sequence refers to a quantity of elements included in the sequence. For example, the length of the sequence may be 128, 256, 512, 1024, or 2048. For example, if the length of the sequence is 128, the sequence may include 128 elements, an amplitude of each element may be 1, and phases of the 128 sequences may be sequentially 2.3873, 0.0816, ..., -1.3634, -0.3147, -2.45, and 2.2638.

An auto-ambiguity function (ambiguity function, AF) refers to a correlation between a first signal and a second signal. The second signal is a signal obtained after the first signal is affected by a delay and a Doppler frequency shift.

A cross-ambiguity function refers to a correlation between a first signal and a second signal. The first signal is a signal obtained after a third signal is affected by a delay and a Doppler frequency shift, and the third signal and the second signal are located in a same sequence set.

Side lobe energy refers to a weighted average of amplitudes of an ambiguity function in a preset region (a region in which a delay falls within a preset range and a Doppler frequency shift falls within a preset range).

In an actual application process, precision of performing velocity measurement and/or ranging by a radar is related to a sequence on which transmission of a signal by the radar is based. Therefore, to improve the precision of performing velocity measurement and/or ranging by the radar, the sequence may be optimized. A process of generating a sequence set in this application is described below.

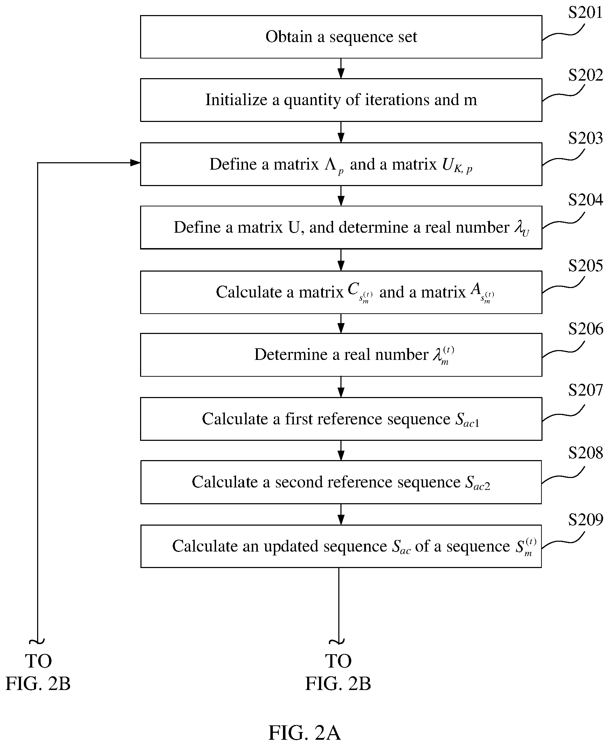

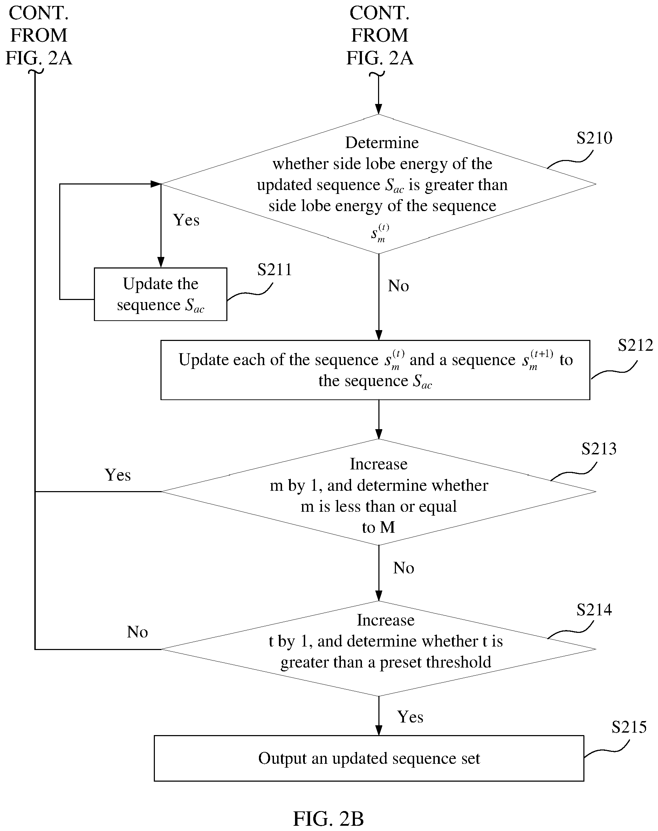

FIG. 2A and FIG. 2B are a schematic flowchart of a sequence generation method according to an embodiment of this application. As shown in FIG. 2A and FIG. 2B, the method may include the following steps.

S201. Obtain a sequence set.

The sequence set may also be referred to as an initial sequence set or an initialized sequence set.

The sequence set may be denoted as S = {$S_m$: m = 1,2, ... , M}, where $\left|S_m^{(0)}(n)\right| = 1$ , and n=1, 2, ..., and N.

Herein, M is a quantity of sequences included in the sequence set, and $S_m$ is an $m^{th}$ sequence in the sequence set.

Each sequence includes N elements, in other words, a length of the sequence is N, and $S_m(n)$ is an $n^{th}$ element in the $m^{th}$ sequence. $S_m^{(t)}(n)$ is an $n^{th}$ element in an $m^{th}$ sequence after a $t^{th}$ iteration, $S_m^{(0)}(n)$ is an $n^{th}$ element in an $m^{th}$ sequence during initialization, and $\left|S_m^{(0)}(n)\right|$ is an amplitude of $S_m^{(0)}(n)$ .

S202. Initialize a quantity of iterations and m.

The quantity of iterations may be denoted as t, and after initialization, t is 0, and m is 1.

S203. Define a matrix $\Lambda_p$ and a matrix $U_{k,p}$.

A delay set K is determined, and the delay set includes a plurality of delays. For example, the delay set may be K={-10, -9, ..., 9, 10}.

A Doppler frequency shift set P is determined, and the Doppler frequency shift set includes a plurality of Doppler frequency shifts. For example, the Doppler frequency shift set may be P={-4, -3, ..., 3, 4}.

For any case in which $p \in P$, the matrix $\Lambda_p$ is defined as follows:
$$\Lambda_p = \text{Diag}\left(\left[ e^{j2\pi\frac{p}{N}\cdot 1}, e^{j2\pi\frac{p}{N}\cdot 2}, \cdots, e^{j2\pi\frac{p}{N}\cdot N} \right]\right)$$

. The matrix $\Lambda_p$ is an N*N diagonal matrix, and N is the length of the sequence in the sequence set.

The matrix $U_{k,p}$ is defined as follows: $\mathbf{U}_{k,p} = \mathbf{J}_k \Lambda_p$. Herein, $J_k$ is a shift matrix of an identity matrix, $J_k$ is an N*N matrix, and $U_{k,p}$ is an N*N matrix.

S204. Define a matrix U, and determine a real number $\lambda_U$.

$$\mathbf{U} = \frac{1}{|P|} \sum_{p \in P} \sum_{k \in K} w_a(k,p) \, \text{vec}(\mathbf{U}_{k,p}) \, \text{vec}(\mathbf{U}_{k,p})^H$$

The matrix U is , $|P|$ is a quantity of Doppler frequency shifts included in the Doppler frequency shift set P, $w_a(k,p)$ is a weight value of an auto-ambiguity function, vec() represents a column vectorization operation, and $(*)^H$ is a conjugate transpose of (*).

The real number $\lambda_U$ is greater than or equal to a maximum eigenvalue of the matrix U.

S205. Calculate a matrix $C_{S_m^{(t)}}$ and a matrix $A_{S_m^{(t)}}$.

The matrix $C_{S_m^{(t)}}$ may also be referred to as first information, and the matrix $A_{S_m^{(t)}}$ may also be referred to as

$$\mathbf{C}_{\mathbf{s}_m^{(t)}} = \frac{1}{|P|} \sum_{\substack{m'=1 \\ m' \neq m}}^{M} \sum_{p \in P} \sum_{k \in K} w_c(k,p) [\mathbf{U}_{k,p}^H \mathbf{s}_m^{(t)} (\mathbf{s}_{m'}^{(t)})^H \mathbf{U}_{k,p} + \mathbf{U}_{k,p} \mathbf{s}_{m'}^{(t)} (\mathbf{s}_m^{(t)})^H \mathbf{U}_{k,p}^H]$$

second information: , where

$|P|$ is the quantity of Doppler frequency shifts included in the Doppler frequency shift set P, M is the quantity of sequences included in the sequence set, $w_c(k,p)$ is a weight value of a cross-ambiguity function, and during initialization, $S_m^{(t)}$ is

$S_m^{(0)}$, and $S_m^{(0)}$ is the $m^{th}$ sequence in the sequence set; and $\mathbf{A}_{\mathbf{s}_m^{(t)}} = \mathbf{Q}_{\mathbf{s}_m^{(t)}} + \left[\mathbf{Q}_{\mathbf{s}_m^{(t)}}\right]^H$, where

$$\mathbf{Q}_{\mathbf{s}_m^{(t)}} = \frac{1}{|P|} \sum_{p \in P} \sum_{k \in K} w_a(k,p) \left[\mathbf{s}_m^{(t)}\right]^H \mathbf{U}_{k,p}^H \mathbf{s}_m^{(t)} \mathbf{U}_{k,p} - \lambda_{\mathbf{U}} \mathbf{s}_m^{(t)} \left[\mathbf{s}_m^{(t)}\right]^H$$.

S206. Determine a real number $\lambda_m^{(t)}$.

The real number $\lambda_m^{(t)}$ is greater than or equal to a maximum eigenvalue of $C_{S_m^{(t)}} + A_{S_m^{(t)}}$.

S207. Calculate a first reference sequence $S_{ac1}$: $\mathbf{s}_{ac1} = e^{j \arg((\lambda_m^{(t)} \mathbf{I}_N - (\mathbf{A}_{\mathbf{s}_m^{(t)}} + \mathbf{C}_{\mathbf{s}_{m'}^{(t)}}) \mathbf{s}_m^{(t)}))}$.

Herein, $I_N$ is the identity matrix. A manner of determining $C_{S_{m'}^{(t)}}$ is similar to the manner of determining $C_{S_m^{(t)}}$, and $S_m^{(t)}$ in the formula for determining $C_{S_m^{(t)}}$ is modified to $S_{m'}^{(t)}$.

S208. Calculate a second reference sequence $S_{ac2}$: $\mathbf{s}_{ac2} = e^{j \arg((\lambda_{ac1} \mathbf{I}_N - (\mathbf{A}_{\mathbf{s}_{ac1}} + \mathbf{C}_{\mathbf{s}_{m'}^{(t)}}) \mathbf{s}_{ac1}))}$.

Herein, $I_N$ is the identity matrix, and $\lambda_{ac1}$ is a maximum eigenvalue of $A_{S_{ac1}} + C_{S_m^{(t)}}$. A manner of determining $A_{S_{ac1}}$ is similar to the manner of determining $A_{S_m^{(t)}}$, and $S_m^{(t)}$ in the formula for determining $A_{S_m^{(t)}}$ is modified to $S_{ac1}$.

S209. Calculate an updated sequence $S_{ac}$ of the sequence $S_m^{(t)}$: $\mathbf{s}_{ac} = e^{j \arg(\mathbf{s}_m^{(t)} - 2\alpha \mathbf{r} + \alpha^2 \mathbf{v})}$.

Herein, $\mathbf{r} = \mathbf{s}_{ac1} - \mathbf{s}_m^{(t)}$, $\mathbf{v} = \mathbf{s}_{ac2} - \mathbf{s}_{ac1} - \mathbf{r}$, and $\alpha = -\|\mathbf{r}\| / \|\mathbf{v}\|$.

S210. Determine whether side lobe energy of the updated sequence $S_{ac}$ is greater than side lobe energy of the sequence $S_m^{(t)}$.

The side lobe energy of the sequence $S_{ac}$ is $\frac{1}{|P|}\sum_{p\in P}\sum_{k\in K}w_a(k,p)\left|(S_{ac})^H U_{k,p}S_{ac}\right|^2 + (S_{ac})^H C_{S_{ac}}S_{ac}$ .

A manner of determining $C_{S_{ac}}$ is similar to the manner of determining $C_{S_m^{(t)}}$ , and $S_m^{(t)}$ in the formula for determining $C_{S_m^{(t)}}$ is modified to $S_{ac}$.

The side lobe energy of the sequence $S_m^{(t)}$ is $\dfrac{1}{|P|}\sum_{p\in P}\sum_{k\in K}w_a(k,p)\left|(\mathbf{s}_m^{(t)})^H\mathbf{U}_{k,p}\mathbf{s}_m^{(t)}\right|^2 + (\mathbf{s}_m^{(t)})^H\mathbf{C}_{\mathbf{s}_m^{(t)}}\mathbf{s}_m^{(t)}$ .

If the side lobe energy of the updated sequence $S_{ac}$ is greater than the side lobe energy of the sequence $S_m^{(t)}$ , S211 is performed.

If the side lobe energy of the updated sequence $S_{ac}$ is not greater than the side lobe energy of the sequence $S_m^{(t)}$ , S212 is performed.

S211. Update the sequence $S_{ac}$.

Herein, $\alpha = -\|\mathbf{r}\|/\|\mathbf{v}\|$.

Optionally, $\alpha$ may be first updated to $\dfrac{\alpha-1}{2}$ , and then the sequence $S_{ac}$ is updated based on $\alpha$ after the update. In this way, the sequence $S_{ac}$ that meets the condition in S210 may be quickly determined.

S210 is performed after S211 is performed.

S212. Update each of the sequence $S_m^{(t)}$ and a sequence $S_m^{(t+1)}$ to the sequence $S_{ac}$.

S213. Increase m by 1, and determine whether m is less than or equal to M.

If m is less than or equal to M, S203 is performed.

If m is greater than M, S214 is performed.

S214. Increase t by 1, and determine whether t is greater than a preset threshold.

If t is greater than the preset threshold, S215 is performed.

If t is not greater than the preset threshold, S203 is performed.

S215. Output an updated sequence set.

The updated sequence set is a generated sequence set.

In the foregoing process, the sequences in the initial sequence set are iteratively updated for a plurality of times, to obtain the updated sequence set. In each update iteration process, any sequence is updated based on another sequence in the sequence set.

For example, it is assumed that the sequence set includes three sequences that are respectively denoted as a sequence 1, a sequence 2, and a sequence 3. In any update iteration process, the sequence 1 is updated based on the sequence 1 that is not updated, the sequence 2 that is not updated, and the sequence 3 that is not updated, the sequence 2 is updated based on an updated sequence 1, the sequence 2 that is not updated, and the sequence 3 that is not updated, and the sequence 3 is updated based on the updated sequence 1, an updated sequence 2, and the sequence 3 that is not updated.

There is at least one first sequence in a plurality of sequences in the sequence set generated based on the method shown in FIG. 2A and FIG. 2B, an auto-ambiguity function of each first sequence is in a drawing pin form, and side lobe energy of a cross-ambiguity function between each first sequence and another sequence in the sequence set is less than a first threshold. Optionally, side lobe energy of a cross-ambiguity function between each first sequence and another first sequence in the sequence set may also be less than the first threshold.

A quantity of first sequences may be less than a total quantity of sequences included in the sequence set, or a quantity of first sequences may be equal to a total quantity of sequences in the sequence set. For example, if the sequence set includes four sequences, there may be one, two, three, or four first sequences.

In the embodiment shown in FIG. 2A and FIG. 2B, in a sequence generation process, a plurality of sequences in the sequence set may be simultaneously generated, so that there is relatively high sequence generation efficiency.

Optionally, the first threshold may be between 35 decibels (dB) and 45 decibels. For example, the first threshold may be 40 decibels.

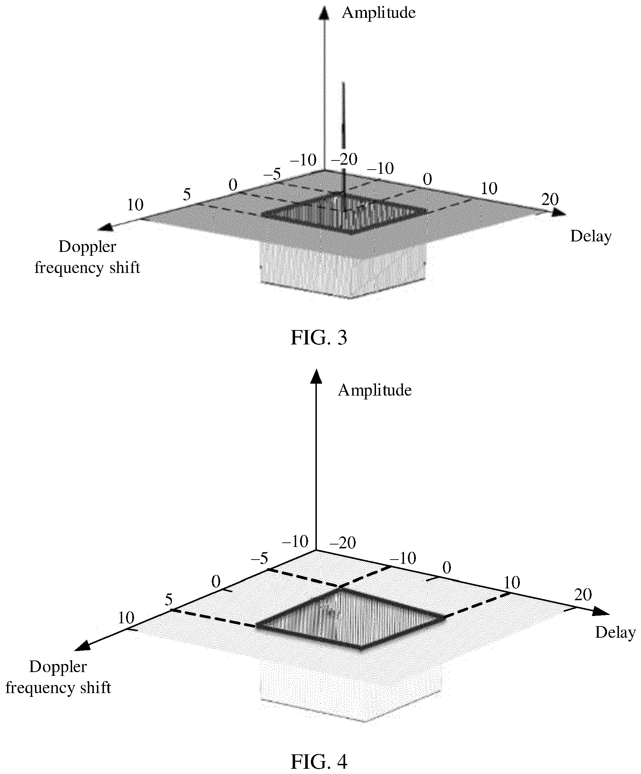

The first sequence in the sequence set is described below with reference to FIG. 3 and FIG. 4.

FIG. 3 is a schematic diagram of an auto-ambiguity function of a sequence according to an embodiment of this application. Referring to FIG. 3, three coordinate axes respectively represent a Doppler frequency shift, a delay, and an amplitude of the auto-ambiguity function. The auto-ambiguity function of the first sequence designed in this application is in the drawing pin form.

Optionally, when the delay falls within a first preset range and the Doppler frequency shift falls within a second preset range, the auto-ambiguity function of the first sequence is in the drawing pin form. For example, referring to FIG. 3, when the delay falls within a range (the first preset range) of -10 to 10 and the Doppler frequency shift falls within a range (the second preset range) of -5 to 5, the auto-ambiguity function of the first sequence is in the drawing pin form. Certainly, there may be another first preset range and another second preset range. For example, the first preset range may be {-16, -15, ..., 15, 16}, and the second preset range may be {-4, -3, ..., 3, 4}. The first preset range and the second preset range are not specifically limited in this embodiment of this application.

Optionally, that the auto-ambiguity function is in the drawing pin form means that when the delay is 0 and the Doppler frequency shift is 0, the auto-ambiguity function of the first sequence has a largest amplitude, and when the delay is not equal to 0 or the Doppler frequency shift is not equal to 0, an amplitude of the auto-ambiguity function of the first sequence is less than an amplitude, of the first sequence, that exists when the delay is 0 and the Doppler frequency shift is 0. In other words, when the delay is 0 and the Doppler frequency shift is 0, the auto-ambiguity function of the first sequence has the largest amplitude, and an amplitude of the first sequence at another position (when the delay is not equal to 0 or the Doppler frequency shift is not equal to 0) is less than the amplitude, of the first sequence, that exists when the delay is 0 and the Doppler frequency shift is 0. Optionally, the amplitude of the first sequence at the another position is much less than the amplitude, of the first sequence, that exists when the delay is 0 and the Doppler frequency shift is 0. For example, after the amplitude of the first sequence is normalized, the amplitude, of the first sequence, that exists when the delay is 0 and the Doppler frequency shift is 0 is 1, and the amplitude at the another position is 0.

For example, referring to FIG. 3, the auto-ambiguity function of the first sequence has the largest amplitude at (0, 0) (the delay is 0 and the Doppler frequency shift is 0), and an amplitude, of the auto-ambiguity function of the first sequence, at a position other than (0, 0) in a local range (the delay is between -10 and 10, and the Doppler frequency shift is between -5 and 5) is much less than the amplitude of the first sequence at (0, 0). If the amplitude of the first sequence is normalized, when the delay is 0 and the Doppler frequency shift is 0, the amplitude of the auto-ambiguity function of the first sequence is 1, and the amplitude of the auto-ambiguity function of the first sequence at the position other than (0, 0) in the local range is 0.

FIG. 4 is a schematic diagram of a cross-ambiguity function between sequences according to an embodiment of this application. Referring to FIG. 4, three coordinate axes respectively represent a Doppler frequency shift, a delay, and an amplitude of the auto-ambiguity function. The side lobe energy of the cross-ambiguity function between the first sequence and the another sequence in the sequence set is less than the first threshold.

Optionally, when the delay falls within a first preset range and the Doppler frequency shift falls within a second preset range, the side lobe energy of the cross-ambiguity function between the first sequence and the another sequence in the sequence set is less than the first threshold. For example, referring to FIG. 3, when the delay falls within a range (the first preset range) of -10 to 10 and the Doppler frequency shift falls within a range (the second preset range) of -5 to 5, the side lobe energy of the cross-ambiguity function between the first sequence and the another sequence in the sequence set is 0 (less than the first threshold).

The sequence generation method shown in the embodiment in FIG. 2A and FIG. 2B is described below by using a specific example.

For example, it is assumed that the sequence length N is 12, the quantity M of sequences included in the sequence set is 3, a delay range is K={-10, -9, ..., 9, 10}, and a Doppler frequency shift range is P={-4, -3, ..., 3, 4}. For ease of description, the delay range and the Doppler frequency shift range are referred to as a local range below.

The weight value $w_a(k,p)$ of the auto-ambiguity function is as follows: When $(p,k) \in P \times K$ and k ≠0, $w_a(k,p)$ = 1. Otherwise, $w_a(k,p)$ = 0.

The weight value $w_c(k,p)$ of the cross-ambiguity function is as follows: When p∈P and k∈K, $w_c(k,p)$ = 1. Otherwise, $w_c(k,p)$ = 0.

It is assumed that a loop exit condition is that t is greater than 100. In this case, based on the foregoing parameters, the method shown in the embodiment in FIG. 2A and FIG. 2B is iterated for 100 times, to generate a sequence set. The sequence set includes three sequences, and the three sequences are respectively denoted as a sequence 1, a sequence 2 and a sequence 3. A length of each sequence is 512. In each iteration, the three initialized sequences may be sequentially updated until after iteration is performed for 100 times, a sequence 1, a sequence 2, and a sequence 3 are obtained, and the sequence 1, the sequence 2, and the sequence 3 are determined as the three sequences in the sequence set.

The three sequences in the sequence set are described below with reference to the accompanying drawings.

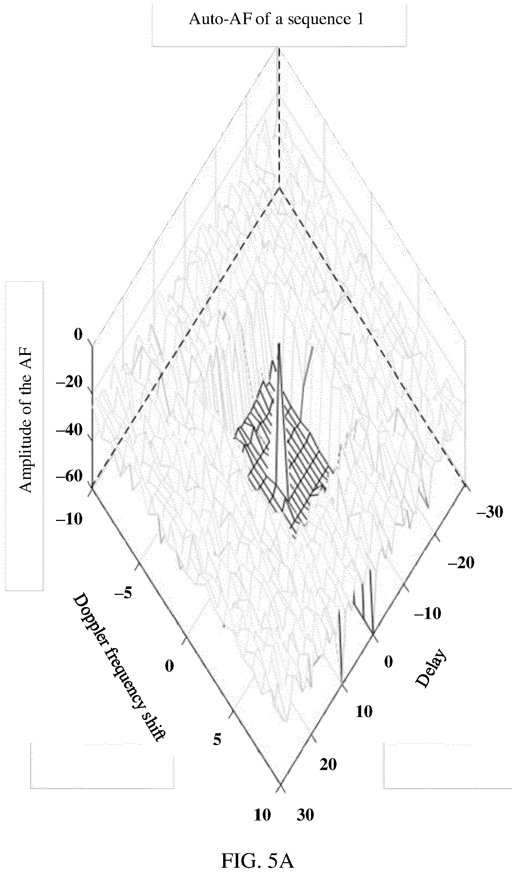

FIG. 5A is a schematic diagram of an auto-AF of the sequence 1 according to an embodiment of this application. Referring to FIG. 5A, in the local range, the auto-AF of the sequence 1 has a relatively large amplitude at (0, 0), and the sequence has a relatively small amplitude in a region other than (0, 0).

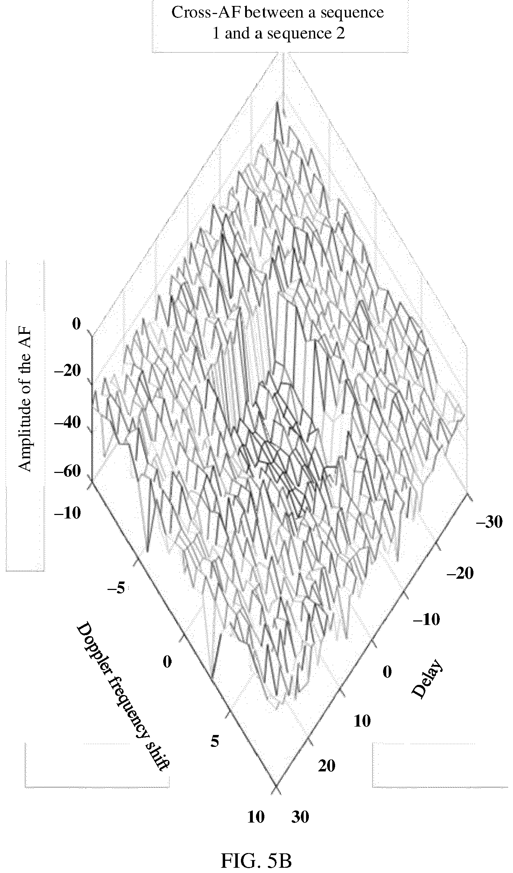

FIG. 5B is a schematic diagram of a cross-AF between the sequence 1 and the sequence 2 according to an embodiment of this application. Referring to FIG. 5B, in the local range, the cross-AF between the sequence 1 and the sequence 2 has a relatively small amplitude.

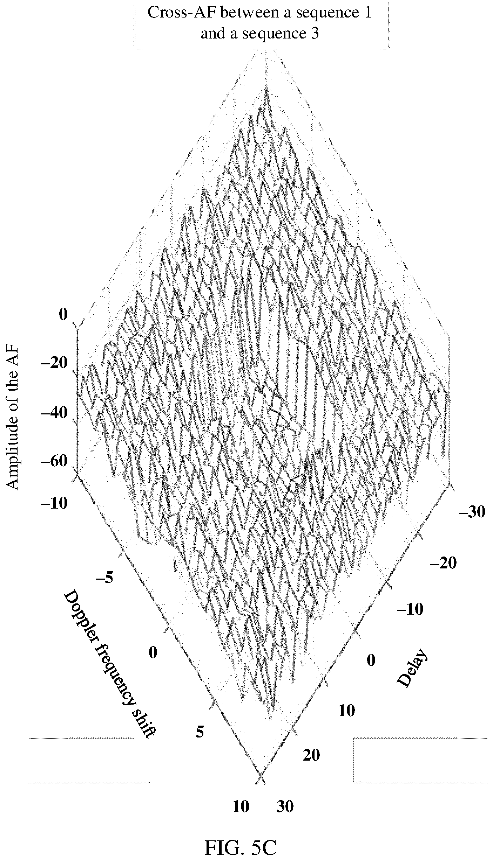

FIG. 5C is a schematic diagram of a cross-AF between the sequence 1 and the sequence 3 according to an embodiment of this application. Referring to FIG. 5C, in the local range, the cross-AF between the sequence 1 and the sequence 3 has a relatively small amplitude.

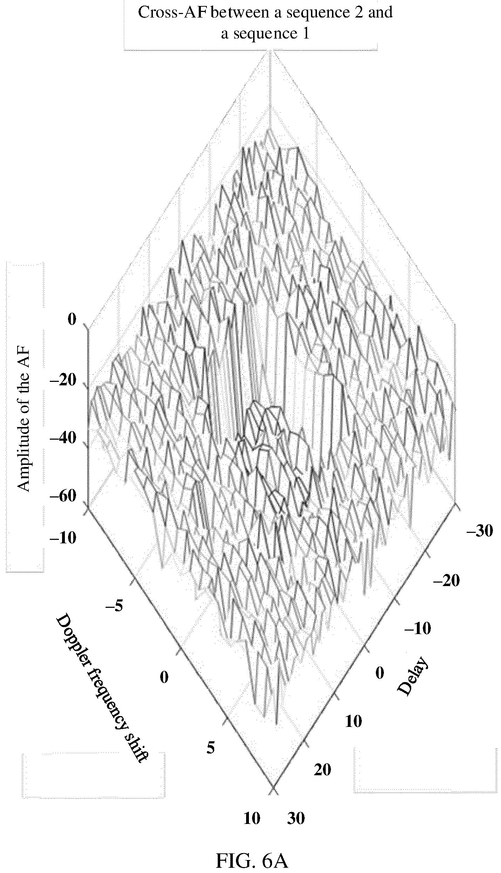

FIG. 6A is a schematic diagram of a cross-AF between the sequence 2 and the sequence 1 according to an embodiment of this application. Referring to FIG. 6A, in the local range, the cross-AF between the sequence 2 and the sequence 1 has a relatively small amplitude.

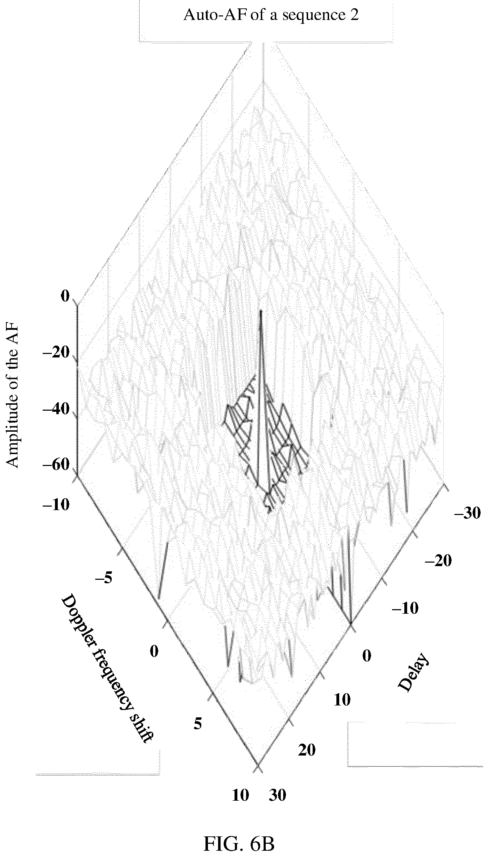

FIG. 6B is a schematic diagram of an auto-AF of the sequence 2 according to an embodiment of this application. Referring to FIG. 6B, in the local range, the auto-AF of the sequence 2 has a relatively large amplitude at (0, 0), and the sequence has a relatively small amplitude in a region other than (0, 0).

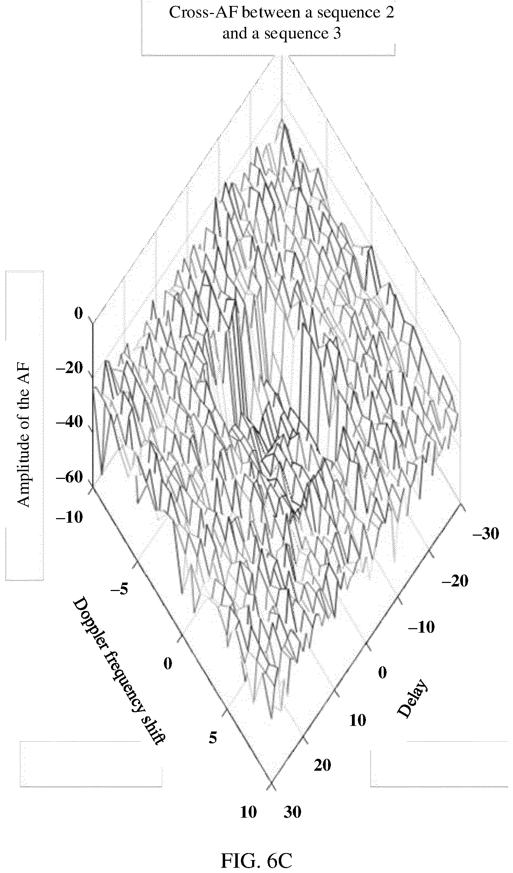

FIG. 6C is a schematic diagram of a cross-AF between the sequence 2 and the sequence 3 according to an embodiment of this application. Referring to FIG. 6C, in the local range, the cross-AF between the sequence 2 and the sequence 3 has a relatively small amplitude.

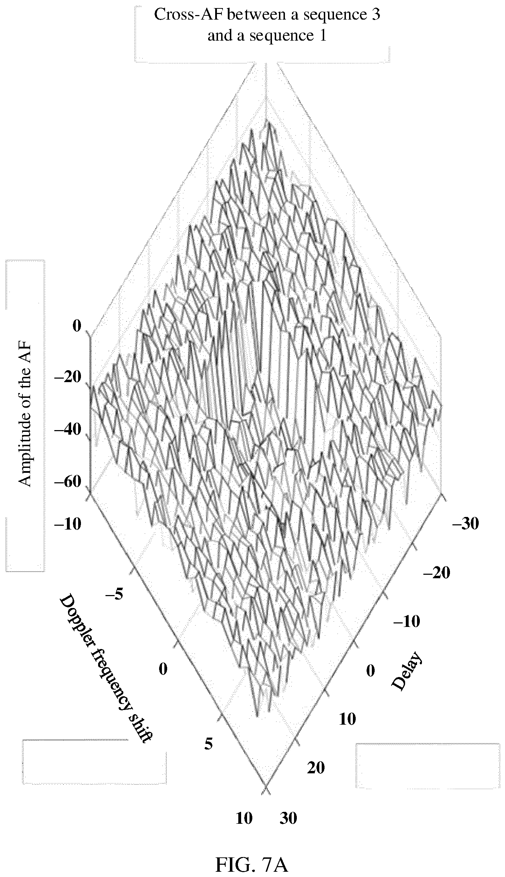

FIG. 7A is a schematic diagram of a cross-AF between the sequence 3 and the sequence 1 according to an embodiment of this application. Referring to FIG. 7A, in the local range, the cross-AF between the sequence 3 and the sequence 1 has a relatively small amplitude.

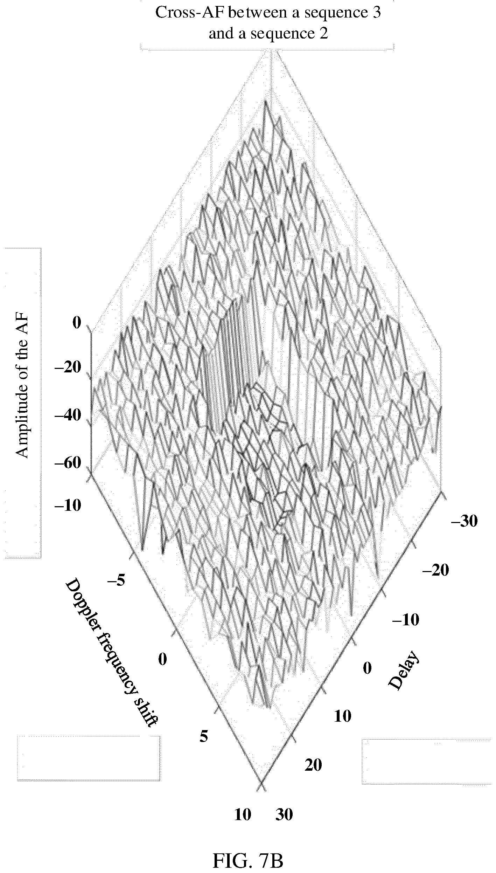

FIG. 7B is a schematic diagram of a cross-AF between the sequence 3 and the sequence 2 according to an embodiment of this application. Referring to FIG. 7B, in the local range, the cross-AF between the sequence 3 and the sequence 2 has a relatively small amplitude.

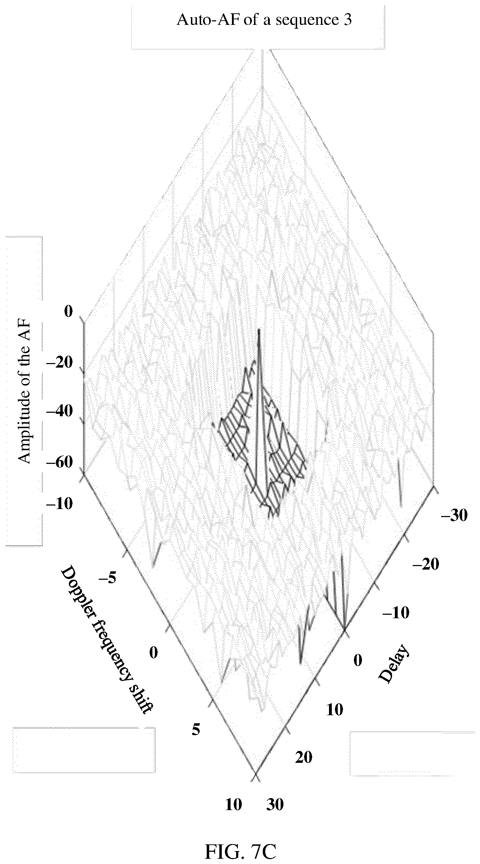

FIG. 7C is a schematic diagram of an auto-AF of the sequence 3 according to an embodiment of this application. Referring to FIG. 7C, in the local range, the auto-AF of the sequence 3 has a relatively large amplitude at (0, 0), and the sequence has a relatively small amplitude in a region other than (0, 0).

It may be learned from FIG. 5A to FIG. 5C, FIG. 6A to FIG. 6C, and FIG. 7A to FIG. 7C that in the local range, side lobe energy of each of the auto-AF of the sequence and the cross-AF between the sequences in the sequence set is significantly less than that in another region (a region other than the local range). For example, in the local range, side lobe energy of the auto-AF of each sequence in the sequence set is decreased to -59 dB, and side lobe energy of the cross-AF between the sequences in the sequence set is decreased to -54 dB. Therefore, according to the sequence generation method shown in this application, a sequence set with a good AF in a local range may be designed.

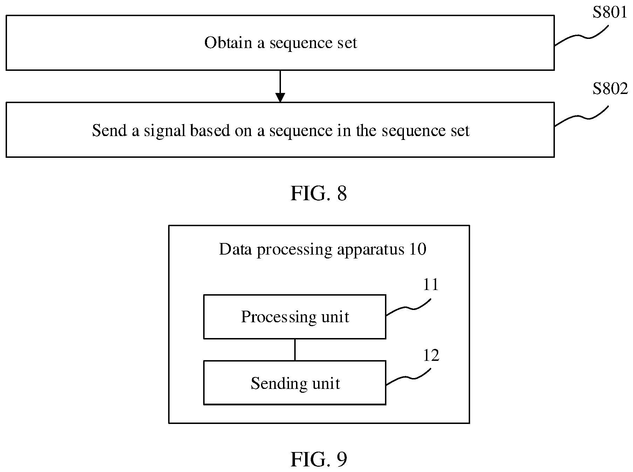

Based on any one of the foregoing embodiments, a method for performing velocity measurement or ranging by a radar is described below with reference to FIG. 8.

FIG. 8 is a schematic flowchart of a data processing method according to an embodiment of this application. Refer to FIG. 8. The method may include the following steps.

S801. Obtain a sequence set.

The embodiment in FIG. 8 may be executed by a velocity measurement/ranging apparatus. For example, the velocity measurement/ranging apparatus may be a radar.

The sequence set includes a plurality of sequences, and there is at least one first sequence in the plurality of sequences. An auto-ambiguity function of each first sequence is in a drawing pin form, and side lobe energy of a cross-ambiguity function between each first sequence and another sequence in the sequence set is less than a first threshold.

Optionally, the sequence set may be obtained in the following manner:

In a manner, the radar generates the sequence set.

It should be noted that the radar may generate the sequence set by using the method shown in the embodiment in FIG. 2A and FIG. 2B. Details are not described herein.

In another manner, another device (for example, a terminal device or a server) generates the sequence set, and the radar obtains the sequence set from the another device. For example, the another device may send the sequence set to the radar, or the radar requests the sequence set from the another device. Alternatively, the sequence set may be manually copied from the another device, and the sequence set may be stored in the radar.

It should be noted that the another device may generate the sequence set by using the method shown in the embodiment in FIG. 2A and FIG. 2B. Details are not described herein.

The auto-ambiguity function of the first sequence in the sequence set meets the schematic diagram of the auto-ambiguity function shown in FIG. 3. The cross-ambiguity function between the first sequence in the sequence set and the another sequence in the sequence set meets the schematic diagram of the cross-ambiguity function shown in FIG. 4.

S802. Send a signal based on a sequence in the sequence set.

The signal is used for velocity measurement and/or ranging.

For example, the radar may generate a signal based on the sequence in the sequence set, and transmit the signal. For a process in which the radar works based on the sequence in the sequence set, refer to FIG. 1. Details are not described herein.

Optionally, the radar may send a signal based on the sequence in the following manner:

In a manner, one radar simultaneously sends signals by using a plurality of sequences in the sequence set.

In this manner, the radar may generate a plurality of signals based on a plurality of sequences in the sequence set, and simultaneously send the plurality of signals.

For example, if the sequence set includes a sequence 1, a sequence 2, and a sequence 3, the radar may generate a signal 1 based on the sequence 1, generate a signal 2 based on the sequence 2, and generate a signal 3 based on the sequence 3, and simultaneously send the signal 1, the signal 2, and the signal 3.

In this manner, when one radar detects a same target object by using a plurality of sequences in the sequence set, the radar may include a plurality of reflected signal receiving points. The plurality of reflected signal receiving points may be disposed at different positions. After receiving a reflected signal, each of receiving points at different positions may determine a velocity and/or a range of the target object based on a transmitted signal and the received signal. In this way, there is relatively high precision and reliability of measuring the velocity and/or the range of the target object.

In another manner, a plurality of radars simultaneously send signals by using a plurality of sequences in the sequence set.

In this manner, there may be a correspondence between the plurality of radars and the plurality of sequences. For example, there may be a one-to-one correspondence between the radar and the sequence, each radar generates a signal based on a sequence corresponding to the radar, and the plurality of radars simultaneously send signals respectively generated by the plurality of radars.

For example, if the sequence set includes a sequence 1, a sequence 2, and a sequence 3, and the plurality of radars include a radar 1, a radar 2, and a radar 3, the radar 1 generates a signal 1 based on the sequence 1, the radar 2 generates a signal 2 based on the sequence 2, and the radar 3 generates a signal 3 based on the sequence 3. At a same moment, the radar 1 sends the signal 1, the radar 2 sends the signal 2, and the radar 3 sends the signal 3.

In still another manner, the radar selects a sequence from the sequence set to generate a signal, and send the signal.

In this manner, the radar may select one or more sequences from the sequence set, generate a signal based on the selected sequence, and send the signal.

For example, if the sequence set includes a sequence 1, a sequence 2, and a sequence 3, the radar may select the sequence 1 from the sequence set, generate a signal 1 based on the sequence 1, and send the signal 1. Alternatively, the radar may select the sequence 1 and the sequence 2 from the sequence set, generate a signal 1 based on the sequence 1, and generate a signal 2 based on the sequence 2, and simultaneously send the signal 1 and the signal 2.

In the embodiment shown in FIG. 8, the auto-ambiguity function of the first sequence in the sequence set is in the drawing pin form, and therefore in a process of performing measurement (for example, velocity measurement or ranging) by the radar based on the first sequence, the following case may occur: When a delay added to a transmitted signal is the same as a delay to which a reflected signal is subject, and a Doppler frequency shift added to the transmitted signal is the same as a Doppler frequency shift to which the reflected signal is subject, there is a highest (a peak in the drawing pin form) correlation (an amplitude of an autocorrelation function) between the transmitted signal to which the delay and the Doppler frequency shift are added and the reflected signal. When a delay added to a transmitted signal is different from a delay to which a reflected signal is subject, or a Doppler frequency shift added to a transmitted signal is different from a Doppler frequency shift to which a reflected signal is subject, a correlation (an amplitude of an autocorrelation function) between the transmitted signal to which the delay and the Doppler frequency shift are added and the reflected signal is greatly reduced (a bottom in the drawing pin form). In this way, in the process of performing measurement (for example, velocity measurement or ranging) by the radar, an accurate delay and Doppler frequency shift may be determined, and therefore there may be relatively high precision of performing measurement (for example, velocity measurement or ranging) by the radar. The side lobe energy of the cross-ambiguity function between the first sequence in the sequence set and the another sequence in the sequence set is less than the first threshold. Therefore, when the radar simultaneously sends signals based on a plurality of sequences in the sequence set, there may be relatively weak interference between the signals, thereby improving accuracy of performing measurement (for example, velocity measurement or ranging) by the radar.

The sequence set designed by using the method shown in this application is described below.

Sequence set 1: The sequence set 1 includes two sequences (denoted as a first sequence and a second sequence), and a length of each sequence in the sequence set 1 is 128. Elements in any sequence in the sequence set have a same amplitude. Phases of elements in each sequence may be as follows:

Phases of elements in the first sequence are sequentially 2.3873, 0.0816, 1.8635, -0.0235, 0.0868, - 2.3412, 2.0814, 0.2396, -0.2053, 1.9471, -2.6137, -0.0639, 2.4228, -3.1037, -2.5762, -2.6993, -0.9626, -1.1392, 0.9509, -0.7416, 1.0935, -1.3837, -0.9203, -2.0987, -1.8713, -2.753, 1.5391, -0.2627, -2.3035, -1.5171, 2.3833, - 0.7585, 1.3907, 2.9377, -1.349, 0.6141, 0.8717, 2.52, 1.5914, 2.8534, -1.1418, -2.572, -2.1467, -2.8806, 3.0351, 2.4134, 0.8385, -2.1979, 2.0314, 3.0778, 0.355, 2.2942, -2.9186, -1.6958, 0.4176,1.0953, -2.4997, 1.4265, -1.6996, -0.2216, -1.1873, -2.0375, 1.8242, 1.4092, 1.0029, 1.7527, 1.3267, 1.1808, -3.1196, 1.2082, 0.6754, -2.4266, - 0.2065, 0.9443, 1.2392, 3.1058, -0.0621, -2.9504, -0.1755, -2.2723, -2.9906, 2.108, 2.3437, 0.7613, -1.3072, - 1.0387, 0.5346, -0.4351, -0.4324, 1.1408, -0.2471, -0.1877, 2.4562, 0.9984, -2.2513, -0.9201, -0.8611, 1.054, - 2.5941, 0.5056, 2.3793, 1.6555, -0.1646, -0.0456, 0.0604, -1.8474, 1.4809, -1.9097, -2.2373, 1.993, -0.7749, - 1.9398, -2.6231, -1.9393, -0.3896, -1.6185, 0.5517, -2.4341, -0.2909, 1.2621, 1.6085, -1.9244, -0.3264, -1.0045, -1.3634, -0.3147, -2.45, and 2.2638.

Phases of elements in the second sequence are sequentially -2.6253, 2.8909, -2.4234, 2.4561, 1.2224, 0.5916, -1.4116, 1.1482, 2.0136, 0.122, 1.7008, 1.2534, -2.6853, 1.7259, -1.8306, -1.0569, 0.7361, 2.6653, 1.934, - 2.7728, 1.1618, 1.3645, -0.0881, -1.7235, 1.3864, 0.491, -2.035, -1.4547, 0.8764, -2.0916, 0.0601, -1.1592, -1.0875, -0.5178, 0.8298, 1.7049, 2.1631, 1.8151, -1.0542, 0.8773, -1.1502, 0.8856, -0.8104, -2.4166, 1.5366, -0.4888, - 1.7116, -3.0884, -0.102, 1.6704, -2.2807, -0.5855, 1.6433, 2.4764, 3.0524, -2.0643, -2.7529, -1.2886, 0.9288, - 0.9277, 0.1086, -1.3431, -1.4084, -1.5509, -2.8654, 0.506, -1.5521, 3.1306, 1.3422, -1.8922, -0.9268, 1.972, - 3.0557, -0.9195, -0.5987, 0.9321, 2.5838, 1.2025, 2.222, -0.4807, -2.2291, -1.599, -2.2578, 2.9121, -2.7308, 3.027, -1.4072, -2.3621, 1.324, -0.7613, -2.6587, 2.4921, 0.0949, 1.6385, -2.1863, 2.8792, -1.8444, 0.1876, 0.1568, - 2.0176, -0.6081, 2.3328, 2.7068, -2.8028, 0.9357, 1.0611, 1.5946, 1.3697, 2.1281, -0.6764, 3.1046, 2.243, 0.7589, - 1.9738, -0.5057, -1.0695, 1.9417, 0.312, 1.4885, -1.8582, 1.5842, -2.6845, -1.8207, 0.5137, 1.8441, 2.2397, -2.2078, and 1.5072.

Sequence set 2: The sequence set 2 includes three sequences (denoted as a first sequence, a second sequence, and a third sequence), and a length of each sequence in the sequence set 2 is 128. Elements in any sequence in the sequence set have a same amplitude. Phases of elements in each sequence may be as follows:

Phases of elements in the first sequence are sequentially -2.4998, 0.8748, -1.28, 2.5805, 2.0152, -0.5473, 0.2488, 2.6259, -0.6086, 0.2868, -0.236, -1.4451, -1.3513, -0.6924, 0.6061, 1.0574, 0.9621, 2.8246, -0.935, 2.9272, 0.1157, -2.6748, 1.7923, -0.4287, -0.7117, 2.2964, -1.9265, -0.3537, 2.8156, -2.0986, -2.8818, 2.2879, 1.991, 2.6967, -2.5748, -2.5305, -1.7646, -0.5262, 2.5925, 0.0632, 2.8072, -0.4566, -2.4514, 1.1743, -2.2886, -1.9928, 1.3382, -2.149, 1.9809, 2.0096, -0.0367, 0.9882, 0.7585, 0.0299, 1.4543, 1.9342, 2.864, -2.0535, 0.532, 2.4912, - 0.5772, -2.8553, 1.0324, -2.4123, 0.5735, -2.5362, -2.2237, 1.5022, -2.4101, 2.0389, 1.4575, -0.675, 1.0255, 0.8849, 0.644, 1.7986, 2.0286, 2.9075, -1.9437, 0.4665, 2.3605, -1.9563, -2.1783, 0.6134, -2.7804, -0.5782, 2.817, -1.5306, 1.6081, -1.3375, -2.8215, 1.2996, -1.5335, 2.5846, 2.8654, 2.9793, 2.9598, -1.9568, -1.2903, -1.0954, 1.2552, 2.4294, -0.5827, -0.0552, 0.3193, -2.8038, -0.6546, 2.2813, -1.2528, 1.8416, 0.1423, -1.4624, 1.6562, -0.3468, - 0.8641, -1.6022, -1.1956, 0.3648, 0.073, 0.6643, 2.7928, -2.3768, 2.7979, 1.1029, 2.3249, -0.8025, 1.7906, and - 1.0178.

Phases of elements in the first sequence are sequentially -3.1097, 0.0049, -1.9256, 1.7381, -0.3864, 2.6966, -1.887, 0.4667, 1.7824, -2.0849, -1.7819, -2.8397, 2.4928, 2.5452, 1.8332, 1.7676, -2.8609, -2.0079, - 2.7451, -0.3607, 0.0742, -2.3613, 1.8619, -1.4886, 2.3154, -0.3334, 2.1232, -2.5934, -0.5127, 1.7325, 2.8774, 1.1879, 0.4052, 0.1746, -0.7824, -0.5763, 0.333, 1.8662, 1.1779, 2.22, -1.6465, 3.0574, 1.259, 0.5352, -1.6231, 2.5947, -1.1029, 1.559, 1.6244, -0.8556, 0.7382, -0.7461, -0.2676, -2.2905, -2.145, -0.9949, -0.9939, -0.7604, - 0.9245, 0.5209, 2.279, 2.7566, -0.5093, 0.3435, -2.6145, 2.2669, 0.65, -0.8947, -1.8215, 1.8906, -1.506, 1.3788, 0.0519, 0.098, 0.6094, -0.8718, -1.3247, -1.4622, -1.9018, -0.3473, 0.5227, 1.7095, -2.8704, -1.6367, 1.5108, 2.6595, 0.8492, -0.2285, -1.2898, -3.0284, 1.3115, -1.1149, 2.5409, 1.383, 1.4673, 0.9528, -0.2041, -0.4887, -0.28, 0.8328, 1.1429, 1.7167, -2.4088, -1.1395, -1.776, 2.0866, -2.7817, 0.3588, 2.2528, -0.0113, -1.853, 2.4143, -0.0587, -2.4297, -2.87, 2.4967, 1.7852, 0.8346, 1.8972, 2.7496, 2.7145, -2.84, -0.2736, 0.4693, 0.5768, -2.2012, -0.8597, and 2.4804.

Phases of elements in the third sequence are sequentially -0.8559, 2.4187, 0.1827, -1.4543, -2.1016, 2.9257, -0.0475, 1.5806, -1.9916, -0.8482, 2.88, -2.3022, -3.1262, 2.6153, 2.2122, 2.7908, -2.1137, -2.0277, - 1.0841, -0.8724, 2.0506, -0.0731, -2.4044, -2.7269, 1.4821, 0.3854, -2.8187, -1.3756, 1.4649, 2.3635, 0.1193, 0.969, -0.007, 0.119, -0.3422, -0.2761, 1.3545, 1.5486, 2.2833, 2.9399, -1.0111, 2.1144, -0.3586, 2.6767, 0.8527, -1.2236, -1.2192, 1.9997, 0.119, -0.827, -2.2135, -1.7354, 2.8008, -2.4279, -1.3032, -0.3939, -0.6312, -0.146, -0.335, 2.0842, -3.0575, -1.1357, 1.2011, 0.6409, -2.7648, 0.3833, -2.6429, 0.4863, 0.4761, -1.1466, -2.3956, 1.634, - 0.9867, -2.6724, -2.4262, -1.8069, -0.6301, -0.4469, -0.4137, -0.2619, 1.8703, 2.9299, -1.5599, 0.5616, 1.449, - 2.9192, 0.0681, 2.6592, -0.4327, 1.8022, -1.2907, 2.8752, 0.9589, -1.4785, 2.5323, 1.1048, 0.5179, 0.3496, 0.857, 1.4502, 1.6796, 2.5448, -2.3706, -0.9859, 1.1211, 2.6749, -2.166, -0.2877, 2.4439, -1.3685, 1.8612, -0.7848, - 2.1685, 2.2286, -1.1042, -2.8216, 3.0677, 2.5123, 2.4957, -2.5988, -2.568, -2.4033, -0.979, -0.0562, 1.101, 2.989, -1.0835, and 1.2017.

Sequence set 3: The sequence set 3 includes four sequences (denoted as a first sequence, a second sequence, a third sequence, and a fourth sequence), and a length of each sequence in the sequence set 3 is 128. Elements in any sequence in the sequence set have a same amplitude. Phases of elements in each sequence may be as follows:

Phases of elements in the first sequence are sequentially -0.2086, 2.1081, 2.1482, 0.8656, -0.61, 3.045, 2.898, 1.1222, 1.1879, 0.5804, 0.6438, -3.0215, 0.3774, -1.8598, 2.7695, -1.2773, -2.6887, -2.9484, -1.8756, -0.725, 0.1529, 2.3434, -1.6211, -1.235, 2.6894, 2.9848, 0.3868, -1.9321, -1.5415, -2.9873, 2.2771, 2.7538, 0.415, -2.3468, 1.6111, -0.4209, -1.5824, -0.2422, -0.8507, -0.9651, -0.3565, 1.0283, 1.7645, -2.4936, -0.9618, 0.6719, -2.2193, -0.9702, 2.3107, -1.186, 0.8333, -1.2268, 3.0552, -1.5163, 2.7658, 0.2321, -2.036, 2.4699, 0.7279, 0.1194, 0.721, 0.4138, 0.373, 1.085, 1.9972, 3.0185, -1.3842, 0.2793, 2.5196, -0.7815, 0.582, -2.7374, -0.1812, 2.8342, 0.1484, - 2.6718, 0.1912, -2.0149, 1.4633, -0.299, -2.1553, 2.8887, 1.2121, 0.7293, 1.2763, 1.3788, 1.3307, 1.696, 2.5242, - 2.5403, -0.8576, 0.7646, -3.0494, -0.1644, 1.4063, -2.3867, 0.2186, -2.641, 0.6561, -2.4937, 1.1286, -1.1278, 1.4233, 0.1648, -1.7516, -2.6612, 1.1526, 1.2222, 2.6365, 2.7819, 1.838, 2.4373, -2.0296, 0.3157, 2.2371, 0.0069, 1.3926, -3.1377, 0.4076, -2.7628, 0.0713, -1.6156, 0.7901, -2.2927, 3.043, 0.026, 0.2385, and 2.6534.

Phases of elements in the second sequence are sequentially -2.1184, -0.3074, 0.3392, 0.7288, -3.0822, -0.7587, 0.7298, -1.9488, 0.5197, -1.0968, -0.8435, -1.4314, -1.8163, -2.4849, 1.8107, -1.2383, -3.0154, 0.862, - 0.0999, 0.6784, 0.9927, 1.3757, 2.8284, -2.9328, 2.8222, 0.2739, 2.0057, -1.6312, 1.3286, -2.6205, 1.4487, 1.142, 1.0111, 0.0405, -0.0326, -1.3016, 2.9055, 0.015, -1.4409, 2.4889, 1.995, 2.6281, 2.7309, -2.9037, -2.3171, -1.5872, -1.3737, 2.1488, -2.5711, 0.4378, -3.0688, -0.4587, -2.6866, 2.2286, -3.1389, 1.5796, 0.8037, 1.0917, -0.7288, - 2.3046, 1.0027, -0.383, -2.5906, -3.1189, -2.2593, -2.3192, -1.647, -1.3402, -0.9266, 0.1554, -2.5236, -0.9932, 2.0143, -1.6634, 1.2828, -0.9593, -3.0793, -1.7177, 3.0063, 1.5503, 1.7925, 1.0885, -0.8792, -1.9852, 0.9919, 0.0464, -2.3094, -2.2976, -1.3437, -1.5938, -0.8684, -0.8964, -0.4628, 0.8033, -1.8953, -0.0632, 2.7596, -0.793, 1.9754, -0.3048, -2.3346, -0.9563, -2.4485, 2.2228, 2.0849, 1.5095, -0.6569, -1.3995, 1.3794, 0.9591, -1.9789, - 1.6049, -0.1971, -1.6146, -0.7422, -0.0658, -1.1676, 0.6645, -1.6487, -0.8426, 2.5522, -1.9052, 2.7208, 0.7035, 0.1637, -0.2089, -2.9197, and 2.4097.

Phases of elements in the third sequence are sequentially 0.8145, 1.5554, -2.3066, -0.993, 1.6985, - 1.4901, -2.7426, 3.0545, 1.3141, -1.9577, 2.0348, -1.7108, 2.2461, 1.114, -3.1111, 2.4791, -2.9654, -2.4073, - 1.2353, -0.1289, 0.3094, -2.4678, -1.7456, 0.1712, 2.2527, -1.3442, 1.3125, -1.386, -0.3428, -2.2719, 2.283, - 1.9719, 1.4857, -0.1224, -2.4187, 2.2263, -0.6745, -1.7084, -1.9105, -0.7066, 0.1239, 1.2791, 1.5805, 0.0719, - 0.0064, 1.1276, -2.951, -0.0961, 2.3769, -0.7708, 1.0587, -0.6568, -2.52, -1.589, 3.0206, 1.7442, 1.399, -0.2884, - 2.3375, 1.6724, -0.4376, -1.3123, 0.6885, 1.1395, 2.2568, 2.0402, 1.6369, 1.4783, 2.2877, -1.6886, 1.0762, -2.7441, 0.1199, 2.0583, 0.6137, -1.7734, -0.7707, -1.9505, 2.6076, 2.7964, 1.722, -0.3664, -2.3914, 1.9383, -0.3244, - 1.0738, 1.3161, 1.837, 2.9079, 2.2934, 2.5925, 2.268, 2.8732, -1.395, 1.5109, -2.2072, 0.7591, 2.6553, 1.1204, - 1.3082, -0.3187, -1.1437, 3.0461,3.0825,2.6064,0.0681, -0.9283, 2.3402, 0.6893, -0.4134, 2.0382, 2.4116, -2.5157, 2.4972, 2.9167, -2.4735, 1.8015, -2.3113, 0.8168, -2.8457, 1.349, 2.9492, 2.0969, -0.6025, -0.0679, -0.3127, - 2.6678, and 2.9703.

Phases of elements in the fourth sequence are sequentially 0.5113, 0.5902, -2.5435, -2.5382, 1.0707, 1.0167, -1.7645, 0.2861, 2.7952, -0.5344, 2.3203, -0.7813, 2.9489, 0.9564, -2.0641, -2.9841, -1.7542, -1.6676, - 0.8373, -0.0491, 1.0882, -2.986, -2.1538, -0.0686, 0.5454, -2.4408, -1.6368, 1.3377, -2.1569, -0.253, -2.9784, - 1.6816, 2.7524, 0.7044, -1.86, 2.5134, 0.1776, -0.5405, -0.4307, -0.073, 0.702, 1.5557, 3.1013, -1.9165, -0.6148, 0.1516, 2.321, -1.2724, 0.8038, -2.5736, 0.1461, 0.7173, -1.536, -0.9326, -1.8968, 2.8812, 1.9105, -0.3955, -2.1221, 1.7304, 0.4778, 0.0288, 1.0187, 1.8987, 3.0336, -1.7685, -1.1583, 0.2027, 1.1804, -2.1249, 0.2355, 3.0641, -0.4694, 1.6585, 1.4348, -0.5963, -0.1918, -0.7779, -2.5743, -2.8527, 1.5778, -0.0224, -2.5177, 2.3867, 0.3815, 0.6442, 2.1009, -2.5148, -1.6037, -0.3886, -1.308, -0.002, 1.1224, -1.7701, 0.68, -2.0873, 0.9294, 2.8738, 1.6858, -0.0717, 0.318, -0.2995, -2.3902, -2.2514, 0.7632, 0.9103, -2.4421, 3.1142, 1.1954, -1.3641, -1.6569, 0.0727, -1.1957, - 0.2586, 0.8734, -1.4523, 1.0969, -1.5568, 0.7163, -1.7279, 2.0799, -2.9464, 3.0767, -0.1822, 0.7881, 1.0184, - 1.3456, and -1.9321.

Sequence set 4: The sequence set 4 includes two sequences (denoted as a first sequence and a second sequence), and a length of each sequence in the sequence set 4 is 256. Elements in any sequence in the sequence set have a same amplitude. Phases of elements in each sequence may be as follows:

Phases of elements in the first sequence are sequentially 1.9995, -1.1199, -2.9566, -1.8418, 2.6294, - 1.8669, 0.4995, 2.4185, -0.5441, -0.8002, -1.0797, -1.5115, 1.4232, -2.375, 3.0049, 1.0339, 1.8543, 2.9203, 2.89, - 0.678, 1.9754, 1.0846, 2.352, 2.8378, 0.9962, -2.8062, -1.1687, 1.5247, 1.7846, 0.389, -1.1929, 2.7502, -1.8751, 1.9602, 2.7993, 2.9744, 0.042, -1.4141, 2.7439, 0.4626, -0.1071, 0.7812, 2.5929, 0.9423, 3.1211, 0.3403, -2.2227, - 1.3026, 0.8312, -2.2848, -1.4261, 2.7756, 3.0687,1.0211, -0.0032, 1.3498, -0.5089, -1.0468, -0.3862, 0.687,1.6998, 0.3212, -1.2645, 1.1897, 1.0795, -2.6083, -0.6949, 1.5842, -1.0877, -2.8181, -1.1586, -1.6637, -1.3735, 0.8213, - 2.9168, 2.6031, 2.3785, -1.0393, -1.5228, 0.2441, -2.2795, 0.0685, -1.7963, 1.3735, 0.1154, -1.0814, 0.5163, 2.9423, -1.8148, 2.4038, 2.9888, -0.2614, -1.635, 3.0632, 1.8948, 2.4437, 0.9285, -2.0593, 2.7572, -2.1314, -0.3797, - 2.8054, -3.0498, -2.2867, 0.0816,1.2661, 1.5822, 0.5768, -0.5122, 1.411, 1.4443, -2.4957, 2.6901, -1.7005, -0.1135, 2.9961, 1.5063, -2.4791, 2.7744, -2.6769, -2.2877, 2.0849, 1.478, -2.6037, -0.6916, 2.9504, -1.7354, 1.25, 2.908, 1.4553, 1.3381, 2.9303, -0.8473, 2.8298, 0.4364, -1.9708, 1.0026, -0.8551, -2.6802, -3.0203, 1.5556, 0.1537, - 2.2557, -2.0212, 1.975, 2.738, -2.6575, -1.7557, 1.9303, 2.6255, -2.1555, -2.1756, -0.578, -0.4713, 1.3179, -0.1176, 1.292, -0.4679, 1.3504, -2.4821, -1.3779, 3.0634, 0.9599, -0.2122, 0.274, 1.1139, -1.3387, -1.4728, -0.4189, 0.0397, -1.9384, 2.2282, -1.6565, -2.2744, 0.1582, -2.6453, -0.7312, 1.4871, -2.5743, 1.027, 0.6685, -1.1983, -0.241, - 2.0258, 1.9631, 0.5519, 0.9901, -0.4893, 2.2285, 0.4606, -1.4372, -0.0822, 0.9237,1.5841, -2.9786, -1.7045,1.6623, -1.905, -2.0591, -1.8698, -0.0231, -1.6303, -0.8871, 2.3828, 1.9217, 1.542, 1.6386, -0.4412, -2.0966, 0.3085, 0.1258, -1.8822, 2.7733, -1.0866, -1.1813, 0.8493, -2.2818, -1.0716, 1.4437, -1.7359, 0.165, -1.3989, -1.5455, - 1.1285, 1.7889, 0.0374, 1.6377, -0.024, -2.2681, -1.1251, -1.4485, 1.4952, 1.9557, -2.5938, 2.2315, 2.7051, 1.4819, 3.0794, -2.1086, 2.0755, -0.1298, -2.7013, -1.0975, 1.5628, 0.9153, -0.7702, 1.409, 2.945, -2.5671, 2.9791, 0.9623, -1.6634, -2.5828, 1.1426, 1.6526, and 1.9671.

Phases of elements in the second sequence are sequentially 1.5836, -1.0057, 3.0082, 1.8854, 2.2241, - 0.753, 2.2226, -2.4816, 0.3346, 1.2799, 1.5747, 0.3795, -0.0245, 1.5571, -2.785, 2.7955, -1.126, 2.785, -0.0536, - 2.0918, 2.2109,2.1665, -0.9085, -3.0499, -2.0067, 1.4018, 2.8607, -0.7833, -1.7369, -2.5334, -1.5695, -2.0511, - 2.9758, 2.5324, 0.8267, 1.4114, 1.0211, 2.8909, 0.5953, 3.007, 2.3407, -1.1272, -1.7464, 1.053, 1.271, -2.9864, - 2.1806, -0.9345, 1.3757, -1.5218, 0.4813, -2.2773, -1.7802, -1.7248, -2.4863, 2.9006, -0.1263, -1.0612, -1.4754, 0.8057, -0.3779, 2.6674, -0.4921, 2.6157, -0.3076, -2.6215, -2.3831, -0.1695, 2.896, -1.1342, -0.1206, -2.2795, 2.3527, 1.5252, 0.8011, -0.5216, 0.583, 0.6095, 0.8618, -0.2494, 2.466, 2.6255, 3.0976, -0.7954, 0.3086, 1.6013, - 0.7404, -1.1553, 0.5507, 0.4482, 3.1202, 0.8297, -2.0574, -1.1065, 1.7803, 0.8257, 3.0472, 2.5596, 2.5205, -2.4796, 0.8118, 2.3863, 1.0652, -0.0941, 2.0913, -1.4231, 1.3911, 2.9999, 1.2193, 2.329, 0.2102, -1.5641, -3.1265, -0.6111, 2.8779, 1.1224, -1.5004, -1.2548, 2.978, 1.7677, -0.6631, -0.1486, 1.1632, 2.3236, -1.2712, -0.6577, -2.1426, - 2.0459, -1.9748, -1.0937, -1.0042, 0.7589, 1.0753, 2.6879, -1.6806, 2.0949, -0.9458, 2.7622, 1.9004, 1.0115, - 2.8291, -0.1031, -1.7476, -1.9968, 2.4859, -2.741, -2.6617, 1.8734, 2.7703, -0.88, 1.867, -2.5843, 1.7266, 0.0847, -2.1047, 0.5987, -2.2648, 1.9345, 2.7708, 1.898, -1.0428, -1.7279, -3.0088, -2.6849, -0.2859, 2.0687, -2.7558, - 3.0228, -0.1924, 0.2456, -2.6042, 0.8889, -0.6371, 1.0654, 0.3193, 1.27, 2.9194, 2.2949, 1.7076, -0.3495, -2.2107, -1.4287, 0.0226, 2.8627, 1.5454, 2.4025, 2.1786, 1.2828, -0.6341, 1.4588, 1.2945, -0.269, -2.4841, -1.0408, -0.3363, 1.897, -1.165, -0.2449, -2.8105, -1.595, 2.2636, 0.1991, -0.9732, 0.0756, -1.1884, 0.8281, -1.8269, 2.5264, -1.0212, 0.12, -0.0012, 1.9083, 2.5939, -0.6726, 2.7928, 2.6308, -2.6442, -1.7157, 2.2064, -2.0172, -0.2868, -1.5727, 2.2615, 1.5423, 2.3468, 1.6831, -1.3159, -1.4755, 1.3966, 0.1911, -1.7578, -2.2276, -1.4885, 2.7143, -1.9553, -0.4604, - 2.9917, -0.2841, 2.7092, -2.731, -2.9344, 0.5227, -2.543, -1.3774, -1.7012, -2.8516, -1.6156, -2.699, 1.1786, 1.0225, 2.6583, -0.0855, -0.5195, -0.1207, 1.3076, and 2.1568.

Sequence set 5: The sequence set 5 includes three sequences (denoted as a first sequence, a second sequence, and a third sequence), and a length of each sequence in the sequence set 5 is 256. Elements in any sequence in the sequence set have a same amplitude. Phases of elements in each sequence may be as follows:

Phases of elements in the first sequence are sequentially -1.1925, 1.7847, -1.3939, -2.5362, -0.8149, 2.0365, -0.2757, -0.2024, -3.1112, 2.8368, -1.1487, -2.5316, 0.4998, 2.2226, -0.581, 1.8622, -0.0059, -0.676, 2.5127, -0.5601, -1.9251, 2.1591, -2.0519, -0.4754, 2.189, -2.7229, -1.7889, -0.5016, -1.5934, -2.296, -3.0468, - 2.7181, 0.743, -1.9817, -1.4051, 2.9176, 0.4362, 0.4801, 1.9479, 0.6464, 2.8688, -0.934, -2.0932, -2.6685, -1.2864, -0.7175, 1.14, -0.6293, -0.8996, -0.0976, -3.0291, -0.3125, -1.304, -0.5683, 2.0525, -3.0083, 1.8889, -1.1268, - 2.5824, 0.9301, 1.8244, -0.8833, 2.1508, 0.1717, -1.4381, 1.1371, 1.5889, 2.5222, 0.3386, 1.1545, 1.1925, -1.615, - 0.6682, 2.5414, -0.7159, 2.3006, -0.1513, 0.039, 2.6652, -2.4053, -2.4627, -1.9405, -1.3043, -1.0674, 2.3152, 2.1185, -0.4746, -3.1229, 2.7572, 2.3543, -0.4235, 0.0627, -2.6562, -2.7183, -1.9416, 2.9599, -1.0732, 2.5047, - 0.9684, -1.8972, 0.1957, 0.3052, -0.5142, 0.4933, -1.0048, -1.5451, -1.6763, 0.9321, 2.9617, -1.7743, -3.1127, - 1.1536, 0.0297, -2.471, -3.0673, 0.922, 2.5036, 1.5309, -2.6875, -0.033, -1.9873, 1.9655, -0.7858, 1.3354, 1.3946, -1.2379, -2.8677, 1.5465, -0.218, -0.339, 2.271, -2.5847, 0.0188, -1.259, -0.8448, 2.3586, 2.7479, 0.0946, 1.6074, 0.4477, -1.4115, -0.8425, -0.1515, -0.8329, 0.3449, 0.5044, 1.3132, 2.6717, 1.5844, 3.0974, 0.5005, 1.5794, 1.9799, 1.0026, -1.1866, -1.2772, 0.435, 3.0214, -0.0019, -0.5254, 0.3715, -1.6978, -2.8423, -1.0949, 3.049, -1.739, 2.4633, 0.4782, -2.9256, -2.6678, 0.4506, -1.089, -1.9343, 2.0148, 2.7567, -0.7955, 0.8484, 2.8344, 3.0562, 2.1246, -1.212, -2.3085, -2.2276, -1.2284, 2.7027, 1.9044, -2.5408, 2.5406, 2.8903, -1.539, -1.5195, -0.5648, -1.4829, 0.4636, - 2.1433, -1.8409, -0.1332, 3.0443, 1.3531, -3.1246, -1.3675, 2.5215, 2.8293, 1.7739, 3.084, 1.3579, -0.0773, 0.2212, -1.9567, 2.7132, 0.607, 1.1996, -1.6018, 0.6818, 1.2763, 1.8533, -1.947, 2.4382, -1.639, -3.0981, -3.1032, -0.3389, 1.5811, 3.0544, 0.2994, -2.2885, 2.2162, -0.2345, -2.8953, -2.6254, -1.5541, -0.0233, 1.5221, -2.4497, 1.6059, - 2.7102, -2.8473, -1.762, -2.0579, 2.5912, 2.1996, 1.9222, -0.8686, 0.7524, -2.5471, 1.2948, 0.7054, -0.8568, 0.9159, 1.431, -2.7652, -2.689, -2.9693, 1.9407, -2.5229, and -1.8486.

Phases of elements in the second sequence are sequentially -1.9167, -2.4287, -0.2442, 0.1453, -2.8349, -2.2425, 0.6963, -1.0121, -1.5787, -2.1124, -2.6662, 1.8415, 2.318, 2.0579, -1.6281, -0.772, -0.1664, -0.1967, 0.7594, -2.1742, 0.298, 0.0764, 2.6617, -1.8209, 1.6422, 2.617, -1.2426, -2.1377, 2.7227, 2.6543, -3.0423, -0.8817, 1.6952, -1.538, 2.8198, 2.6778, 0.263, -2.7974, 1.5141, -2.6888, -2.4389, -2.2731, -1.7359, -2.1412, 0.395, 2.4305, 2.3212, 0.4442, 0.7775, -0.3278, -2.1449, 0.2564, 2.0591, 0.6346, -1.5999, -2.8721, 0.4857, 1.2427, 2.8974, 3.0841, 2.0025, -1.4853, 0.5677, 0.5605, -1.1399, -0.4264, 0.7047, 2.5146, -1.5955, 0.8614, -0.322, 0.0391, -2.3447, 1.0847, 1.2145, -2.0167, -0.7453, 2.1708, -2.2284, 1.5092, -0.8422, -0.0178, 0.2262, 1.3959, 2.4173, 1.0706, 0.9705, 1.4718, 0.3721, -0.6064, 3.1269, -2.2554, -1.4205, -2.6004, 0.6785, -3.0779, -0.3003, -2.4353, 0.8514, -1.5762, 2.8474, - 1.8363, -2.1162, 1.822, 0.2394, -1.7318, -2.8598, 2.2332, -0.0022, 1.2624, -1.6144, 0.1877, 1.6817, -2.7274, 2.5884, -2.0753, 0.1998, 1.6529, 2.5094, 0.3824, 1.9439, 2.1099, -0.8667, -0.7273, -2.2422, -2.2818, -1.5407, 1.0156, 2.7716, 1.3205, 1.8004, -1.9289, 2.7272, 1.6761, 3.1285, 2.0036, -2.2543, 0.817, -1.2868, 1.2667, -0.7672, -1.0506, -1.5835, -0.4676, -3.0413, 0.9268, -0.1702, -1.4375, 2.5111, -1.0093, 0.9481, -0.8538, -2.1269, 2.4865, -1.7094, 0.08, 2.013, 2.2727, -0.6591, -2.209, -0.5106, -1.2238, -1.8753, 0.5023, 0.9877, -2.4939, -2.6995, 3.0885, 2.5724, -1.3885, 0.3221, 0.3681, -0.9481, -1.3515, -0.2733, -1.5634, 0.1126, 0.7569, -2.5985, -0.8195, 2.6432, -0.3321, 2.4935, -2.4664, 2.5471, 2.5106, 1.5623, -3.1159, 1.292, -0.987, -2.0373, -2.4968, 0.6402, 1.9922, 0.9471, -2.251, 1.8491, 0.2208, 1.4108, -1.9591, -2.7505, -2.2893, -2.8762, 1.3138, -1.3645, 2.349, 1.5196, -2.3567, -2.0147, 1.9382, -1.6428, -1.088, -0.5289, 2.3592, -2.9564, -3.0122, 2.7947, -0.2708, 2.9689, -3.0182, 2.0588, 2.1655, 0.1833, 2.4337, -0.5178, -0.634, -1.2262, -2.2921, 0.6478, 2.5636, -0.6628, -0.1426, 1.0883, 2.1111, -1.9308, 1.7537, -2.134, -3.1058, 2.3778, 2.1977, 0.8532, -2.4844, 0.0524, -3.0914, 2.0952, 1.4451, -1.7285, 2.9965, 1.0778, -2.9342, 3.114, 1.1209, -2.7213, 0.1055, -1.137, and 0.588.

Phases of elements in the third sequence are sequentially 1.5422, -1.4767, -1.4853, 1.0825, -1.5743, - 0.9075, -0.453, 3.1004, 0.944, 0.1953, -1.0513, -0.2645, -1.3009, -0.3568, 1.273, 0.9015, 1.2224, -2.4254, -1.8345, 2.5916, -0.2863, 2.9234, -0.9671, -2.0348, 0.0606, -0.6255, -1.2115, 2.5622, -2.5953, 2.4578, 1.6678, -2.8659, - 0.1258, 0.6143, 0.9623, 3.0868, 2.4973, -0.1387, -1.8318, 1.8878, 2.9884, -1.2715, 2.9969, 2.436, -1.2514, 1.5157, -2.8758, -2.2929, 0.8657, 1.6858, 0.7841, 0.0302, -1.4956, 1.843, 2.4913, -0.5501, 1.7608, -0.9911, 0.3461, -0.706, 0.2047, 1.0421, 1.9019, 2.4363, 2.9746, 2.0233, 1.4184, 0.1099, 2.6834, 0.6425, -1.871, -0.7354, -1.2532, -2.2615, 1.3311, -0.6946, -2.8972, -0.6834, 2.104, -1.1305, -2.9203, 0.152, -0.7227, 0.7827, 0.658, -1.6224, -1.2858, 0.5575, 1.0772, -2.3673, -0.239, -3.1343, -1.3493, -2.1074, -2.4055, 0.0951, 2.7049, -2.7522, 1.4435, -2.9217, -2.7644, - 0.8338, -0.0406, -1.6828, -1.1676, 2.4736, 1.8773, 0.2245, -0.9211, 2.4124, -3.0587, -1.9017, -3.1086, -1.0385, 1.9407, 0.6329, 2.9327, 0.3879, -1.294, -0.12, 0.0104, -0.4066, 2.0508, 0.3443, 1.9983, 1.1543, 1.164, -1.8606, 2.3082, 1.9513, 1.1236, -2.2854, -0.767, 1.0311, 1.6809, 0.8848, -2.9534, -0.5042, -0.3721, 1.2892, -1.5411, 1.4111, -0.4527, -3.0161, -1.7934, -1.1397, -2.658, 3.1384, 0.5838, 0.2661, 2.7425, -2.4127, 0.0627, 2.8444, -2.8821, 2.3084, -2.6724, -0.5319, 1.0577, -2.7325, 2.1937, -1.776, -2.5842, -2.0208, -0.838, -2.2632, 0.2978, -1.3384, 0.1282, -1.5526, -1.7793, 1.6752, 0.9931, 2.9565, -1.028, -2.2882, 0.6455, -3.07, -2.6211, -1.5704, 2.9197, 0.4956, 1.3433, -1.0401, 2.5045, 1.3533, -1.0857, 1.6081, 0.3243, -0.4627, -1.0673, 2.2613, 3.0713, -0.9891, -0.2695, 0.9829, -1.0983, -0.1865, 0.1833, -1.6516, 1.0836, 3.0853, -0.95, 2.4254, -1.3774, -1.6721, 1.6755, 1.5436, 1.137, 1.1348, -2.53, 3.0277, -0.7706, 2.0355, 2.9624, -2.3652, -2.9992, 0.3751, -1.1451, -0.5739, -1.3349, -1.3111, - 0.8828, 2.6288, -0.3677, 2.6024, -1.0845, -1.877, -2.877, 1.0221, -0.6459, -2.0811, -2.2745, -1.3023, -1.5401, - 0.579, 2.8634, 0.8907, 2.6675, 2.5107, -0.2835, 2.5054, -1.3002, 1.3457, 0.3866, 0.8156, 0.99, -2.1348, -1.2879, 1.6522, 1.7998, -2.9607, -0.878, 1.3589, -0.7191, and 0.0172.

Sequence set 6: The sequence set 6 includes four sequences (denoted as a first sequence, a second sequence, a third sequence, and a fourth sequence), and a length of each sequence in the sequence set 6 is 256. Elements in any sequence in the sequence set have a same amplitude. For phases of elements in each sequence, refer to claim 6. Details are not described herein.

Sequence set 7: The sequence set 7 includes two sequences (denoted as a first sequence and a second sequence), and a length of each sequence in the sequence set 7 is 512. Elements in any sequence in the sequence set have a same amplitude. Phases of elements in each sequence may be as follows:

Phases of elements in the first sequence are sequentially -1.741, -0.0679, 0.4991, 2.9167, 2.7786, 2.8718, -1.1279, 2.2911, 1.5469, -1.6307, -3.0562, -1.6512, -2.1327, 0.8723, 0.2832, -1.2522, 2.1328, -3.1322, 2.105, - 0.3128, 1.8809, -1.6268, 0.9177, -2.1347, -2.764, -2.6262, -2.2445, -2.6948, 2.48, 2.8316, -0.5097, 2.8639, -3.0232, -2.6367, 2.1477, 0.3311, 2.3892, -1.8721, 0.8365, -2.7929, -1.5536, 0.7171, 0.7839, -1.3401, 1.3305, 0.7389, -1.799, 1.9236, 0.1875, 1.094, 1.0869, 1.0544, -0.7868, -0.779, 2.8939, 2.5652, -2.9421, -2.9294, -2.9255, 1.0142, -0.9273, 2.8466, -0.6989, 1.0683, 0.171, 1.8506, -2.1913, 2.412, -0.4572, -2.2011, 1.9112, -1.0232, 0.2698, 0.3349, 2.4228, 2.0004, -1.096, -0.1501, -1.6226, -1.2548, 1.9574, 1.5257, 1.9924, -1.4896, 2.5885, 1.8958, 2.6029, 1.8089, -2.9991, -2.7198, 2.8347, 0.6438, 1.7634, -1.6702, 0.1805, 2.5475, -1.2121, 1.6204, 2.0198, 1.3554, -1.7709, -2.5712, - 1.2647, 1.2157, 2.4604, -2.6991, 1.5207, 0.1496, 2.5281, -0.1998, -0.6282, -0.2162, 1.4076, -1.8296, 2.2646, 2.5439, -1.0578, -2.3879, -1.9917, 0.8803, 1.3803, -0.5061, -0.434, -0.5161, -0.6603, -0.5898, 2.1759, -2.5669, 0.7926, - 0.7691, 2.5209, -1.304, -2.4882, -1.9464, 1.9586, -1.2323, 2.7031, 2.0131, -0.9579, -3.0937, 0.9945, -1.4609, - 1.362, -0.8925, 1.8114, -0.8371, -0.4796, -2.9168, -1.5735, -1.8213, -1.0264, -0.5661, 2.1074, -0.8249, -2.8467, 0.1319, -0.9763, -0.1674, -2.9287, 2.2369, -3.0987, 1.5246, 1.1173, -2.8334, -2.3955, 2.5169, 2.9507, -0.1105, 2.404, 2.7174, 0.1856, -0.1068, 2.8199, -2.623, -1.5034, -1.661, -0.9155, -2.2626, 1.5044, 0.6481, 0.6656, 1.5496, -2.2665, 0.0112, 1.5967, -1.1874, 2.197, -1.7232, -1.9885, -1.2971, -0.2049, 1.1638, 0.6585, 3.0984, -0.1819, 1.0435, -1.1303, -1.8371, 0.4765, 0.2426, 0.2734, -2.3368, 0.3567, 3.0776, 1.9494, -0.6129, -2.2113, -0.4358, - 2.7074, 3.1144, 1.7166, 0.0386, 0.4455, -1.9986, 0.6636, -0.9048, -2.3021, -2.4697, 1.2808, -2.9983, 2.7538, - 2.8503, -1.7846, -2.949, 1.1656, 2.2287, 2.5153, 1.2675, -1.6416, 1.4237, 3.0436, -1.0214, 0.1101, -2.8155, -1.678, 1.1138, 1.79, 0.1139, -0.1183, 0.1646, 2.3702, 1.2683, -1.492, 2.1702, 0.5106, 1.3497, 2.5075, -2.5169, -2.2559, 0.7772, -1.2503, 2.28, -2.1691, 0.8437, -3.0307, 2.4994, -1.8138, 3.0016, 1.8683, -2.5554, 1.2886, -2.2151, -1.7288, -2.3472, -2.4369, 0.1582, -3.0983, 2.9143, 1.0087, -0.2757, -0.7618, 1.0559, 1.9085, 2.2179, 3.0333, 2.0688, - 0.7483, -2.3725, 1.2624, 0.8959, 1.2716, 0.2325, 0.6172, 2.911, -0.4193, -1.8931, -1.6815, -2.7458, 1.5009, -2.1923, -0.3739, 1.6171, 2.0473, -2.7291, -1.7748, 1.7078, 2.6632, -0.7426, -2.2914, -0.9982, -2.7714, 0.2924, 0.6705, - 0.7324, -0.6814, -1.8098, -1.53, 0.9356, -2.5669, -1.3387, 2.8125, 2.4756, 1.5634, -1.6627, 2.9838, -1.1121, - 0.8247, 1.9818, 0.7833, -2.5011, -1.0506, -2.8797, -1.0696, 2.8371, 1.0488, -0.7623, 1.5124, -1.9269, -1.699, 1.1916, -0.9622, 2.5004, 1.539, 0.2526, 0.7634, -2.8672, 0.5439, 1.8231, 2.6006, 2.5633, 1.6138, 1.8184, 2.7999, - 0.0429, -2.6998, 0.3321, -0.1301, 0.9965, 2.6225, 2.9593, -1.4594, 0.7924, 2.0699, 1.2331, -0.9441, -0.8609, - 1.4778, 1.488, -0.7581, 0.633, 0.4624, -1.3467, 1.9377, -1.171, -1.7073, -3.0309, 2.7625, -2.0434, 0.7505, 2.6039, -0.5111, -0.281, 1.3848, 0.9783, -0.0273, -2.2428, -0.0022, 0.3292, 0.2785, 1.5735, 2.2351, 1.2199, -3.0746, - 2.3177, 2.7391, 2.1026, -0.1854, 0.1275, 1.3596, -1.2651, 2.7494, 1.0137, -2.2422, -0.0271, -1.803, -1.4079, - 2.9009, 0.7773, -1.0363, -2.8788, -0.8346, 1.0229, -0.7102, -0.2369, 2.9971, -0.5389, -2.6916, -2.2152, 2.2523, - 3.0921, 1.6674, -1.6519, -0.5359, -1.6311, 2.2476, 1.8839, -1.8032, -0.2595, 1.8003, 2.2334, -1.8066, -0.1179, - 1.8227, -1.8651, -1.0244, 2.4249, 2.9894, 2.7509, -2.5877, -0.3874, 2.7961, -1.9648, -3.1012, 0.8617, -2.034, 2.0919, -1.563, -1.5142, 1.0323, 0.3945, 2.7817, 2.771, -1.2856, -1.7665, -2.4086, -2.0391, 2.4651, -2.8059, - 0.0702, -0.668, 1.857, -0.2084, 0.6809, 2.4268, 1.3162, 1.4764, -0.751, -2.6625, 0.798, 0.577, 1.5771, 2.3846, 0.0649, -3.0431, -1.5212, 1.9441, 3.0372, -2.1989, 2.0019, 2.6203, 0.947, -0.6007, 0.583, -1.3552, 0.4247, -0.0207, 0.1764, 2.1817, 0.3368, -0.9942, 1.4778, -0.4001, -2.0479, 0.1589, 1.9823, -0.1229, -1.1531, 2.8368, 2.543, 1.2518, 0.4257, -1.7667, -0.7899, -2.7159, 0.3286, -2.819, 1.5021, 1.6614, 3.0022, 1.7035, 3.0247, -1.984, -0.6173, -0.3769, 0.7493, -2.9033, -1.2, 0.3518, -2.0777, 2.9568, -2.5095, and 0.544.

Phases of elements in the second sequence are sequentially 1.8002, 1.4434, 1.236, -2.9632, -2.9574, 0.256, -2.9466, -2.0824, -2.9655, -0.1222, 2.3594, 2.8964, -0.203, 2.7229, -1.2275, -1.6995, 2.7215, 0.8422, 2.8669, 1.9509, 0.425, -1.2157, -0.878, -1.8948, 0.142, -0.8557, 0.7323, 2.5577, -2.3259, -3.1237, 0.62, 0.9117, 3.0584, 2.9672, 0.4344, -0.0949, 2.4183, -2.6405,1.9353, -0.2975, -1.8502, -0.9587, 2.7372, 0.8463, 2.3467, 0.0973, -2.568, -0.4989, -2.5898, -2.7769, 0.5475, -3.1289, 0.5844, -1.6373, 2.0239, 1.1767, 2.1946, -2.415, -0.3892, -2.2733, - 1.6726, -0.4879, -0.1121, -1.7323, -0.9612, -1.0547, -0.5993, -0.989, -1.6452, 1.652, -2.8273, -0.3094, 2.5016, - 1.6174, -0.9739, -2.3495, 2.6822, -0.6495, 1.5433, 1.8935, -0.0878, -1.7249, -1.0453, -0.1307, 2.8001, -1.6076, - 1.9074, -2.2152, 2.1527, -0.3239, 1.4144, 1.6884, 1.3862, 0.0598, 2.9189, 2.9906, -2.4552, -3.0924, 1.7703, 0.4374, -2.7636, -2.2252, 2.3042, -0.8894, 0.8429, 1.872, -2.9095, 1.192, -1.1769, -2.049, 0.3159, -0.6035, 0.705, -1.5633, 0.075, 2.5616, -1.4301, -1.8463, 0.3269, -0.4952, 2.6572, -1.3576, -0.1583, 0.5015, 2.3601, 1.4869, -0.6722, - 2.5597, 2.0242, 2.732, 2.225, 0.902, -2.8354, 0.7164, 2.7673, 0.729, 2.8795, -0.4248, -2.2299, 0.3737, 1.0008, 2.3769, -0.4127, -2.3815, -2.926, 3.0745, 0.5187, 0.9608, 1.1687, 1.2186, 1.3964, -2.3031, -1.3557, 2.0305, -2.8288, -0.1143, -1.291, -1.8637, 1.1704, 0.2908, 0.6352, -1.0851, 1.4149, -1.8014, -3.1137, 2.5061, 1.0083, 2.5023, 2.2854, -0.1463, 1.0209, 2.3079, -0.8362, 2.4886, 0.594, -1.3185, -0.1088, 1.1297, 0.7903, -2.2493, -2.1665, 1.0868, - 0.1771, -1.7781, 0.136, -2.8151, -0.5225, 1.5295, 0.7413, -0.5562, 0.1552, 0.2284, 1.3707, 0.6494, 0.6738, 2.3295, 0.462, -1.3466, -2.4232, -1.057, 2.6345, -2.7126, 0.2539, 2.5781, -3.0096,1.1495, -0.0387, 0.5756, 2.7575, -2.0642, -3.0429, -0.303, 0.8518, 0.3714, 1.439, 2.4022, -0.4227, -0.4611, 0.5958, -2.4147, 0.7688, -0.2442, 2.3916,1.5788, 2.8499, -1.1642, 2.0469, -1.4917, -3.1408, -0.7262, -0.9954, 2.2745, -1.249, 2.442, 0.3021, 0.2129, 0.6223, -2.4906, -1.8738, -2.3952, -2.5484, 0.1834, -0.2804, -1.771, 2.416, -0.7976, -2.9151, -2.3314, 2.7384, -0.6627, -1.7058, - 2.5765, 1.1435, 0.935, 0.7133, 0.6213, 2.6156, -1.5025, 0.6843, 0.4011, -2.9797, -1.9745, 1.5807, -2.9988, -2.1757, -2.1144, 2.5182, 2.8273, 0.6244, 2.9515, 0.709, 0.5219, -1.5051, 2.4621, 1.6998, -2.6764, 0.3249, 1.4697, -3.1063, 3.1315, 1.5021, -1.4112, 1.6392, -1.44, 2.6651, 2.4731, -0.0595, 2.7343, -1.4125, -2.6858, -1.8668, -2.1305, 2.8167, -2.2243, 1.7714, 2.8102, -1.7147, -1.1112, -0.3255, -0.7205, 1.7968, 3.0833, 1.9669, -3.1265, 1.5881, 0.6865, 2.409, -2.5782, -3.1409, 0.8443, -0.424, 1.9978, 0.3178, -0.3913, 1.0528, 2.1225, -1.1609, 1.2089, 2.3644, -2.4103, 3.0107, -1.3973, 1.594, 0.0146, 2.5127, -2.3005, -2.2119, 2.7886, 2.522, -0.252, -0.9731, -0.605, 1.5369, 0.1204, -1.8913, -2.9909, -0.6097, 2.7614, -1.1703, -2.8879, 3.0222, 1.2963, 0.869, 2.6022, -2.3225, -0.0819, -2.9912, -0.2249, - 0.0869, 0.1627, -2.955, 2.5, 0.4809, -0.9359, -2.4281, 0.2438, -0.8564, -2.2925, -0.9384, -1.5863, -0.652, 0.0897, -2.4048, -0.0527, 2.7168, 0.5559, -2.8469, 0.5301, -0.2628, 3.0263, -1.6245, 1.4128, 1.9356, 0.8664, -1.0171, 2.282, -2.5059, 1.6132, 2.3928, 1.1173, 3.1037, -1.4472, 0.0672, -0.8602, -2.4708, -1.7421, -3.1172, 1.3091, 2.0007, 2.2808, 2.611, 1.8937, 2.0843, -2.8949, -0.5845, 1.7226, -3.0125, 2.9442, 2.8144, -0.7276, 0.699, 1.0263, -1.9806, 2.5371, -2.5581, -0.5979, -0.1837, 2.0134, 0.8587, -0.2034, 2.0986, 2.1606, -2.8452, 1.4042, -0.5112, -0.9199, 1.8568, -0.1209, -2.9323, 0.494, 0.8826, -2.0898, -2.117, 2.7922, -1.9662, -2.5444, -2.9865, -2.5081, -0.5057, - 3.0821, 0.5241, -0.7633, -2.2824, 0.7962, 2.3666, -0.0427, 2.9068, -2.2608, 1.5426, -0.2476, 1.7192, 2.5419, 1.9227, 1.7152, -2.9317, 0.0146, 1.1253, 0.3997, -1.7835, -0.0422, -3.0073, 2.212, -2.2407, 2.692, 0.6505, 2.5368, -1.1936, -0.9419, 2.2984, 1.8367, -2.4902, -0.126, -1.1198, 2.7167, 2.3464, 1.3056, -1.9952, -1.9998, -3.0121, -3.0287, 2.9777, -0.2317, 1.5936, -0.7782, 0.617, -1.902, 2.5637, -1.6269, -2.0269, 0.2739, -0.2465, -2.3482, 1.9396, -1.686, -0.8256, 1.6853, 1.4108, 0.5311, 0.6493, 2.933, -0.7312, 1.9773, -2.2483, -0.9665, -1.8329, -1.5682, 0.0421, - 1.0333, -0.2992, -0.9215, -1.5176, -1.9488, -1.3363, 2.7999, 0.8602, -2.1618, 2.6164, -2.5716, -0.7148, -0.1889, 1.9906, and -1.0272.

Sequence set 8: The sequence set 8 includes three sequences (denoted as a first sequence, a second sequence, and a third sequence), and a length of each sequence in the sequence set 8 is 512. Elements in any sequence in the sequence set have a same amplitude. Phases of elements in each sequence may be as follows:

Phases of elements in the first sequence are sequentially -1.3142, 0.1446, 0.4919, -1.2402, -2.2676, - 0.954, -0.9422, -2.8837, -0.2102, -0.4015, -1.3747, -0.4533, 2.3904, -2.4297, -2.4594, 2.5462, -2.8364, -0.2681, -0.4047, 0.1586, 2.4344, 0.7449, -1.7454, 0.1275, -2.8004, -1.1177, -1.043, 0.3221, -0.7161, 2.8351, -1.4683, 0.3569, 0.2656, 0.0472, 1.3402, -1.1396, 3.0849, -2.8861, 1.5561, -0.0874, 2.8281, 2.8235, 0.0347, -2.399, 0.9294, -1.1641, 0.9507, -2.5645, -1.1373, 0.3996, 2.703, -1.3056, -2.2363, 2.3126, 1.3375, 1.5508, 0.8969, 3.0475, -2.1296, 1.5462, -1.8571, 2.4545, -2.0732, -0.7483, -1.4522, -0.1329, -2.2109, 1.8043, 2.2902, 3.0941, 0.1089, -1.9229, 2.092, 0.7008, -0.694, 2.6766, 1.7349, 2.1715, 2.5643, 0.68, 1.7882, 0.4591, 2.3151, 2.6022, -0.8805, 1.1427, - 1.0401, -1.4283, 2.1195, -2.0869, 1.0178, 2.0115, -1.6816, -0.5271, 0.2703, 2.3474, -2.8043, -2.7263, 1.2288, - 2.9595, 2.5632, 1.6678, 0.7003, -2.1324, 2.8032, -2.5441, 1.0623, -1.8364, -2.5349, -2.0554, 1.9612, 1.5798, 1.2545, 1.2623, 1.2228, 3.1115, -0.6316, 2.6867, -1.3457, -3.0751, 0.2551, -0.9278, -1.8798, -1.763, -0.2225, -0.9241, 2.2623, 2.6166, -2.0651, -1.3654, -0.8239, -1.2993, 1.0775, 2.817, 0.4721, 1.5318, 0.2259, -3.0012, -2.4642,1.9529, -1.7655, -2.6176, 2.5152, -1.9971, 2.5287, 0.2978, 2.7794, 2.3266, 3.1301, -2.3293, -0.4721, 1.043, -1.7556, - 0.0237, -2.7355, 2.9739, 0.8444, -1.1452, 2.2002, 0.8853, -0.781, 1.5747, 2.7961, 1.1867, 0.1223, -0.6694, 0.0018, -0.9383, 2.5981, -0.596, 1.4418, 3.0011, -1.1054, -0.0323, 0.9184, 1.659, -2.1469, -1.0239, -2.6617, 2.0283, - 2.4812, 2.3435, -1.4027, 2.5583, -2.5793, 0.7898, 1.7523, -0.5641, -0.8163, 1.473, -2.2642, 0.0881, 2.5248, -2.9767, 2.5125, 2.3384, -1.035, -2.7719, -0.8117, -1.9887, -2.461, -2.996, -0.2272, -2.2263, 1.5089, -0.9903, -1.1193, 3.092, 2.0654, 1.7522, 0.1925, 2.496, 3.0017, 1.3321, -0.1273, -0.3488, 0.1462, 0.87, 2.2014, -2.5122, 3.138,0.2086, 2.8724, 1.6231, -1.016, -2.9388, 1.033, 1.4434, 2.1284, 2.017, 2.7684, 1.6901, 3.0802, -0.4822, 1.8846, 1.6913, 0.8732, 2.4389, -1.9901, -2.9954, -1.2842, 2.4424, 0.6093, 0.1262, 0.2149, -1.9419, -0.9713, 2.3884, 1.0799, 3.0068, -1.83, 1.7309, -2.8488, 2.4299, 3.1174, -1.4873, -0.3266, 1.1231, 2.6132, -0.0103, -0.2398, -2.5907, 0.7033, - 1.1896, 0.449, 2.0085, -0.8713, -2.0388, 2.1608, -2.754,1.5793, -2.53, 1.9219, -0.6595, -1.8914, -0.2131, -0.5826, 2.0129, -1.1745, 0.5901, 2.4775, -0.2776, -0.0179, -1.6225, -1.3349, -0.2085, -2.6515, 1.8167, -1.8317, -1.212, 1.3829, 1.8211, 0.379, -1.1763, 2.5194, 0.2099, 0.5218, -2.0381, -2.5029, -2.8368, 1.9326, 0.1221, 0.0348, 2.052, - 1.0421, -2.9422, -2.4101, -1.4681, -1.3255, -0.1222, -1.907, -2.4147, 0.5844, -2.1743, -1.1453, -1.2673, -0.1393, 3.1191, -0.6823, -0.3941, -0.181, 2.354, -0.1494, -2.12, -0.9935, 2.7915, 2.6606, -2.5777, -3.0404, -1.6235, 2.8277, 1.0261, -0.6131, 1.813, 0.5428, 0.8142, 1.0679, 1.8387, 1.6822, 2.4764, -1.2277, -1.6763, -0.3309, 1.9051, 2.7331, 1.2164, 1.504, -0.9824, -2.5399, -2.4801, 1.0924, -2.3901, 1.2047, 2.1853, -0.5811, 2.0795, -0.8003, -0.5947, 0.3255, -2.767, 0.6494, 2.3878, -1.0101, -0.5589,1.5912, -2.6877, 2.9082, 0.9938, 1.8756, -1.1318, -2.1431, 0.357, 0.5464, -2.1371, -2.64, 0.5445, -1.6955, 1.3401, 1.427, 2.909, 0.7439, 0.0626, 0.4995, 0.9853, 3.1349, -1.0922, - 2.6367, 1.8753, -1.6855, 1.1772, -0.6186, -2.8723, -2.5074, 0.1556, -2.6319, -0.8205, -2.8104, 1.3694, 0.5363, - 0.1869, 2.2328, -0.3933, 1.6672, 2.6945, -1.2566, -2.1392, -2.6527, -2.1578, -1.2841, 2.5053, 2.4796, -2.3126, - 2.5585, -2.6769, 2.5662, -1.2811, -1.6735, -2.1195, -0.3221, -2.9201, -2.7164, 2.6269, 1.8043, 0.6668, -0.3432, - 2.7983, 2.313, 2.7745, -2.4594, -0.8113, -0.102, -0.955, 1.1868, -0.8808, 0.3378, -2.0793, 3.0111, -1.6413, -2.5313, 0.5719, 2.793, 1.9219, -2.2171, -0.2111, 1.4927, -2.8948, 2.2321, 3.0266, -2.0412, 1.5572, -0.4691, -1.0739, -2.823, -2.1119, 0.5387, -1.8443, 1.6201, -1.3458, -1.8848, -0.7588, 1.7684, -1.9337, -0.1699, 2.2588, 3.0759, -2.2981, - 0.2907, -2.9186, 0.5934, -0.3902, 1.7812, -0.0439, -1.0548, -2.8582, -0.7699, -2.6195, 2.7952, 2.2695, -2.1635, 3.0143, -1.7606, 2.0022, 3.0109, -1.5122, -0.6235, -1.7626, 2.4212, -0.5326, 2.5754, -2.0008, 1.8667, -0.5235, 0.2845, 2.6202, 0.1667, 0.9439, -2.2619, -2.0529, 1.444, -0.5973, -2.5358, -1.3801, -2.215, 1.1275, 0.3646, -0.5104, -1.4527, -0.9958, 2.5916, 1.3213, 2.5656, and 2.6679.

Phases of elements in the second sequence are sequentially -2.5097, 0.4737, -2.4653, -0.3343, 1.9283, 0.9214, -2.0408, -1.9515, -1.8683, 1.8888, 0.1445, -0.7521, 1.2086, 0.4549, 1.7156, -0.6083, -0.0394, 1.2743, 2.7354, 0.0339, -2.6096, 2.3731, -1.2976, 3.0958, 2.0361, -1.5691, -0.8524, 2.0849, -2.771, 0.3437, 3.1164, 2.5472, 0.6285, -3.0328, -2.4986, -2.0429, -2.5712, 1.4325, -2.6149, -2.6723, -1.2297, 0.5316, 2.5552, 0.5255, 2.1036, 0.718, 1.3924, -0.2757, -0.8176, -2.8213, -2.0304, -2.5001, -2.4003, 1.3714, 0.0119, -1.2361, 2.321, -2.8855, - 1.9555, -0.4713, -2.3997, -1.9612, 2.8409, -3.0851, -2.7919, -0.1579, -2.509, -0.2558, 2.1098, 0.0107, -1.3001, 1.5513, 0.7034, 2.0813, -2.0043, -0.5739, -0.1571, -0.1205, 2.294, 0.7224, 0.6991, 0.5654, -2.7424, 2.9757, 1.7266, 2.2836, -0.0295, 0.4291, -0.0028, 2.7167, -0.2558, -2.007, -1.9432, 0.2782, -1.7842, 0.7158, 0.0316, -2.338, 2.3851, -0.5064, -2.0636, -1.5719, 2.6594, 0.8633, -2.4704, -0.5252, 2.7871, -1.5739, -0.9885, 1.2608, 1.1844, 2.5026, - 1.0703, -1.185, -1.9481, -1.4377, -2.476, -1.2643, -0.9618, 2.1559, 0.4432, -1.6786, 0.2055, 1.7678, 0.6448, 2.5279, -0.3915, 1.3464, 2.3352, -1.2914, 1.4378, 2.7926, -1.4223, 0.3163, -1.3083, 1.3047, -0.369, 2.683, 0.9932, -0.2651, -0.4472, 3.0541, 2.843, -2.0738, -2.0651, 2.841, 1.8036, 2.936, 0.9144, -2.8205, -0.9711, 1.213, -0.1036, 2.1266, - 0.3232, -1.1039, -2.8816, 1.5101, 1.2958, -0.9851, -0.4324, -0.9787, -1.2001, -0.6136, 1.6119, -0.9679, 0.93, 2.6468, -2.0923, -0.2141, -0.9455, 0.1404, -0.5089, -0.0594, -0.272, -2.7852, 1.2423, 2.8561, 1.6126, -0.6295, - 0.4884, 1.1867, 0.7735, -2.4539, -2.4995, -2.7528, 0.9083, -1.0403, -1.4345, -2.2509, -3.0769, -2.4565, -1.3704, -0.1523, 2.7932, 2.0582, -0.9845, 1.9822, 0.5713, -1.461, -1.347, -0.8803, -0.014, 1.1947, -2.2052, -2.0338, 0.5105, -1.7849, -0.4727, 2.6498, -1.1429, 2.746, 2.3403, 0.421, -3.0381, -0.2404, 3.0412, -2.5354, -2.7486, 0.2201, - 2.3906, -1.9604, -1.5912, -0.0978, -2.8996, 0.7736, 1.6309, 0.8524, -2.6088, 2.0093, 1.3955, -1.627, 1.8406, - 1.5953, -0.2147, 1.2044, -0.5234, -0.3385, 1.8307, -1.3707, -0.1307, 1.6333, 2.3303, -0.8955, 3.0353, 0.7232, 1.7617, -0.1313, -3.1074, 2.0917, -0.0533, -0.9532, -0.0583, -2.2451, 2.1302, -2.8568, -2.9681, 2.6432, -2.3601, 0.1378, -0.5464, -1.2555, -1.8646, -2.7447, 2.546, -3.0047, -1.3133, 1.7156, -3.0864, -2.0814, 1.3329, 0.4831, 0.7547, -2.6251, -1.8695, -1.6313, 0.4202, 0.9096, -1.1718, -1.9356, -1.3809, 0.3735, -0.5829, 0.6987, -0.0973, 1.3413, -1.0745, -1.2766, -0.7611, 1.0646, -1.1926, 1.9922, 0.9849, -1.7472, 2.9321, -2.2559, -2.2236, -2.1873, 0.2952, 2.9927, 0.0353, 1.0756, -0.1889, 2.1716, 0.649, 1.7272, 0.9959, -1.958, 0.2553, -2.6154, 1.439, -0.1696, - 1.9679, 1.2356, 2.0772, -1.5215, -0.9841, 2.3347, 2.222, 0.7629, 3.0618, 1.0873, -1.4695, -2.7422, -3.0128, 0.2687, 1.724, -0.1468, 1.4651, -1.9842, 0.1625, -1.9759, -0.3811, 1.9245, -2.8176, -0.9103, 1.6452, 1.8128, -1.5083, 0.489, -0.0527, 2.5498, -0.4687, -2.2767, -1.9638, -3.0999, 2.2394, 1.6122, -2.3989, 2.7039, 2.8861, -0.3378, -0.9561, 2.6132, -0.3931, -1.5741, 1.1243, 0.1542, 0.741, 1.4447, 2.7714, -2.4539, -0.1389, 1.0941, 0.8071, 1.682, 0.6235, 0.8349, -0.0233, 1.8132, 0.7083, 1.176, -2.2884, 0.6937, 3.1272, -3.0214, -0.7531, -1.4023, -1.3399, 1.8844,0.9787, 1.258, -1.2727, -2.2873, -2.1207, 3.0898, 1.1536, 1.8288, 0.3797, 0.4656, 0.5167, 2.6091, 0.5052, -1.7582, 1.993, 0.5826, -2.684, -0.9569, 1.5092, 1.8926, 1.7718, -1.3687, 0.4963, 1.6209, -0.526, 2.6255, -2.2517, 1.1367, -0.9387, -2.072, 0.0622, -1.921, -2.8507, 1.4984, -2.8631, -1.3688, 1.3642, 1.8797, 0.5849, -0.039, 1.9897, 2.8228, 3.0017, -1.8722, 1.0024, -1.9442, 1.1609, -1.4615, 0.0194, -1.6882, -1.0299, 0.9646, -1.8952, -2.0014, 0.3889, -0.0305, - 0.7402, 1.9282, 1.0253, -2.0377, -0.0072, -1.224, 3.002, 0.2188, -0.1187, -2.8835, -1.569, 0.0014, -0.3599, -1.9589, 0.8236, -2.5036, 1.6049, 2.4783, 2.4182, 2.5969, -2.826, 0.7162, 0.3346, -0.1914, -2.7742, -0.1601, 1.5421, 0.0123, 0.2855, 2.6384, 2.8958, -2.5484, 2.2922, 0.9698, 2.2656, -1.3985, -0.981, -2.6895, -2.7313, 2.7753, 2.1642, -1.9749, 2.7286, -2.3581, -0.193, 0.9118, 2.857, -2.2428, -2.3835, -2.756,1.6585, -0.9873, -2.6315, 0.8586, -0.7158, 2.937, 2.7077, 1.9114, 1.2841, 1.1323, 0.2218, 2.3191, -0.4162, 0.9846, 2.04, -1.8282, -1.4478, -1.5069, 1.7866, -0.3156, 1.6374, -2.5609, 2.0726, -2.2986, -0.4688, and -2.5324.

Phases of elements in the third sequence are sequentially 1.4677, 0.0567, -2.6938, 1.7533, -1.9012, 1.7948, 1.9739, 1.2871, -1.7233, -0.6612, -1.614, -0.8769, -2.9853, 2.8724, 0.2162, -1.4607, 0.5495, 2.2194, 1.1269, 1.7761, -1.3658, 0.7258, -0.9327, -2.9211, 2.0509, -1.2499, 0.2241, -1.079, -0.8764, 0.6541, -1.7602, -1.5366, 2.8332, -3.0493, -0.9791, 0.3329, 0.0095, 2.8457, 0.829, 0.4291, 1.005, 3.0304, -1.9546, -1.9661, 1.2518, -0.2567, -0.4242, -2.6036, 2.4494, -1.7247, -2.9224, -2.0077, 2.0045, 2.0481, -1.4557, 2.4657, 3.1235, -3.0755, -2.3837, - 1.3145, 2.1812, -2.7019, -2.6178, -0.1224, 3.0362, -0.2983, -0.3598, -1.7105, 2.594, 0.6284, 2.5496, -3.0581, 0.5744, 0.5968, 1.9047, -1.8548, -1.6451, -3.141, -0.3333, -1.9324, -1.8821, -2.4352, 0.1782, -2.3019, 0.0407, 2.8754, 0.7991, 2.9432, 2.2278, 0.941, -2.5485, -0.4187, 0.9029, -1.1121, -0.477, -1.4584, -0.0191, 1.5713, 0.8082, 2.1163, -0.0704, -1.6527, -0.8304, 0.7828, 2.1387, -0.6216, 1.9329, -0.0997, -1.4243, 1.7699, -3.014, -2.2994, 1.0006, -1.2649, 1.2296, 0.1884, -2.8944, 1.7579, -0.1429, -1.0238, -1.3478, -0.5996, 1.4119, -2.5074, -0.1638, - 1.4247, -2.6886, 3.1008, -2.463, 0.1563, 0.8649, -0.3664, -0.3672, 3.0539, -2.4159, -0.3678, -1.9016, 2.7528, 2.6987, 0.8587, -2.2522, 2.8683, -2.2237, -1.5412, -1.0161, 2.5195, 2.846, -3.0708, 0.0541, -0.7708, -2.4907, - 1.463, -0.1274, -0.2946, 2.053, -0.3549, 0.71, 0.2476, -2.5694, -1.3471, 3.0244, -0.9832, 2.9248, -2.8727, -2.7095, 2.6975, -0.8354, -0.7975, 2.8142, -1.2827, 0.5713, 0.7461, 1.0451, -0.9701, 1.2473, -1.2756, -1.6625, 1.607, - 0.6053, -2.4932, -0.1533, 0.2198, -0.6726, 1.6919, 0.9911, -0.2299, -2.0714, -0.5678, 1.3308, -2.3324, 0.2059, - 2.9555, -0.8221, -1.0295, -1.3969, 1.784, 0.204, 2.1266, 0.0188, -2.8658, 1.7172, 2.5331, 2.5957, 0.3481, -2.0349, 0.4985, 0.821, 2.0502, 0.8392, 2.6972, -1.5331, -1.3492, 2.1346, 3.1092, 0.357, 2.1468, 0.7317, -0.3018, -0.0244, - 2.4709, -1.4568, -0.761, 1.7377, 1.1867, -2.6411, -2.4321, 0.4813, 1.5592, -0.2388, -2.7941, 2.6107, 1.9337, 2.3425, -1.7184, -0.2253, -1.897, 2.5605, 3.0939, 2.8762, 0.3214, 3.0749, 0.0693, -0.442, -1.2027, -2.2855, -0.0722, - 0.6075, -1.7364, 2.9177, -0.4923, 1.807, 1.7517, -2.649, -2.3766, 1.8029, -2.86, -2.578, 2.4583, -1.6905, -1.7513, 1.1373, -2.8818, -3.0908, -2.9443, 2.506, -2.4437, 0.5702, -1.6879, 2.0008, 3.005, -0.3669, -0.3692, -1.5416, 0.759, 0.0529, 0.3148, -2.7388, 2.4928, 2.1165, -2.6774, -3.1402, -0.6113, 2.905, -0.0008, 1.6126, -2.1091, 0.8004, 1.6399, -2.9455, 0.5907, -1.7775, 0.1778, -2.3494, 3.0314, 1.6737, -1.5757,1.1056, -1.1072, -1.89, -1.9277, 2.9692, -2.923, -1.2832, -2.6196, 1.3448, 2.2549, 2.5226, -1.9404, 0.7284, -0.8875, -2.5666, 1.7931, -1.9305, -0.7469, 0.2958, 2.5333, -2.9109, 1.3662, 2.6856, -1.1189, 0.1007, -0.5271, 1.1451, -1.5374, -3.1314, 2.7713, 3.0837, -2.4512, 2.6546, 0.2447, 2.8823, -2.6797, -2.5678, -2.2075, -2.8545, 0.2096, 2.6177, -1.8448, -0.5944, -1.376, -2.6723, 2.2322, 1.2463, 0.8967, -1.7047, 2.105, 1.5162, 2.9621, -0.174, -2.3688, 0.6827, -2.0212, -1.2047, -0.0338, 0.3007, -2.8351, -0.3075, -1.3636, 3.0528, 1.9058, -2.34, 0.9895, 1.0375, 0.8124, 1.081, 2.2857, -0.1641, -2.6581, -2.7065, 0.0868, -0.4273, 0.0525, -2.1267, 1.1957, 0.6488, -1.4348, -3.1084, -0.7108, 1.4599, 3.119, 1.1064, -2.0832, 1.7418, -2.1583, -1.4787, 2.4075, -2.3394, -0.3615, -2.6409, -1.6051, -0.1725, 2.2079, -2.9641, 2.5749, -1.1973, -2.064, -3.109, -2.3338, -1.4235, -1.6689, -1.7947, 2.1812, 3.0726, 2.0605, -0.4193, 0.4176, -0.575, 2.3943, 2.6466, - 2.4948, -0.3653, 0.9071, -1.2002, 0.8924, 0.0901, 1.6672, -1.2328, 2.8896, 0.3786, -1.3758,1.8909, -2.784, -2.5066, 1.6419, 1.7162, 0.4659, 1.7546, 1.7347, -1.5834, -1.0189, 2.1921, -0.2662, -2.1179, -0.9449, 0.8922, -2.999, - 0.6374, -2.4031, 1.2157, -0.4141, -0.2569, 0.083, 0.2457, -1.7298, -2.7679, -2.9216, 1.7236, 0.8288, -1.5581, 0.6446, -3.1396, -2.8644, 0.8195, -0.8442, -2.0836, 1.8887, -1.2495, -1.1852, -1.5229, -1.1458, -2.1977, -0.0983, -1.8617, 0.5798, 2.8186, -1.1513, -0.6684, -3.1102, -0.0078, -2.7167, -1.9439, 3.0374, 0.4149, 1.2016, 2.7994, - 2.8943, 1.966, 2.2439, -1.7784, -2.1577, 0.0809, -0.1975, 0.6548, 0.3416, 1.5628, -1.9651, 0.9062, 0.2573, 0.1525, -3.0269, -2.7002, -3.1314, 1.3653, 2.9265, 1.3931, -3.1051, 0.9148, 1.9785, 3.112, -0.3537, 0.8152, 2.4529, -2.4019, 1.7403, 3.032, 2.585, -0.5099, 3.0538, -0.0305, 0.1882, -2.9918, and 1.6339.

Sequence set 9: The sequence set 9 includes four sequences (denoted as a first sequence, a second sequence, a third sequence, and a fourth sequence), and a length of each sequence in the sequence set 9 is 512. Elements in any sequence in the sequence set have a same amplitude. For phases of elements in each sequence, refer to claim 7. Details are not described herein.

Sequence set 10: The sequence set 10 includes two sequences (denoted as a first sequence and a second sequence), and a length of each sequence in the sequence set 10 is 1024. Elements in any sequence in the sequence set have a same amplitude. Phases of elements in each sequence may be as follows:

Phases of elements in the first sequence are sequentially 1.2726, 2.9035, 2.0645, -2.3328, -0.9755, 1.8117, -2.3078, -0.9297, -0.3254, 0.1607, 0.1843, -0.5996, 3.0383, -1.5068, 0.1987, -1.9284, 3.1183, 0.2184, 1.4256, 2.0289, 0.1176, 0.2222, 2.6276, -0.2525, -3.0487, -2.646, 2.6406, -1.5729, -1.6187, 2.4969, -2.884, -2.8003, 1.7167, -2.4541, 0.9434, 0.3019, -0.5692, 2.9083, 2.9546, 2.4118, 1.1555, -2.98, -2.9279, 1.7555, -1.5108, 0.2682, -1.2592, 2.9789, 2.9313, -2.4749, -0.635, -2.0221, 1.9723, -2.2904, -0.0347, 2.4434, 0.6128, -1.5742, -0.2142, 0.9708, 1.8081, -1.4529, 3.1258, -2.0796, -2.4848, 0.2266, -0.9474, -0.5256, 0.9802, -1.4007, 0.3939, 0.6012, - 2.1634, -1.7885, 1.7914, -1.4572, -2.1032, -1.9728, -3.0058, 2.3872, -0.4126, 2.5696, -2.127, -1.2194, 1.9284, 2.8468, 2.3425, 2.676, -0.1426, -0.8257, 0.3626, -2.7826, 0.3457, -1.2779, 2.5998, -0.9122, 2.6017, -2.1806, 1.2176, -0.3294, -0.4103, 2.8624, -2.553, -2.8583, -0.1843, 1.581, 0.8707, -0.5142, 1.7665, 1.3131, 2.3427, 2.3374, -0.2439, -0.1733, -0.5409, 1.6485, -2.0624, 2.0194, -0.4759, -2.3302, 0.4871, 1.3225, -0.8808, 1.6252, 1.9547, -1.8576, 3.1169,1.0834,1.4582, -2.6332, 2.7907, 2.7153, -1.9453, -2.2476, 2.8847, 2.0913, 2.1252, -0.9326, 1.5803, 0.5905, 1.9628, -2.8878, -1.4529, -2.6369, 0.0289, -2.1732, 1.5124, -0.0777, -0.5166, 2.9359, -1.9921, 1.471, 0.7458, - 1.7591, -1.3136, -1.3413, 1.819, 2.711, -0.2583, 1.4939, 2.0633, 2.3889, -2.9024, -1.5596, 3.0651, -3.0782, 0.4646, -1.8051, -1.9342, -1.6189, 0.7044, -2.7917, 1.9795, 1.1527, -1.2316, 1.3702, -0.2617, 0.2013, -0.3785, -0.9336, - 0.4207, 0.2597, -2.6376, -0.7835, 2.3709, 0.537, 0.1084, 1.0627, 0.4207, -1.3611, 0.6448, -1.8191, -2.6822, -2.7331, 0.4661, -2.8943, -2.4181, -0.9759, 2.6845, -1.197,1.3728,2.6919,2.9953,1.6572, -0.7842, -2.2228, 1.0378, 2.6273, -0.9955, -2.8887, -0.2292, -0.9595, -0.8329, 1.2692, 1.0033, 0.4173, 0.2211, -0.6595, 2.725, -2.7095, 0.1267, - 0.2327, 1.014, -2.971, 1.6392, -1.1676, 1.1653, -0.6244, -0.8091 ,-0.1761, 1.9859, -1.6833, -2.9485, 0.448, -1.7001, 3.0093, 1.0261, -0.7073, 0.3477, 1.7191, 2.9717, 0.9853, 1.828, -2.0804, 1.8574, 3.0246, 2.5385, 2.7011, -0.7837, 1.0026, -0.4672, 0.3454, 2.4177, -2.9615, -2.9593, 0.8873, -0.5358, 2.3679, -1.5717, 2.0966, 0.6054, -2.8132, 2.9404, 0.446, 0.9819, -1.4549, 0.6665, 2.5771, -2.0128, 0.6417, 2.3952, -0.7347, -1.5857, -1.4528, -2.0269, 0.0672, -3.0486, 2.724, -3.0489, 1.1442, 1.5584, 2.4983, -3.0966, 2.5589, 2.6586, -0.0478, 3.1283, -1.164, 0.9825, 0.5576, 2.218, -2.1323, -2.0471, -0.0117, -0.4708, 1.2966, -1.1047, 0.8847, -1.7179, -2.712, 2.1946, -0.0103, 3.0764, - 0.6631, 0.204, 2.3197, 1.0694, 0.7826, 0.4322, -2.2966, -0.7283, -1.4506, 1.902, -2.7158, -2.6967, 1.4562, -0.3473, 0.2373, 0.1506, -0.493, -2.3542, 0.4449, 0.1459, 0.1892, 1.6505, 0.8325, 1.4034, 0.7509, -2.6174, 1.7253, -1.8357, -1.3435, 2.3037, -0.8336, -1.3999, -1.9424, 1.6621, 0.8487, -3.0042, -2.6263, 0.0149, -0.7506, -2.4559, -0.674, - 1.6244, -0.3199, -1.5568, -0.9261, -2.5507, 1.1411, 1.482, -1.4652, 0.0862, -2.7064, 2.8368, -0.4314, 1.352, - 0.7969, -2.0556, 1.3936, 0.0917, 0.743, -2.3061, -0.6803, -1.1828, -1.5316, -2.0059, 0.2006, -0.3863, 0.2994, - 1.782, -1.651, 0.8513, -1.767, 2.1491, -2.5091, 1.4626, 0.704, 1.5721, 0.0295, 2.963, 2.3293, -0.6076, -1.2054, 0.6493, -1.0577, -1.3269, 2.3978, -2.8882, 2.2725, 0.1134, -0.0691, 1.1218, -1.087, 1.9865, -2.3745, -0.8684, 1.4992, 1.3116, -1.5258, 1.8576, -2.0523, 0.1394, 0.1588, 0.4698, -1.2153, 1.8722, 2.4166, -2.1514, -1.324, -1.0561, 2.8261, 0.852, -2.0726, -0.5068, 1.7389, 3.0928, -1.8735, -2.806, -0.2567, 0.7133, -1.4387, 1.8905, 2.8289, -0.7251, 1.7831, 1.748, 2.6764, 0.992, 0.347, -2.0697, 2.3113, 2.0439, 1.0859, 2.7707, 0.1508, 0.8405, 0.1086, 3.0616,1.0079, -2.7283, -2.3718, 2.7104, -2.1874, -0.2532, 2.9517, -0.9987, 0.0024, 0.5269, 0.9595, -0.5581, 1.0864, -0.4665, - 1.1701, 1.4404, -0.5881, -1.3471, -0.8646, 1.5486, 2.1195, -2.3772, -0.8916, -2.2753, -0.0453, 3.0483, -0.3854, - 3.103, 2.6664, -1.5353, 1.7506, -2.5453, 1.2705, -2.4024, -2.9001, -1.145, -1.6677, 2.1544, -0.8646, -0.2709, 0.7819, -1.4, 1.4643, 1.9208, 0.2596, -2.3897, -3.0934, -1.7685, 1.9458, 1.8476, 2.1911, -2.6997, -0.6935, 1.0036, 0.5991, -1.8606, 0.5731, 1.0339, -1.9868, -1.8661, -2.8726, -1.311, -1.9986, 2.6828, 0.9343, 0.1414, -0.2344, - 0.3835, -0.8831, -1.5937, 0.0913, 0.506, 1.1444, -0.3145, -1.246, 1.6771, -1.1846, -0.5818, -2.05, 2.9845, -0.6549, 1.0745, 1.1914, -0.8526, -2.9499, 1.6187, -2.138, 0.6336, -1.0202, 1.1325, 1.2365, -0.5643, -1.5284, -1.9567, - 2.2196, -2.032, -0.4044, -2.8338, -0.5937, 2.3086, 0.0015, 0.44, -0.3505, 2.2817, 1.6605, -2.0587, 2.0757, 1.0254, -1.8592, -2.2757, -1.5143, 2.106, 1.3517, 2.246, 1.4212, -0.7107, -1.4576, 2.0651, -2.8586, -0.8801, -1.4067, - 0.2251, -2.2918, 1.4202, 1.9728, -0.2024, 3.031, -1.2456, -0.3351, 1.3495, -3.0721, 2.621, -0.7783, -1.5744, - 0.0409, 2.6267, 0.3935, 1.377, -2.6248, -0.2276, 0.2443, -1.2245, -1.5728, 0.5338, 0.2302, -0.0951, -2.5767, - 0.1276, -2.7266, -0.3368, -1.1227, -1.2221, 0.0113, 3.0295, -2.8545, -0.4201, 0.7779, -1.4762, -3.126, -1.1252, 0.2167, -2.7539, 2.1024, 1.3033, 2.8431, 1.0296, -2.8187, 1.973, 2.4237, -0.2682, -2.9008, 2.7426, 1.7697, -2.0339, 1.7861, 2.9118, -1.2928, -0.9279, -2.3304, -0.6949, 2.8157, -2.6073, -1.8532, 0.2099, 1.3778, -2.603, 0.984, - 2.2805, 1.7446, -0.5829, 1.966, 2.7595, -0.5734, -2.2545, -1.1997, -1.3897, 3.0071, -0.7444, 2.734, 2.4273,1.3248, -1.5891, -2.8585, 2.0143, -1.5641, 1.342, 0.6794, -2.8438, -1.8388, -2.1137, -0.0926, -2.8904, -2.869, 1.7948, 1.5687, -0.2758, 0.5329, 2.1884, 2.3485, 2.3742, 2.6154, -1.6263, -2.5136, -0.6007, 0.1876, 0.2268, -0.3461, - 0.0451, 1.64, -0.7786, -1.962, 0.2418, -2.0722, 0.6921, 2.7702, -2.8641, 0.7935, 1.376, -2.2892, -2.4485, 1.8216, 1.805, 2.8473, -2.7531, -0.0254, -3.0092, 0.3929, 0.5873, -1.7356, -0.9983, -1.2014, -2.6122, 2.1944, 2.5753, 1.3208, 2.1884, 1.672, 1.5814, 0.1205, 2.5353, -3.0551, -0.9616, 1.8276, 1.1248, 0.366, -1.3945, 2.821, -0.4599, 2.5164, 1.2563, 2.275, -0.419, -1.8231, 2.2646, 1.3411, -0.5298, 0.7481, 2.9535, 0.9237, 0.9433, -2.7507, 1.1481, 2.3943, 1.8532, 2.9358, 1.7761, 3.1147, 1.4146, 0.2057, -1.8822, 0.9679, -2.4452, 2.2156, 2.9533, -1.1416, -1.4345, -0.3016, 1.7189, 1.7053, 3.0545, -1.0234, 3.0948, 1.0316, -1.6493, -0.5654, 1.0733, -0.0754, 1.3151, -0.7958, - 0.4813, 2.5318, 3.0086, -0.2276, 1.118, 2.5706, 2.7506, -1.8213, 1.2234, -0.659, 1.3681, -1.9275, -0.75, 2.5358, 0.461, 1.4855, 1.1891, 2.6339, -2.8325, -1.2837, 3.0197, 2.5639, 0.1027, 0.3562, 1.1143, -1.0041, 2.4857, -0.3152, 3.0422, 0.3389, -0.9465, -2.4746, -1.8006, 1.0648, -1.4563, -2.4472, -2.8077, 1.8717, -1.7106, 0.0965, -2.9024, - 2.3551, -2.7277, -2.1084, 2.7388, 2.5878, 1.2173, -0.9406, -2.0207, 0.3352, -3.1156, 3.0716, -2.0322, -1.5769, - 0.5306, 2.0477, 0.5998, -0.1046, 2.6008, -0.3865, -0.1047, -2.4572, 2.4222, 1.1052, 3.004, -1.4616, 2.8505, 0.4954, 3.0516, 1.5792, 0.2781, -2.9717, -0.7757, 1.5682, 2.4919, 0.7998, -1.7444, -1.4895, 0.0767, -2.1335, -2.0429, - 1.4346, -2.9165, 2.754, -1.9349, -2.0683, 2.5714, 0.6474, -0.7498, 1.8768, 1.8372, -2.8238, -0.1768, 2.8352, - 2.2794, 0.6669, 1.1373, 0.9859, 2.1812, 2.9988, -2.0154, 1.794, -1.5322, -1.748, 2.2664, -1.3862, -0.4449, -0.1085, 0.0212, -1.076, 1.5816, 0.3814, 0.7196, 0.9443, 0.4694, -0.4048, 0.7668, -1.4364, -2.4933, -1.0643, 1.6339, 1.048, 1.7293, -2.0486, 0.6128, 2.9881, 0.9332, -1.9189, -1.2162, -0.8813, -0.2794, -1.5512, 2.1069, 0.4299, 2.9304, - 3.0956, -2.9657, 0.2885, 1.9983, -3.0445, 0.5577, 2.4716, -1.3916, -0.1438, -1.5657, 2.2412, 2.6895, 0.661, 2.3028, -0.3102, 2.3578, 2.1964, 2.1208, 0.9025, 2.047, -1.8697, -3.1233, -0.1246, 2.3665, 2.5912, -1.0614, 2.6039, -1.5891, -2.7793, 0.3316, 2.1507, -2.8635, 2.2684, 1.0872, 1.4877, -0.9406, -1.9919, 0.2872, -2.2931, 1.6776, 3.0577, - 2.1104, 2.0149, 0.9524, -0.3957, -2.3431, 2.8466, 0.7442, 1.5412, 1.936, -2.459, 0.9348, -0.3075, -2.1136, -1.9476, -2.2386, -0.4838, 0.9343, 1.4286, -1.7875, 0.7953, -2.3466, -2.4866, 1.2627, -1.9031, -0.7242, -1.7079, 1.6467, 2.0938, 1.7692, -3.11, -1.2263, -1.0178, 0.2877, -1.667, 0.2795, -0.7399, -1.0736, -1.4647, 0.2462, 0.9134, -2.9924, 1.9866, -1.0438, -1.826, 2.3919, -2.7119, 0.7897, -3.1404, -3.0775, -2.6551, 2.6754, 1.0928, 0.4275, -3.1044, 0.9457, -3.0689, 1.8788, 0.1681, -1.082, 3.1039, 0.0983, -1.367, 2.5231, 1.7566, 1.7351, 0.6661, -2.0219, 2.1144, - 1.9273, -3.0836, 1.8736, 1.4441, 1.4779, -3.1064, 2.2276, -0.9401, 0.0839, 2.3232, -2.1838, 0.4051, 3.0441, -0.1356, 1.6262, 0.8306, 1.0159, -2.7257, 1.093, 0.8725, 1.5487, -2.3404, 1.0867, -3.049, 1.2652, -2.3324, 0.0757, -0.1225, -3.0271, 3.1405, -2.5086, and -2.5887.

Phases of elements in the second sequence are sequentially 2.3442, 1.9237, 1.4871, -0.5348, 2.7141, 1.7762, -3.1329, -1.0211, -2.4307, -0.3319, 0.4987, 0.648, 0.3518, 1.3648, -1.3756, -2.0364, 1.665, 1.7136, -0.1122, 2.0155, 0.4862, 1.7138, 1.4926, -0.4459, -0.5191, 0.683, -1.813, 0.5762, -2.0679, -1.6796, 1.2089, 0.2292, 0.4004, -1.5387, 1.7681, -2.9889, 3.1406, -2.1508, 2.4019, 3.0763, 2.564, -0.3636, 0.2642, 1.8812, -1.321, -2.0161, 1.8703, -1.3969, 1.1942, 2.676, -0.6926, -2.0423, -2.7551, 2.5275, 0.6121, -0.2214, -0.5402, -2.5185, -0.3346, 1.9797, 2.0791, -1.866, -0.3781, 0.0857, -0.2762, 1.3876, 0.3586, 3.131, -1.908, -0.7755, 3.0695, -1.3368, 2.686, -0.8643, -0.5527, 2.3228, 1.9712, 1.739, -0.724, 1.3626, -2.9632, 0.9288, -2.9515, 0.1966, -0.2084, -0.2805, 1.108, 0.6384, -2.3619, 1.0905, 0.629, -2.884, 0.666, 0.5236, -2.3765, 3.034, -2.7133, -0.2118, 2.1838, -1.5336, -2.7419, -0.7081, -2.2803, 3.1341, -1.2707, 1.6886, -0.7242, 0.5762, 1.0185, -1.7776, -1.6444, 2.4637, -2.8455, 0.7707, 0.24, -2.4936, 1.5399, 0.0778, -3.0846, -2.3727, 3.054, -0.6697, -2.8858, 3.0495, 1.6373, 1.2896, 1.6973, 1.4549, 2.6318, 0.2212, 1.5714, 0.3622, -2.1185, 3.1153, 0.3554, -2.1905, -0.822, -1.5028, 1.3631, 2.3124, 0.9378, 2.1949, 1.51, 0.8253, - 2.0397, 1.8011, 2.7495, -2.7299, 1.0529, 1.9583, -2.0895, -3.1187, 1.9798, -0.8634, -2.8182, -2.8338, -2.4203, 1.6819, 0.8691, 2.6161, -0.9304, -2.9152, -1.6641, -2.5116, -0.334, -2.4274, 1.0491, -2.93, -2.7896, -2.2131, 0.1041, -0.0736, 2.785, 2.5815, 2.5172, -2.9815, 1.7466, 3.0083, 2.2778, -2.3045, -2.3868, 0.2976, 0.3007, 1.8811, 0.9754, -0.7191, 2.7499, 2.8178, -0.325, 0.2404, 1.9398, -2.7753, -2.7269, -0.3753, 2.2193, -0.0043, 2.6825, - 2.2351, -2.7914, 2.1414, 2.8682, -1.8716, -0.0901, -0.5295, 0.9689, 1.5025, -0.9947, -2.6038, 0.2336, -2.4146, - 0.5613, 2.3094, 2.7209, 1.0885, 1.0619, 2.4257, -1.9211, 1.3725, 2.9132, -0.8813, 0.5006, -1.3136, -2.7752, 2.5707, -0.6843, 0.5041, -2.5882, 1.9254, 0.8179, -1.9997, -1.501, -2.577, -1.161, 1.8752, -1.847, 0.5004, 2.1499, 0.1342, -1.7676, -0.1757, -2.596, -2.7173, 2.9662, 2.1398, 1.7736, 1.1997, 0.3767, 1.454, -2.5353, 1.0291, 2.7274, 0.0314, 2.0986, -1.2842, -1.4331, -1.0681, 2.8501, -0.5734, -1.4343, 0.5065, 0.0286, 1.9098, 2.1204, 1.1101, 2.1904, 1.3775, -0.7076, 1.7409, 1.7825, -2.9897, 0.7154, -1.4414, 2.5632, 1.3361, -2.1443, 2.4849, 2.2111, -0.0375, -0.0808, 2.5807, 0.2508, -0.5303, 1.04, -2.7813, -2.2031, 1.4113, -0.6404, -2.1374, -1.5592, -0.2893, -2.8026, -0.1926, 2.5463, -0.9864, -2.1415, 2.7872, -0.6579, -1.21, 3.0882, -2.4922, -1.4889, -0.4898, -0.0238, -1.3758, -2.3109, 1.5569, 2.5662, 1.5775, -2.4038, -2.9232, -0.0199, 0.3666, 1.4875, 1.3235, 1.5452, 0.7529, -3.1168, 1.236, 1.7713, 0.4282, -0.7279, 1.3488, -1.9671, 1.3965, -0.9891, 2.8509, 1.3216, 2.7614, -1.7747, -2.4354, 0.8746, 1.653, 2.8569, 0.1198, -1.5184, -2.1719, 0.8549, -0.076, -0.8106, 2.9212, -2.519, 2.7682, 2.1872, 1.7636, 2.7721, -0.8133, -0.2706, -2.3675, 1.825, -2.5737, 3.1301, -0.6979, 1.0305, -3.1051, 2.3262, -2.3081, -2.4194, 1.2982, 0.5906, -0.2104, 0.1873, 1.9739, -2.3552, 1.8797, -2.1984, 0.9972, 2.9528, -2.9637, 0.9841, -1.6867, -0.6576, -1.5399, 3.0586, - 1.6734, 0.1281, 2.3809, -3.0513, -1.7694, 1.2098, -2.5622, 0.1969, -0.7863, 1.9253, -2.0427, 2.0312, -1.3645, 0.7031, 1.0263, 0.3472, 0.3711, 2.2633, -3.0371, 0.9737, -2.3683, -1.4817, 2.9797, -0.7467, 0.2907, 3.0498, 1.4331, -2.2823, 1.0496, 1.3388, 1.9314, 1.3004, 1.4825, 1.9525, 0.3551, -1.9862, -2.5275, 1.9044, 1.0239, 2.6099, -2.7208, 1.3689, -1.7005, -2.5456, -0.6767, -0.6149, 2.6414, -0.3435, 0.1038, 0.628, -1.1557, -3.0939, 0.8888, 2.6834, - 2.8086, 0.2709, 2.7299, 1.7442, 2.4352, 2.663, 0.78, 0.6262, 1.418, 2.9933, 3.1388, 1.6733, -0.2821, -0.7281, 2.631, 0.8529, 3.091, 0.8114, -1.3949, 1.5547, 1.4894, 0.3726, 0.262, -2.8134, -1.1317, -1.8051, -2.6318, 2.2145, -2.821, 0.2061, 2.6713, 2.018, 2.8293, 1.3264, 3.0035, -2.2284, -3.0042, 2.9446, -0.7984, 1.556, 2.4675, -2.3382, 0.2098, 1.5916, 1.1185, 0.9838, -1.0953, 0.0814, -0.9252, -2.9829, 1.951, -2.8886, -2.1738, 0.6743, -0.0375, -2.3414, - 3.108, -0.8802, 1.6127, -0.6196, 1.553, -0.1366, 1.0391, 0.2501, -3.0528, -2.8092, 0.4249, -1.8029, 1.9136, 0.442, 0.4581, -0.8298, 2.1642, 1.6884, 2.9455, -0.8498, 2.7393, -2.0219, -0.4197, 1.8813, 1.0485, 2.0094, 2.9183, 1.6159, 1.2011, -2.2314, -0.7654, 1.5932, -0.678, -0.8389, -2.6867, 0.3176, -3.0287, 0.4781, -1.6954, -1.2603, 1.7111, 1.979, -1.3891, 2.9331, 0.4177, -1.7326, 2.8816, 2.6489, 2.5016, 2.452, -1.3162, 0.0293, -1.0423, -1.6867, 2.5133, -1.5023, 1.3047, -1.9398, -0.1092, 0.3114, 2.5227, 2.8384, 1.0808, -0.5707, -3.1316, -0.3856, 2.5192, -0.2247, - 0.9728, 2.2106, -2.9103, 1.3595, -0.7546, -1.1359, -1.4153, -1.9162, 2.9971, -1.7927, -2.4575, -1.8867, -3.1019, -1.5005, 0.4757, -0.1136, -2.694, -1.9438, -3.0761, -2.2076, -1.2323, -0.5563, -0.4717, -2.142, -0.4737, 0.0283, 1.8261, 0.6192, -2.7055, -2.7844, 0.692, 2.5004, 0.8639, 2.0794, -1.5017, -2.6215, -0.3877, -2.6961, -1.21, 0.2443, 1.2399, 2.8516, -0.6272, -0.6, 0.7934, 1.1245, 2.4594, -1.2616, -2.0815, -2.0212, 0.632, -2.1448, -2.6997, 0.6831, -2.6031, -1.1514, 1.0724, 2.1691, 0.3649, -1.4456, 1.4627, 0.3154, -0.7579, 0.0654, -0.8839, -0.5802, -2.7941, - 1.9454, -1.9482, -2.1169, 0.943, -2.4757, 0.7927, -0.4439, 2.6075, -2.8148, -0.7457, -2.23, -2.8613, -2.5251, - 1.1643, -2.0227, 2.5983, 1.7245, -0.6231, 2.3954, -2.4792, -1.5524, 2.0856, -0.7759, -2.3606, -0.1073, 1.6217, - 0.5826, -0.0942, -2.3177, 0.9931, 1.4075, 2.3055, 1.3696, 0.7182, 1.2196, -0.4276, 2.489, -3.1129, 2.2338, -0.7291, 0.0978, 0.2486, -2.2369, -1.5017, 2.8135, -2.2687, 1.5841, -1.8948, -2.6192, 0.8997, 1.3926, -0.2773, -2.3235, - 1.6581, -1.4424, -0.0359, 1.1401, -1.5434, 1.9276, 2.8717, 0.1463, -1.3416, 2.2666, -1.7805, -2.2421, 0.2208, 2.5397, -0.3489, -0.9267, 2.0244, -2.0235, -2.2756, -1.1904, -1.1706, 0.5736, -0.942, -2.2182, 1.2643, 1.0687, - 2.0508, -2.7422, -3.0684, -0.2598, 3.0348, 1.2789, 0.512, 0.3538, 1.4218, -0.7991, -2.9542, 1.9958, 0.7197, 2.3716, -0.5732, 2.3634, -2.31, 2.1329, -1.9884, -0.8158, 1.4282, -2.9471, -0.0725, 0.3672, 0.1861, 0.3463, -2.2363, 2.2837, -2.1761, -0.7075, -2.0278, 0.5238, -1.3018, -0.6164, -1.1512, 1.5634, -2.3699, -1.4528, -0.9737, -2.2874, 1.8686, 2.9709, -1.4239, 2.9182, 0.2479, 0.2565, 0.3486, -1.7965, 2.4074, -1.9294, -2.8901, 1.0364, -1.8035, -0.5581, 2.9189, -2.9777, 1.2683, 1.955, 0.8372, 0.2301, 1.1496, 1.2899, -3.0976, 0.1809, 0.7294, -3.0721, 1.7321, 1.6247, 2.7924, 2.6521, -0.3128, 3.1075, 2.977, 0.3795, -3.1112, -0.9767, -1.7939, -2.5979, 0.5209, 0.0461, 2.1801, -1.6701, 2.3265, 0.3177, 0.2692, 2.6123, 2.4317, 0.2188, 0.0194, 2.2565, -2.2874, -2.5462, -2.3565, 3.1257, -0.5675, 0.4619, -0.5315, 2.601, -0.0392, 2.6653, -2.8095, -2.2878, -0.7848, 1.5435, -2.7398, 2.7456, -2.4827, -3.1013, 1.9868, 1.4547, 0.0745, 2.1157, 2.4154, -2.3693, 0.1779, -0.1364, -1.5992, -0.0333, -0.9771, 1.083, -0.5678, 1.483, 0.1889, -1.0661, 1.0171, -1.8656, -1.2259, -0.5811, -0.0282, 2.7699, 1.3075, 0.8008, -1.0475, 1.4391, -0.5178, 0.8386, - 2.4579, -1.0353, -2.0265, 0.8081, 2.3998, 1.9237, 1.758, 1.9215, 0.3555, 2.3939, -2.9429, -0.1844, 2.9669, -0.0669, 1.1547, -1.8587, -2.6167, -0.0437, 2.2111, 2.7193, 1.0939, -0.0699, -2.626, 1.6482, -0.6858, -1.7464, -1.8848, 1.9599, 0.8086, -0.2072, -0.0846, 2.1252, -1.4492, 0.3339, 2.3048, -2.6028, 1.982, 2.7928, 1.5459, 3.0174, -0.1001, -1.3211, 2.2084, -2.1176, 1.5122, -1.1082, -1.2184, 1.5911, 0.6495, -2.8683, 2.2232, 0.0697, 0.3752, 0.7055, - 1.7504, -0.5362, -2.118, 1.635, -0.7661, -2.4406, -0.1611, 1.6834, -2.7207, -2.3167, -2.4457, -1.6991, 0.7662, 0.4067, -0.6281, 2.7328, -2.7807, 2.364, 0.0618, -2.751, -0.6804, -0.8467, -0.3691, 1.1028, 2.2056, 0.4337, 1.6443, -3.0666, 2.6381, 1.0165, 0.4267, 2.0231, -1.298, 1.9319, -1.8999, 0.2173, -1.5205, -0.9842, -1.1892, 2.5993, - 2.7168, -1.0469, -1.5256, -2.4425, -2.7823, -0.6205, -2.4005, -0.9161, -1.5169, 2.5947, 1.1355, -2.3633, 0.184, 1.0628, -0.7631, 0.8903, -2.6061, 2.9714, -2.7942, -1.1572, 2.366, -0.2013, -0.8942, 2.5518, -1.8857, -1.0741, 1.8054, 0.0555, -1.1602, -1.3885, -1.7309, -2.6245, 2.3395, -0.8174, -1.5724, -1.9442, -1.48, -0.5899, -1.833, 2.6574, 0.2966, 2.0616, 1.6647, 3.0274, 0.4006, -1.541, 1.1972, -2.3321, -0.6821, -1.3912, -2.4131, 1.6384, 2.5841, -1.9109,1.6045,1.2894,1.6775, -0.9521, 1.8656, -1.7252, 0.4144, 0.7859, 2.5383, 2.8111, -0.5724, -0.5131, 0.6412, -3.1193, 0.4595, 2.3254, 2.8724, -1.4121, -2.1316, 1.2906, -0.6038, -2.4706, 2.868, -1.0274, 1.9639, 1.4162, - 2.2711, -0.3153, -3.0554, 1.2318, -1.7227, -1.6833, -1.9933, -0.8861, -0.7175, -2.872, -0.5196, 0.7225, -2.8727, 0.1842, -0.5361, 0.2588, and 0.0884.

Sequence set 11: The sequence set 11 includes three sequences (denoted as a first sequence, a second sequence, and a third sequence), and a length of each sequence in the sequence set 11 is 1024. Elements in any sequence in the sequence set have a same amplitude. Phases of elements in each sequence may be as follows:

Phases of elements in the first sequence are sequentially 2.3104, 1.745, -1.0356, 0.3362, 0.3564, -0.4179, 3.0453, 1.5103, -2.7556, -1.7396, -0.8715, 2.9533, 0.3827, 2.7666, -0.9073, -1.6955, -1.8169, -1.234, 0.8062, - 1.8227, -1.4939, 1.7064, 1.1955, -1.4319, -1.7353, -2.7152, -2.4528, 0.4061, -2.904, 0.2874, -2.4418, 2.0024, 2.3466, -0.9028, -2.7872, 1.0444, -1.0913, 2.8914, 1.243, 1.0001, -0.3078, -2.9745, -2.1538, -1.0739, 3.0218, - 1.6437, -2.0409, 1.3204, -1.3567, 1.2804, -0.7389, -0.4552, -1.2094, -2.2893, -2.0235, -0.6311, 0.6628, -2.7969, -2.3357, -1.7233, -1.5081, 2.391, -2.2137, 0.0452, 1.6639, 2.1792, 0.6167, 2.069, -1.1972, -0.9674,1.3337, -1.1574, -2.1628, 2.2756, -1.2447, 2.096, -1.3604, 0.382, 3.0661, 1.9016, -2.7443, 0.1764, -0.6922, 2.1195, -2.1427, -2.2559, -1.9886, -0.8865, -0.6533, 0.9315, -0.8707, -0.3969, 0.5508, 1.2942, 1.0769, 2.8626, -3.1146, 0.0513, -0.079, - 1.4717, 2.4532, -2.9959, 1.0945, -2.0486, 2.1533, -3.0994, 2.3485, -2.3398, -3.0402, 2.3562, 1.7757, -1.0722, - 1.3184, 0.7874, 2.9987, 2.6556, -2.0905, 2.0952, 2.0533, -1.4137, -2.6306, 0.2168, 3.014, -2.643, 2.9593, 1.2217, 1.2926, 0.6085, 0.3866, 2.6551, 1.1982, 2.3582, 0.9438, -0.3998, -2.9733, -3.052, 1.8135, -2.6338, -0.3208, -0.0335, -0.8452, -2.3486, 0.4, 0.5481, -2.2804, 0.7645, -0.1123, -2.8043, 0.3064, -1.9709, -1.5181, -2.7962, 1.7184, 1.1044, 2.116, 3.1223, -2.9608, 0.695, -1.2468, 0.9056, -1.3802, 0.7511, 2.9157, -2.0956, -2.9778, -2.9926, 2.2976, -1.1116, 1.0991, 2.4208, -1.9589, 1.4226, -1.767, -2.0023, 1.8232, 0.4914, -3.0791, -1.6311, -1.6901, -1.8977, -0.1951, 1.7951, -0.3327, -1.1211, 3.0525, -0.7054, -0.0285, 1.9458, -3.1335, -0.1964, -2.6693, -2.1416, 2.4937, -3.0996, 1.3906, -2.8132, 1.1903, 1.6463, -2.6926, -1.283, 1.8512, -2.3409, 1.6149, 1.3426, 1.4644, 2.1003, 1.6212, 0.2443, -1.1779, -2.6709, -0.2983, -2.4296, 2.4526, 0.2484, 2.9943, -2.8282, -1.8208, -1.535, 1.8926, -2.1457, 1.5566, - 0.9306, 1.9834, 2.5864, 2.4112, -0.1747, -2.3063, -1.7614, -1.6175, -0.2719, -2.1426, 1.8778, -0.5778, -3.0528, 2.3313, 2.203, -0.5786, -0.8593, -1.0882, 2.5125, -1.9263, -0.8641, -0.578, 1.9943, -2.3621, -0.7751, 1.5883, - 0.578, 2.0098, 2.09, -2.1538, 2.4353, 1.0356, 2.8984, 0.2609, -2.7106, -1.3729, 2.6588, -0.7204, -2.3509, -0.3361, 1.1897, 0.6767, -3.0737, -1.8765, -2.6316, 1.1334, 1.0068, 0.7682, 0.9462, 2.7477, 0.4243, 0.5024, 2.0385, 1.5555, -2.6017, -0.7431, 1.3194, -2.4596, -1.3593, 2.3058, 1.6601, 2.1702, 3.0806, 1.9872, 1.4884, -2.7198, 0.8817, - 1.3579, 0.069, -0.3228, -1.8591, 2.2868, 1.3197, 0.3251, -0.5371, 1.5245, 0.8148, 2.3481, 2.121, 1.8467, -0.8537, 1.3553, 2.2724, 2.0524, 2.4701, -0.7382, -0.5125, -0.4283, -3.0681, -1.4522, 0.2957, -1.1659, -0.4598, 0.9068, - 0.7323, 1.5596, -0.483, -2.5289, -2.0762, 2.5737, 0.274, -0.0521, -2.5153, -2.0351, -0.2871, -1.7115, -0.5996, 2.2215, 2.2285, -0.6886, -2.6136, -2.3881, -1.3266, 1.281, 0.3368, -1.195, 0.3387, 2.5949, -0.1718, 2.6825, 0.6358, -0.4109, -0.2576, -1.5866, -1.5633, -1.0873, -2.9883, 2.3379, -1.1147, 2.1304, 0.7267, -1.9323, 0.2595, -3.1332, -1.9654, 1.2517, 0.4718, -1.9931, -2.1706, 0.7478, -0.4249, -2.7856, -0.2139, 1.5117, 1.2031, -2.2982, 2.9557, - 1.2511, 2.5942, 2.2504, 0.4222, 2.5161, 1.0218, 2.006, 2.0869, 2.869, -1.8111, -0.3264, 1.1581, -0.8472, 0.4359, 0.5266, 1.2439, -2.6334, -2.6927, 1.8362, 2.9273, 0.2213, 0.7752, 0.8631, -0.5188, -2.5055, -1.1922, 1.0195, - 1.5359, 2.7337, -2.6847, 0.8756, -1.3281, 1.258, 0.4588, -1.1187, 0.2775, 0.7343, -2.7082, 1.029, 0.5059, -0.8398, 1.0472, -2.1949, 2.1666, 2.0662, -1.9728, -2.3812, 1.0373, 3.0325, 1.6503,2.8703,0.0964, -1.7083, -2.9336, 0.7107, -2.3668, -0.2783, -0.6235, -0.0369, -1.6537, 0.136, 2.5736, -1.2094, 0.0189, -2.3561, 0.6713, 1.2379, 1.099, - 2.1088, -1.8332, 1.3695, 0.9603, -0.7781, 1.0105, -1.0298, 0.8276, -1.0698, -0.7443, -0.9158, -1.2089, 0.2996, 1.6824, -1.3434, -0.4253, 1.1671, 1.5528, 3.1321, 2.8205, -0.3559, -1.3023, 1.0222, -2.9115, -1.1696, -1.5901, - 0.7755, -0.3811, -1.02, 1.9784, 2.0566, 1.507, -0.4946, 0.3586, -0.7989, 1.5096, -0.7301, -2.3502, 1.75, -1.2202, - 2.7534, -2.1377, 1.8163, -1.5883, -1.0283, 0.9578, 1.27, -1.9342, 2.812, 1.4945, 2.2679, 1.3035, -0.4407, -0.4867, 1.352, -3.088, -0.6134, 3.0558, 0.9916, 1.1549, 1.4098, -1.153, 1.2865, -1.6604, -1.9176, -0.4493, 1.2974, -0.5378, 0.8067, -1.9024, 1.6165, 2.4077, 1.0276, -0.3947, -2.3359, -1.6448, 0.1929, 0.6999, -0.5805, -1.5344, 0.2508, 2.8356, -0.961, -0.8433, 1.9272, 1.1214, -2.53, 2.5217, -2.5377, 1.9798, 1.7023, -0.0796, -0.9095, 1.9435, -0.3835, 0.6094,1.3327, -1.5167, -1.3091, 0.6287, -1.1524, 2.1631, 0.3146, 1.7113, 0.7953, 3.1346, -2.8197, 2.7388, -1.8129, 2.8149, -3.0993, 1.3127, 0.5599, -2.4885, 2.7909, 2.2643, 2.3248, -2.305, 1.0468,2.2059, -2.3143, -2.9694, -1.2303, -0.3058, 3.0984, 1.0942, 2.3277, -1.2203, -0.5178, -3.085, -0.5725, -0.6506, 1.1381, 0.032, 2.8217, 3.0894, 2.3882, 1.8485, 0.8632, 1.9771,-0.1451, -1.3959, 0.7231, -1.2186,1.8786,2.8873,0.9519, -2.7699,0.8609, 0.9251, -1.7979, 3.0484, -2.2766, 2.6835, -2.2143, -0.2732, -2.3742, 1.1219, -1.2556, -2.0679, 0.8499, -1.9456, -0.6714, 1.1839, 3.0443, -1.551, 3.1003, 3.0218, -2.9243, 1.1866, -2.5373, -2.0637, -2.1499, 1.7429, 2.4733, -2.9629, 1.2457, - 0.5588, 1.7875, 1.8044, -0.5546, -2.5835, -1.5319, 0.1582, 0.0658, 2.8308, -2.7251, 1.9557, -2.542, 2.5959, 0.2282, 0.2319, 1.1453, 1.8955, 0.3938, -1.1801, 1.8687, 2.8357, -2.5231, 0.1465, 2.3824, -1.5529, 1.7246, -0.3357, 0.3025, 1.0113, -2.4446, -0.1941, -2.1909, 0.899, 0.2584, -2.4317, 3.0288, 3.0574, 2.7623,1.7566, -0.8256, 0.2579, -1.8856, 1.5893, 0.8547, 2.026, 2.6924, -2.809, 0.7847, 0.8785, 1.938, 2.076, 1.2894, -0.515, -2.2875, 2.4055, -2.2239, 1.7041, -0.7939, -2.0502, -2.7218, -0.5347, 2.4337, -1.9953, -1.0054, -1.175, 0.8093, -1.9893, 1.5138, -2.2822, - 0.4166, -2.255, 2.6384, 1.0022, 1.2569, -2.0053, 1.0895, 0.1965, 1.5705, -1.1652, 0.9835, 2.652, -0.5085, 1.0903, 1.151, -2.1589, -1.4083, -2.3395, 0.0703, 2.7486, -0.3283, -0.3521, 1.9251, 1.2681, 1.3308, 2.8451, 1.2381, 2.6017, 2.7859, -1.6968, 1.8823, 0.0866, 0.8785, 1.0359, -0.7075, -2.3272, 1.9582, 1.9315, -0.5785, 1.0097, -2.7134, 3.0226, -3.0062, -2.0455, -2.5352, 1.5949, 2.6866, -2.5718, -1.4888, -1.3583, 1.8838, -1.7972, 0.6595, 1.7744, 2.4632, 1.4483, -0.5055, -0.9591, 2.6533, 2.9354, 1.8822, 2.3739, 2.9391, 0.2512, 1.5574, -1.3613, 3.0511, 0.1876, 1.966, 2.0646, 2.4314, 1.4732, -1.3035, 2.4152, 0.3534, -1.1653, 0.3256, -0.9518, 0.2229, -2.0397, 1.7885, -2.1335, - 2.5323, 1.2236, 0.1974, -0.9699, 1.0901, -0.897,1.527,0.7214, -0.0936, 2.2308, -2.6682, -2.1018, -0.9641, -1.9966, -2.9454, 1.7636, 1.4105, -0.8242, 2.291, 0.7643, -2.1325, -2.6412, 0.1975, 1.0052, -2.2285, 2.7612, 2.8555, -1.9453, 1.9485, 0.8946, 2.4353, -0.2564, 0.9314, 3.0373, -0.1723, -2.7513, -2.121, -0.9414, -0.0568, 0.3703, -1.99, -1.0666, -1.5811, -1.7789, 0.0226, -0.3394, 1.8288, -3.1221, 1.7178, 0.7552, 0.2144, -2.7737, 0.3901, -2.8843, 1.7359, 2.1158, -1.9219, 0.383, 1.5129, 2.6235, 0.767, 0.9258, -0.9534, 2.0139, -0.7215, 1.9958, 2.1613, 1.6491, 1.5555, - 0.1499, 1.859, -2.4514, 1.683, 0.4008, -1.2194, -1.3632, 2.5208, -0.6132, -3.1284, -1.2363, 2.2305, -3.1035, - 2.1538, -0.3781, 0.8894, -0.6681, 1.8697, 3.0542, 0.4342, 1.7863, -1.9325, -1.3616, 2.8461, 0.2851, 2.5714, 0.9231, -2.2431, 0.5145, 1.3465, -2.9903, -3.0666, 2.5994, -2.818, -0.1943, -0.8174, 2.6274, 2.472, 1.0494, -1.8146, 1.6711, 0.8051, 1.3308, 2.2656, 0.1588, 0.9148, -2.2316, -2.0617, -0.7929, 1.1339, -2.0116, 1.6335, -0.8793, 2.6721, 0.7993, -1.1152, 1.1177, 2.7049, -2.2023, -1.9347, 2.3613, 0.9879, 1.4233, -1.3057, -0.6831, -1.6527, -1.8563, -1.7235, - 0.551, -1.1306, 1.4392, -1.9598, -1.3515, -1.2362, -1.4325, 2.0249, 0.5793, 0.6208, 2.8202, 1.3916, 1.2565, 1.9118, -3.0984, -2.7519, -1.1122, 2.9087, 0.6175, -1.1649, -0.6222, 2.4858, -0.0258, 1.9305, 2.6216, -0.6096, 0.7382, - 0.8475, -1.13, -0.2636, 1.0497, -0.3965, -1.5616, 2.3078, -0.3788, 1.3513, 0.6619, -1.9544, 2.1994, -0.5307, 0.7159, -0.9228, -1.6979, -0.6024, -0.0601, -1.6458, 1.5473, -3.1131, 2.5221, -1.3278, 1.3073, -0.1195, 0.4438, -0.6446, -0.6022, 1.624, 0.6879, -2.6208, 0.1796, 0.0317, -0.9685, -2.3293, 2.6661, 3.0501, 0.479, -0.504, -2.4255, -1.3343, -0.5634, -2.6492, 0.7668, 1.5568, -3.1165, 2.2139, -0.0141, 0.2693, 0.8453, 1.3588, 1.7935, -0.5595, 2.3302, 2.6122, 0.1767, 1.4067, -1.6137, 2.6571, -1.359, 0.6793, 2.1431, -2.9323, 0.0559, 1.5501, -2.3411, 1.4273, -1.1565, 1.837, 2.2661, -0.9882, 2.8094, -0.0848, -0.406, 1.6834, 1.7824, -0.4586, -0.7531, -1.6358, -1.7868, 3.128, -2.7059, - 2.9961, -1.171, -2.2224, -1.4513, 0.3764, -0.0628, 1.7178, -0.7507, 0.1702, 2.543, -2.1514, 1.7099, -0.6575, and 1.4782.

Phases of elements in the second sequence are sequentially -2.4409, 1.3824, 1.0599, 0.0962, -1.9024, 0.3461, 0.0943, 2.4923, -0.8762, -3.1363, -2.1326, -0.318, -1.3274, -1.4647, 2.5119, 3.042, 2.4853, 0.6085, 2.5464, -0.3115, 3.1334, -2.8856, 1.2109, 2.6919, 2.9303, -3.0498, 1.3494, 0.6778, 1.8676, -2.4065, -2.5205, -0.2413, 1.8645, 2.804, 2.0953, -0.5782, -1.7079, 0.4361, -2.7567, 2.774, 2.4842, -2.3086, 0.4911, -0.4482, 2.9928, 2.0521, 1.615, -1.6823, 1.0207, -1.4608, 0.5072, -2.651, 1.5565, -2.5034, -1.5744, 2.0709, 0.4955, -0.9812, -0.8955, 0.0664, 0.1697, -0.2201, -2.8404, -0.5372, 0.3194, -2.61, -2.453, 0.849, 0.3027, 0.6231, 0.6297, -0.8825, 1.491, 2.4364, - 1.3738, 2.525, 2.969, 2.2456, -1.4403, 2.4209, -1.9638, -2.6229, 0.3447, -2.0521, -1.4986, 1.4336, 1.7349, 3.0287, 3.1149, 2.7393, 2.6271, 2.624, 1.5542, 1.0916, -1.3088, 1.4097, 1.3522, -1.6024, 0.2034, -1.6082, 2.9316, -1.6966, 1, 1.3532, -0.8945, 2.0974, -2.0819, -2.7142, -2.1212, -1.3518, -0.808, -3.0728, 1.4817, 0.5353, -3.0693, -2.4196, -0.5098, -1.6834, 0.5561, 0.2352, 2.6885, 2.8496, -0.7615, 0.0461, 3.0401, -0.3387, -2.7509, 0.1106, -0.0867, 2.0518, -0.5379, 1.432, 2.6087, 2.1392, 0.3728, 1.9404, 1.1572, 0.3312, -0.9761, -0.8987, 2.784, -0.5529, 0.5427, 2.7239, 2.775, 2.8444, -0.4186,1.7805, -2.2036, -2.7198, 2.621, -1.6157, 2.4315, 1.2691, -1.7088, -0.012, -1.2438, -2.9403, -0.165, -0.522, 2.5982, -0.348, -1.9861, -1.3585, 2.6357, 3.0568, 1.3828, -1.0645, 1.489, -2.231, 1.3186, -2.1875, -0.7898, -0.1649, 2.1805, -0.8716, 1.985, 2.4599, 2.7772, -0.4496, -1.3945, 2.7243, -1.3183, -2.3486, 2.803, -0.125, -2.9227, -0.8774, -0.8411, 0.2167,1.0348,1.3406, -2.3266, 0.4903, 2.8622, 0.7036, -1.4136, -1.0881, -3.122, 1.3744, -0.2792, -0.6906, -1.436, -0.9301, -1.8381, 1.996, 1.7431, -0.507, 0.3055, 2.8957, 2.0383, -2.3835, -0.6897, -2.4032, 1.0414, -1.9732, -1.4136, -2.2667, -2.5728, 2.4067, -2.3155, 2.822, -2.3359, 2.6665, -2.8615, - 2.6958, 2.593, -0.9434, -1.1524, -0.3713, 1.3182, 2.2045, 2.5813, -0.3101, -1.9194, 2.8533, 1.3588, 2.5572, -2.6482, 0.9829, 0.8192, 0.7878, 1.105, -0.039, -3.0764, 2.408, 1.2794, 0.6763, -2.286, 2.9665, -0.9378, -2.053, -0.3303, - 2.8732, -2.7292, -2.9602, -2.6842, -0.9394, 1.4593, -2.3383, -1.1631, -0.2582, -1.8154, -0.6422, 1.929, 2.7864, 1.3695, 2.4727, -1.5139, -0.0563, -0.2812, -0.3842, -0.5426, -0.8402, -2.9301, -2.2121, 0.64, -2.3361, -1.8056, - 0.0722, 0.916, -2.6356, -1.5729, 1.2509, -0.8804, 0.9902, -2.1048, 0.5959, 0.8557, -1.5607, 2.4034, 2.5645, -2.411, 2.1029, -0.1565, 2.6467, 0.3496, -0.2219, 1.7135, 2.6018, -1.9195, 0.3873, 1.1148, 0.0784, -0.9705, 1.3106, -2.7168, 2.5335, -1.7145, 1.9537, -0.357, 1.7668, -1.7806, 1.8037, -1.3285, -2.2235, 0.982, -0.7996, -1.9936, 1.581, -1.4153, 2.962, 1.3008, 1.2449, 2.2808, -1.2981, 0.7804, 0.1172, -2.3896, -0.0238, -2.2196, -0.6644, 1.3241, 1.5879, 0.6023, -1.812, 1.6992, 2.0706, -2.347, 1.3596, -1.2187, 1.4561, 2.9763, -2.2587, -3.1078, -1.0271, -0.7145, -2.0332, 1.5116, 0.7496, 0.4388, -1.0356, -3.0622, -1.2217, 1.8558, -2.7485, 1.872, -0.3141, -0.3878, 2.8693, 1.995, 2.0805, 0.3293, -2.5595, -1.4008, -1.4992, -0.033, 1.99, -1.5675, -1.7681, 2.4378, 2.3628, -3.0828, 2.8553, -2.4804, 2.6567, 2.0496, -2.4951, -0.9285, -2.5517, 2.6121, -0.4134, 1.9593, 2.9811, 1.977, -0.5022, -2.2695, -2.8352, 2.5238, - 2.4312, 1.0267, -0.9527, -2.2693, 0.4177, -0.3989, -0.2389, -1.6059, -0.3091, -0.5523, -0.9125, 0.4359, -2.177, 1.0029, -1.5341, -3.1034, -1.8775, -2.8956, -1.7856, -0.473, 1.136, 2.2159, -0.3678, -3.086, -1.3278, -0.9949, 1.1868, 1.8794, 1.5992, -0.6492, 1.4024, 1.2339, -1.2101, -1.7623, -2.0721, -0.8258, -0.6692, -0.6761, -2.99, - 2.0422, -0.578, 2.5152, 0.0067, 0.3849, -2.2133, 0.428, -1.5882, 1.9575, 0.9076, 1.3453, -1.2615, -1.0896, -2.9791, -2.0703, 2.5078, 2.4757, -3.0788, -2.3558, -0.8247, 1.0592, -2.9376, -0.5495, -2.4832, 2.7383, -1.5366, 1.9543, 2.8083, -0.1482, 2.8733, -2.7486, 0.1975, -0.422, -0.9422, -2.1228, -2.0391, 2.153, 1.4454, 2.3866, -2.1145, - 0.0357, 3.0206, -1.4465, -1.3004, -1.7081, 1.8248, -0.2815, -1.3068, 0.029, 0.4938, 1.8864, 2.0956, -2.1889, - 2.0134, 0.0592, -0.8494, 0.2123, 2.4613, -0.4464, 2.5693, 1.1667, 2.9776, -0.4898, 1.3504, 1.6309, 0.0397, -2.0576, 2.9952, -1.4539, 0.9694, -1.1655, -2.39, 2.7855, 0.9859, 2.3527, 2.9477, 1.1295, 0.033, 0.5708, 2.0278, 1.8916, - 0.2653, 1.634, 1.6675, -0.993, 2.5468, -1.7442, 2.2223, -0.8452, -2.7535, 0.5024, -2.2035, 0.5423, -2.9272, -1.3929, -3.0688, -2.0975, 2.7938, 0.901, -1.7369, 2.9335, 0.0828, 1.1748, -3.0476, 1.4685, 1.8987, -2.2205, 1.6236, 0.9436, 1.674, 2.9241, -0.5081, -1.6113, -2.6791, -0.653, 2.7648, 0.2826, -2.4592, 2.4091, 0.9925, 2.0713, -0.7505, -2.2143, -1.9183, 2.951, 0.4479, 2.1471, -3.0572, -0.1278, -2.2218, 3.0421, -2.0704, 0.0404, -1.0289, 2.645, -2.9303, - 0.6652, 1.8007, 0.5523, -1.8381, -0.5386, 1.428, 2.489, -2.4975, -0.8438, -1.9526, -1.3572, -1.3107, -1.7138, - 1.4512, -0.2052, -0.5609, -1.5689, -1.7365, 3.0329, -2.3676, -1.0648, 1.7864, 1.6633, 0.5389, 1.8254, -0.5175, - 3.0183, 2.4461, 0.2983, -1.9859, -2.0255, -1.3178, 1.7385, 3.0349, -2.9838, 2.9156, -2.0956, 0.4497, -0.323, 1.2082, 2.9238, 0.8046, -2.6365, -2.0481, 2.0496, 2.1921, -0.8218, -0.0128, -1.5768, -2.3586, 0.6636, -1.2225, -0.8218, 0.4992, 0.4417, 1.374, -0.0968, -2.1758, 0.4427, 2.5395, -2.4588, 2.3853, 0.0829, -0.1642, -1.5639, 1.8437, 0.1265, 1.7209, 1.5788, -1.6059, 0.7652, -2.2084, 1.5239, 2.2875, -0.7334, 0.7625, 0.4304, 1.6083, 0.9122, 2.3676, -0.0818, 1.2434, 0.3378, -1.7225, 2.5077, -2.2221, -2.0092, -0.1633, -1.1794, 0.3508, -2.8507, -1.8574, 2.6412, 0.2519, 0.5401, 1.3069, -0.4944, 0.018, -0.062, -2.493, -1.3512, 2.7829, 1.3828, -0.9836, 2.0226, -2.9246, -0.8139, -1.6444, 1.7308, 2.5444, -0.8056, 1.1117, 2.9805, 0.3427, -2.1904, -2.0048, -0.8808, -1.2627, 2.982, 2.5838, -3.1372, 1.7783, -2.778, 1.3441, 0.922, -2.493, -2.4157, 1.0782, -2.3718, 3.0858, -0.7952, -1.2682, 1.4322, 1.5386, 0.8283, 2.4689, -0.4392, 2.8071, 2.4022, 1.7837, 0.6741, -0.543, 1.0199, -1.56, 1.1867, 0.3139, 1.0854, -2.7629, -2.1992, 2.5247, - 0.144, -1.7898, -1.9068, 1.0762, 2.5945, -2.0792, -1.8709, 1.2943, 3.1011, -1.4144, -1.5593, -0.3468, -1.8904, 0.0822, -1.2448, 1.5408, 2.8757, -0.4992, 0.8283, -0.9796, 0.6395, -1.5458, 2.4926, -0.6887, 2.1572, 0.2188, - 2.1572, -1.8974, -0.5184, 0.5966, -0.0001, -2.6007, 0.9556, -0.8375, -2.3644, 1.4255, -0.5566, 2.4453, 2.4321, 1.658, -2.2964, -0.6411, 1.7583, 2.1231, 0.9123, 1.6902, 2.4583, 1.7088, -2.8847, -0.1754, -1.2947, 1.0153, -0.0151, 0.1641, -1.6797, -2.094, -2.6864, -0.0679, 1.3162, -2.1169, -1.1846, 1.4466, -0.635, 0.9356, 2.522, -1.0776, - 2.5784, 2.5735, 2.5662, -0.8537, 1.798, -1.1303, -0.9858, -0.3007, -2.7046, -0.6638, -1.9624, -1.1522, -1.2906, 1.4532, -0.0251, -0.6821, 2.3154, 2.2408, 0.1709, 0.0625, -0.3472, 0.8661, -1.7044, -2.0612, -1.4649, -1.6164, 1.3568, -0.9738, -0.5922, -2.2662, 0.7297, 0.9697, 1.4809, 0.2539, 0.3177, 2.5951, -1.8285, -1.8923, 2.5356, - 1.0437, -3.0271, 1.2788, -1.4379, 1.1568, -0.3133, -0.0834, -1.986, -2.2037, 1.232, 0.8975, -0.1942, 1.5452, - 1.2359, -2.5291, -1.1044, 1.0524, 2.2609, 2.2551, -0.7643, 1.1609, 2.2536, -2.1289, 2.0299, 0.9442, 2.6857, 2.84, 1.887, -2.3151, -1.0623, 0.6286, 0.6725, 0.4141, 0.9439, 2.6987, 1.5429, -0.1464, -0.3463, -1.0982, -1.5882, - 1.9116, -0.0592, -0.6375, -2.9592, 0.2851, -2.8323, 0.4615, 2.0481, -0.2345, 2.0234, -2.1719, 0.1415, 2.5417, 0.3614, 0.9125, 0.6388, -1.9489, -2.8422, -1.7274, 0.2898, 0.6173, 3.0438, -0.1038, -1.264, 1.2545, 0.2158, 1.4529, -1.2905, 2.5245, -0.4461, 0.8461, -2.3487, 0.4456, -1.0557, -2.5193, -1.11, 0.1325, -0.1778, -2.4076, 1.9547, 0.0222, -0.89, 2.8805, 2.537, 2.2128, 0.373, -0.3655, 0.9325, 2.9671, -0.0077, 1.8269, -2.1643, 2.4687, -2.113, - 2.5169, -0.3952, 1.7766, -2.4236, 2.449, 0.5779, -2.5862, -2.0034, -1.4716, -1.7733, -2.8271, -2.6301, 0.3628, 2.9334, 2.1182, -0.9564, -0.0845, -1.5618, 2.6693, 2.8752, -1.1331, 2.0827, -3.0331, 2.5625, -0.0635, -0.1224, 0.5385, 0.1728, 0.7474, 1.9202, 2.7839, 0.142, 0.4311, 1.9566, 2.1481, -0.4719, -2.7629, -2.3507, -0.121, 2.7362, 1.8309, 1.2124, 2.965, 2.1115, -0.0012, -2.2965, 0.2095, -0.3944, -0.5969, 2.4175, -0.6102, -2.1714, -1.4654, - 0.4012, 2.7011, -1.2051, 1.6391, 2.9736, -0.0932, -2.706, -1.1473, -1.3867, 1.9235, -0.1822, -1.9036, -0.2455, - 1.5239, 2.0465, 1.047, 2.5583, 1.3627, -0.1799, 1.0538, 2.212, -1.0712, 1.2588, 2.0751, 1.2328, -1.4166, 2.9529, - 1.9602, 1.2341, 1.0031, -1.0502, -0.1642, -1.5491, 2.8441, -1.2991, 0.7525, -0.3177, -0.4719, -1.0298, 0.9643, 0.7341, 2.4456, 2.4798, 2.9026, 1.1901, -2.8244, -1.0134, 1.2609, 0.7637, -0.3969, -0.7659, 1.9593, 0.9903, -0.8986, 1.0593, -3.0125, 2.1798, and -2.2291.

Phases of elements in the third sequence are sequentially 0.176, -1.7183, 0.7062, 1.1381, 2.87, 2.02, - 0.7165, -2.8427, 1.1271, 0.8226, -3.1113, -1.0072, 1.3946, 0.3527, 2.808, -2.4707, 2.4384, 0.5797, -2.398, -1.4821, 1.5212, -0.7624, -1.7022, -2.1269, -0.0154, -2.6147, 2.888, -2.7154, -2.6667, 1.7238, 2.8765, -0.5273, 1.0002, 1.6148, -1.7857, -0.3764, 1.0465, 3.0042, -0.2193, -1.5269, -0.5402, 1.532, 1.0843, 0.6229, -0.8507, -0.4476, - 1.5837, -1.5002, -1.7179, -0.4421, 0.7325, 1.9992, 1.0267, -0.4487, 1.4669, 0.6692, 1.2377, -3.0781, 2.6661, - 1.9449, 1.0647, -1.3531, -1.2521, 0.2014, -0.0419, -0.4451, 0.4224, -2.6768, -0.9579, 2.9755, 0.7707, 0.2013, - 0.9388, 1.6664, -2.6178, 1.5369, 1.8961, -1.6548, -0.3719, -1.6235, 1.7505, -0.7876, -2.4921, 0.9311, -1.3641, - 0.2619, -1.0358, 0.0237, -2.6014, 2.8776, 1.4886, -1.7222, -0.3207, 1.8295, 1.332, 1.2258, -0.0853, -0.892, 0.736, -2.1311, -0.0008, 2.1543, 2.1385, -1.3833, -1.1745, -0.1107, -2.7367, -2.9214, 1.3041, -0.1943, -0.3522, 0.1354, 1.6448, -3.115, 0.3342, -1.6779, 2.8321, 0.9734, 1.1031, -1.8218, 0.1396, 3.0897, 0.0142, 2.9831, 1.625, -1.0749, 1.9921, 0.0148, -0.3214, -1.4839, 0.202, 0.3249, 0.2855, 0.9151, 1.9758, 2.95, -0.5845, -2.4854, 0.9225, -0.2553, 2.2896, 2.8365, 2.5436, 1.4871, 2.5531, -1.4682, 1.715, -0.5028, 0.7676, 2.0091, -0.722, -1.9631, -0.9859, 2.0128, 1.5626, -1.1237, -0.9474, 2.0688, -0.8624, -3.0798, 2.2747, 2.0695, 1.9717, -2.7519, 1.5478, 3.0543, 1.1889, - 2.2465, 2.9993, -2.9773, 1.6221, -0.3075, 1.3035, 1.7026, -1.6855, 1.3039, 2.0823, 0.8803, -1.9356, 1.9187, 1.0906, -1.4955, -0.2521, 0.1586, 1.4107, 1.1649, -0.6581, -2.8362, -1.2642, 2.4808, -2.2364, -2.8818, -1.0671, 1.0713, 1.8492, -0.393, 2.1818, 0.5474, 1.9114, 2.4123, -1.9371, -1.7208, -3.1248, -2.5316, 1.5077, 2.428, 3.0092, -1.3643, -2.1689, 0.0089, 0.4711, -1.9712, -1.3433, -0.0774, -1.8201, -0.6102, 1.7355, 1.6499, -0.4696, 1.2846, 1.5371, - 1.6507, -0.4834, -1.175, -1.9325, -3.1259, 0.753, 2.4124, -0.6226, 1.7549, -1.2007, -0.958, 2.3804, 1.8429, 0.3948, -2.4602, -0.6487, 2.0854, 2.7041, 2.4482, -1.0989, 2.1269, 2.4992, 0.0199, 1.5271, 0.5696, 2.535, 1.3472, -1.052, 1.9846, -1.564, -0.6996, -1.5768, 2.6177, -2.4247, 0.7059, -0.2743, 2.6975, 3.0314, -1.5827, -2.7474, -0.0127, - 0.3217, -1.3171, -0.1508, -2.2517, -1.1854, -3.0956, 0.6955, -1.3105, 1.8531, 0.4262, -2.3666, 2.6775, -2.5821, 3.1297, -1.5965, 2.2484, 2.7894, 2.9666, -1.2047, 2.253, -3.1137, 0.9997, 0.3637, 0.8085, -1.8267, 3.1333, 2.7192, 0.5887, 0.4647, 2.5786, 2.2722, -0.0309, -1.1111, -1.7391, -0.3305, -2.059, 2.5566, 0.5324, 0.6838, 1.633, -1.6435, 1.8043, 1.6861, 1.1398, -2.4884, -1.0743, 1.518, -1.1561, 0.8816, 2.1708, -2.2156, -0.2444, -2.8383, 2.7944, - 2.7378, -2.6723, 0.8462, 2.9242, 1.5792, 2.7515, -3.1366, -2.7581, -2.0161, -1.8888, 0.6872, 0.626, -2.1998, 2.693, -1.4379, -2.7644, -2.1674, 2.3853, -0.4438, 0.794, -2.3749, -3.0034, 1.7836, -2.0825, 1.7446, -2.5148, -0.064, - 0.9374, -0.0647, -1.098, -1.0833, -2.6228, 0.6363, -0.6809, 2.3086, 2.0141, -3.1017, -2.1014, 0.1248, -0.127, 2.4616, -1.727, 1.8648, 0.2015, 2.2389, 1.8102, 2.4834, 2.0706, -2.4553, 2.8117, 1.4312, 2.9559, -0.9915, -0.8918, -1.9379, -0.0719, 0.3193, -2.915, -1.4473, 0.3866, -2.7257, 0.4896, 2.1455, 2.3903, -1.2909, -2.7151, 2.8498, 1.3515, 0.7725, 0.1245, 2.7541, 2.717, -0.071, 1.7925, 2.754, -0.2111, -3.1343, 0.642, -2.3229, 2.0132, -2.2914, 0.6203, 1.7968, -0.4111, -2.7404, -2.6785, 0.9531, -2, 0.7054, 1.0171, -0.2004, 1.4869, 1.0499, 0.2301, -0.7433, - 1.3225, 0.101, -2.5477, 1.3473, -2.3617, 0.4649, 1.2138, 0.0886, -1.2957, -1.7773, 0.3292, -0.9142, -1.9002, -1.811, -2.253, 0.875, 2.1884, -2.6532, 0.3218, 1.0604, -3.1294, -1.237, 0.0796, 1.7743, 0.8471, 2.4149, 1.0822, -1.4244, 2.9226, -1.8107, 1.4825, 0.1491, 2.5884, -1.0867, -1.943, -3.0362, -1.701, 1.0251, 1.9735, -3.0681, 2.8541, 0.5053, -2.227, -1.9559, -2.6257, 0.2669, 0.0714, -2.3048, 1.6311, 0.5344, 1.2407, 0.3272, 0.0909, -1.8415, 2.4615, -1.2509, 0.6681, 2.4931, 0.4324, -2.0585, -3.0678, 2.491, -2.71, -0.1977, 2.5526, -0.3897, -0.7582, -2.9962, -2.9385, - 2.9423, -2.5148, -1.2707, -2.7927, -1.3611, -2.2708, -1.4929, -0.4884, -2.4068, 3.1408, 2.7631, 1.6814, -1.3339, 1.0712, 0.3492, -2.049, 1.6455, 0.998, -2.5523, -2.2008, -0.7503, -2.5927, -0.4385, -1.7197, -1.7383, 2.3798, - 0.1308, 1.35, 1.672, -3.0365, 2.7567, -1.9673, -2.4823, -0.1746, 1.5056, -2.925, -2.9747, -0.4328, -0.4512, -0.9946, -2.5169, -2.7594, -0.1657, 1.6211, 0.9332, 2.4578, 1.6513, -1.0336, 1.3836, 1.2029, -3.0636, -0.4706, 2.0288, - 1.8282, -0.1494, -2.4029, 0.1051, 2.5838, 1.6298, -3.056, 0.9894, 3.0757, 3.0297, 2.7815, -0.0272, 2.0104, 2.881, 0.3347, -2.4394, -1.5109, 0.6003, 2.0077, 3.0856, 2.1662, -2.3119, 1.3511, -1.6294, -2.5343, 1.8836, 1.1363, - 1.8966, -2.4011, 2.8261, 2.592, 1.1781, 1.4747, -0.4893, 1.5536, 0.7267, 0.1697, -2.2888, -2.0972, 0.0176, -0.8952, -0.6649, 0.0948, 2.1686, 0.1256, -1.4694, 1.753, -1.1609, 1.5833, 2.7589, 0.2111, -1.728, -2.1527, 0.042, 0.6682, - 0.5752, -3.056, -1.0597, 1.5697, -2.6533, 1.1294, 0.2613, 2.3669, -1.0661, -3.0747, 1.1787, -2.8965, 1.7016, - 0.8778, -1.7161, 0.1635, -1.8827, -0.3999, 0.3378, 0.1713, -1.9425, -1.6201, -2.9167, 1.7035, -0.5587, 0.3707, - 0.137, 0.6979, -2.6675, -1.9473, 1.2747, 2.884, -3.1095, -3.0544, -0.4025, 1.8471, 1.02, 0.3559, -2.5154, -1.7158, -1.7566, 2.4058, -0.4035, -1.1905, 2.353, -1.1487, -1.2527, -2.4827, -1.6401, -1.6877, -0.4739, 0.6283, -1.2397, -2.1944, -0.321, 0.8723, -0.9786, 0.1022, 2.0349, 0.7797, -1.6697, 0.7982, -2.7161, -1.946, -1.7246, 2.8205, - 3.0852, -0.9546, -1.476, 1.7956, 1.5324, -2.8944, -1.3677, 1.2886, 2.4407, 1.5501, -2.6192, 1.3097, -1.7333, 0.5113, -0.302, -0.3901, -0.8009, -0.9916, -2.7726, -3.1031, 2.1699, -0.2857, 3.1387, -2.4751, -0.3629, -2.6909, 0.0706, 1.4806, -2.6744, 1.8311, -2.2548, -2.5112, -1.6033, 2.9723, -0.6109, 0.5946, 0.9971, -1.1836, -2.1572, 0.9978, - 1.9249, -2.4047, 2.7824, 0.8972, 1.8918, -2.8281, 2.9648, -1.5529, 1.2233, 3.089, 2.2626, 1.0711, -2.2058, -0.9598, 2.9918, 1.1157, -2.2313, 1.7683, 1.5744, -2.962, 1.0851, 1.8038, -2.3513, -1.4631, 2.2236, -0.7418, 2.3, 0.9695, - 1.8642, -2.7673, 1.8288, 1.5242, 1.3523, 1.2641, -1.9846, 0.2133, -1.578, -0.1975, -1. 3449, -1.2134, 0.7438, 1.7061, -0.6484, -2.5535, -3.1138, -1.0753, 1.0112, 0.6176, 1.1752, -0.3565, -0.4316, 0.5302, 0.9738, 1.51, 2.2238, -1.4902, -2.847, 1.863, 2.2093, -0.4984, -1.082, 3.1391, 3.1162, -0.5353, 0.1856, -0.8254, 0.7556, 1.096, -1.7527, -0.4472, 0.2078, -1.7117, 1.9531, -1.5638, -0.3313, 1.8456, -0.2805, 2.103, -1.5369, 3.1297, -3.025, 0.8169, -0.5643, 2.0867, 1.7094, -2.8629, 1.868, -1.8854, 1.3651, 1.0558, 1.8719, -2.5604, 2.1296, -1.4566, 2.0172, -1.7301, -0.9668, 1.9409, -2.6718, -1.3684, 1.3811, -0.0385, 0.5766, -1.9264, 0.4048, 2.2539, 1.5219, -1.6521, 1.7744, -3.088, 2.42, -0.2238, 0.1228, -0.6458, -2.3649, -0.5517, -3.0626, 2.5081, 2.4282, -1.8877, -1.7563, -1.661, -0.9158, -1.565, 2.8526, 0.2691, -0.2163, 2.8265, -1.4783, -0.4448, -2.0168, -1.8768, 1.204, -2.0178, -2.8329, -3.1064, 2.4571, 2.9961, 1.1475, 2.8857, 0.5004, -0.0597, 2.8935, 2.9328, -2.4262, 0.7046, -1.779, 2.2692, 0.1923, 0.3885, -0.4875, 3.109, 1.1055, -2.4767, -2.7359, 1.8027, -2.0604, 2.8556, 1.0571, 1.864, -2.8562, 0.9752, 2.9358, -2.2336, -2.338, 0.3713, 3.1316, 2.9076, -1.7727, -1.4531, 1.3647, 0.208, 3.011, -0.3471, -2.125, 1.5174, 1.3964, -0.3545, 0.2836, 3.0562, - 0.2921, 0.1335, -1.4386, -1.545, 0.2062, 0.9447, -0.4246, -0.6706, -2.0974, 2.8026, 2.992, 3.1058, -1.0704, 0.4009, 2.5549, -0.5359, 1.5069, 1.1998, 0.2992, -0.192, 0.0926, 2.8306, -1.5165, 2.5019, -2.7776,1.7469, -1.8165, -0.1141, 0.8335, -0.1273, 2.9697, -1.103, -1.681, 0.8833, -0.5136, 0.3247, -2.7773, 0.6188, 0.5599, 2.9348, 1.0629, -2.0587, -0.3295, 2.4199, -2.5, -0.6686, -0.7041, -0.8912, -0.3755, 0.5914, -1.416, -2.6525, -1.0961, -1.9643, 1.3302, 0.4482, 1.2106, 2.4125, -1.0051, -2.0178, 1.3887, 1.0543, 1.5801, -2.0849, -0.8036, 0.7514, -1.0148, 1.0105, 1.0101, -0.3421, 2.3116, 2.3593, 2.1061, -0.2699, -1.876, -2.2047, -3.0953, 0.2791, 2.2356, -0.2047, -2.3778, 2.2509, - 1.0826, -0.6344, 0.6404, -2.8278, -0.0996, 0.119, -0.3829, 2.5915,1.492, 1.1501, -0.1413, -1.1403, 0.4037, -1.8859, -1.8559, 2.4415, 0.5658, 2.7136, -2.4059, 2.134, -0.7598, -2.7654, -0.6192, -1.384, -0.4453, -0.2886, 0.1495, - 0.8908, 1.473, -1.3492, -1.6012, -1.4034, -0.6752, 0.0147, -2.9765, -1.449,1.5764, -1.6772, 0.0635, -1.6106, 0.692, -1.1777, 2.7274, -3.1392, 2.6578, 0.9809, -2.3775, -0.1556, -1.8593, 2.8863, 1.8931, -2.8089, -1.2032, 0.3699, 2.7162, -0.367, -0.3345, 2.2935, -0.4329, -0.3436, 2.5191, -0.0609, -3.0086, -1.1904, -2.1021, -2.6116, 2.0958, and 1.8623.

Sequence set 12: The sequence set 12 includes four sequences (denoted as a first sequence, a second sequence, a third sequence, and a fourth sequence), and a length of each sequence in the sequence set 12 is 1024. Elements in any sequence in the sequence set have a same amplitude. For phases of elements in each sequence, refer to claim 8. Details are not described herein.

Sequence set 13: The sequence set 13 includes two sequences (denoted as a first sequence and a second sequence), and a length of each sequence in the sequence set 13 is 2048. Elements in any sequence in the sequence set have a same amplitude. Phases of elements in each sequence may be as follows:

Phases of elements in the first sequence are sequentially -0.3873, -0.996, 1.0296, -0.6867, -2.1827, 1.1607, 1.3045, -3.1104, -0.4721, -0.1531, 1.2204, 0.0257, -0.2159, -2.272, -1.5873, 0.8643, 2.4879, -0.7656, - 1.5923, -0.7933, -2.729, 0.3085, -0.8885, -0.9971, -1.9424, -1.8087, -2.0404, 2.3636, -1.8118, 1.0921, -2.1988, 0.2711, 1.5667, 0.7781, 0.23, -2.0671, -2.522, 1.7363, -0.091, -0.1901, 2.5852, 2.5449, -0.6652, -1.2148, 0.9884, 2.8341, 3.099, -2.1628, -2.1382, -0.9218, 2.041, -1.6735, -1.2163, 0.5876, 0.5084, 3.0827, 0.4821, 2.6788, -3.0368, 1.772, -2.0853, 1.7229, -3.0356, -1.9308, -0.9541, -0.0689, -2.5358, 1.1597, 1.6285, 1.4622, -1.7292, 1.9189, - 0.8415, 1.3859, -0.0138, 2.19, 1.1602, 1.4007, -2.8547, -2.8364, 2.519, -0.812, -2.4864, -2.3647, -0.7995, 1.261, - 2.38, -1.1366, 1.6426, -2.9046, 1.0417, 0.0013, -2.8511, -1.3333, -0.5029, 1.1631, -2.0257, -2.9604, -0.3319, 2.0807, 0.9714, -0.8531, 2.2577, 2.5817, 0.6301, -2.9663, 1.5495, -2.7271, -2.2936, -2.0538, 3.1415, 0.6274, 1.8893, -0.2825, 1.0776, -1.4645, -2.9604, 0.4388, 0.9744, 3.0721, 1.4325, -0.2975, 0.655, -1.2436, -1.3946, -0.5563, - 0.2534, 2.3777, 1.2982, -1.2639, 2.6808, -1.0415, 1.0041, 2.2164, 0.5144, 1.1855, -0.509, -3.0779, -2.4592, 0.9742, -0.2605, -2.6106, 2.3914, -2.9905, 2.6082, 0.6073, 0.5815, -0.1391, 1.5441, 1.4207, -2.9235, -0.0304, -0.5411, 0.4451, 2.8066, 3.0308, 2.206, -1.2339, 2.9443, 0.5688, -1.0457, 2.6782, 0.9753, 3.1181, 0.6971, 0.8905, -0.5606, - 0.0406, -2.5638, 0.0287, 1.3931, 2.0793, -0.1075, 0.2658, 0.2373, 1.2373, -2.666, -1.6971, -2.2165, 2.8114, -2.2333, 2.0217, -1.582,1.7664, -2.2894, 0.7352,1.9688, -1.5366, -2.509, 0.4341, -1.0982, -0.9687, 2.531, 2.9515, -2.8795, 2.5548, 2.8806, -2.7487, -0.5756, -1.8495, -2.5929, 2.5396, -1.1923, -2.5602, 1.0739, -0.6482, -0.6133, 2.948, - 1.9401, 3.0324, 1.1679, 1.8202, -2.9155, 1.4443, -0.6788, 1.0761, 1.3946, 0.6246, 1.8049, 2.9661, 1.8034, -0.2963, 2.3907, 1.1478, -0.0594, -0.0186, 2.4705, 0.536, 2.4368, 1.9924, -1.9463, 2.0726, -2.5692, -1.8826, 1.347, 0.4556, 1.8647, 2.2253, 2.3732, -3.0099, 0.5283, 2.058, -1.6106, -0.1119, -0.1988, -1.6477, -2.5662, -2.8332, 1.1472, 2.8046, -0.7701, 3.0286, -2.5101, 0.9238, -3.0463, -2.8515, -1.3498, 1.8, 2.7025, 0.3624, 0.4796, -0.536, -0.11, - 1.7378, 0.711, 1.4479, 2.1579, -2.0565, 0.9279, -2.1285, 0.6149, -2.0586, 2.9946, -0.7385, -1.9914, -0.8123, - 1.5289, 2.3036, -2.3378, 1.1071, 0.2583, -1.5006, -3.074, -3.0941, -0.9841, -2.1983, -2.7075, -0.9675, -1.1024, - 2.7088, 1.3859, 1.4679, -0.6642, -0.3448, 2.92, 0.6859, -0.0045, -1.9931, 2.9775, -2.575, 0.2841, -1.998, 0.2303, 0.5539, -2.7524, 0.8136, -1.0161, -0.6696, -1.9669, 0.6408, -1.9456, -2.8584, -0.4918, -1.7682, -0.6382, 2.7923, 2.5438, -0.522, 0.9415, 0.963, 0.5787, -2.759, -0.321, -1.2904, 0.9613, 2.8099, -2.9934, 2.9432, -1.8407, -2.2788, 1.7853, 2.7603, 0.206, -0.3333, 1.2054, 0.85, 2.788, 0.4527, 2.5088, 2.1627, -0.293, -0.1157, 0.4851, -1.6808, 1.7822, 2.2794, -2.7843, -0.6611, -2.8678, -0.4694, 2.0481, -2.5651, -2.6763, -2.6915, -0.7152, -1.8635, 1.5393, 0.8978, -0.4222, 1.1443, 0.1357, -2.9163, -1.0311, -1.3088, 0.6949, 2.2848, -3.0339, 0.3806, 1.1959, -1.7357, - 2.895, 2.5814, 1.1153, 2.6675, 2.8653, 0.8191, 2.9891, 1.3193, 2.9241, 3.1256, 1.9797, 1.7373, -2.8709, 2.2049, - 1.1377, -0.2307, -2.1204, 2.5093, -2.6798, 0.7519, -0.1514, -0.8036, -1.4407, 1.8508, -1.8716, 0.6937, 2.2328, 2.3681, 0.6416, 1.4006, 2.7531, 1.0155, -2.355, -2.9876, -1.3378, -2.426, -2.7139, -0.2001, -0.0849, 2.0894, - 2.8444, -1.5745, 2.4486, -1.7579, -1.5987, -0.1205, -3.12, 2.303, 0.6227, -2.9357, -1.4132, -3.0156, 0.668, 1.7033, -0.1116, 1.7277, 2.2584, 2.8676, 2.2023, -0.2951, 2.6307, -0.4377, -2.2993, 0.0679, 1.9561, -1.7139, 1.7145, - 2.3179, -1.7283, 0.1365,1.1594,1.4315, -2.2112, -0.8383, 1.7263, -1.0514, -1.51, 1.0812, -2.6401, 2.6321, -0.5954, -0.5278, 2.7447, 2.7342, -3.1257, -1.5596, 2.4714, -1.4668, 2.7394, 1.1207, 1.4391, -2.0965, -2.6641, 0.9571, 1.9214, 2.9746, 1.1257, -0.8819, 1.1125, -0.4168, 1.4978, -2.024, 1.0242, 1.5283, 0.3061, -1.9739, -2.0438, -3.0712, 2.1515, -1.9766, -2.0937, -2.298, -2.7454, -0.4386, 2.2386, -1.9912, 1.4743, -0.1481, -2.4592, -3.1372, 2.5538, - 2.536, -1.1354, 2.6002, -2.227, 2.4333, -1.1343, -0.8015, 2.3335, -1.7149, -2.8959, -3.1263, -1.4606, 1.3679, 1.7988, 0.3931, 0.274, -1.5565, -2.7637, -2.4953, -2.493, -3.0397, -2.9019, -2.1825, -3.0442, -0.5703, 1.2257, 0.8682, 0.2853, -0.526, -2.6194, 2.5516, 1.6289, -1.7772, -2.2859, -1.8481, -0.4849, -0.0195, 1.4241, 0.8972, - 2.6212, 0.1199, -3.0812, 2.8518, -0.7886, 2.4386, 2.1567, -1.3465, -1.7699, 2.8722, 1.9071, 0.7401, -2.6391, 1.7035, 0.6825, -1.3528, 1.6877, 3.0997, -1.0678, 1.9357, -2.0046, 2.6705, -1.9918, -1.9886, 2.5328, -0.1133, 2.2171, 2.2026, 1.3779, 1.007, -1.2645, 2.0865, -0.6512, 2.5741, -1.6634, 2.5976, -1.062, -2.0904, 2.6929, 1.8933, -0.9849, -0.0289, 2.1655, -2.095, 2.6866, -1.1219, -1.2009, 1.261, -0.3, -0.0731, 2.8493, -0.8248, -1.8772, 0.3499, 0.6945, 2.6823, -1.6663, -0.9139, -0.9723, 2.3277, 2.9303, 1.0213, 0.1727, 1.2013, -2.2864, -2.9829, 1.5257, -3.139, 0.257, 0.9938, -0.8672, -2.7604, 0.0609, -1.614, -2.7976, -1.294, -0.3951, -0.0578, -0.0058, -0.1919, -2.5864, -0.0138, -2.7794, -3.1111, -1.0006, 1.4213, 2.9932, -0.5698, -2.9496, -1.5508, -1.5325, -2.8728, 1.2961, -2.2026, 0.8753, -1.7437, -2.1594, -1.8934, -0.6563, 0.4463, -1.4108, -2.5574, -0.3961, 3.1032, -0.3993, 0.9612, -0.9236, 2.7851, -0.9731, 1.5686, 3.015, -1.7312, 0.6047, -2.7573, 1.5871, 0.5736, 3.0243, 1.0519, 0.835, 1.459, 0.7507, 1.0871, 0.1317, -2.3261, 1.4492, -2.308, -2.3706, -3.0282, -3.0405, 2.6899, 0.6682, -2.9092, -0.7918, -0.3514, 2.1183, 1.4076, -2.6848, -2.2845, 2.83, 0.8426, -0.2011, 0.5676, 0.3424, 1.1675, 0.6621, -1.5475, -2.4585, 0.8598, -0.6538, -1.9713, -1.2704, 1.0452, -1.2204, -1.0316, -0.2178, -0.6885, -0.3518, -3.101, 1.3371, 2.2728, 0.242, 0.2806, - 0.6925, 1.3324, 1.7701, 2.3796, 2.4715, -2.079, 0.1143, -0.4899, -2.8674, -0.6904, 2.0414, 3.0384, 0.1607, 1.2332, -2.0462, 0.9803, -0.6602, 0.1752, -0.5483, -3.0304, -1.7123, 0.3559, 2.0105, 2.8061, 3.0508, -1.0867, -1.1329, 1.0503, 1.443, 1.8466, 0.5188, 2.8399, 2.2404, 0.9241, 0.7273, -0.4448, -1.8437, -3.128, -1.0668, 0.7862, -1.5489, -1.7096, -2.7769, 1.4044, -2.6805, 2.127, 0.897, 1.3797, -1.082, 0.0573, 2.2674, -0.4943, 3.0328, 0.2022, -0.2757, 0.8729, 0.4155, 1.8918, 2.9744, 0.4209, -0.1363, 2.7281, 2.2882, 0.5004, 2.727, 0.5457, -2.7419, -1.2829, -2.3563, 0.3561, 0.4546, -1.5889, -0.8937, 3.0621, 0.5699, -1.3132, 1.8556, 2.1685, -1.5167, -0.32, -0.2268, -2.2959, - 2.2523, -2.5771, -1.3587, -2.0639, -1.7528, 0.8382, -1.7749, -2.5327, 3.0044, -0.2213, -1.6071, 2.4627, -2.5739, -1.1684, 1.3522, 1.0761, -2.3147, -3.1353, -1.3738, -0.4388, -1.8929, -0.0035, 0.5607, 0.718, -1.4299, -0.0209, - 1.461, 0.7661, -2.706, 0.7473, 0.724, -2.8695, 2.2502, -2.7448, -1.5497, -2.5439, -2.0988,1.7793, -1.8567, -0.0677, -1.5255, 1.2068, -3.0998, 1.99, -2.2954, 2.9723, -1.0041, 2.365, 1.3269, 0.216, -0.5056, 1.5225, 2.3316, -1.9975, 1.0208, -2.6864, -2.9144, 0.8617, -1.5791, -0.1561, 1.463, 2.4423, -2.662, 0.7834, 2.7369, 0.7151, 0.2786, -1.7542, 1.6035, -2.2836, -0.7604, 2.5718, -2.5006, -1.648, 1.7315, -2.3572, 0.84, -0.1297, 0.1663, 1.9512, -1.5591, -3.0562, -0.9329, 2.4837, 2.0377, -0.0317, -1.2653, 2.6501, 3.029, -2.2019, -0.3719, 2.5975, -1.1593, -2.1921, 0.8535, 1.0741, 0.7638, 0.5706, 2.7648, -1.7991, -0.6283, -2.9767, 0.7956, -2.2061, 0.83, 0.3539, 1.2812, 1.0276, 0.3585, 1.2236, 2.3608, 1.48, 1.3265, 1.1462, -0.9335, -1.059, -2.5131, 1.4679, 2.1919, 1.2571, -0.8221, -2.0776, -2.2258, 1.8393, 0.6502, -2.9827, 0.1561, 1.1846, 1.0285, -2.9398, 0.865, -1.7393, 2.3688, 0.2883, 2.1379, -2.1856, 0.9389, 1.8958, 1.2542, -1.5954, -1.056, 1.7698, -2.5718, 1.7916, -2.3764, -0.5771, -2.5185, 2.4047, 1.7274, 2.5595, 2.4919, 2.6819, -2.9544, -1.2516, 1.8229, -2.7002, 0.6478, 0.3137, 1.6859, 1.7705, -1.9939, 0.1705, -0.2702, 2.907, 1.568, -1.7355, -1.7161, -1.4911, -1.8407, -0.1376, -1.6538, 2.7608, 0.0479, 1.04, -1.1013, 0.4689, 0.9531, -2.6266, - 0.2444, -2.9573, -1.3246, 0.5268, 0.1184, 3.0936, -2.1557, 0.2093, -1.1582, -2.2057, 0.384, -2.7477, 2.4613, -3.033, 2.0314, 2.5077, 1.6504, 1.8207, -0.2624, -0.3983, -1.7548, -0.8919, 1.463, -0.3956, -1.25, 2.7721, 2.6363, 1.4786, -1.7586, 1.1642, 0.9508, -2.1552, -2.2154, -1.7337, -1.907, 2.609, 2.103, -1.0169, 3.0546, -1.4847, -1.4286, -0.64, 3.0394, -1.9823, 0.2265, -2.8015, 1.0873, -0.9153, -2.2153, 2.3629, 0.4314, 1.5339, -2.4336, -2.7056, 1.7931, 0.0539, 0.5483, 2.63, 1.2155, -1.8355, 2.4977, -1.6262, -1.2499, -2.5415, 0.7177, 0.6498, 0.9581, -0.4493, 1.484, 2.8152, 0.0405, -2.3316, 1.0602, 0.2023, -2.1183, 2.2267, -2.0957, 2.7541, -2.0445, 0.0343, -0.3398, -2.0644, - 1.3193, -0.6019, 2.6166, -2.3163, -2.7429, -2.114,1.4972,1.3129, -2.7616, 0.94, -1.0199, -0.0016, 0.1794, 3.0009, 0.2309, -1.6351, 0.3525, -0.4252, -0.5528, 0.5071, -2.6295, -1.8196, 2.9648, -0.8247, -0.3649, -2.182, 1.0145, 1.0512, 0.5072, 0.1383, 1.4904, -1.7303, 0.0347, 2.4968, 2.7414, 0.335, -0.5743, -2.359, 0.411, -1.9092, 1.8304, - 2.3508, 1.7678, 1.524, -1.9145, 2.5275, 2.8481, -2.5681, -1.5037, -2.1509, 2.6481, -2.7033, -2.5029, 0.3137, - 1.7861, 0.4766, 1.2644, -1.073, 2.7114, -1.3184, -2.9375, 2.8983, 1.5766, 0.1451, 1.7164, -1.8403, -1.3903, -1.9024, 0.2045, -0.2445, -0.2221, -1.9558, 0.0257, -3.0831, -1.7476, -1.2088, 1.3046, 1.2876, -2.1634, -3.1156, -2.3014, 1.3592, 1.4291, -1.4704, -1.3283, -0.2187, 0.5975, 0.7825, 0.5018, 2.4848, 1.6062, -0.3589, 0.5665, 0.6994, 3.0694, -0.8514, 2.1791, 1.5116, 1.9956, 1.4291, -2.9652, -0.6602, -2.451, 0.3692, 1.672, 0.5549, -3.0129, 2.7035, 0.3503, -0.8989, 2.5094, -0.5451, 0.8055, 2.7676, -0.8653, -0.2058, -2.0653, -2.6113, 2.6395, -0.2051, 1.063, -1.6344, - 2.057, -2.0197, 2.1739, -1.0976, -1.3742, 2.3082, -3.1259, -1.1332, -2.8147, 2.1017, -2.3584, 2.6767, -1.7293, 2.6789, 2.9307, -1.8101, -0.5253, 2.3557, -1.2628, -2.0456, -0.532, 0.6043, 2.2897, -1.8607,1.9342, 1.397, -2.1654, -2.5366, -2.3085, -2.1494, 0.4604, 1.991, 3.0159, 1.2951, -1.4699, -0.6828, 1.9492, -1.1545, 0.4041, -1.6529, 0.9953, -2.0895, 2.0921, -1.0865, -2.9657, 3.0257, -0.8625, 2.7322, 2.9591, -0.4717, 0.4177, -0.4346, 1.0969, - 1.717, -2.8625, -1.8252, 2.905, -2.3196, -1.2812, -0.0676, 0.4246, 0.2591, -1.624, 1.1154, 2.1894, 0.6864, 2.2887, 1.2289, 2.1388, 0.8032, 2.4259, 0.4694, -0.541, 0.5995, -0.6311, 2.9087, 0.2573, 2.3791, -1.4947, -1.0012, -2.2672, -2.0833, -1.0776, 1.0385, 1.9904, 0.7046, 1.422, -1.8945, -1.7328, -0.7814, -3.0733, 0.1931, 0.0242, -1.6747, 2.0487, 3.1233, 0.5355, -1.792, -1.0545, 2.5577, -2.9957, -2.4853, 1.5446, -1.8183, 2.7381, -2.781, 2.2596, 1.4032, -3.1325, 2.0506, -1.7364, -0.8817, -2.3061, 1.5713, 0.0678, -2.7161, 1.4979, -0.9064, -0.2001, 1.382, -0.9943, - 1.2381, -2.83, -1.1033, -0.343, -3.0729, -1.3216, 2.9751, 0.2909,2.9513, -2.2188, 3.0286, 1.7755, -0.0395, -0.4406, -1.2916, 2.3533, -2.0597, -1.2323, -0.7896, -2.0369, 1.8005, -2.305, -0.0025, 2.5308, -1.9642, -1.1552, -0.8372, 2.9346, -1.192, 2.3234, 0.3729, -0.3824, -1.0168, 1.5086, 3.0158, 1.3325, -0.9017, -0.883, 0.1329, -2.4817, -2.594, 1.2541, -0.7922, 2.3321, 1.1055, -0.6254, -1.62, -0.8091,1.8449, -2.2032, -2.2618, 0.493, 2.5634, 1.2897, -2.4548, 1.9221, 0.1294, -1.3027, 2.2456, -3.0727, -1.8028, -0.5883, -2.043, -3.0429, 2.0764, 2.8574, -1.7434, -0.9523, - 1.6726, 0.0986, -2.1183, 2.689, 2.575, 0.4711, -0.6799, 1.9791, 1.0026, 2.1207, 2.6367, -3.025, -1.9803, 2.7555, 2.0178, -2.6788, -1.5366, -0.8944, -1.3464, 2.8943, -1.065, 1.123, 0.7229, 0.5248, 1.4679, 1.5742, 2.4179, 0.153, - 2.2343, 0.4989, 0.8767, -1.9783, -0.3971, -0.8978, -3.0858, -0.6875, -2.8558, -2.7732, 1.9553, 3.0195, 2.6735, 0.2577, 0.0203, 0.7871, 2.7545, -0.8535, 2.037, -2.8402, -0.5889, 0.0404, -1.3488, 1.8725, 2.0884, -0.2726, -2.162, 2.3567, -2.715, -0.7488, 2.7715, 1.477, 2.6077, -3.1288, 0.5493, -2.3862, -2.4316, -2.1658, 2.3593, -2.8908, - 2.5441, 0.5836, -2.1644, -1.6184, 1.6542, -0.8061, -1.6168, 2.4887, -2.845, 2.9902, -1.1335, -1.5071, 2.0084, - 2.2852, 0.1572, -1.9451, -0.6765, -0.0915, 2.3467, -2.6523, -3.1014, 0.0544, 1.1893, -1.4027, 0.2083, -1.0207, 1.2698, -1.9646, -2.429,1.551, -2.3754, 0.6948, -2.5468, -2.7016, 0.2107, 0.6402, 0.8742, 0.3187, 2.6247, -1.4533, -2.4696, 2.3981, -1.2998, 0.6421, -0.9926, 0.3626, -2.7298, 0.2395, -2.3668, 1.0667, -2.16, -1.0492, -0.4235, - 0.0012, 3.0324, 1.8465, 1.1885, 2.5524, -2.9125, -0.9867, 0.3545, -1.8034, -3.0045, 1.4025, 0.0544, -2.3006, 2.1176, 0.2027, -2.2948, 2.6191, -1.3793, 3.062, -1.7944, -1.9341, 1.432, 1.3164, -2.2844, -0.4165, 2.6163, 0.5266, 2.3367, 1.9111, 2.7716, -1.2931, 2.3003, 2.3886, 1.4807, 1.2241, 1.3727, 0.5108, -2.9335, 2.2372, 0.8428, 2.2774, 0.098, - 2.4831, -2.0656, 1.8005, -0.9359, 0.0221, 2.8032, -0.0746, 1.6053, 0.2924, 0.3578, 0.1295, 2.0961, 1.3963, 0.6039, -2.4383, -0.9352, -0.3664, 1.0392, 2.7542, 1.8378, 3.0977, 1.1518, 0.8224, 2.5899, 1.5094, 1.1842, 0.303, -2.2317, 0.2553, -1.2166, 0.5364, -2.5032, -2.1031, -1.6929, 2.9255, 1.3143, -1.4317, 1.1873, 2.5916, -0.5317, -0.683, 2.6234, 2.2987, 2.8632, -0.8237, -0.9002, -2.5637, 2.4541, -0.7247, -2.7647, -0.9899, -0.4238, 2.8723, -2.0348, 0.7743, 1.9641, 0.8816, 2.6011, 2.6335, -3.0545, 1.1965, -2.3721, 1.7612, 1.0244, 1.7882, 1.1655, -0.2054, -0.6832, -0.3254, -1.4146, 0.949, 2.0718, 1.9752, -0.1609, 2.0603, -1.37, -2.1383, -2.6438, 1.7259, 2.2905, 2.563, -1.746, - 1.2871, -2.7956, -1.6347, -1.7591, 0.2231, -2.732, 2.098, 0.3001, 0.9082, 0.9835, -1.9165, 2.9943, -1.9229,1.4212, -0.8049, -3.1275, 1.2957, 0.1832, -0.5607, 2.7761, -0.7728, -2.4331, -0.9413, -0.0268, -0.0608, 2.8437, -2.6961, -1.9986, -2.4036, -1.416, -1.4861, 1.8359, -2.8329, 0.6379, 0.7757, 0.2113, 1.2629, -2.4205, 0.18, 0.6203, 1.6138, 2.1076, 0.5423, 1.8984, 1.7697, 0.8294, 1.9583, 2.1684, 1.4474, 2.7878, 0.1521, -2.4525, -0.3134, 2.8942, -1.1501, 0.9106, 3.1148, 3.1009, 0.7328, 3.0489, -1.8328, 1.232, -1.2501, 0.0217, -0.5838, -3.0363, 1.9573, -1.9007,1.4868, -0.4879, -2.2162, -2.3861, 1.2771, 0.8813, 1.5355, -0.8068, -0.1646, -1.9701, -1.9876, 1.2155, -2.9588, -1.2102, 2.8457, -0.7589, 0.0927, 1.4232, -2.8868, 0.74, -1.8326, -1.9752, -2.4606, -1.4755, -0.9804, -1.5269, 1.756,2.9455, -1.0668, 0.0589, 1.216, 1.7153, -2.9103, -0.2112, -1.8709, 2.5564, 0.9418, -0.8654, -0.3184, -2.0508, 2.3516, 0.4078, -0.3633, -2.5701, -0.4359, -0.0593, -2.3775, 1.8469, -1.8389, 2.4779, 2.7527, 2.8743, -1.3897, -2.6751, 0.9158, 2.3558, 0.2545, -1.9373, -2.8288, 0.6745, 1.1874, 2.9171, -0.2954, -2.5876, 0.1395, 0.9442, -1.3266, 2.6233, 2.9255, -1.3311, 2.416, -2.2225, -1.5312, -0.3928, 1.8109, -2.1657, -0.4704, 0.2406, -2.3838, 2.6568, 2.129, 1.6865, -2.323, -0.3351, 1.2723, -1.3076, 1.0436, 0.0634, -1.1968, -3.0255, -1.2917, -2.917, -1.5259, 2.1148, 0.3675, - 2.337, -0.3431, 1.1758, 2.9052, -1.1608, 0.5513, -0.9032, -1.3633, -2.9001, 1.0177, 2.7593, -3.0984, 0.2844, -0.956, 0.3056, -1.3996, 2.4876, -0.8947, -2.7095, 1.8003, 2.7445, -1.142, -2.6684, -1.1264, -1.1181, -0.3903, 2.9695, 0.3027, 0.5143, 0.3314, 2.5666, -2.2284, 2.2355, -0.5323, 2.7678, 2.5197, 3.054, -2.4751, -0.1969, -1.3425, 1.1261, 1.965, 2.3109, 2.161, -3.026, 1.3183, 2.0243, 1.2899, 1.4574, 2.1425, -1.5554, 2.985, 2.4573, 1.3709, -0.1585, 2.5743, -1.1941, -2.6033, 2.3494, -0.89, -1.7313, -3.0296, -1.1782, -1.0849, 2.794, 2.4744, -2.6325, -0.4653, - 1.6892, 2.5821, -1.3814, 0.3655, 2.9196, -2.9367, 2.4162, 0.1088, 1.7742, 1.122, -2.8662, 0.6478, -0.9109, -2.2864, -0.4492, -0.0106, 1.0401, 2.7297, 0.6808, 0.3996, -1.6961, 2.0899, -1.7475, 2.5119, 2.8112, 0.4154, -0.6398, 0.446, -2.0193, 1.0178, -0.299, -1.4211, -0.4155, -3.0756, 1.2975, 1.8689, -2.994, -2.3944, 2.5474, 3.0699, -2.9668, - 0.6797, 0.9235, -2.0357, -2.3992, 2.7955, -1.298, -3.0656, 1.7801, -2.383, -2.2236, 2.6629, -0.4524, -0.3801, 0.0482, 0.3074, 1.1563, 0.0302, -2.273, 0.2742, 2.6155, -1.0491, -2.9428, 2.038, 0.6766, -3.1177, -0.3322, 0.8582, 2.3214, -1.2571, -0.2205, -1.8411, -0.9038, 2.0469, 0.5957, -1.6661, -0.5096, -2.0676, -1.0977, 2.1316, -1.3339, 2.1847, 1.5771, 0.2735, -0.9883, -1.978, -1.6776, -2.1229, -0.1392, -0.0298, 3.0309, -0.611, -1.7038, -1.8395, 0.9608, 2.9987, -1.8297, -0.7112, -1.6189, -0.5334, -1.9826, -2.8548, -1.5641, 0.0666, -0.4991, 2.4105, 0.1647, - 2.2825, 0.9064, 1.3103, -2.3254, 2.0697, 2.2823, -3.0188, 1.9354, 2.5215, -2.7306, 1.2487, 0.9288, 0.1364, 1.4667, -1.0782, 0.9917, -1.5519, -2.2486, -0.9571, -1.1122, 1.9119, 2.6594, 3.054, 2.0936, -1.1253, -1.3105, -2.0931, 2.204, -2.061, 1.4927, 2.4373, 1.3313, -2.2017, -0.1524, -1.1713, -0.2267,1.9013, -2.9044, 0.152, -1.8919, -2.0998, -1.2177, -0.3465, -0.5544, 2.5669, -0.7791, -2.7227, 1.0099, 0.9281, 2.1694, -0.2469, -1.7801, -1.5274, -2.3674, 1.9437, -0.0317, 3.0802, -0.6731, -0.3243, 2.8377, -2.935, 2.2539, -2.1565, -0.9172, -2.0877, -0.1338, -0.7397, - 0.0543, 2.4979, -1.169, -1.0812, 2.4704, -1.436, -0.5656, 1.7142, 1.2624, 0.9038, 2.4919, 1.2883, -0.6355, 0.5703, 3.1337, 0.6912, -1.1386, 1.8739, -2.9908, 0.4097, 2.1065, 0.6719, 2.1666, 2.3637, 2.1954, 1.7936, -0.3413, -1.8977, -0.1888, 2.2841, 0.126, -0.8426, -3.053, -1.005,1.7997, -0.5318, -1.0984, -1.5405, 3.0404, -1.2325, 2.7506,1.2929, 1.6317, -2.4577, -1.4011, 2.2262, 2.5709, -1.4072, -2.0378, 0.4667, 1.4889, -0.9579, and -2.1021.

Phases of elements in the second sequence are sequentially 1.8513, -3.0298, 2.4143, -1.8443, -1.6712, 0.2142, -0.8484, -1.2086, 2.7731, -3.086, -2.9087, -1.6622, -1.6752, -1.9978, 2.9129, -2.9084, -0.639, -3.0218, - 0.5818, 2.4803, -1.7663, -2.9112, -0.4312, 0.7817, -2.9904, 3.0809, 0.6077, -0.5824, -1.029, -3.1166, -1.7844, 0.8126, -1.8408, 2.0523, 1.9302, -1.0226, 1.6601, 1.5436, 2.9364, 2.1942, -1.3066, 0.5323, 0.4936, 0.9245, -1.641, 2.279, -0.2706, -0.561, -2.4707, -0.8955, 2.9873, -2.4328, -0.4617, -2.2865, -0.6419, -1.8124, -2.7802, -2.437, - 1.3713, 1.5798, 2.1275, 0.4707, 2.5571, -1.905, -1.6748, -0.4759, -2.2216, -0.0253, 0.5722, -1.8111, -2.6217, - 0.6686, -2.0734, -2.1724, 2.7658, 1.8691, -0.2054, -2.6301, 0.6522, -2.3074, -2.6141, 0.3544, -1.0374, 2.1078, 0.3459, 0.5775, 2.2023, 1.7502, -2.3414, 0.7682,1.7259,1.9694, -0.6191, 2.6588, -1.0864, -2.5646, -1.5906, 0.224, -0.4995, -1.1711, 0.2205, 3.0336, 2.2193, -2.6107, 1.7637, 3.1296, 3.1286, -2.238, 2.8037, 0.7403, -3.141, 2.6962, 1.2596, 2.8672, 2.8227, -2.5177, -1.2835, -1.8115, -0.8622, 0.529, 1.7025, 2.2829, -0.8095, -1.1012, 2.7206, 2.3788, 0.8225, -1.2599, -2.642, 1.1387, 2.5238, 1.0343, -2.4972, 1.8973, -0.1043, -0.2266, -0.9628, -3.0591, -2.3415, - 1.5879, -2.2065, 0.7937, -0.9245, 0.2217, 2.1376, 1.3058, -0.9887, 0.2444, -2.706, -2.4134, -2.067, -1.4194, 1.401, -1.1183, 2.8679, -1.1813, 1.618, -2.8684, -2.184, 0.2673, 2.4931, 0.5093, 0.1209, -2.3332, -1.182, -1.3588, 1.6177, -0.1223, 2.5022, -0.3538, -0.1414, 1.1805, -1.1703, -0.3155, -0.7766, 1.8468, 0.6462, -1.4259, -0.906, 1.8824, 0.8863, 1.6457, -0.864, -0.9036, -3.1179, -2.9946, 1.7655, -1.9286, -1.1119, -2.8461, 3.0744, -2.6028, 1.3473, - 1.8851, -0.7693, -0.3213, -1.5029, 2.5713, -2.0883, 0.5688, 0.4656,1.6484,0.423, -2.494, 0.6678, -1.0896, -1.4082, -0.1446, 2.5957, -2.1736, -0.9391, -2.6256, 1.6873, 0.0466, 0.1865, 2.4893, -0.4511, 2.0194, 1.5592, 1.449, -0.3238, 0.7901, 2.5263, -0.8811, 2.891, -2.6367, 3.0008, -1.8717, 0.7226, 2.5809, 0.5804, -1.3508, 2.0979, -0.5861, 1.4716, -2.8419, -0.4142, -0.2091, 0.7305, 0.3316, -2.101, -2.4148, 0.6382, -1.1038, -2.4439, 0.6171, 0.1268, 0.3799, - 1.9488, 1.0176, 1.7858, 1.0124, 0.5579, -0.8023, -1.4979, -1.2384, -2.0771, -3.1221, 1.8673, -1.6096, 0.5377, 1.0962, -0.3393, -0.4311, -0.0583, 0.7506, -2.9787, -2.1361, 1.3226, -1.2829, -3.0573, 2.5826, 1.278, -1.9465, - 0.3271, -1.6862, 2.7458, -0.3118, 1.9316, -3.0293, -0.3301, 1.6045, 1.2238, -0.4926, 0.4925, 1.4737, -2.7682, 1.8238, -2.4487, -1.5862, -2.7841, -1.9717, -1.1347, 1.5589, -2.7141, 1.0264, -2.8889, -0.7985, -0.3719, 2.7554, 1.4117, -2.7103, -0.2384, 3.0759, -0.3418, 1.112, 1.3929, 1.482, 2.6217, 2.5547, 2.1801, -1.4994, 0.4575, 1.8304, 1.4872, 2.1558, 0.554, -3.1231, 1.6141, 1.3993, -0.1661, 1.6431, 2.6835, -1.3811, 0.7956, -0.6838, 0.8203, -1.3766, -1.3817, -0.6649, 0.8568, 2.9828, 1.4471, 1.1555, -3.0903, -2.2687, 1.3593, 2.9119, -0.3173, -2.9276, -2.0285, 2.6903, 0.4367, 2.3939, -1.5192, 2.6679, 0.5152, -2.8451, 2.0723, -1.4679, -2.8847, -1.4064, -1.508,1.8221,0.1771, -1.146, -2.6605, 0.4471, -0.3861, 2.856, -2.4784, -2.3062, -0.7421, -0.9093, 2.7033, 0.7607, -0.9342, 2.0328, - 1.2885, -3.0709, -1.4973, 0.8851, 1.3536, -0.9153, -0.3187, -1.8664, -1.4587, 2.7663, 2.2827, -0.0696, 2.8082, 3.107, 0.2793, 1.7673, 1.7154, -0.6564, 0.9836, 1.8993, 3.0253, -1.9267, 0.936, -0.8558, 0.5748, 2.4063, 0.6287, - 1.7538, -1.9415, 1.4511, -2.5301, -2.6869, -0.6853, -2.8781, -0.8281, -3.069, 2.5011, -3.1311, 0.7102, -0.0381, 2.8545, 2.2556, 2.6211, -1.7964, 2.6193, 0.9382, -0.7284, -2.4939, 2.4003, 1.9036, 1.8749, -2.9447, 2.567, -1.7235, 0.0282, -1.6059, -2.0218, 0.8622, -0.8352, 1.3624, -2.8194, -3.0486, 0.702, 0.0999, -2.0118, -1.3075, -3.1386, - 0.1123, -3.0011, 0.3942, -1.3797, -2.835, 2.2921, -0.7923, -1.1058, -0.8698, 0.0174, 0.8441, -1.4353, -1.8928, - 1.2828, -2.6886, 2.5522, -2.8585, -0.4954, -1.9287, -2.7743, 2.336, -2.5979, 2.6383, 2.916, -0.1139, -1.3416, - 1.318, -0.2409, -1.3234, 0.0578, 0.0958, 0.4841, 2.1111, -0.0043, 3.0393, 2.1564, -2.299, -0.1932, 2.3826, 2.6793, -0.7837, 1.8488, 1.0812, -3.1023, -1.3895, 2.4377, -2.0485, -1.8566, 2.5512, 2.7899, -0.0395, 0.429,1.0448,2.8407, -2.7796, -0.9148, 2.971, 2.218, -1.2361, 3.0537, -0.5692, -3.1031, 3.0437, 2.8001, 1.5269, 0.5582, 0.8567, -0.598, 1.6629, -1.4271, -1.6559, -1.0886, -0.2906,1.6637,2.5855,0.0475, -2.3983, -0.2668, 3.0173, 0.17, -1.6961, 0.7671, -2.541, -1.6372, -2.4413, -2.2886, 2.6188, 1.3868,2.7633,0.2917, -1.9271, -0.2164, 0.2277, 0.319, -0.5052, 1.7095, 0.6366, -1.3291, 0.9206, -0.8903, 0.2887, 2.1394, -2.1484, -2.4221, -2.3134, -1.7729, 2.8195, 0.7352, -0.8938, 0.6441, -1.7557, -1.015, 0.7118, -0.1434, -0.4328, -0.7118, -0.4531, 0.0902, -3.0906, -0.2386, 1.7756, -1.5386, - 2.4841, -1.0772, -0.7231, -0.2947, 1.6485, -1.5248, 2.7361, -0.5738, -1.4093, -2.1581, 1.5141, 1.8012, -0.0509, 3.0658, -1.3351, 0.5365, -0.7084, 0.0389, -0.7344, -0.523, -3.1308, 0.6749, 1.3287, -2.0171, -0.6568, -0.3425, - 2.19, 0.2307, 2.2897, -2.7355, 2.4025, 1.0935, -1.3846, -0.7082, 1.9862, -2.6763, 2.5899, -0.0716, 0.1642, -3.1342, 2.0703, 1.9034, 0.738, 0.2336, 2.7394, -1.6104, 0.3975, -2.2218, 2.1359, -3.1323, 1.0096, 0.8652, -2.3416, 1.7644, -2.5102, 0.1258, -2.3119, -1.971, 0.0398, -1.5644, -2.5036, -0.3665, 0.4265, 1.7914, -0.0298, -1.0595, 2.6994, - 2.1752, -2.9813, 2.3679, 1.9024, 2.8642, -0.1477, 3.0035, 1.7879, -0.8994, -2.4662, -0.6949, 2.3195, 2.7108, - 2.0417, 0.498, -3.0608, -0.3577, -0.9769, -2.7362, 0.0848, -0.8362, -0.0518, -2.1551, 2.0833, -3.0621, -0.5926, 0.0566, 0.8267, -3.1256, -2.6601, 0.5441, -2.4441, -0.8759, 0.8406, 2.6241, 1.3475, -0.2303, -2.7919, 1.9269, -0.1716, -2.8945, -0.8034, -0.6761, -0.2209, 1.6693, 3.0823, -0.8384, 0.6501, -0.5833, -0.9974, 1.4481, 0.9051, - 2.9436, -1.029, 2.7071, 2.9145, 3.0473, 0.3119, 0.2766, -1.2281, -2.6851, 0.8237, -1.3292, 0.897, 2.4576, -1.3548, 1.8413, 2.8324, -2.904, -0.8397, -1.9138, 0.6137, 1.6218, 2.2245, -0.5594, 3.0401, 1.4114, -2.1454, -2.903, -0.611, -0.6039, -0.2989, -1.9653, -1.4059, -0.3913, 0.6948,1.8848, -0.0361, -1.14, 2.8277, 1.725, 1.3799, -2.6938, 2.4068, -0.2741, 0.7322, 1.1485, 2.6411, 0.3528, 2.9742, -0.897, 1.9487, 0.5295, -3.0787, -0.93, 1.9519, 1.0994, 1.0903, 0.4803, -1.7242, 2.6809, -2.3983, -1.815, -2.7389, -2.2905, -0.7171, -2.2216, -0.3699, 3.1151, 0.7472, 0.3886, - 2.1904, 1.864, -1.8096, -1.943, -2.7417, -2.673, 2.9551, -2.6924, 2.8877, -0.43, -3.1298, 0.9403, 1.7358, -1.8607, -1.4679, 0.3249, 1.4359, -2.0054, -2.1705, 2.7225, 3.0021, 2.9936, -1.9085, -1.6065, 2.7266, 0.2098, -1.7396, 2.2461, -1.56, 0.8203, -0.1782, -0.6858, -0.3252, -1.1188, -0.8819, -0.3347, -2.6765, -0.0773, -2.661, -1.2598, - 0.2417, 0.3148, -0.3998, -2.5001, 2.3506, 2.6975, -1.5192, -0.1016, 2.1107, -0.3526, -2.8886, 3.089, -3.0772, 2.4744, 0.0003, 0.1562, -2.6152, 0.2102, 2.4741, 2.9945,1.8986,1.2536, -1.4668, -2.0535, 2.7604, -1.5144, -2.8164, -2.9064, 1.1821, -2.5137, 0.8594, 0.9376, -2.4163, -2.4008, 1.5746, 2.9285, -2.6378, -2.9138, 0.8177, 1.0502, 0.1544, 2.5478, 2.54, 0.8339, -1.387, 1.1067, 0.3326, -0.2324, 0.5508, 0.0183, 2.6092, -1.2121, 1.188, -0.5818, - 1.4422, -1.5717, 0.2496, 2.6441, -0.3316, -2.1363, -3.1414, -2.9669, 1.9523, -1.9804, 0.2536, -1.262, 2.1447, - 1.8695, 2.3188, -0.472, 0.7447,1.2019, -1.7768, 0.5572, -3.0501, -1.3129, -1.5671, 0.1713, 2.4218, 2.2685, 2.8484, -2.8042, 0.9588, -0.8035, -2.5306, 0.5044, -2.163, -0.9289, -2.0456, -2.1375, 2.9529, 1.6498, -2.752, 1.5324, 2.2645, -0.8536, -0.6437, -0.6242, -0.6048, 0.3974, -3.051, -2.6005, -0.2976, -1.8865, 2.5204, -1.5727, -0.9942, -1.7034, 0.3231, -0.5292, 0.3419, 3.0781, 1.2649, 1.8717, -0.7394, 1.8329, -1.5403, -1.3296, 2.5942, 1.2474, 1.4673, -1.6451, 0.4202, -2.0202, -2.5146, -1.2898, -0.1362, 2.2398, 1.6038, -1.5233, -1.2936, 2.6016, 0.7206, -2.4926, 1.6189, -3.0916, 2.7419, 2.4633, -2.0383, -2.6937, -1.9942, 1.1055, -2.1888, 0.2364, -1.025, -2.1584, -0.4429, 0.6122, -0.5944, 3.1307, -1.9055, 2.0913, 0.5735, -1.1054, 0.4793, 2.4176, -2.9087, 0.2915, -2.9649, -0.4448, 1.7388, -3.0932, -1.6453, -0.0616, -1.7041, 2.9198, -0.7927, 2.5766, 2.7356, 0.2932, -1.863, 2.8979, 0.4772, - 2.3193, -1.6846, -0.3917, 0.4703, 0.1046, 2.7132, 0.4478, 0.7148, 0.8141, -0.5034, 2.7887, -2.9568, -3.1073, 0.9087, 0.2731, 2.4317, 2.0309, 2.986, 2.1702, 2.0637, -2.808, -0.2088, -1.956, 1.228, 1.8262, 2.4956, -0.3605, -1.4917, - 2.7422, 0.873, -3.115, 0.0922, -1.1524, 2.5213, -2.6956, -2.7521, -2.2255, 3.0222, 0.8275, 2.6906, 0.5484, -1.5974, 0.4512, -0.4612, -1.7214, -0.2074, -3.024, 1.8498, 1.7599, -2.2616, 0.1973, -3.0018, -1.8394,1.324, -2.8617, 2.786, -1.7037,1.6587,1.203,2.4229, -2.5617, 0.9783, 2.3837, -2.7704, -1.1356, 2.4045, 2.9335, -1.0978, -1.8604, 2.2031, -2.0323, 1.1822, 1.8741, 0.5875, 2.2515, 2.7921, 1.8268, 2.1254, 1.2925, -1.3235, -0.6313, 2.4889, 2.8182, 3.1027, 3.1384, 1.4628, 0.2733, 1.4537, -0.8082, 0.2341, 1.7686, -1.1807, -2.5425, 0.8392, -0.1054, -2.3927, 1.2391, - 2.1508, -0.8426, -0.9203, 3.0257, 2.5107, 1.9999, 1.2787, -1.3493, 0.6154, 2.2534, 2.1449, -0.1165, -0.0136, - 0.9656, 1.4814, 1.0999, 2.951, -1.2948, 0.9814, 1.6058, -0.4282, -2.4916, 1.2979, 0.3916, -0.4383, 0.7699, -0.307, -1.3991, -0.8532, 0.7736, 1.2963, -2.072, -1.978, -2.2841, 0.2216, -1.815, -0.4045, -0.2077, 0.9035, 2.2865,1.6097, -2.9787, -2.7872, 1.8883, -1.7219, -1.3469, -1.167, 3.0644, -0.0111, -1.8744, 0.6098, 0.8566, 0.1863, -0.6024, - 2.9777, -1.0391, -1.2895, 0.973, 1.7239, 0.1225, -2.8534, -0.8305, -3.1345, -0.1114, 0.5599, -2.9702, 2.3485, 1.5604, -2.6726, -2.5738, -1.8916, 1.3104, 2.1865, 1.1533, -0.8779, 1.1619, 1.3273, -0.1304, -1.5942, 2.8423, - 2.5388, -1.1806, -2.1029, -2.0556, 0.8806, -2.6749, 0.1885, -2.5104, -0.5315, 0.0322, -1.5995, 1.3239, 0.4521, 2.4688, 0.034, -2.9108, -0.13, 1.5362, 2.603, 2.8556, -0.6309, -1.3294, -3.0288, 2.0525, -0.268, -1.8301, -1.4321, -0.3585, 2.9652, -1.4003, 3.1001, -0.7388, 1.6932, -2.2543, -0.0753, 2.979, 2.2062, 1.1234, 2.5089, 1.158, 2.5923, 1.6276, 1.6302, -1.3267, -2.5209, 3.0101, -1.4774, 0.7382, -2.6777, 2.0506, 2.5024, -2.5175, -0.4343, 0.8652, - 2.0885, -0.5454, 1.0287, 2.4863, 2.7617, -0.8513, -2.2851, 1.935, -3.0305, -1.7487, 1.9869, 0.4103, -1.8908, - 3.0719, 2.7682, 0.2244, 1.8159, 1.6803, 0.7368, -1.694, 2.4107, 0.1188, 2.6563, -0.8419, 1.5895, -1.1188, 2.7622, 1.6718, 1.7888, -1.6611, 0.7382, -0.5032, 0.6177, 1.4054, -1.4945, 0.2861, 2.7207, -2.1078, -0.7593, -2.1417, - 1.7898, 2.489, 1.4398, 3.0849, 1.2433, -1.516, -2.624, -1.54, -1.8693, 3.1038, 2.1055, -2.0282, 0.0639, -1.2608, - 0.7615, -1.7301, -1.8817, -1.6489, 3.0789, -0.7457, 0.4868, 0.0797, 0.7011, -1.939, 2.5555, 0.7762, -1.9346, - 2.7839, -1.4133, 2.9172, -1.3011, -2.5991, 0.2538, -0.6054, -2.5762, -1.276, 3.1054, -0.5228, 1.5418, -0.4784, 1.4213, -0.0803, -1.788, -0.9329, -0.5918, 2.2042, -1.3721, -2.621, 2.656, -0.5019, -0.2884, 0.0823, -2.0049, 1.6319, 1.8738, 1.65, -0.6259, 0.4386, -2.2462, -1.7142, 0.1091, -1.7742, -2.8586, 2.0938, -2.4175, 2.5183, 2.11, 1.8923, -3.1123, -3.134, -0.87, 1.741, 1.963, -2.4856, 2.9081, 2.0655, -2.2541, -0.9493, 0.5783, 2.8727, -0.0189, - 1.9149, -2.3393, -1.2391, 1.7768, -3.1195, 2.3627, -0.5965, -2.0615, 2.2827, 2.4565, 1.5347, 0.0671, 2.3698, 1.8332, 2.0183, -0.9797, -2.0233, -1.7492, -0.043, 2.0429, -0.6425, 1.3144, -2.5959, 1.8853, 0.4711, 2.3182, -0.7278, - 0.4502, -0.811, 0.2282, 2.6282, 1.3502, 1.8689, 0.0124, -2.7949, -1.9487, -0.4139, 1.2994, -0.9217, 0.3021, -1.4299, -2.1796, -1.9283, 0.6897, 2.7371, 3.0402, -3.1045, -1.0263, -2.2811, -0.8276, -2.8399, -0.0494, -0.3989, -2.7715, 1.2698, -2.5486, -2.1853, 0.8237, -2.06, 1.6128, -0.454, 1.2104, 0.6498, -0.7984, 0.7845, 1.2799, 1.1, 0.8456, 2.6588, 2.8018, -1.0116, -0.9608, -2.3901, 2.3871, -2.2483, 0.0059, 3.0201, 2.3029, -1.2703, 1.1014, 1.138, -3.0763, -2.3321, -2.4653, 0.6939, 1.7619, 1.5883, -1.8725, 2.5691, -1.7107, -0.0325, 2.1695, 0.2683, -2.2078, -2.0689, 1.4318, 3.1292, 1.4725, -0.7125, 2.7907, -2.7033, 1.3709, 0.2947, 0.8458, -0.9543, -1.5686, 1.8258, -0.5727, - 2.3769, -2.9227, 0.0527, 0.1192, 2.5964, -3.0562, -2.1728, 0.8284, -2.0142, 0.1484, -2.8061, -2.169, 2.7626, 3.1259, 1.4457, -2.5614, -2.965, 0.9644, 2.983, 1.8495, 1.5395, -2.4448, -2.9139, -3.0965,1.8049, -0.8603, -0.8706, 1.7784, -2.6435, -1.3574, -0.866, -0.9992, 2.2818, 0.92, -1.1996, 0.5103, 0.8105, -3.0198, -0.3566, 2.6196, -2.6166, - 0.2085, -2.5358, 0.0316, -0.736, -2.2715, -2.8066, 1.6837, 1.1695, -2.9695, 1.3068, 0.0553, 1.1573, 1.3358, 0.8694, -2.474, -0.8814, -1.3143, -0.7764, -1.4844, -0.5979, -1.4351, 1.4354, -0.0572, 1.16, -2.2799, 0.5828, 1.3437, 2.2719, 1.2587, -2.9212, -0.2947, 2.507, -2.3568, -2.4408, -2.2646, 2.7781, -1.1164, -0.355, -1.1866, 1.3539, - 1.212, 0.4289, -2.8809, -2.4126, -1.1137,1.9781, -1.3872, -1.1737, 0.116, 0.1834, -0.9323, -2.8321, 2.7156, 0.1905, -1.4458, -0.2312, 1.3085, 0.0741, 2.6299, -2.5179, -2.738, -0.3536, 2.8882, 2.3808, 0.2501, 1.2328, -1.7631, 0.0108, -2.6288, 2.0249, 3.088, 0.7573, -0.2145, 1.8531, 2.25, -0.1031, 2.1273, 1.8451, 1.3973, -2.9561, 1.2024, 0.207, - 2.5846, 1.7498, 3.0269, -2.4397, -1.1255, 2.262, 0.0836, 0.1155, 1.2835, -1.8947, -2.9739, -1.4124, 3.073, -2.6958, -1.8242, 2.3571, 1.5895, 0.2764, 2.869, -2.11, 2.1571, -2.4134, 1.8058, 2.1595, -2.0108, -0.0227, -1.1146, 1.9437, 2.5881, -0.0644, 1.2075, 0.2983, -2.7273, 0.5759, -1.0589, -2.0095, -2.4602, 1.7273, -0.1804, 1.018, 2.0396, - 1.8904, -0.0027, 0.2306, -1.5445, -0.9248, -2.9478, 0.6083, -1.4579, -3.0895, 1.1326, -0.8386, -1.9164, 0.2621, -0.2961, -0.1446, -0.6731, 0.0451, -2.6014, 2.3168, 3.1207, -0.8664, -0.0311, -1.1679, -1.4125, -2.9892, -2.0796, 2.3055, 0.839, 2.6183, -0.1441, 1.7082, 1.6884, 1.9906, 0.2452, -2.9857, -1.0595, -0.6612, -1.924, 2.2466, 2.3933, -2.1971, -0.5684, -0.2973, 1.4743, 2.754, 0.3319, 2.5523, -0.5842, 1.8681, 0.1454, -2.713, 1.8752, 2.3428, -1.7163, -0.6789, -1.8412, 2.3059, -2.4011, 0.9072, -2.9687, -2.1374, -1.9678, 1.9879, 2.8776, 1.5697, -1.5706, -3.0477, 2.278, -1.6111, 1.5349, -1.329, -1.5815, -0.7162, 2.5284, 2.4331, -1.5341, 2.9813, -2.8583, -2.8815, -0.5591, - 2.1676, -2.4919, -2.711, -0.066, -1.2869, 0.9746, 1.2114, 2.4012, -1.4999, 1.9104, 0.0736, -2.1731, 1.4108, -0.9365, 0.0229, -0.6307, -3.0531, -2.5899, 1.1294, 3.1111, -2.7629, 1.2618, 2.4628, 3.085, 1.3336, -2.432, 0.1408, 2.4388, -2.9864, 2.021, -1.9689, 1.6576, 0.9128, -0.4622, -2.4524, -2.2006, -2.3612, -2.4246, -1.1336, -2.9833, 0.6576, 2.2316, -0.9877, 1.3365, 2.6355, -0.4308, -1.5745, 1.6959, 0.2581, 0.2487, 2.8058, 2.5812, 2.3659, 0.8284, 2.5913, -2.4814, -0.2445, 1.3359, 1.9764, 1.5344, 2.5209, 0.8093, 0.7005, 2.7915, 1.4119, -1.069, 2.1915, -1.2516, 0.0375, -2.0597, 0.9611, 0.1116, -2.3494, -0.7069, 3.0522, -2.1529, 0.5991, -0.4349, -2.3053, 0.976, -2.3432, 2.133, 0.1068, 1.4461, 1.3497, 1.9326, -1.4897, -1.5345, -2.7822, -2.6132, -2.7775, 0.1483, -2.532, -2.2142, -0.1972, -2.5202, 1.7233, -0.3281, 2.5447, 3.0948, -1.8654, -2.1423,1.0198,0.5967,0.8589, -1.073, -2.6523, 2.5278, 2.8844, -0.8092, -1.6537, -1.8523, 1.9901, 1.9561, 2.9138, 2.4642, 2.9211, 2.505, -1.1023, 2.4672, -1.4379, 2.6312, -1.2356, -0.2864, 3.0717, -1.1424, 1.5051, -1.3299, 0.13, 2.9346, 0.1862, -1.1755, 0.6465, 1.2008, 0.9393, -1.9442, 1.5251, 1.8344, - 1.8372, -1.9289, -0.3213, -0.3464, 2.3288, -3.0445, -1.923, -1.3067, 1.0323, 1.9967, 0.0291, -0.5399, -0.7682, - 1.2338, 0.7628, 2.2632, 1.2901, -2.9989, -1.0847, -1.8034, -1.9755, -2.6818, -1.3299, -1.1165, -2.6185, 1.3604, 3.0319, 0.9907, -0.4544, 0.0548, 1.9176, -3.1056, 2.6421, -1.2552, -2.6215, 1.3981, -2.0311, 1.0053, -1.6838, - 2.2361, 2.2754, 1.5481, 1.2531, 0.9252, 1.3815, -0.5614, -0.0315, 0.0039, -0.0129, -0.8903, 2.6317, 3.108, -1.6773, -1.1903, 2.1132, -1.9745, -0.0011, 0.1931, 0.5322, 1.2623, -2.4106, 0.9242, 0.3896, -2.4237, -1.1502, 0.0254, 0.2328, -2.6536, -0.0877, -0.5029, -1.5965, -1.0147, -1.7721, 0.3412, -3.0546, 1.2953, -0.7844, -0.3591, 1.1869, -0.6906, 2.4554, 2.4821, 1.9888, -0.3634, -2.0768, 2.3755, -2.4708, -0.1812, 1.7022, 1.4548, -2.2664, -1.2632, - 1.2356, -2.9319, 1.0716, 0.7497, 2.2746, -0.9072, 0.7187, -1.2866, -2.6227, 0.044, -1.4799, -0.703, -3.1148, - 0.6945, 0.7407, -1.6834, -0.379, -0.7713, 1.8299, 1.1497, -2.7766, 2.967, 2.412, 0.0867, -3.0402, -0.7456, 2.7113, 2.6358, -0.4496, -2.0995, 2.8618, 0.3046, 0.3816, -1.2579, -2.1923, 0.8242, -2.8364, -1.6398, 0.3029, 1.7628, - 0.9691, 0.9547, -0.5672, -0.135, -0.216, 2.4386, 0.867, -2.5931, 0.9764, 0.6989, -0.9307, -0.5285, 2.6942, -1.9512, 0.6281, 0.8526, 0.1969, -3.091, 1.3856, -0.6596, -2.7578, 0.0204, -1.6071, 2.8564, -2.891, -1.8197, -0.2891, - 1.5288, -0.3638, 0.088, -0.8511, -1.2187, 0.355,1.8595, -0.5383, -2.2244, 0.5028, 1.2799, -1.3476, -0.0641, 0.1249, 3.0524, 1.9739, -0.2057, 2.1744, -0.9175,1.4607, -1.0651, 0.8528, -1.184, 0.1943, -2.0988, -2.7604, 2.1933, 0.9201, -1.5839, 1.036, -3.0733, 0.0071, 0.9592, -2.7752, -0.896, 0.7973, -1.1808, -2.5452, -0.1771, 2.9498, -0.3157, 0.2833, -1.4812, -1.8283, -3.0778, 2.7655, 3.0964, 2.4773, 0.9898, 1.9235,2.9795, -1.6666, -0.7529, -0.124, 0.5553, -1.3528, 3.0724, -3.1201, 2.8083, 2.3023, -1.4123, -0.8097, 1.3125, -1.0822, -2.1562, -0.545, 0.9129, 2.5086, - 0.1336, 3.1068, -1.8823, 2.261, 1.5453, 2.4026, 2.3428, -1.9182, -2.7357,1.7001, -1.1471, -0.3096, -2.6807, 0.5514, -2.4645, 2.1347, -0.4333, 2.029, -2.0662, -2.4981, and 1.6242.

Sequence set 14: The sequence set 14 includes three sequences (denoted as a first sequence, a second sequence, and a third sequence), and a length of each sequence in the sequence set 14 is 2048. Elements in any sequence in the sequence set have a same amplitude. Phases of elements in each sequence may be as follows:

Phases of elements in the first sequence are sequentially -1.5185, -0.3628, 1.4367, -0.1784, -0.3738, - 0.4425, 1.0877, 1.7705, 1.165, -2.4608, -0.4694, 1.5369, -0.4878, 2.2011, 2.0417, -2.0157, -0.5414, -2.0546, 0.1778, 1.7887, 1.4382, 1.2482, 0.1605, -0.0283, -0.6277, 2.1189, -0.8677, -1.4519, 3.1128, 2.0685, 2.0288, 0.3926, 1.5335, 3.1125, -3.02, -2.5511, -2.2339, -1.4097, 0.6944, 3.0227, -3.0108, 1.4047, -2.6469, -0.173, -2.9, -0.856, 2.9958, 1.6994, 1.2845, 0.1793, -1.0898, -0.4459, 1.7646, 0.0547, 2.6998, -0.9382, -1.4678, -2.3698, 0.3697, -1.3624, 0.3579, -2.4124, 2.9598, 0.3688, -0.516, -3.0092, -1.2166, 0.6616, 1.2218, -1.4199, 0.7137, -1.7296, 2.8347, - 1.3161, -1.4991, 2.6837, 2.3534, 2.4112, -1.0643, 2.6038, -2.7222, 2.4475, -0.6192, 1.625, -1.3198, 0.1331, 1.7824, -1.4462, 2.6728, -2.2224, -3.1138, 0.9354, -3.0904, -3.1201, -1.8751, 1.5798, 3.1311, -2.0672, -0.6054, 0.2152, 0.3243, -1.9464, -0.9899, -0.3709, 0.8973, 2.5553, -1.4106, 2.4112, -0.3956, 1.7462, -0.4418, -1.4192, 1.7114, - 1.1672, -2.3718, 2.88, -1.0029, 0.7231, 1.6597, -1.0387, -2.8977, 2.3437, 1.8053, 3.0905, -0.4449, -0.6249, -2.0613, -2.1189, -1.5222, -0.1069, -1.7795, 1.3186, 2.1028, -2.9852, -1.0759, 0.8399, 0.0739, 2.6286, 2.3026, 1.7655, 0.0564, 0.9727, 1.5702, 1.8356, -1.1811, -2.3696, 2.3528, 0.6962, -0.4131, -2.0642, -0.0262, -1.9686, 0.0861, - 0.8976, 1.3211, -2.154, -1.2308, 1.9622, -0.5281, 0.3509, 0.6492, 0.4213, 1.6734, 2.6357, -2.3715, 2.7705, 2.9382, 0.8287, -1.6446, -1.5947, 2.3085, 0.8112, -1.9117, -1.1438, -0.0832, 1.8439, 0.2022, -1.1754, 0.0713, 2.3316, - 1.0209, 3.0376, -2.9361, -0.577, 0.3114, -2.7493, -2.9622, -1.0725, 2.5908, 0.2035, 1.4403, 1.3888, 3.0974, 0.939, -0.5431, 1.5213, -0.7395, -0.9378, -0.4921, 0.1108, -0.3452, -0.8904, 1.0227, 0.5367, -2.7323, 0.5659, 1.2596, - 1.1895, -0.559, 0.2353, -1.9329, -1.1017, 1.3824, 0.7809, 1.6498, -0.0806, -2.0224, -3.0426, 2.2372, -0.3793, 2.7486, 2.1525, -0.0626, 1.6882, 2.4064, 0.612, -2.104, 0.3536, -2.309, 2.5023, 0.9596, -2.3034, 2.2929, 0.7782, - 2.3372, 1.2832, -1.715, -1.2519, -1.1775, -0.7458, -1.6006, -2.508, -2.3941, -2.8058, 1.6859, 2.2403, -0.8593, 0.5159, 2.9719, -2.9163, -0.3931, -2.1986, 0.196, -2.5167, -0.9397, 3.116, -1.5415, -0.7013, -2.0446, 0.0214, - 2.9272, -2.9274, -0.7674, 0.1111, -0.9694, 0.393, -2.5455, -2.2492, -2.89, 2.7509, 1.7466, -2.8459, -0.3844, - 2.3916, -0.6977, 1.6805, 2.2138, 0.5166, -2.9894, -2.737, 0.5373, -1.2628, 2.9551, -0.7791, 2.1327, 1.1919, 1.8978, 1.1047, -0.7738, 1.2019, 1.0448, 0.3547, 2.1446, 1.1107, -1.1341, -3.1053, 0.9021, 0.728, 0.0243, 2.3404, -0.7016, -2.7172, -2.3352, 2.4965, -1.4944, -1.1371, 1.2245, 3.0092, 2.8182, 1.5595, -1.8363, -0.5856, -1.9844, 1.1452, 0.2129, -2.7017, 1.5663, 1.6114, -2.6338, 0.0193, -1.6679, 0.3899, -0.036, 1.7109, -0.1203, -0.8172, -1.2354, 2.546, 1.5167, 2.5407, 2.6217, -1.9888, 2.0932, -0.0641, -0.4993, -1.7873, 2.6707, 2.2378, -0.2276, 1.2919, 0.9733, - 3.0136, -0.2206, 2.6485, 1.154, -0.1632, -0.6426, -2.7194, 2.7333, -1.1434, -0.8336, 2.2518, -1.6732, 1.0763, 0.4201, -2.1887, 1.4794, -3.0853, -2.7548, -0.9527, -3.0408, -1.9914, -1.4607, -0.6156, 1.6438, 2.202, 1.8455, - 1.6526, 0.3257, -2.9883, -1.5335, 1.6569, 2.5286, 1.694, -0.733, -0.8897, -1.086, 0.4756, 1.8487, -0.5122, 1.0647, 1.2969, 2.9869, -1.1019, 0.869, -2.5953, 1.5668, -0.4919, 2.4678, -1.167, 1.4223, 0.3841, 1.1161, -1.9092, 2.9372, -2.2984, 0.5169, -2.3898, 1.974, 0.8877, 2.9507, -1.7426, -0.1865, -0.3107, 0.1793, -0.7309, -0.5532, -2.1292, 3.0754, -3.0748, 0.8838, -1.9541, -0.371, 1.8889, -1.3891, 0.6356, 2.517, 1.6837, 0.7074, -2.1505, 1.5337, 0.1821, 2.9538, -1.2029, -0.6691, -2.4224, -1.8457, -2.0899, -1.1318, -0.8899, -1.1682, 1.2197, 1.258, -1.6712, 1.2074, 1.788, 2.1068, -2.3478, 0.7799, -0.8731, -0.8621, -2.8468, 2.0345, 0.5164, -2.557, -0.7642, 0.4404, 1.0257, 2.4848, -1.7134, -0.6307, -2.7527, 0.684, 2.4915, -2.0496, -2.1596, 2.3697, 2.6616, -0.7005, -1.941, -2.3149, 2.2673, - 3.0607, -1.5726, 2.2388, 3.0776, 2.7566, -1.8747, -2.7305, 2.8545, 2.8798, 2.964, 3.0623, -0.5143, 2.6642, -0.2571, -1.3576, -1.829, -0.9316, -1.8921, -0.8094, -0.6667, 0.0169, -0.1229, 2.3539, 1.9765, 1.7071, 0.6211, -0.0744, - 0.808, 1.0239, 1.2708, -1.6472, 2.8569, 0.281, 2.2529, 1.1023, -0.4669, -0.6316, -0.0097, -2.311, -1.5737, 1.3569, -1.0297, 1.6499, -0.6397, 0.9636, -1.5482, -1.7626, -1.3277, -3.0189, -1.5524, 0.0046, 2.1126, 1.7152, 2.7126, - 1.2642, 1.1816, -3.0595, 1.3745, -0.1226, -1.3273, 0.8587, -1.6404, 2.0421, -1.7088, 0.7148, -0.7575, 2.6985, - 0.506, 2.0118, 2.4946, -0.2004, -0.5579, 3.0416, -0.5419, -1.5186, -2.9233, 1.6118, -1.6418, -0.8953, 0.6604, - 1.9513, 3.0869, 0.7463, -2.6932, -0.7123, 1.1894, 0.6194, 2.7327, 2.8018, 0.238, 1.1995, 2.021, 2.9147, 1.8519, - 0.6274, -0.6846, -2.1574, 2.6153, -2.554, -2.6949, 0.9124, -3.1389, 2.0415, -2.8318, -1.0237,1.93, -1.1021, 0.2747, -0.1946, 2.2824, 1.8896, -1.7173, -2.6409, -2.1971, -2.2853, 0.1163, -1.2289, -0.6869, 1.0599, -1.1636, -0.454, - 0.5982, -2.4285, -2.3144, 2.6444, -3.0099, -2.4092, -1.8203, -2.8118, 1.2918, -0.5324, 2.4314, -2.3866, -1.289, 2.0763, 2.0201, 2.3679, 2.9477, -0.5633, -0.8227, 0.662, 2.2283, 0.7245, -0.4768, 3.0061, -0.588, 2.9055, -1.2051, 1.3726, 0.4286, -1.151, 2.2313, -1.3226, 2.8923, 0.5816, 1.2189, 0.2966, -0.394, 2.1872, 2.183, -1.9651, 1.9061, - 0.124, -0.7492, -0.1298, 2.6747, -1.9476, 1.168, -2.108, -2.4011, 0.5722, -2.5266, 0.1879, 2.1461, 1.0679, -0.4665, -2.184, 0.6416, 1.1502, -2.7291, 2.9552, 2.2909, -2.6155, -1.6217, 2.1961, 2.6827, 2.9795, -1.038, 0.3233, -0.4785, 1.8901, 2.6552, 0.1506, -1.3264, 1.8295, -2.0207, 0.8454, -0.355, -0.2983, -2.6031, -2.2663, 0.2228, 1.1537, - 1.4422, -1.3672, -2.8513, 1.7584, 2.7519, -0.2894, 1.3889, 0.6229, 2.7256, 3.0242, -0.3846, -2.9217, -1.7404, - 0.6495, -0.6841, -2.6548, -1.8689, 0.3499, -1.4236, 2.5931, 0.6018, -1.204, 2.6801, 1.6999, 0.4837, -0.7132, - 1.5729, -1.4528, -0.931, -2.2065, -0.5162, 1.5369, -0.0525, -0.7135, 2.3643, 0.474, -2.0018, 1.1319, -1.8699, 2.5038, -2.4158, 1.0082, -3.0354, -2.0461, 0.7389, -2.5892, -0.4446, 0.1469, -2.5212, -2.1706, 2.7228, -0.5683, - 2.0118, 0.2802, 2.3076, -0.5856, -2.0778, -0.8476, -0.5825, -0.7904, 1.1167, 0.8038, 1.5272, 0.7033, -0.8196, - 3.0236, -2.152, -1.1188, -1.1662, 0.3753, 2.9237, 1.5837, -1.1646, 1.0762, -2.1385, -0.9541, -1.4714, 2.5274, - 1.7576, 2.3034, 0.9795, -0.8764, -2.4066, 1.3249, -0.8059, 1.6304, 1.5695, 2.2054, 2.054, 1.424, -1.5856, 1.2709, 2.7415, 1.1048, 1.969, 0.5936, 0.6015, 0.6855, 0.1986, -2.2662, -2.0351, -2.9257, 0.7098, 0.4725, 1.9411, -2.4432, 2.9604, -0.4657, -2.5611, 3.0268, 1.9592, 0.7599, -0.8719, 0.9294, 2.4784, -1.7914, -0.712, -2.6319, -1.8815, - 0.9219, -1.7193, 2.692, -1.3119, 2.8123, 2.997, -2.1022, 3.0124, 0.4135, -3.0935, -2.0197, 1.6361, 2.4737, -1.3208, -1.8489, -2.8001, 0.7368, 1.7898, 2.3019, -3.1073, -2.3721, -0.5014, -0.1813, 0.244, -0.788, 1.0615, -0.5663, - 2.9426, 1.8722, 0.2791, 2.3311, -0.8006, 0.4829, 2.6113, -0.0888,1.1527, -0.1097, -2.176, 0.2376, -2.0719,1.1801, -2.2734, 2.2111, 2.3661, -0.2297, -0.8495, -0.8604, 0.7417, -1.7434, 0.5124, 0.9505, 1.2309, 2.2766, 1.2248, 1.8931, 1.2953, 2.6419, 2.1612, -1.8178, -0.5807, 1.5011, -1.2292, -2.3536, -1.7709, 0.8445, -0.5718, -2.2335, -3.1224, - 0.3997, 0.7193, -2.2965, -1.0851, -0.7203, -0.1126, -1.9985, -1.1028, -2.7667, -0.1532, 0.6533, -1.6996, -0.283, -2.8055, -2.4462, 0.3728, 1.6595, 1.0183, -2.0874, 0.4613, -0.0673, 1.5077, -2.5612, -1.4697, -1.9403, -2.7045, - 1.2933, 0.4036, -0.6091, 1.1863, -2.729, -1.6429, 1.5102, -1.3517, -3.1193, 3.0177, 1.652, 1.2926, 0.5474, -0.404, 1.698, 1.5941, -2.0857, -1.5998, -0.0446, -1.1569, -1.018, -2.7572, -2.9109, 2.9155, -0.7264, 1.1578, 0.2677, - 1.2487, -2.805, -1.7002, 0.5499, 2.467, 0.7587, -1.4099, 1.663, 2.589, 1.0909, 0.7635, 1.9599, -1.7624, 1.2949, 2.002, -1.7457, -1.5012, -0.9191, 2.7289,1.7206, -2.3279, -0.7077, 2.381, -2.3611, -2.6156, 1.9075, 0.0124, 0.4448, -2.6085, 0.2392, 2.9989, -0.6179, 2.1572, 0.7678, -2.7632, 1.5949, 1.0807, -1.9496, 2.6035, 0.0938, 1.1604, 1.8566, 0.269, 1.8992, -0.3271, -2.9783, 1.8986, 2.8095, -2.2507, -3.1334, -1.7249, -0.3926, 1.6431, -1.7541, 1.3736, 0.6518, 1.5923, -0.9111, 2.4444, -0.5924, -2.2474, 3.132, -1.9531, -0.6524, -1.2808, 2.0245, 2.0391, -2.4989, - 1.221, -2.3448, -0.8819, 2.7963, 0.5179, 2.7571, -3.0157, -1.8521, 3.0529, 2.7586, 1.3519, -1.1752, -3.0835, - 2.2226, -1.2023, 1.6112, -1.3042, -0.0711, 1.6196, -1.9213, 0.9244, 1.3015, 1.3678, -2.1311, 2.9889, -1.8995, 1.9827, 1.5058, 2.7873, 2.6104, -0.7624, 1.4165, 0.2392, -3.1193, 0.264, 1.2391, -1.4473, -2.9446, 2.8771, 0.0328, -1.645, 2.2929, 2.0982, -0.0537, -0.3409, -0.4844, -0.9763, -2.2912, 0.1196, -0.0771, 1.9403, 0.4622, -2.1857, 1.7596, -2.0676, -1.3331, -2.7393, 2.6081, -0.8906, 2.2904, 1.738, -0.8848, -2.227, 1.0125, -1.1251, 0.4603, - 0.0471, 1.5586, 0.5852, -0.0003, -1.9929, -0.8735, -2.2842, -2.0181, 0.5524, 2.9883, -1.589, 2.5833, -0.4082, - 0.2733, -1.0421, -2.3726, 1.7329, -2.5752, 2.2281, 0.9496, -2.2586, -2.3013, -1.0859, 2.6754, 1.2096, 2.0476, 2.6813, -1.1929, -1.4673, 1.2217, -1.9967, -1.4949, -0.4838, -0.674, -2.3139, 0.6462, 1.3049, -0.8306, 2.8885, - 0.7555, -0.5471, 0.832, -2.1004, 1.2445, -0.0469, -1.6264, -0.6747, 2.7358, 2.5893, 0.4063, -1.9591, -0.6775, - 0.941, -0.8961, -0.8852, -1.3948, -0.4225, 1.2154, -2.5691, -1.7053, -2.4906, -0.2159, -1.0774, -1.1316, 0.8537, 2.6608, 2.8415, -0.1874, 0.7277, -1.5626, 2.5584, -0.6396, -0.1278, -3.0262, 2.4285, 1.6655, -2.7148, 2.4283, 2.8259, 1.2514, 1.5618, 0.7562, 2.8905, -2.5416, 2.3397, -1.0966, 2.5843, -2.567, -1.4859, -0.2811, -2.0067, - 1.1375, 2.4149, -2.9941, -1.8239, 0.173, 2.665, -2.0892, 1.5952, -2.295, 1.8535, 0.0754, 1.9795, -2.4863, 0.0086, - 2.0482, -2.2573, -2.5586, -2.889, -0.4128, 1.945, -3.0575, 1.4855, -1.4196, -2.2496, 1.7555, -1.1418, 0.8388, 0.2466, -2.9873, -1.4058, -2.0141, 0.7093, -2.7668, 2.3898, 1.8297, -0.1132, -2.0605, 2.1191, 2.1775, 1.5272, - 2.4473, 2.7089, -1.6587, -1.2348, -1.0078, -1.147,1.0759,0.5965,0.1468,1.751, -0.1773, -1.9754, -1.239, -2.7912, 0.5752, 3.0614, -2.7419, -0.0701, 0.8947, -1.7158, 3.0474, 1.0819, 2.3507, 2.682, -2.9355, 0.2498, 2.1538, -0.5484, 0.2311, -1.2746, -0.6254, -2.1534, -0.9755, 2.1672, 2.9399, 0.6275, 1.3136, 2.092, 1.8422, -0.2959, -2.8349, - 1.6735, -1.3988, 2.1787, 1.2334, 0.2708, -2.1417, 2.6952, -0.8389, 2.2568, 0.6336, -2.9747, 0.0365, -2.3665, 2.9539, 2.0134, -0.771, -0.2784, 1.69, 0.707, 2.0023, -2.6048, 1.1536, 1.9865, 2.9008, 2.7787, 2.0911, 2.2931, 1.3689, 0.7889, -2.9815, 0.2983, -0.7561, 1.4937, 1.7739, -1.4379, -1.5502, -0.0109, 0.0227, 0.7384, -2.6723, -0.6845, - 2.9938, 0.6292, -1.2232, -0.4424,1.6119, -0.7149,1.3122, -0.0404, -0.2789, 2.8339, 2.9366, -0.4428, 0.2038, 3.116, -2.2815, -1.3777, 1.2172, -0.4123, 1.3694, -1.151, -0.7813, 2.6548, 0.4795, 2.7859, 0.8552, 2.0814, -2.4768, - 2.3905, -2.7053, 2.3625, 0.7774, 0.7269, 0.8719, -2.0333, 2.8672, 0.873, -0.9761, 0.5264, -1.3133, 2.775, -2.2497, 1.0184, -1.8897, -1.8232, 3.1334, 3.0334, -1.9893, 1.5329, -2.6453, -1.9549, 3.0521, -2.3051, 1.6999, -2.4361, 1.0288, -0.8355, -0.8902, -0.7717, 1.7024, -2.369, -1.9538, -1.2908, 0.1116, 0.6358, -0.507, -0.2629, -2.7629, - 2.1888, 0.1283, -1.7408, -2.9697, 2.5706, 2.6093, -1.0009, 3.108, -0.9822, 2.5915, 2.3995, -0.1245, -2.814, -1.7364, 0.6126, 1.9509, 1.2606, -1.8023, -1.9689, 0.0514, -2.1189, -2.3375, -0.9917, 2.2632, 2.9645, -1.5509, -1.2149, 1.2403, -0.1586, -0.4374, 0.8908, 1.7923, -2.7724, 1.0029, 3.0375, -1.3472, 0.5629, 1.3984, 1.3345, 1.1442, 1.0795, -0.7073, 1.9863, -1.9522, -1.9124, -2.6691, -2.7922, 0.0647, -0.8444, 0.4621, -1.1564, 0.9048, 1.4198, 0.7295, 1.4077, 0.9719, -0.784, 1.9604, -0.5655, -2.5401, -0.7217, 2.4188, 2.2137, 0.6762, -2.835, 1.0301, 3.0219, -0.4244, -2.0493, 0.2427, -0.235, 0.1017, -2.4873, 3.0878, 0.4878, -2.5328, 1.7677, -2.9565, -1.5451, 0.7721, 2.482, 1.5117, 1.5793, -2.5746, -0.2973, -1.9172, 2.0692, -2.0596, 1.2859, 2.9252, 0.7505, 0.454, 2.0771, -2.96, 1.1856, -2.8411, -2.1527, 1.3884, 1.064, -3.1093, 1.9449, -1.4299, 1.1482, -0.3054, -2.905, 0.2262, 1.3767, -2.6168, 2.4209, 1.9261, 0.7343, -1.2204, -2.8085, 1.0669, -1.9359, 1.8963, 2.6375, -2.2789, 2.4363, 0.5168, 0.2199, -2.675, 2.8563, -0.7933, 1.8017, 2.1995, -2.8014, -0.3478, -1.2058, -2.3599, -1.2244, -1.4247, -0.2325, 1.6515, 1.7134, -2.3231, 0.3001, - 0.9243, 2.9099, 0.9943, 2.7245, -1.04, -1.7302, 2.8446, 2.3113, 2.2334, -1.5112, -0.8888, -2.2815, -0.0368, -1.6529, 0.4981, -0.514, -0.2913, -1.2459, -0.6943, 0.1955, -2.5773, 2.6897, -1.402, -0.9175, 2.2896, -1.2603, 2.3979, 2.9785, -1.8548, -1.3191, 1.1834, 0.4492, -0.7452, -1.6192, -0.087, -2.5416, 2.1048, -0.6362, -1.2822, 2.6863, 1.6072, -1.8143, 1.9909, 2.1254, 1.551, 0.2051, -2.4729, 2.4472, -2.1797, 2.9263, 2.3668, 0.3556, 1.0237, -2.491, 2.5326, -0.7599, 0.4696, 2.8889, -3.1162, 0.262, -2.5429, -1.0158, 1.0312, -0.1827, 0.2311, -1.2462, -0.0971, 1.7441, -0.5485, -2.7255, 2.0293, -1.6607, 1.1903, -2.4265, -0.1959, -0.5737, 2.5001, 2.8331, -1.9165, -2.4063, 2.5111, 1.9873, 1.7461, 0.7447, 3.0924, 1.1441, 2.2659, -0.1962, -2.5011, -0.8179, 1.1031, 0.3661, 1.3228, 1.9501, -1.004, 2.9671, 3.0741, 1.2089, 0.7099, 1.8584, 0.7073, 1.8944, 0.8821, -0.7693, -0.0364, 0.8831, -1.9932, 0.4358, -2.3524, -2.2034, 0.4944, 0.3835, 0.4569, -0.1728,1.367, -2.8248, 2.5079, -2.5788, 2.2082, -2.922, 2.7927, -0.2191, 0.8698, 2.339, -1.6446, -1.2684, 3.0108, -1.5376, 0.7927, 2.0775, -0.7389, -2.1376, -1.8557, 2.6252, 0.406, -0.1453, -0.6753, 3.0429, -1.1978, 1.9964, 2.0327, -0.8082, -0.4306, -0.1529, 0.2938, 1.9212, 0.3997, 2.4441, -0.8563, - 1.1935, -1.9756, -1.1, -2.5479, -0.7867, -0.3162, 2.7112, 1.846, 1.0924, 0.7651, 1.2089, 3.0847, 0.9125, 2.9995, 0.083, -0.0762, -0.1859, 1.1256, 0.8724, -1.4453, 1.1117, 0.7697, -1.9268, 1.6461, 0.3759, -2.2519, 2.3844, -2.5302, -0.4855, 2.1555, -1.0987, -2.794, -2.0172, -1.947, 2.4932, -0.6129, 0.7422, -0.8804, -0.2308, 1.189, -2.3029, - 2.0792, 1.8502, 2.7941, -0.6698, 0.2426, -2.0648, 2.323, -0.0527, -2.6816, -2.398, 2.4123, -1.9929, -1.5395, - 2.2451, 2.2, 0.5527, 2.6901, 1.339, -2.774, -0.1573, 0.4018, 1.5758, -2.6117, -2.6385, 0.6036, -1.8927, -0.3251, - 1.7757, 1.6086, 2.1641, 0.9778, 2.245, 1.9892, 0.5287, -0.9562, 2.1365, 2.6903, 2.8189, 0.5848, 0.9631, -2.2804, - 2.6874, 1.1294, -1.4862, 1.8912, -2.5022, 2.8786, 1.8828, 0.7499, 2.9333, -0.339, -2.6146, -2.1262, -3.0198, - 0.0262, -1.717, 1.9393, -2.2467, -2.3862, -1.1706, -0.1908, -1.0169, 2.6284, 3.0169, 1.2453, -2.5677, 1.5059, 1.2366, 1.7387, -2.0588, -2.3064, -0.5151, -1.1184, 1.8286, 2.0634, -0.1272, 2.8765, 2.5909, -1.4283, 0.7673, 1.1498, 1.9518, -2.2424, -0.092, 1.7465, 0.1504, 2.0649, -2.1858, -2.8583, 1.8714, 2.4134, -1.6635, 0.3573, -0.699, 0.8285, 1.0803, -0.1614, -1.2004, 1.0903, 3.0596, -1.055, 2.369, 2.6359, 0.5994, 1.9118, 1.6065, -1.9267, 1.4526, - 2.6952, -1.6246, 0.1004, -1.9785, -2.7136, 2.9629, -1.1214, 1.1016, -2.1176, 2.4777, 0.2441, -2.6198, -1.5172, - 2.7228, -0.8681, 2.3264, -2.1585, 0.6756, 2.0093, 1.2353, -2.7069, 0.9144, -1.1094, -2.1848, 2.0074, 2.3524,1.0506, 2.0504, -1.12,1.4462, -2.9612, 0.9176, 2.1862, 0.8751, 2.3728, -1.6455, -2.1971, -0.1834, -2.492, -1.5248, -1.5571, 0.2764, 0.7389, 1.8132, 1.2628, 2.1559, 1.8729, 2.2715, -1.2985, 2.0949, 1.0088, 2.3634, 1.0651, -1.433, 2.8541, - 0.2554, -2.3685, 2.459, 2.7071, 0.8334, 0.0325, 2.3075, -0.1969, -0.1144, 2.2328, -2.2364, -0.9596, 1.3883, -0.7901, -2.1078, -1.7887, -1.7154, -2.6677, 0.1232, -2.9459, -1.347, -2.1442, -2.8329, 0.0207, -1.3624, 2.8984, -2.7838, -1.4032, -0.8967, 0.5689, -1.1869, -2.4154, -0.1724, 1.2826, 0.6516, 2.8318, -3.1077, 1.3803, 0.6129, 1.6358, 1.8053, 2.2754, 0.0691, -2.4871, 1.8547, 2.2293, -0.0108, -0.5477, 0.8161, -1.8787, 0.8698, -2.3994, -2.4272, 0.8794, 2.8123, -0.9239, -1.6019, 1.4455, 1.2311, 2.1059, -0.8379, -2.5475, -2.0481, 1.0454, 0.9987, -1.8722, 2.7553, 2.1148, 3.0609, 2.4729, 2.0157, 1.1134, -1.4686, -0.9355, -2.9974, 2.061, -2.8569, -1.9501, 0.0232, -0.2696, 2.9957, 2.5775, -2.169, -2.695, 1.8137, 0.496, 0.2624, -0.3008, 1.2248, -1.652, 2.028, -1.9499, -0.8131, -2.3931, - 2.7461, 0.7869, -1.6644, -0.5746, -1.0335, -2.7416, -2.334, -0.447, 2.4356, 2.2745, -1.8395, 1.3637, 2.8923, 0.2064, 0.0862, 1.8193, -1.5835, 2.875, -0.9341, -0.1987, -0.7806, -1.1863, 0.8544, 2.8597, -2.7486, 1.0483, -2.4003, - 1.9557, -3.0929, -0.7866, -0.3919, -2.8897, 1.3539, -2.3526, 1.5031, 0.9725, 1.7977, 1.3057, 0.9411, -3.0028, 0.1194, -0.0056, -2.1327, 0.6806, 0.1779, -2.4956, 2.6595, 1.6337, -0.6406, -2.273, -0.3657, -0.3537, -3.1391, - 1.0987, 0.6445, -0.054, -0.9098, 3.0531, -0.0055, 2.635, 2.2194, 1.1483, -2.5097, 1.679, -2.4639, -3.1039, 0.2532, 1.7108, 1.5802, -3.0647, 2.8978, 1.9841, -0.4263, -1.7056, 2.9638, 0.7328, -3.0323, 0.8835, -0.7307, 1.8177, 1.3479, -0.5964, 1.2959, -3.1371, 0.0886, -1.4897, -2.1372, 2.6072, -2.4877, 0.3571, 1.6806, 0.7349, 1.8486, 1.0119,-2.891, -2.6311, -2.4067, 2.2713, -1.2879, 1.6236, 2.5253, -1.6868, 0.1678, 1.6506, 1.6046, 1.6041, 0.0955, 1.1014, -0.5265, -2.6017, 1.6286, 2.5365, 2.8895, 0.6913, 0.2875, -2.2437, 2.2327, -0.8232, 1.7533, -0.8049, 1.4695, 0.14, 1.5542, - 0.752, 2.6573, -2.1414, 0.5309, -2.737, 2.0997, 0.367, 0.5648, -0.654, 1.2932, 2.046, -2.6228, -0.5242, 2.7585, - 2.3171, 0.4008, 1.795, 1.3331, 2.1941, 2.2901, 2.4213, and 1.2029.

Phases of elements in the second sequence are sequentially -2.325, -1.5779, 0.7637, -1.2632, -2.6804, -1.8329, -0.7136, -2.1669, 1.6616, -0.9616, -1.4329, 2.2096, 2.6105, -0.8615, 3.0298, 1.0935, -2.1657, 1.9841, 1.622, 1.8859, 2.8889, -2.1149, 0.4802, -1.6369, -1.8928, 1.4331, -2.5463, 1.0325, -2.9324, 0.8316, -0.9132, - 2.5707, -2.8268, 0.9353, -0.761, -2.507, -0.4482, -2.8488, 0.7055, -0.5448, 1.707, -2.7295, 1.2047, -0.3621, - 1.7117, -0.7593, -0.6984, 2.3933, -2.2981, -2.4103, 3.0096, 2.4885, -1.7771, 2.3475, 0.5857, -2.1408, -2.4744, - 2.8657, -1.6334, -0.3385, 0.2522, -0.507, -2.1563, -0.3469, 0.8875, 1.7353, -0.2341, -2.4249, -2.1568, 0.8536, 2.9144, -0.1121, 2.5666, -0.5921, 2.6679, -0.4259, -2.2862, 0.2446, -0.6666, -0.3214, 2.6293, -1.7064, -0.3588, 0.3783, 1.3143, 2.7974, -1.7853, 2.8852, -1.4117, 0.8927, -1.8964, -2.0595, 0.1467, -1.2165, -0.2581, 0.2351, 1.8063, 1.1934, -1.7271, 1.3699, 0.2897, -0.1806, 0.1814, -1.8773, -1.8407, -3.1009, -2.0371, 3.0394, -1.7381, 1.6592, -3.0894, 0.3982, 0.2668, 3.0221, -1.8608, -0.7612, -2.3662, -2.5408, -1.9801, -1.5805, -2.2591, 3.0495, 1.5696, -0.6301, 1.5802, -2.3068, -2.0702, 1.0968, -0.0283, -2.8825, -0.5139, 2.1606, 0.4343, -0.0329, 2.8065, 1.3257, 1.1344, 2.4505, 1.8479, 0.8671, -0.3287, -0.248, 2.2824, -1.793, 2.0936, -1.0388, 0.3141, -0.0136, -2.9218, -0.5873, 1.5958, -2.7154, 1.5902, -1.5585, -1.7048, -0.2413, 1.9968, 1.1571, -1.3954, -1.5943, -1.0055, 0.222, 0.8273, 2.4667, 1.9339, 1.8029, 0.3599, -0.7087, 2.2771, -2.0564, -2.7314, -0.0826, 1.028, 0.0593, -0.7816, 2.7263, -2.0415, -2.7534, -1.4496, -1.0436, 0.8278, -0.4559, -2.122, 0.5023, 1.3027, -1.7261, -2.2714, -2.8682, 0.032, - 2.7047, 0.9781, 1.22, 1.1349, 0.6362, -1.4961, -2.5379, 2.2963, 0.9962, 1.8307, -0.921, -3.1145, -1.1858, 1.64, - 2.4043, -1.8333, 1.9582, 2.9048, 0.7287, 0.3686, 0.1284, -0.0259, -1.6819, 1.8254, -2.9094, -1.8034, -1.5095, - 0.0271, -1.5593, -0.1377, -1.713, 1.8189, -1.9486, -0.5443, -1.0714, -1.0437, 1.9763, 2.8071, -0.3977, -2.5808, - 0.6716, 0.5058, -0.6605, -1.9025, 1.8328, -1.5152, 2.6398, 1.0484, -3.1196, -0.332, 2.2917, -2.2186, 0.639, 1.5564, 1.4162, 0.0019, 1.087, 1.9523, 2.8307, 0.7522, -0.0753, -2.0423, 1.4191, 1.233, 2.846, 2.6314, -0.1471, -2.9804, - 2.9668, 0.1394, -3.0301, -1.8864, -2.2677, -2.6082, 0.0465, -0.8728, 1.6052, -1.7825, 1.3071, 0.8271, 0.4188, 2.8612, 2.6556, -0.3428, 0.7755, 1.8, -1.8543, -1.9204, -1.6788, 2.9743, 0.2639, -0.1735, -1.2527, 2.0958, -0.464, 2.0473, -2.5472, -2.9503, -0.0184, 1.746, -2.1479, 3.0608, -1.8036, 1.8848, 2.1955, 1.72, 1.2135, 2.0588, 2.1829, 3.0096, 0.1073, -0.0384, -2.265, -0.109, -0.439, 0.7174, -1.0469, 2.5473, -0.9286, -0.3947, 2.5372, -1.5718, - 1.3239, -0.2743, 0.036, 2.8142, 0.3643, 0.8258, -1.8184, 1.841, -0.3302, 0.5471, -1.0518, 0.2965, -1.425, 1.8848, 1.8417, 2.6418, 1.2811, 2.2226, 0.1275, 2.2494, 3.0047, 0.3746, -2.4496, 0.3201, 0.5297, -1.5687, 2.987, 0.7355, 1.6424, 2.2605, 0.7112, 0.1559, 2.5973, 1.649, -0.7184, -2.8898, -0.1569, 1.9748, -0.3928, 0.4117, 0.6729, 2.2567, -1.9877, 1.3402, 2.5699, -2.7582, 1.113, 1.5947, 1.7557, 2.5067, -0.2529, -0.5508, 3.0855, -2.1997, 1.2053, -1.0293, -2.4813, 1.4012, 1.5526, -1.8284, 1.4972, 0.3275, 0.3016, 0.2201, -1.9448, -0.5549, -1.5967, 2.0332, -0.1461, - 3.1374, 0.2142, 2.1893, 2.4968, 2.8512, -2.6418, -1.6421, 0.8715, 0.0576, -1.6849, 2.2363, -2.0241,1.8979, -0.0798, -3.1352, -1.9224, -1.5473, 0.0317, 2.0494, 2.0255, 1.1963, 2.3387, -2.3225, -2.8631, 1.0476, 0.295, 2.5987, -0.5579, 1.2562, -2.7489, -0.3789, -0.6291, -1.7691, -2.2402, 2.0071, 2.7662, -1.0378, -0.1268, -2.7531, 2.5755, -0.8048, -1.4852, -1.6253, -2.1817, -2.8954, 1.0536, -2.5726, 1.7979, 1.9878, -1.2015, 1.608, -1.8807, 2.5941, -2.3862, - 1.6387, 1.5469, 0.1323, -0.3631, 3.0884, -2.9114, -1.0079,1.649,0.398, -1.3136, -2.1387, -2.8423, -2.2744, 1.6864, -1.3424, -2.2889, -1.4784, -0.9743, -1.4845, -1.6424, 3.1079, 0.0795, 1.6904, 1.5368, -3.023, 0.0656, -1.1897, 0.9753, -1.6497, -0.6016, -2.396, -2.5, 1.5014, -2.9753, -0.5342, 1.8333, 1.7681, 2.3487, -2.0636, 2.3719, -2.6185, 0.1996, 1.5064, 1.4653, 1.6228, -0.264, -0.6565, 0.2402, -2.7328, 1.1702, -3.0397, -2.9282, -0.5966, -2.4141, 1.4232, -0.0396, -2.0256, -2.204, -0.443, 2.0238, 0.9248, -2.9371, 0.5766, 2.6205, 1.6044, -2.5522, -2.2842, - 1.4527, -1.2212, -1.6398, -3.0857, -0.1732, 0.647, -2.6082, -0.8967, -0.1908, 0.0595, 0.5808, 2.5812, 0.9732, - 0.0299, 0.9381, -0.8094, 0.6916, 1.9957, 2.3998, -1.7915, -1.9031, -1.7327, -1.5381, -0.1864, -3.0059, 0.3449, - 1.8091, -2.3004, -1.7302, 1.682, -2.3501, -2.2708, 1.346, 0.1745, -1.529, -1.0842, -3.0117, -2.3894, -1.2246, 2.3467, -0.4402, -2.7955, 1.2297, 1.1119, -0.8596, 2.4582, 0.7512, -0.4107, -1.8665, -0.4547, 0.5309, -0.7627, 2.6576, -2.4226, -0.5455, -2.0282, -2.4362, -2.7001, 1.9153, -3.1301, 1.1767, -0.7092, -1.8543, -1.7271, -1.8919, -2.3931, 0.2848, 1.334, -2.4908, -1.3999, -2.4028, -0.6632, 1.3715, -1.1935, -0.0886, 1.0167, 1.8515, 0.9725, 2.0083, -1.3206, -0.6077, 1.8353, -0.1486, -1.4378, 2.3386, -0.7959, 1.5553, -2.184, 0.7367, -2.4428, 1.9893, 2.7586, -0.2586, -1.8424, 2.0147, -2.2176, -2.7273, -2.0646, -0.3563, -2.8565, 1.4594, -1.0477, -1.0483, 1.1907, 0.6929, 1.712, 2.1765, -2.8211, 1.13, -1.0183, -2.0216, 2.1198, 3.0588, 0.7783, -2.47, 2.8857, 2.8802, 1.871, - 1.6645, 3.1259, 1.441, 1.5505, -2.2503, -1.0343, -0.0858, -2.3778, 1.6033, -2.2359, 2.1209, 1.6589, -1.0764, 2.8304, 0.4197, 2.6654, -2.246, -2.8949, 1.0608, 1.5126, 0.0643, -0.122, 2.2434, 1.7175, 2.0084, 1.693, -0.107, 2.8968, - 0.8892, 1.8529, 2.801, -0.3973, 0.8576, -0.2902, -2.5341, -0.6988, 0.2916, -2.2832, 1.4843, -1.8503, 2.21, -0.3875, -1.021, 0.1289, -3.1317, 2.7246, 0.27, 1.4205, -2.6552, -2.7531, 1.2345, -2.4014, 0.2996, -0.405, 0.268, 1.9426, - 2.6972, 3.0199, -2.6865, 2.5779, -1.8333, 2.2815, -2.3372, -0.4714, 2.3984, -2.0137, -0.9702, 1.4164, 0.4993, - 2.8325, -1.5754, -2.1986, -2.7618, 0.7049, 0.2186, -1.3104, -0.8704, -1.96, -0.0847, -1.0036, 1.3165, -2.6027, - 1.4831, -2.9942, -2.554, 2.8639, -2.263, -0.1048, 2.6501, 0.9008, 1.5493, -3.0482, -1.0519, 2.2798, 2.9181, 0.8761, 1.7901, 2.4786, -2.8976, 1.5211, 1.6816, -1.1173, -2.8144, -0.3203, -2.4189, 1.6223, 1.4886, 2.7152, -2.8674, - 1.884, -1.4952, 2.6402, -2.528, 1.7603, 0.3815, 2.5494, 1.854, 1.2986, -0.0486, -2.8425, -1.9267, -1.754, -0.5205, -3.1156, 2.8255, -0.6726, 2.6492, 1.7472, 1.3699, -0.7005, -1.8895, -1.207, 2.5724, -2.4025, -1.1982, -0.189, 3.0465, -2.6588, -1.3783, 1.9171, -2.8586, 2.4493, 1.6211, -2.3393, 2.1119, 0.6505, 1.9617, -0.3455, -2.1423, - 1.3012, 2.562, 0.2881, -2.6303, -0.2524, 1.7281, 1.2662, -3.0153, -1.0922, -2.3033, 2.7826,1.4469,1.2032,1.5955, -2.8163, 0.4591, -0.2686, -3.1089, 0.9412, 2.9412, -0.7498, 2.074, -1.2741, -1.3514, 2.0753, 0.8384, 2.6844, - 2.7863, 1.9766, 1.728, -1.9331, -0.5818, -2.0754, -0.2446, -0.9964, -1.43, 2.4308, 0.3176, -0.8264, 0.4326, 1.127, -0.3177, 1.6587, 2.5146, 2.0958, -1.3792, 1.3117, 2.1316, 2.6071, 2.4187, -0.8885, 0.489, 1.5179, 2.6191, -1.0632, 0.9798, -0.7251, -0.0537, 2.0891, -1.2388, 1.2953, -2.264, -2.1118, -1.51, 2.578, 1.1133, 1.5806, -1.7079, -1.5051, -1.4672, -2.8077, -0.6025, -3.0969, 0.6403, -2.0043, 2.0095, -0.6138, -0.8157, 1.4251, -0.8205, -0.9065, 1.0009, 2.2164, -0.7918, -2.8381, -1.3745, -0.9554, 0.4921, -0.334, -1.8656, -0.3818, -1.9633, -2.3527, 1.3145, 1.5256, 0.2715, -2.867, 1.6877, 0.9338, -2.7317, 0.6909, -0.1371, -0.814, -2.7078, 1.2421, -1.6028, -2.722, 0.7769, -0.1285, 1.8492, -1.7452, 2.3491, 2.9408, 2.6573, 3.1316, 0.8611, -3.1301, 1.4248, -2.88, -2.9854, -2.9972, -1.5515, 0.4564, 0.7635, -1.944, 1.1713, -0.1439, 0.9764, -2.4275, -2.9469, 2.7806, -2.5357, -0.9685, 1.4427, 1.7559, 0.733, 3.0943, -1.095, 0.5826, -1.3435, -2.0657, -2.7668, -0.4552, -1.9204, 0.1406, 0.5669, -1.4363, 0.6621, 1.0454, -2.3597, 2.3354, 1.5318, -1.4028, 2.2818, -3.1065, -3.1162, 2.0716, -1.5268, -2.275, 0.8749, 2.0192, 1.518, -2.7056, 1.4089, 2.6061, -1.9905, -0.6154, -0.9596, 1.0138, 0.1736, 0.1694, -2.5217, -0.6088, 2.4272, -0.3787, -0.5358, -2.7638, 1.2782, 1.8226, 0.5478, -2.7131, -2.6521, 2.4413, 1.2642, -0.0326, 0.7864, -0.2191, -0.4855, 0.4532, -1.0252, - 1.8203, 0.6142, 0.4409, 1.7176, -0.64, -0.6665, 0.7639, 2.074, 0.8223, 1.1294, -1.3988, -1.6417, 1.6194, 2.8338, 0.0885, -2.1804, -1.3611, -0.4083, -0.9402, -3.1109, 2.1827, 0.4805, -0.725, 0.0721, -0.425, 0.9913, -0.1733, - 1.9772, 1.7577, -1.4436, -2.2486, -2.2491, 2.5188, -0.5859, -0.6021, 1.1186,0.6294, -2.5095, 3.047, 1.5133, 2.6009, 1.961, 0.5181, 0.4922, 1.4375, -1.8259, 0.0158, 2.5468, 0.5515, 2.2969, 0.0459, -0.961, 0.56, -2.1862, 1.9805, - 0.9708, 0.3671, -1.4335, 1.8955, -1.9953, 1.5994, 0.8173, 0.9405, 0.3942, -2.9928, -2.0161, 1.481, 1.5081, -0.7922, 1.3959, 0.0138, 2.8193, -0.5222, -1.0563, 1.3446, 1.5214, -1.2882, 2.5659, -2.7343, 0.164, -0.2637, 0.1385, 0.4431, 2.7905, -0.9469, 0.2058, -1.2137, -0.101, -2.0421, 1.254, 1.5822, 2.0684, 0.5186, 2.1699, 0.5755, 2.289, -2.1855, - 2.6694, -0.5496, 2.1335, -2.4396, 0.7384, 0.4969, -2.2283, -1.3865, 2.263, -2.9997, 2.8331, -1.8065, 3.0644, - 2.0964, -1.9892, -0.5262, 0.431, -2.9772, 0.3848, -3.1122, -1.2125, -0.0099, 2.766, -2.8687, -0.9282, -3.0243, - 0.6003, -3.0804, 1.7789, 2.8329, 0.3898, 0.7208, 2.2209, -1.6666, -2.6775, 0.4413, -2.0218, -2.852, 1.915, 1.9235, -2.069, 0.969, 0.8476, -2.258, 1.6172, -2.7568, 2.3098, -2.0104, 2.2599, -1.5659, -0.2526, -0.43, 3.0676, 1.2028, - 2.2965, -0.4435, 0.9079, -3.1094, -1.9395, -1.2123, -2.9401, -2.5998, 0.5832, -2.25, -3.0996, 2.6927, 0.5932, 1.9013, -2.1371, 1.4419, -1.1872, 1.5048, 1.575, -0.1793, -2.505, -0.6081, -0.6017, 0.1753, 2.8706, -2.341, 1.5902, -1.9959, 2.6853, -0.5931, -0.6872, 1.9075, 2.1821, -0.2295, -0.4296, 1.9191, 2.2975, -2.7017, 0.3725, 1.1835, - 1.9108, 0.7592, 0.6011, 0.9016, 0.6756, -2.5497, -0.2299, -1.0391, 0.7367, -0.2532, -1.4998, 2.4396, -2.9449, 1.5108, 2.1952, -0.8356, 2.1997, -1.6469, 1.0766, 0.7019, 0.8683, -2.1546, -1.5954, 0.0648, 0.5828, 1.8073, 2.538, 1.3234, 1.2967, -2.074, 3.1049, -2.354, 2.9179, -0.2985, -2.441, 2.375, 1.4835, 3.0445, -1.8745, -1.1183, -2.6414, 0.8026, -0.5755, 2.3151, -0.9512, -2.4493, -1.9647, 2.6752, 0.0968, 0.2343, -1.5359, 1.4056, 0.4692, 0.8521, - 0.4544, 0.9823, -3.0506, -0.9025, 0.9938, -2.4898, 2.5902, -3.0227, -1.8543, 1.5994, 3.0856, -0.4937, -0.5347, 2.6949, 1.2821, 2.1161, 2.0817, 2.6224, 2.575, 1.3373, 2.8936, 1.0573, -0.1909, 1.5799, 1.0882, -1.3535, -2.1571, 2.4603, 0.3531, 0.4306, 1.5442, -1.4456, 1.9899, 2.0605, -1.4663, -2.7435, 2.74, 2.8353, -2.9681, -2.5608, -1.7181, 1.0509, -1.9351, 1.9173, 2.4076, 0.9953, 1.0947, 0.2861, -0.7528, 2.7499, 2.2472, 3.1096, 2.5746, 1.4352, 0.2522, 2.5181, -0.5153, -1.5948, -1.6359, 1.3593, 1.6922, -1.8604, 0.9059, -0.4442, 1.6921, -0.43, -1.6092, 1.4176, - 1.1031, -0.6103, -2.4268, 2.512, 2.7915, -1.8521, 1.3864, -0.1859, 0.1882, 0.1343, -1.6603, 0.0474, 2.3868, 0.7139, 2.4301, -2.2616, -2.1454, -0.7484, -1.4696, -1.6429, 1.8728, 1.1923, -1.3957, 2.8137, 1.3444, -1.3388, -2.5156, 0.7825, 0.2672, -1.6424, 2.6309, 2.6848, -2.3929, 2.647, 2.4234, 2.4759, 0.4018, 1.2327, 2.4373, -2.1997, -2.4509, -1.9192, -1.5994, -1.0737, 0.0455, -1.7539, -1.4178, -1.9735, -1.9596, 0.4241, 0.7997, 2.0259, -2.4147, 1.6106, 0.8711, -0.1237, 1.0772, 0.7663, -2.6581, 0.9878, 2.6634, -1.3427, 1.1378, -0.3731, -2.2282, 1.3779, 1.6703, - 0.2299, 1.7007, -0.3639, 2.5521, 0.4934, 1.5308, 1.4069, -0.3161, -3.0904, -2.8145, 1.6386, 0.1294, 0.3581, -0.0086, 2.5778, -0.2825, 3.1137, -0.6117, 2.0204, 1.3784, -2.4257, -0.2882, 0.7116, -0.0919, 2.9623, -2.6839, -0.6497, 2.4046, -2.2064, -1.6806, 2.6712, 0.6936, -2.8979, -0.0717, -2.0073, 0.5159, 0.7568, -2.6551, 2.8231, 3.0094, - 2.6169, -0.1485, -2.1721, 2.5797, -2.4433, 1.3127, -1.8362, 1.9669, 0.8224, 2.076, 2.5933, 0.009, 1.256, -1.5358, - 1.7023, -0.2581, 2.1041, -1.1565, 1.0179, -0.2632, 2.2552, 1.9075, -0.2136, 1.6691, -3.0765, -1.5698, -1.3061, 2.3762, 1.0387, 0.6512, -1.2211, -1.2502, 3.079, 0.3392, -2.6712, -0.1478, -1.5289, 0.9713, 3.061, -1.2845, -1.3408, -2.3274, 0.5737, 0.6863, 1.5874, -3.0732, 0.8746, 1.0494, 1.5387, -2.5207, 2.0328, -1.5154, -3.0635, 2.2117, - 1.4829, 0.6675, -2.5825, 0.0699, 2.2045, -2.7491, 0.2826, 1.6476, -1.5133, -0.0471, -0.4464, 1.4968, -1.3565, - 0.8874, 0.6629, 0.1405, 1.9508, -0.1267, -0.6461, 2.6902, -0.3398, 1.0667, 0.4712, -0.0044, -0.228, -1.4929, - 1.4172, 0.7695, 3.1207, 1.6947, -1.8177, 1.8906, -1.1129, 0.9603, -0.6469, -0.3518, 1.0223, 0.8021, -2.8638, - 0.0118, -0.3569, -1.3834, -2.7666, 2.2921, 2.7638, 0.0469, -0.7467, -2.1776, -2.466, -0.8687, -2.3883, -0.8635, 1.0552, 2.5593, 2.8843, -1.4693, -0.5339, 2.5933, 1.6163, 0.6575, -1.4538, 2.2174, 2.1378, 0.8689, 1.5269, -1.2535, 1.9707, -1.5428, -0.1349, 2.3895, -1.9515, 0.4563, 1.3583, -2.3657, 2.4298, -0.8754, 2.2239, 2.3211, -1.0979, - 2.6705, 0.85, 0.0325, 1.141, 2.464, -0.5859, -1.9242, -0.8469, -0.5916, -2.9591, -1.6171, 2.9891, -1.7976, -2.9331, -1.4509, -0.1762, -0.0297, 1.874, 0.5912, 0.55, 2.3576, -1.5658, 2.1591, -1.2439, 0.6295, -1.2205, 0.4183, 1.0573, -1.4917, -2.0331, -0.7881, -0.8196, -2.3713, -0.569, 2.8847, -0.102, -0.0978, 0.7716, -1.4223, 2.0416, 2.4228, 2.7936, -0.1692, 1.8299, 0.355, -2.0605, 2.7075, 1.1357, 2.6284, 2.6703, -2.2923, 1.4708, 0.3448, -2.7968, -2.1547, -1.2309, -1.0975, 1.0903, 0.9004, 0.7642, -0.4718, -2.6255, -1.704, -2.2587, -2.0712, 2.4361, -2.6882, 0.8119, - 0.2598, 2.3568, 1.61, 2.3427, 2.7695, -0.3508, -1.138, -1.3263, -2.9538, 0.7221, -2.0814, -2.1404, 3.0257, 0.8607, -1.4233, -0.7666, 0.894, 0.2122, -0.7251, -3.0079, -0.0563, 2.214, -1.8909, -2.2436, 2.7659, 1.8408, -0.6578, - 0.7141, -1.3856, 2.5801, -2.8619, -0.9755, -1.4342, -3.0082, -1.9658, -2.4877, 1.8147, -2.1281, -2.7206, 2.9585, -1.8304, 2.6597, 0.8057, 1.0948, -2.2933, -1.4954, -1.4898, 3.1051, 2.2209, 2.3877, 2.9571, -1.4179, 0.1588, 2.0249, -0.7213, 0.1417, 0.4403, 2.4877, -3.0437, 1.3986, 0.7719, -2.1323, 3.1023, 2.2471, -1.7036, -2.4376, -2.906, - 1.3833, -1.7499, 2.5477, -1.054, -1.9373, -2.9872, -0.0745, -0.9999, 0.3909, -0.8896, 2.8714, -2.9207, -1.3494, 1.8005, -2.0797, -0.5012, -2.6045, -0.2913, -1.3534, 0.9223, -1.1924, 2.0042, -2.9948, 0.8802, -0.6257, 2.0477, -0.0818, -0.5114, -2.6113, -0.1971, 3.0422, -1.7424, 1.9184, 0.2317, 2.8538, 2.8506, -0.0139, 1.9533, -2.0712, -2.4, -2.3432, -1.8124, 1.723, 1.5865, -1.109, 0.5591, -1.2991, 2.1658, -0.2766, -0.0879, -2.9127, 0.2587, -0.8074, - 2.6376, -2.7007, -2.8563, 2.394, -2.3319, 2.1759, -1.9173, 1.6717, -2.0752, -1.1282, 0.4309, 1.9756, -0.6098, 1.402, 2.4669, -2.0218, -1.6644, -0.5173, -2.543, -1.2829, -1.9868, 3.0897, -0.8831, -3.0048, -0.7031, -0.9838, 0.7874, 1.3552, 1.8895, -2.5403, -0.2202, -2.8035, -0.2922, -1.5454, -0.2657, 2.8553, 1.9208, 1.122, -0.0091, -0.6032, - 0.3529, -1.6228, 1.579, 1.6608, -0.4417, -0.6861, 1.914, 1.3286, -2.7965, -0.4396, 2.4883, 0.8952, -1.4909, 2.6978, -1.6747, -1.2653, 2.0622, -1.2078, -2.4672, 2.7617, 0.4938, 2.2752, -2.4019, -2.8083, -1.8475, -1.6258, -0.372, 1.8769, 2.3704, 2.6226, -0.5374, -3.1197, -2.8097, 1.9678, 2.4996, -3.0307, 1.9157, 1.512, 0.3638, 1.256, 0.7483, 2.3123, -1.9239, 1.6299, -0.086, -2.1773, 1.5946, -1.7078, -0.9776, 0.8454, -3.0889, -1.8741, -2.0935, 2.8179, - 0.4243, 1.6256, -2.7302, -3.0764, 0.4089, -1.8947, -0.3941, 1.4729, -2.6079, 1.0393, 2.9824, -0.6744, 0.9922, 0.2284, 1.0018, -2.008, -1.7542, -2.238, 2.6519, 1.4686, -2.1585, -2.9162, -2.067, 0.5057, -2.1523, -2.1745, - 0.0914, -0.6125, 0.2631, -1.6169, 1.6371, 1.6033, -0.2891, 1.7801, 1.5644, -1.9891, -2.6005, 1.3399, 2.7303, 0.6091, -1.2192, 1.4806, -2.985, -0.6751, 0.6458, 1.3919, 0.6503, -1.0401, -0.3741, -1.4257, 2.4101, -1.594, 2.5257, - 0.1082, 1.7186, -1.5451, 2.7181, -0.7975, -1.9783, 0.1266, -0.0357, -1.5895, 0.4818, -2.4167, -2.8436, -0.0809, - 0.0812, 0.8346, -1.7823, 1.4112, 0.5463, 2.2486, -0.69, -2.1616, -1.971, 1.8048, 2.4763, 0.5911, -2.0762, 2.6107, - 2.7931, -0.0663, 0.2566, -1.9777, 2.0556, -2.1084, -1.2594, -2.8764, -1.3129, -0.8361, -1.7504, 0.1217, 1.5287, 0.8505, -1.1554, -2.8963, -0.934, 2.8033, -2.1702, -3.0114, -1.0609, 0.219, -1.3898, 1.8168, 1.1882, 0.9709, - 1.8193, -1.4932, -1.3443, -1.7411, 1.3436, -1.723, -2.3252, 0.6385, 2.1138, 2.5999, 3.1079, -2.4681, 2.7282, 1.8012, -1.8329, -0.8025, -2.6732, -2.1691, -0.882, 3.028, 2.4869, 2.4531, -0.857, 2.5076, -1.9365, 2.398, 2.9556, 0.1963, -0.5687, -2.5039, 2.1715, -0.3448, -1.3021, -2.4096, -1.9018, -2.0401, -1.3907, -0.4963, -1.3077, 1.0168, -1.3546, 2.9832, -2.7427, -2.8758, -2.3962, 1.273, 1.8908, 1.2732, -0.7357, -2.88, -1.8405, -1.8397, 0.9727, 2.0162, 2.932, -0.8816, 1.1711, 0.7131, -1.8107, -1.693, -2.1567, -0.517, -1.3972, -0.2623, 2.943, -1.3599, 0.5115, 3.0768, - 0.5983, 0.3326, -3.1159, 0.8198, -1.7524, 1.6534, 1.2647, 0.5931, -1.4398, -0.678, -2.7071, -1.9287, 2.747, 1.3097, 2.5272, -3.049, -1.0186, 1.5936, 2.8728, -0.6838, 2.1893, 2.7546, -1.7084, 0.9016, -1.7735, 0.0984, 3.0296, -2.6082, 0.8286, -1.0237, -1.3049, -2.4576, -1.5838, -3.0249, 1.2795, 1.653, -1.456, -0.5313, 0.3995, -2.2055, -0.3142, - 1.1187, 3.0778, 0.7401, -0.3944, 0.9625, 1.0024, 2.1126, 2.1945, -2.2658, -2.8888, -0.3322, -0.6987, -1.1497, 0.6236, -0.4553, 1.777, 1.2169, -2.5314, -0.6502, 0.9782, 1.2827, 0.8716, -1.4955, -2.8385, -0.6521, 1.9745, - 1.7164, -1.7013, -2.6586, 1.6068, -1.6577, 2.6013, 2.5143, 0.0831, 2.6543, 2.3348, 2.392, 1.0264, 1.9876, and 1.8316.

Phases of elements in the third sequence are sequentially -0.9181, 2.2053, -0.7512, 1.418, -1.7849, - 2.1913, 1.0473, -1.9188, -0.1153, -1.7897, -0.6929, 2.8783, -2.5338, -2.2063, 1.7025, -1.1828, 2.2754, -0.2159, 1.4461, -2.2398, 2.0269, 1.3057, -2.8747, 1.1002, 0.9511, 0.7065, 2.2515, -0.4298, -2.8252, -0.4768, -0.0659, 1.803, 0.8754, -2.9448, 2.4869, -1.2666, 2.3201, -1.5146, -2.4379, -2.4882, 1.1456, 0.5905, 1.4199, 2.951, -0.3872, - 2.7163, 1.5114, -2.573, -0.4852, 0.0281, 1.9236, 2.8619, 0.0957, -0.0904, 0.9547, -0.0132, -0.1837, 2.1121, 2.162, -2.7828, -2.0976, -1.1865, -1.0657, -0.2763, -0.7518, -1.0252, 0.387, 0.1402, -2.1813, 3.086, 2.1756, -2.615, - 0.0046, 2.0949, 1.0133, 0.2163, 0.0684, 0.9105, -2.0935, 2.3406, 0.9066, -1.7323, -1.9479, -1.2338, 1.8575, 2.7329, 2.5719, -2.5482, -1.5058, -0.7555, 0.1016, 1.3125, 2.1425, -0.1591, 1.7353, -0.5005, 2.2258, 1.2161, -0.1053, - 0.1817, -2.589, -2.2185, 2.2376, -1.7976, -0.7897, 0.2967, 0.4411, 2.2174, -0.814, -1.9846, -0.8206, 0.7616, - 1.4329, 1.5362, 0.4134, -0.7715, -2.426, 1.6409, 0.5949, 1.8234, 0.9421, 3.0981, 1.7394, -1.3834, 1.7963, 2.212, - 0.3318, 0.9632, 1.33, 1.2366, 0.3662, 1.7058, 0.2874, 1.2728, 0.9439, -0.3686, 2.067, -2.4548, 2.3105, -0.1308, - 1.4956, -1.2821, -2.8825, -2.0606, 2.4347, 1.0501, 1.5547, 0.5336, 0.0623, 0.0442, -0.3605, -2.8512, -0.8563, 3.0277, 1.5818, -0.3272, 2.833, -2.8276, -0.4644, -1.2283, 1.3848, 2.8255, -0.7752, 1.6739, -1.8438, -0.6629, - 2.8633, -3.043, -1.3697, -0.7732, -1.2915, 1.0141, 3.1029, 1.9812, 2.4255, 1.0289, 0.3758, -2.0713, -2.7079, 0.4806, -2.1118, 3.0742, -0.8662, -2.3466, 1.5758, -0.2487, 1.0828, -1.9429, -1.7301, 1.2781, 2.2721, 2.6667, 0.5028, 0.6764, 1.3864, -2.2842, 1.0518, 0.9138, 0.1514, -2.2488, -2.6219, 2.9083, -1.3421, -1.0491, 3.1152, 1.5464, 0.7225, -2.0192, -1.913, 0.529, -3.0946, 2.944, -1.7483, 0.7245, -2.6189, 0.4624, -0.5824, 2.3359, 1.47, 1.0727, 0.4577, - 0.2512, 1.8593, -0.5563, 1.2702, -0.6613, 2.8784, 0.2253, -2.4981, -2.9481, -1.5458, 1.5777, -1.0657, 2.7283, - 0.4002, -1.8382, -1.3311, 1.825, -0.9574, 1.2904, -2.3362, 0.218, -0.7045, -0.0507, 1.603, 2.7482, 0.2371, 1.6728, 1.8982, 2.1476, -1.4234, 0.6522, 3.0074, 1.5827, 0.2902, 0.7143, -2.4319, -0.4326, -2.6504, -0.4405, 0.842, -3.1262, -1.6692, 0.9442, -0.57, 0.2942, 2.5034, -0.9412, -1.8984, 3.0521, -1.8752, -0.2454, 1.2782, -0.3769, -0.2095, - 0.1356, -2.5439, 0.7635, -2.4712, -2.2263, -1.5421, 2.0739, -0.5333, -1.0708, 0.3784, 1.9677, -0.4891, 0.0001, - 1.6058, 0.5339, -1.7055, -1.8063, -1.328, -1.0822, 1.3601, -0.2182, -1.421, -3.1335, 0.4796, 0.8497, 1.4182, 2.1417, 0.222, 1.6652, -2.3198, -1.3531, 2.7983, -1.5649, 2.9967, 2.4365, -2.4204, 3.0332, 0.2453, -0.0591, -2.9612, -3.042, 2.1215, 1.9398, -0.9594, 1.5239, -3.1022, 3.0816, 0.0473, 1.4118, 1.7948, 2.097, -2.7902, 1.812, 1.2945, -1.5385, 1.5635, -0.311, -2.6096, 2.7422, 3.0091, -2.5446, -1.1819, -1.5582, 0.9818, 0.3053, 2.1089, 3.0622, -2.9695, - 0.4976, 0.5993, 0.2102, -1.8026, -1.8811, 1.3586, -0.0742, -3.0065, -0.6796, -2.1076, 0.8205, 1.6712, -0.578, 0.6872, -1.05, 0.3981, 2.4528, -0.0185, 1.7723, 0.9964, -2.5442, -2.2736, -1.002, -0.6252, 0.2442, -1.5746, -0.445, 2.9191, 1.0505, 0.9144, 0.6039, -1.5131, 2.7892, -0.7079, 0.8325, -1.6482, 0.2092, -0.6952, -2.9663, -0.2098, - 0.9884, -0.2632, 2.2271, 0.4081, -0.1554, -1.9143, 2.3821, 2.4372, 1.9776, 1.6311, 0.1203, 1.1258, 2.9895, -0.3172, 2.8566, -1.7201, 2.5386, -1.5571, -1.1327, 0.1921, 0.5641, -1.876, 2.6728, 1.0537, -2.5023, -2.0052, -0.1928, - 3.1186, 2.6331, -2.8365, -0.5782, 2.6276, 2.8485, -0.7776, 0.7218, -1.2943, -1.6755, -2.5712, -1.186, 2.3468, 3.1013, 1.5219, -0.0007, -0.9489, -0.1871, 0.8027, 0.3878, 1.1827, -2.1278, -0.0769, -0.5837, -0.1841, -2.5554, 0.1378, -2.6434, -2.3234, 0.7989, 1.8338, 2.3306, -0.031, -2.0814, 2.7261, 0.2429, -1.78, -0.9657, 1.1389, -0.7532, 1.9676, 0.7, -2.1855, -0.7857, -0.647, -3.0003, -1.8796, -2.9074, 2.8211, -0.5039, -2.7458, -2.2072, -2.2497, 1.2514, -1.8605, 2.3647, 0.0161, -2.573, -3.0074, 0.6533, 2.8412, 1.7489, -0.7799, 0.4783, 0.6535, -0.9142, 0.8247, 2.2988, 2.1992, -1.0462, -2.9015, -0.8649, 0.6199, 0.6277, -2.2548, 0.8836, -1.8214, -2.0309, -1.5908, 0.4326, - 0.7827, -1.7317, -1.0096, 2.5468, 1.601, 1.3554, 2.0042, -2.9637, 2.2227, -2.1133, -0.5062, 2.1213, 0.9848, -0.2053, -0.6825, 2.2813, 1.0241, -1.6522, 0.8464, -3.1149, 2.5399, -2.455, 0.3791, -2.454, 0.5289,1.8564, -2.7544, 1.4839, 0.2007, 2.6187, 2.9457, 1.5425, -2.4492, -1.1407, 1.2301, 0.0743, -2.5255, -2.313, 3.0159, -0.5217, -2.5193, - 0.0276, 2.8672, -1.2059, -1.3204, -2.6536, -0.0622, -2.1182, 2.8276, -2.6513, 2.641, 1.2894, -2.9441, -0.6684, 0.127, 0.7122, -0.7606, -0.6208, 1.6961, 2.2889, -0.4333, -2.0659, 0.3834, 2.4642, 1.7836, 1.3269, -0.7322, -1.2212, -1.4927, -2.3652, -1.1592, -0.7079, 0.7014, 2.149, 0.3068, -0.7026, -0.4675, 0.921, 1.0999, -2.6836, 2.1149, - 2.3006, 1.8736, -2.3296, -2.7993, 0.5908, 0.0984, -0.1751, 0.6743, -2.6821, -1.6807, 1.5486, 0.7783, 1.4734, - 1.1818, 2.3819, -2.4097, 1.2951, 1.6221, -2.1388, 0.9416, -1.3396, 0.646, 0.358, -2.2519, 1.5913, -0.0099, 0.118, - 1.1586, -0.4965, -1.8853, -1.5525, 2.6345, -1.3504, -0.1351, 1.6489, 0.4602, 1.5618, -0.5792, -0.6836, 0.7132, - 2.7029, 0.2155, 0.9465, 1.4805, -2.395, -1.0472, -0.751, 2.5771, -2.1881, 0.785, 0.2136, -0.5224, 0.5241, 2.1895, 1.5333, 0.8156, -1.627, 2.3898, 1.6557, 1.2517, -0.8036, -0.8751, 3.0257, -0.0877, 2.4082, 0.8104, -0.0672, 1.6977, -1.0144, -0.5232, -1.3569, -0.1987, 0.3147, -0.6164, 0.2332, 2.5456, 2.6775, -0.331, 2.7099, 1.8648, 0.3932, 1.7978, 1.7139, 2.9808, 2.6201, 2.4161, -2.6151, 2.7085, -0.084, 0.3086, 2.5706, 0.4756, 2.9664, -0.7203, 1.7651, 0.9873, - 1.0323, -1.6405, -3.0886, -0.0948, 3.0885, 2.6454, 2.7065, 2.7872, -1.8623, 0.5859, -1.4361, 0.7122, 2.9856, 0.8503, -2.5667, 1.6882, -0.4015, 0.7086, 1.5568, -1.9403, 1.3238, 0.6691, 1.5441, -0.9737, 1.806, 2.3302, -2.5192, 0.0553, 0.3354, 1.5872, 1.8884, -1.9135, -1.2804, -0.3899, -2.7159, -2.9354, 2.8151, -1.1567, 1.8734, 2.304, -2.0239, 2.1589, 1.0592, 1.9484, 1.8248, -1.081, -1.7095, 2.5548, -2.2596, 1.5156, -3.0737, 1.8516, -1.1717, -2.1258, 0.1789, -0.0153, -2.3718, -1.4523, -0.1383, -1.9156, -0.8193, 1.5722, 0.932, -0.6279, -3.0789, 1.4907, -1.8257, -0.1089, -0.8261, -0.8934, -2.9102, 0.819, -2.5765, -1.0856, 1.3102, -2.1409, -1.0105, -3.0402, 1.989, 0.0224, -1.3662, - 1.3869, 1.7637, 1.9255, 2.1893, -1.7126, 0.9285, -2.8919, 0.6378, 0.2086, -0.2343, -2.5473, 2.4388, -1.7265, 3.0247, -2.3443, -1.4012, -1.638, 2.6005, -2.3833, -0.2099, -0.6544, 2.4431, 2.5241, 0.0556, -2.8864, 0.2257, 1.3504, - 1.3428, 0.1343, -1.8227, -1.1602, -3.0215, 0.9168, -0.2468, 1.9154, 0.0792, -2.4722, -3.0434, 2.7149, -2.707, - 1.4028, 2.4907, -2.106, 2.4294, 0.1932, 1.6898, -2.6743, 1.4219, -0.0777, 2.5671, -2.4332, -2.4322, 2.9741, 0.6697, -0.3097, 2.3072, 1.459, -0.3414, -1.6417, -1.7464, 0.0448, -2.9915, 2.3591, 0.0213, 0.9751, 0.2666, -2.3221, 1.5608, 2.0245, 1.8007, 2.3878, -0.6507, 1.7025, -2.3496, 0.0916, 0.8731, -2.7313, 0.1911, 3.0189, 2.4992, -2.2689, -2.9346, 1.2484, -2.5819, 1.3001, 1.4417, 3.0319, -1.5425, -2.0902, 3.0688, -0.6611, -0.3813, -3.095, 2.6447, -1.0519, 2.7178, -2.1109, 1.4703, 0.5447, 0.9179, -2.892, -2.8299, 1.5297, -0.8311, 2.8162, -2.0522, -0.5241, -0.4446, 0.7019, -0.9154, -0.5754, -2.2282, -0.0162, 0.1102, 1.9011, 2.958, -3.0765, -2.6898, -0.3806, -1.0425, -2.8683, - 1.6607, 2.3406, -0.3446, 2.4202, 1.9772, -2.4519, 2.5013, -2.5772, 2.2132, -0.0437, 1.6447, -1.4406, -0.2086, - 1.8517, -0.5531, 0.2589, -3.0955, 0.4359, 1.3693, 2.4931, 1.6147, -2.8494, 2.2347, -1.9364, -2.9271, 2.3442, 0.3444, 0.7161, 1.535, 2.5062, -2.4001, 1.15, 0.4389, 1.5518, 0.6592, 3.0188, 1.4209, -2.3212, 1.3706, -2.648, 1.2709, 1.4315, -0.0612, -2.4891, 2.7238, 0.0535, -2.0299, 1.047, 2.3004, 1.0799, 2.2947, 1.8432, 0.0233, -0.5919, -1.3251, -0.0658, 2.6727, 2.3076, 2.4928, 0.4283, 0.6133, 0.8793, -1.7007, -0.3222, -0.4639, -0.4506, -0.4866, -1.2514, - 2.7264, -0.6606, 2.5337, 3.1399, 0.7296, 1.4206, 3.0351, -1.5327, 0.1034, 2.4108, 1.4381, 2.3684, -0.0577, -2.6875, 2.1706, -1.2978, 2.4488, -0.1721, 1.5098, -1.008, -0.7053, -3.0925, -1.9707, 0.0179, 1.5081, -2.2732, -3.0211, - 0.202, -1.3858, 2.7313, -2.223, 0.7399, 0.7189, -1.8719, 2.0988, 0.0027, -0.062, 0.6477, 0.9981, 2.9784, 2.7908, 0.603, 0.6121, 1.5259, 1.0469, -2.7631, 2.7074, 0.9982, 2.7263, 0.0127, -2.724, -1.3793, -0.5867, -2.502, 3.0028, 2.9599, -2.8783, -1.4364, -2.0713, -1.3921, 2.4296, -2.5868, 0.7332, -1.1318, 2.2422, 2.4757, 1.722, -0.4499, 0.624, 1.0419, -1.8409, 0.8401, 1.6687, -2.9935, -2.0228, -1.4357, -2.7725, -0.7283, -2.1859, -1.1252, 2.2345, 0.2687, 1.1038, 3.0976, -2.5387, 3.0503, -1.7137, -2.3642, -1.1207,1.1704, -2.784, 2.994, 0.0251, -0.8311, -0.5629, 2.4973, -1.3746, 0.1646, 2.0832, 0.2899, -2.465, 2.8766, -0.7603, 1.5994, 1.6064, 2.6158, -0.3149, 1.718, -2.9932, 0.6863, -2.1457, -0.5871, -2.674, 2.076, -2.0921, -0.2755, -2.5698, -2.9345, 2.8444, 1.203, 3.0336, 2.7108, -1.3605, - 1.3492, -3.1001, 0.3555, 1.3707, -2.634, 2.8102, 2.715, 0.161, -2.1955, -2.2363, 3.1265, 0.2352, -1.1742, -1.5559, 1.7727, -2.9033, 1.9923, 1.7714, -0.1764, 0.5463, 2.0408, -0.1837, -2.6711, -3.0207, -0.1182, 1.0368, -0.4563, - 0.9961, 1.6378, 1.0127, -2.4531, 1.7705, -0.1964, 2.2755, 3.1404, 0.641, -2.1964, -2.8157, -0.8404,1.713, -0.4994, -1.7032, -1.9733, 2.2482, 2.8824, 0.5628, -1.2847, 2.7297, -2.1489, -1.2187, 1.5481, -1.9962, 1.4905, -1.0047, 0.3517, 0.5307, -1.5547, -0.1225, -0.4258, -0.6103, -2.4104, -0.3364, -2.9947, 2.0274, 0.7527, -0.5034, -0.909, - 0.4777, -2.0563, -1.7985, 2.393, 2.821, 3.0229, 3.0622, -0.6028, 2.8648, 0.4416, -0.1787, 2.1032, -1.8427, -2.3897, 0.6258, -2.1699, -1.363, 2.6585, -0.837, -2.2304, 2.9274, -1.6592, -1.7794, 0.0421, 0.487, -0.7371, -2.0324, 0.3151, -0.2799, -1.1774, 0.6502, 1.4584, 2.8055, -2.7907, 0.0969, -3.1151, -1.1651, -0.757, 3.0265, -2.1335, 0.5033, - 0.9904, 0.8394, 0.616, -2.0574, -1.809, 1.6554, 2.4573, 2.479, -2.5756, 1.0777, -1.3422, 0.6971, -0.4835, 0.1639, - 1.6628, -0.3871, 2.7509, -2.0053, 1.8195, -1.0922, -2.8925, -2.2573, -1.5927, 2.5177, -0.6624, 2.3858, -2.3001, - 2.4405, -2.3476, 3.0548, -1.336, -2.5603, -0.1166, 0.6335, 0.008, -1.9211, -2.5349, 1.0512, -1.3902, -2.5413, 2.4881, 2.4201, 1.2158, -2.8431, -2.1755, -0.5088, 1.7272, -2.9466, 2.7277, 1.3282, -1.5384, -1.1579, 2.6275, 1.3358, -2.7076, 1.517, 0.8928, 2.597, 1.1261, 2.2036, -2.0989, -0.872, 1.6073, -0.0723, 2.785, 0.6323, -2.3523, - 1.57, 2.2719, -3.0834, -0.2209, 0.5994, -2.2204, 1.7266, -1.5628, -1.6206, -1.3313, -1.6824, -0.6359, 1.8337, 0.6206, -2.8476, -2.1417, -0.766, 1.6622, -0.7022, 2.0375, -0.6231, -0.4512, 0.6266, 0.4338, 1.7557, -2.4977, - 1.5025, -2.7817, 2.1808, 2.5714, -1.5105, -2.0297, 1.7326, 3.087, -0.9912, 0.7354, -1.3755, 1.6769, 0.559, 0.3693, -0.0178, 0.1142, -1.5299, 0.2987, -1.346, -1.1224, 0.6736, 0.9896, 2.4608, -1.2911, -2.4036, 2.9574, -0.7724, - 0.5117, 2.8611, 1.0793, -2.9379, 2.9074, -1.5504, 0.8906, 1.7972, 2.0264, -1.7862, -2.8637, -1.4557, 1.7093, - 2.1554, -1.1877, 2.8452, 2.4937, -2.389, 1.512, -0.4326, 0.7797, 3.0436, 0.0567, 2.292, 1.5079, -0.5582, 0.983, - 2.8002, 2.9603, -0.9436, 0.4525, -0.5722, 2.93, 0.5255, -3.0957, 2.0656, 3.1255, -2.2648, -2.3375, -1.4458, -0.392, -1.7142, 2.4838, 0.3148, -0.6769, 2.4878, -1.3844, -2.049, -2.0984, -2.8052, 1.8228, -0.6706, -2.5184, -2.3075, 2.916, 2.8217, 1.4023, 1.3969, -0.7119, -1.1853, -3.1069, -2.8545, -1.9919, 0.6008, -2.4714, 0.8355, -0.2196, - 0.4765, -1.1824, -3.0628, 0.759, -2.5869, -2.4712, 2.2162, -1.5759, 2.5262, 1.3969, 1.8476, 2.8823, 0.3123, 2.3302, -3.0273, -2.1246, 0.5345, -2.6052, -3.0678, -2.4281, -1.1954, 1.303, -0.3466, 2.3591, -0.5909, -2.6477, 1.1593, 0.3643, 0.6066, 0.8752, 2.6897, 0.3863, 0.2254, -2.4433, -0.5888, 1.0062, 1.4899, 0.6576, -0.5703, -1.7514, 2.3569, -3.0751, -2.4114, -1.0577, 0.5869, 1.6067, -0.2587, 1.2498, 1.3643, 1.0068, -1.3361, 0.0917, -2.761, -1.5322, 1.354, 2.9425, 1.926, -0.7699, -0.6576, 2.3337, -0.8253, 3.0269, -0.8991, -0.8314, 2.0915, -0.2632, -0.3442, -2.2886, 0.3581, 0.8274, -3.1335, 1.1037, -2.9404, -0.9033, 2.5995, -2.1626, -0.3908, -1.0669, -1.0591, -0.5059, 1.1463, - 1.8357, -1.1298, -1.8719, -2.2837, 1.6211, -0.5157, 0.7634, 1.1583, -1.4095, -0.7221, 2.2634, 0.6866, 0.2986, - 1.1053, -2.9687, 0.0936, -1.515, 1.6341, 3.0078, 0.4845, -3.0618, 2.2608, 2.3866, -0.3822, -2.6548, -1.5596, - 2.8793, -0.4961, 1.3703, -1.5167, 2.5954, 0.9749, -1.0665, -0.0341, 0.2271, 2.8589, -1.4253, 0.7086, -0.0797, 2.192, 1.1748, -0.226, 0.0352, -0.4232, -0.7334, -1.4081, -1.6089, 2.5152, 0.768, 2.915, -2.3308, 2.1298, -1.6798, -2.6, - 0.7098, -2.2392, -0.1208, 1.1431, -0.4489, -0.8177, 1.8843, -0.7821, -2.033, -1.3385, -2.4905, -0.9745, -2.9563, -1.2493, 2.4664, -0.6773, 0.6301, -0.9973, 0.6441, -0.179, -2.8934, -2.783, 2.6833, 2.4689, -1.5906, -0.2368, - 1.4187, -2.7856, -0.1956, -2.1332, -1.9658, -0.8961, 1.7303, 0.2123, -0.8487, 2.0392, -1.6506, -0.3515, 1.2555, 1.6834, 2.6349, -2.4455, -1.9203, -2.3676, 1.3013, 2.6764, 2.4851, 0.613, 1.7018, 0.892, -0.6449, -1.4019, 0.6596, 3.0277, 0.0872, -1.41, -0.9981, -0.8603, 1.7181, 1.6688, -1.1581, -3.0184, -2.9804, -0.4335, 0.3068, 0.5566, 1.5981, 3.0645, -0.4194, 0.0815, -1.8016, 2.2921, 0.0882, -1.0309, -3.1022, -2.0149, 3.1138, 0.7821, -2.8929, -0.9304, - 0.9141, 2.4851, -1.2828, -0.1337, -0.7898, 0.2819, 0.3063, -2.8194, 0.5051, 0.4948, -0.4401, -0.8275, 0.7374, - 0.0747, -2.3738, -1.0296, 2.844, 2.0424, -2.4306, -1.1555, -0.5223, 0.4024, -1.184, -2.4559, -2.7849, 0.3218, 2.9574, -1.5304, -0.2908, 2.9132, 1.1483, -2.1179, 2.6612, 2.1898, -0.5867, 1.7456, 1.9315, -1.7295, -2.3712, 0.2243, 0.7452, 0.3918, -1.8207, -2.841, -1.0019, 0.7624, 1.2818, 1.2974, -1.615, 1.8171, -1.8857, 0.9274, 3.0896, 0.6387, 0.3483, 2.7764, -2.044, -2.078, 1.2934, -2.0638, -1.4061, 2.0262, -0.929, 1.5248, 2.4095, -2.8702, -0.897, -1.0429, -2.3854, -0.3704, -0.9112, -1.6627, 2.6308, -1.6223, -2.2572, 1.4651, 0.038, -1.0047, 1.9194, 2.0359, 2.2945, -1.4773, 0.4972, -1.9159, -2.792, -0.8908, 2.7187, 0.8106, -0.8834, -1.8137, -2.8911, -1.6213, -1.7372, - 2.9985, -2.055, -1.8638, -2.4819, -2.0244, 0.0521, -2.5713, -0.948, 1.0047, -1.6572, 1.2148, 3.0754, -1.7195, 2.765, 0.1811, 0.3802, -0.686, -2.2829, 1.1749, 2.6748, 1.6265, -0.5589, 2.302, 1.7544, -0.8261, -0.4756, 0.4313, -2.762, -0.371, -2.4271, 3.016, -2.6484, -1.2816, 1.9814, -0.1038, -0.0529, -1.3039, 0.8432, 2.4584, -2.7544, 1.1508, - 2.0423, 0.6525, 2.1016, -2.0496, 0.3698, -1.6786, 0.7384, -0.2667, 2.3326, 0.7079, 1.9968, 0.0787, -0.4002, -2.2233, -2.919, -0.4688, 0.584, 1.8348, -1.3494, 1.9881, 2.0947, 1.7542, 1.3612, -2.7643, 1.3665, -2.3967, -1.9689, -2.0169, 2.0652, -0.7217, 1.191, -0.9886, 2.1025, -1.0506, 2.0812, -1.9437, 1.8101, -0.4249, -1.4002, 2.8526, 1.6914, 2.6212, 2.3749, 2.4737, 0.6599, 2.8791, 2.9302, 2.9088, -3.0981, 0.7506, 2.5718, 1.3685, -0.0642, -0.1739, 1.2213, -1.722, 0.7212, 0.091, 2.9801, -0.5742, -2.0571, 2.7397, -2.7801, 2.1387, -3.1402, -0.4774, 1.4671, 1.4321, 2.591, -0.3391, 0.5002, 1.7451, 2.4263, 2.5179, -1.9837, -0.8219, -0.2003,1.2331, -0.0623, 1.4221, 0.6686, 2.2721, 2.2412, -0.6283, -1.9917, 3.0577, 0.6964, 3.1237, -1.7749, -2.9978, 3.0619, 0.4993, -1.1015, 2.0966, 2.8954, -1.301, -2.7047, 2.0853, -1.1934, 0.2067, -2.0783, 0.0965, 2.9781, 2.1481, 1.8014, -0.4542, -0.9796, -3.0905, 2.8583, 1.2078, -0.6025, 0.8106, 1.0141, 1.9448, -0.2265, 0.9119, -2.0523, -3.0039, 1.2218, 1.3137, 2.9553, 1.0206, 1.1647, 1.0901, -1.6798, -1.6529, 1.9146, -1.9571, 2.0261, 1.3405,2.3671, -1.9997, -2.3447, 0.1338, 0.8638, 1.8603,2.1819,1.9615, -2.3448, -0.5604, -1.1924, -2.6651, -1.1315, -1.584, -2.5349, -1.4174, 1.885, -2.5723, 1.0742, 1.5897, 0.8335, 2.1891, 0.6127, 2.4555, 1.6371, -2.0529, -2.3533, 0.6106, -0.8463, 1.1542, 0.4197, -1.5599, -0.0662, -0.8681, -2.6291, 2.1384, 1.4859, -2.8394, 1.7031, -0.1718, 0.2151, -1.9171, 2.3601, 2.8044, -2.319, -0.9896, -0.8568, -0.716, 1.0927, 0.5081, -0.1492, 0.4695, -1.5578, -0.0724, 1.4147, -1.3163, -0.2062, 2.1799, 1.3889, 1.0336, -1.0932, -1.4945, - 0.4394, -1.6316, -1.2847, 2.7349, -1.7071, -1.7295,1.7064,2.1745, -0.9866, 0.644, -1.5347,1.3103, -1.1349,1.573, 0.7751, -3.0243, 1.414, -0.9214, -0.6576, 2.1246, 1.8171, -0.0261, -3.0621, 0.0305, -2.0796, 1.9499, -2.0438, - 1.8425, 0.9391, -2.6778, -0.9891, -2.2129, 1.0483, 2.4641, -2.735, -0.081, 1.8739, 0.7083, 2.0148, -0.6301, 2.5474, -2.7595, 0.641, -0.9674, 0.9546, 2.3621, -2.5327, -1.033, 0.932, 2.5097, -0.0432, -2.3585, -0.3683, -0.3085, - 2.8586, -2.9414, -2.2042, 0.8635, 2.0294, -0.3685, -1.8311, 2.3729, 0.0648, 0.0729, 1.0145, -0.7385, 0.353, 2.6995, 2.14, 0.6886, 1.4736, 2.3407, 2.3619, -2.1106, 2.0809, 0.6926, 1.4206, 0.5076, -2.8179, -1.5307, 2.6002, 0.2982, 3.1414, 2.2034, 0.6344, -0.2856, 1.1241, 2.3145, 1.1719, 1.959, 2.7067, 0.6475, -0.2901, -2.8983, -2.7177, 1.0424, -2.474, -1.303, 3.0419, 2.4204, 0.3641, -1.781, -0.8223, -2.437, 1.914, -1.6724, -1.5313, -2.3151, -3.1061, -2.819, -0.5179, -2.8821, -1.7333, -1.5315, -0.3448, 2.1369, -1.4922, -2.6217, 1.6095, 3.0394, -1.6743, 1.28, 0.0432, - 0.6637, 2.5982, 2.471, -0.0046, -1.1731, -1.7996, -2.2107, -1.2458, 2.5309, -1.325, 0.7039, 2.7177, -0.9793, 0.6176, -2.7908, 1.9999, -1.2124, -1.7196, 0.2117, -0.2894, -2.3966, 0.5927, 2.3794, 0.3849, 0.6268, -2.7157, -0.2415, - 2.6071, and 2.9441.

Sequence set 15: The sequence set 15 includes four sequences (denoted as a first sequence, a second sequence, a third sequence, and a fourth sequence), and a length of each sequence in the sequence set 15 is 2048. Elements in any sequence in the sequence set have a same amplitude. Phases of elements in each sequence may be as follows:

Phases of elements in the first sequence are sequentially -0.5258, -0.8598, 1.1707, -0.7985, -2.7909, 1.004, 1.3671, -2.9996, -0.9316, 0.6572, 1.0278, -0.1171, -0.0965, -2.6135, -1.1489, 1.0266, 2.3151, -0.9219, - 1.571, -0.9004, -2.5859, -0.9366, -0.6525, -1.2429, -1.6648, -1.7073, -1.7542, 2.0123, -2.7896, 0.605, -2.0458, 0.7292, 2.0352, 1.0262, 0.4329, -2.2374, -2.6029, 1.2359, -0.3793, -0.7469, 2.9418, -2.9731, -1.5602, -1.3861, 1.1962, 2.4834, 3.0218, -1.7401, -2.124, -0.6535, 1.9865, -1.6813, -1.3515, 0.8864, 1.2994, 2.6047, 0.3027, 2.5949, 2.9995, 1.291, -3.1155, 2.2854, -2.3148, -2.1208, -1.1345, -0.3402, 3.0261, 1.6531, 2.0065, 1.1259, -0.7741, 1.8698, -1.4765, 1.1361, -0.3629, 3.0171, 1.3036, 1.8975, -3.0841, -2.9926, 2.6752, -1.8843, -2.4148, -2.4499, -0.3083, 1.4859, -2.4304, -0.7692, 2.0487, -2.7558, 0.6244, -0.8126, -2.7634, -0.5188, -1.0058, 1.0134, -2.9874, -2.514, 0.1016, 0.8337, 0.6389, -0.9548, 2.4136, 2.5272, 1.0324, -2.7526, 1.6375, -3.0829, -1.7443, -1.4484, 2.5998, - 0.4109, 2.0037, 0.7845, 1.2076, -0.8668, -3.1151, -0.9403, 0.6194, 2.3159, 1.1561, -1.3568, 1.276, -1.5245, -0.8302, 0.3236, -0.6155, 2.8982, 1.3087, -1.6623, 2.6398, -0.885, 0.3279, 1.6404, 0.2069, 1.447, -0.7315, -2.6367, 2.8908, 0.8964, -0.51, 2.3473, 2.0119, -2.9739, 2.0239, 0.4476, 0.7118, 0.2966, 0.337, 0.6009, -2.9287, 0.7276, -0.2146, 0.5469, 3.0618, -2.5625, 2.458, -1.4438, 2.4168, 0.8912, -0.1583, 3.0298, 0.7436, -3.04, 0.1402, 1.3395, 0.4025, - 0.4451, 2.9618, -0.2507, 2.2682, 1.7992, -0.5822, 0.2206, -0.9516, 1.1337, -1.493, -0.4585, -1.6978, 2.9476, - 2.8892, 2.4279, -0.9761, 1.5238, -2.8672, 0.817, 2.1159, -1.5186, -1.601, 1.6485, -1.8984, -0.9591, -2.8305, 1.41, -3.141, 2.3635, 2.2347, -1.575, -1.2822, -2.3846, -2.9381, 2.8967, -0.5405, -2.0037, 1.5666, -0.8844, 0.6897, 2.0354, -1.0474, -2.8868, 2.1528, 1.0504, 1.6993, 2.2565, -0.9554, 0.4675, 1.9156, 0.1506, 1.6257, 1.9498, 2.6306, -0.6438, 1.9058, 0.636, -0.1042, -0.6361, 2.6165, 0.8682, 2.7397, 3.0379, -2.1324, 1.8947, -1.9973, -1.7451, 1.8078, 0.6682, 1.5169, 2.5508, -3.1046, 3.0469, 1.1884, 1.7565, -2.104, -0.9922, -0.659, -2.7836, 2.7646, -2.4014, 0.6146, 2.2718, -0.5734, 3.057, -2.2423, 2.3205, 2.8785, -3.0839, -2.4123, 2.1038, 2.4186, 0.1094, -0.2158, -0.5272,1.2627, -2.0799, 1.1825, 1.1231, 2.6589, -3.0201, 0.6224, -1.5254, 0.8104, -1.9172, 2.0388, -0.3058, -2.0094, -0.7425, - 1.7701, 2.3808, -2.4656, 1.8125, 0.5989, -0.812, 2.6042, -3.0778, -0.4965, -1.9379, 2.9717, -1.0337, -1.427, - 2.1733, 1.3726, 1.1059, -0.7665, 0.1217, -2.3662, 1.1912, 0.396, -1.9323, 2.191, -1.3258, 0.3188, -2.7632, 0.2501, 0.8961, -2.294, 0.2884, -1.2661, -1.1723, -2.0733, 1.1141, -2.2645, -1.8059, -0.7242, -1.0412, -0.2787, 2.7908, 2.9082, -0.0023, 0.9297, 0.6387, 0.4947, -3.0696, -0.6867, -1.0023, 0.7684, 2.925, 3.0882, -2.455, -2.9294, 3.1402, 1.9783, 2.3796, 1.3649, -0.6477, 0.7249, 0.5581, 2.203, -0.1666, 2.7009, 2.4694, -0.7523, 0.0104, 0.4562, -1.9307, 2.5319, 1.5168, -2.5255, -1.6105, -2.7142, 0.709, 1.9457, -2.1491, -2.7003, -1.729, -1.3876, -1.1787, 0.9387, 0.9271, -0.9325, 0.9839, -0.335, -2.3032, -0.4372, -1.1013, 0.7955, 2.5903, -2.6618, 1.5188, 1.0125, -1.817, - 2.9895, 2.7249, 0.9907, 2.3433, -2.835, 0.7276, -2.6849, 1.5887, -2.9987, 2.8592, 2.1036, 1.6259, -2.9762, 2.7556, -1.1038, -0.919, -2.0345, 2.8032, -2.972,1.1626, -0.4018, -1.097, -1.1881, 2.6338, -1.5588, 0.6063, 1.9073, 2.7328, 1.4162, 1.2727, -3.0022, 0.8458, -2.0658, 2.8659, -1.538, -2.7276, -1.9115, 0.0233, 0.1657, 1.7726, 3.0002, -1.7747, 2.3895, -2.1729, -0.8282, -0.431, -2.9827, -2.8252, -0.2424, 2.7359, -1.4097, 2.6026, 0.5048, 1.4922, 0.1589, 1.4213, 2.1223, 2.6708, 1.3369, -1.0913, 1.8106, -0.0371, -2.4632, 0.4319, 1.8018, -1.1317, 1.6716, -2.4476, - 1.8615, -0.7671, 1.0514, 1.2486, -0.9376, -1.091, 1.1324, -1.2263, -2.8279, 0.3663, -2.2841, 2.2536, -0.5315, 0.2565, -2.8528, 1.2974, 2.9006, -1.672,1.2615, -1.4858, 1.5892, 1.0557, 1.5683, -2.1046, -2.5603, 1.4594, 3.1119, -2.1751, 0.8723, -0.4906, 1.1014, -0.7914, 1.4248, -1.9853, 0.1327, 1.2521, 0.087, -1.9764, -2.3191, -2.5917, 1.6923, -1.9269, -1.4178, -1.7382, -2.8694, -1.0761, 1.8684, -1.8657, 1.5371, 0.1986, -2.0686, 2.0916, 1.9948, - 2.8813, -0.7195, -2.759, -1.1418, 2.0639, -1.1586, -0.3409, 2.5428, -2.6287, -2.511, -2.9204, -0.7847, 2.2635, 1.959, 0.9575, 0.3373, -1.4929, 2.66, -1.8972, 1.4921, 2.9976, -2.3634, -2.4615, -2.5837, -0.41, 1.7673, 1.9035, 0.5197, 0.418, -3.0303, 2.3802, 1.1857, -1.499, -2.6384, -1.7172, -0.4956, -0.2068, 1.0278, 1.2381, -1.9121, 0.4626, 2.4742, 2.8049, -0.8985, 2.6536, 1.3792, -1.5739, -2.4319, -2.7004, 2.5779, 0.8459, -2.3078, 2.8613, 1.4486, - 2.0373, 1.8239, 3.0381, -0.972, 1.7257, -1.9728, 2.8489, -1.9732, -2.5003, 2.1614, 0.8625, 2.8815, 2.2253, 1.5862, 1.3105, -0.7278, 2.3812, -0.4867, 2.5471, -1.5162, 2.5358, -1.5983, -1.3997, -3.071, 2.1527, -0.9155, 0.1052, 2.0198, -2.1103, 2.7718, 0.0578, -1.8502, 0.9681, -0.0966, 0.3034, 3.0058, -0.5879, -0.9956, 0.5851, 0.9674,2.6531, -1.1091, -0.7533, -0.2847, 1.6999, 3.1114, 1.7565, 0.7818, 0.8902, -2.3435, -3.0208, 1.4674, 2.0427, -0.1413, - 0.3177, -1.3465, -2.3876, 0.191, -2.0763, 3.0423, -2.6575, -0.7527, 0.2111, 0.1369, -0.6644, -1.9095, -0.1291, - 2.2839, -2.9875, -0.5465, 1.6646, 2.8826, -0.7655, 3.0546, -1.1894, -2.1075, -2.1912, 1.943, -2.3329, 1.1186, -2.0425, -2.5249, -1.6631, -1.5048, 0.1951, -1.9331, -2.0569, -1.4063, 2.6702, -0.6253, 0.8245, -1.2789, 2.4689, - 0.1097, 0.5831, 3.0447, -2.7882, 0.2016, 3.1044, 1.5802, 0.6995, 3.0092, 1.5059, 0.7508, 2.0824, 0.7637, 0.8608, 0.3883, -1.9692, 0.4625, -2.7084, -1.8739, 3.0504, 2.8618, 2.3309, 0.6433, -2.3368, -0.4696, -0.3993, 2.0239, 2.2488, -2.692, -2.0448, 2.9034, 0.0186, 0.1392, 1.242, 0.7457, 1.2638, 0.4967, -1.0677, -2.1501, 0.9222, -0.4118, -1.9858, -1.623, 0.3033, -0.7974, -0.9878, 0.1152, -0.8811, -0.7134, -2.8464, 1.7464, 2.5161, 0.5042, 0.1788, - 0.8042, 1.2982, 2.2435, 2.2445, 2.7618, -1.7329, -0.9277, -0.527, -2.3464, -1.4333, 2.0681, 3.0227, 0.3846, 0.4141, -2.4503, 0.9223, -1.5582, 0.7211, -0.6307, 2.7226, -1.7017, 0.946, 1.9668, 2.6851, -3.0678, -1.0965, -2.0315, 1.5091, 1.9036, 2.1335, 1.0239, 2.1228, 2.2851, 0.7307, 1.282, -0.6304, -2.9378, -3.0429, -0.4487, 0.2944, -1.8614, -0.7441, -2.458, 1.2876, -2.8935, 3.1054, 1.5729, 1.5866, -1.568, -0.7293, 2.5869, -0.6205, 2.6811, -0.5335, - 1.2327, 0.8625, 0.073, 2.7437, 1.9993, 0.1634, 0.1156, -3.0866, 2.1265, 0.4233, 2.9753, 0.7374, 2.5396, -0.4226, - 2.1712, 0.1769, 0.5311, -1.1337, -0.0331, -2.723, 0.3094, -0.8668, 2.3648, 2.1969, -1.7022, 0.9575, 0.8221, 2.8378, -2.301, 2.9547, -1.6182, -1.7279, -1.2615, 2.0756, -1.2274, -1.8862, 1.5847, -0.2253, -0.8599, 2.4405, -2.4164, - 1.3051, 0.8944,1.3454, -1.5091, -2.8437, -1.8418, -0.6541, -2.3427, 0.3583, 0.439,1.6854, -1.6679, 0.028, -1.4658, 0.7051, -2.3898, 0.7618, 0.9045, -2.7798, 2.1583, -2.6581, -1.7578, -2.7465, -1.7939, 2.249, -1.7913, 0.2181, - 1.2323, 0.7987, 3.0944, 2.5325, -2.3242, 2.1597, -1.5183, -2.5819, 0.4238, -0.6222, -0.3488, 1.1661, 2.5372, - 1.9246, -0.1004, -2.744, 2.9548, -0.0061, -2.3129, -0.2739, 2.5628, 2.5446, -2.1985, -0.1136, 2.9686, 0.7932, 0.2878, -1.4834, 1.457, -2.4342, 0.0604, 1.889, -2.8957, -1.713, 2.0426, -2.2118, 0.9637, -0.7727, 0.4552, 1.7936, -1.6461, -2.6719, -1.4872, 2.8596, 1.7689, 0.0878, -2.2957, -3.0008, 3.1228, -2.1333, -0.3093, 3.0315, -1.6807, - 2.6243, 1.4792, 0.73, 0.3689, -0.3221, 2.7915, -2.0697, -0.251, 3.0223, 0.7429, -1.2593, 1.2756, 1.0397, 0.9987, 0.8558, 0.8518, 1.6916, 2.1149, 1.3742, 1.5414, 1.3847, -1.1226, -0.6272, -2.0849, 1.8024, 2.224, 1.0742, -0.525, - 2.3308, -2.4467, 0.754, 1.3426, 2.9707, -0.4478, 2.0038, 1.3817, -2.4999, 0.6242, -1.7347, 2.1245, 1.2425, 2.452, - 2.0986, 0.6134, 2.5126, 0.9754, -1.357, -0.6422, 1.9065, -1.7918, 1.795, -2.5749, -0.8779, -2.8304, 2.6549, 1.7669, -2.914, 2.0151, 2.5133, -3.0745, -1.5323, 2.2839, 3.1325, 0.9486, 0.2304, 1.8035, 1.2929, -2.0605, -0.5776, 0.2442, 1.7027,1.0156, -1.1473, -1.122, -1.0992, -1.4898, -0.4969, -2.1889, 2.712, 0.3012, 0.7347, -0.3038,1.1888,0.4753, -3.0584, -0.2066, -1.9541, -1.1496, 1.3299, 0.11, -2.6543, -2.5313, 1.2533, -1.0115, -2.1801, 0.6025, 3.0018, 1.5739, 2.7542, 2.3213, 1.2525, 1.805, 2.802, -0.7525, -0.521, -2.0382, -0.7257, 1.9886, -1.3671, -1.805, 3.1033, 2.079, 2.4803, -1.8937, 0.8793, 1.3444, -2.2285, -1.8049, -2.3301, -2.0045, 2.9143, 1.8903, -1.5264, 2.6148, -2.31, -2.2161, -0.6866, -2.7482, -1.0653, 0.0324, -2.3144, 0.9219, -0.7584, -2.047, 1.9238, -0.1195, 1.8965, -2.4018, - 2.9717, 1.6617, 0.5404, -0.2029, 2.668, 1.9449, -1.3963, 2.4519, -2.0356, -1.7297, -2.9465, 1.3296, 1.093, 0.5046, 0.3545, 1.5189, 2.7294, 0.3786, -2.789, 1.2254, -0.5544, -1.7751, 1.9761, -1.8255, 2.1789, -2.3679, 0.1784, -0.2862, -2.1213, -0.9464, 0.0329, 2.073, 2.9519, -2.189, -2.4508, 1.487, 1.1264, -2.5802, 0.9526, -1.0399, -0.1023, 0.6596, -2.7894, 0.099, -1.8688, 0.7274, -0.6293, 0.0625, 0.7146, -3.079, -1.759, 2.7477, -0.5942, 0.3164, -2.3812,1.6762, 0.3632, 1.5605, 0.2878, 1.2685,-1.5618, -0.7284, 2.8216,1.6514,1.0235, -0.6487, -1.3144, 0.3429, -1.5985,1.4956, -2.2406, 1.9815, 0.7215, -1.3044, 2.6636, 2.0492, -2.3195, -1.2607, 3.1282, 3.0707, -2.3235, -3.0295, -0.4601, - 2.2046, -0.0002, 1.3085, 0.1708, 2.3654, -1.0654, 2.4838, -2.8336, 1.2145, 0.0604, 2.2358, -2.3607, -1.7526, - 1.6451, 0.1847, 0.1967, -0.6218, -2.6182, 0.3999, -2.8266, -2.4582, -2.2279, 1.9336, 2.1547, -2.0452, 2.7088, - 2.4261, 1.6151, 0.0117, -1.3436, -1.8628, -0.3162, 0.6908, 2.4314, 0.5386, 2.3716,1.0637, -0.9568, 0.4231, 0.1363, -2.3506, -0.6546, 1.9849, 1.028, 1.452, 2.0105, -2.6906, -0.9692, -1.5971, -0.0022, 0.677, 0.7451, -3.0953, 2.0038, 0.5277, -0.4768, 2.5445, -0.0828, 0.8426, 2.9865, -0.5231, -1.4936, -2.2945, -3.0554, 2.9235, -0.6745, 0.6825, - 2.4285, -1.7573, -1.964, 2.4089, -2.03, -1.8243, 2.1121, -2.5264, -0.6627, -2.7792, 1.2972, -1.4941, 3.124, -1.2179, -3.0491, -3.0485, -1.9881, -0.3865, 2.6016, -1.4228, -1.7533, -0.652, 0.661, -2.9622, -1.5828, 0.9505, 1.0514, - 1.9702, -2.7658, 2.8287, -1.552, 1.569, 2.0727, 2.5015, 1.0481, -1.0824, -0.8733,1.9066, -0.9771, 0.8945, -2.5405, 0.5709, -2.7989, 2.3685, -1.8102, -2.8797, 2.8669, -2.3888, 2.6998, -2.9989, -1.1113, 0.3502, 0.2459, 1.0805, - 0.8051, -2.6489, -1.3724, 2.0979, -2.257, -1.5109, -0.4669, 0.2334, 0.8654, -1.6292, 1.1064, 2.3143, 0.4319, 2.2128, 0.564, 2.4893, 0.9845, 1.5185, 0.7215, -0.3605, 0.3244, -1.0826, 2.9259, 1.256, 2.7206, -1.1885, -0.7051, -2.9553, -2.2037, -1.3326, 1.4053, 1.3819, 0.4074, 1.6378, -1.7051, -2.0681, -0.2243, -2.8478, 0.1121, 0.2561, -1.6052, 1.9377, 2.7305, 0.9601, -2.1473, -1.4957, 2.0278, 3.113, 2.7517, 1.7137, -1.9743, 2.9293, -2.186, 2.9422, 0.7878, 2.5432, 2.4818, -1.6841, -0.4285, -1.7311, 1.1053, -0.3453, -2.466, 2.0466, -0.4482, -0.2693, 1.6518, -1.2821, - 1.3174, 3.0753, -1.1228, 0.2828, -2.2104, -1.3249, -2.847, 0.5663, 2.9014, -1.7931, 2.6935, 2.4319, 0.4655, -0.6971, -1.4652, 2.4235, -2.2971, -0.5958, -0.4956, -2.2747, 1.0658, -1.4641, 0.3037, 2.8607, -2.816, -0.6042, -1.486, 2.6787, -1.3882, 3.0589, 0.2031, 0.6878, -1.3673, 1.9132, -3.07, 1.0644, -0.7694, -1.1432, -0.2612, -2.5407, - 1.9852, 1.1744, -0.1336, 2.8113, 0.7038, -0.4576, -1.6936, -0.4494, 1.3768, -1.252, 3.1074, -0.2346, 2.7182, 0.9276, -2.3086, 1.2367, 1.1277, -1.4971, 2.5863, -3.069, -1.677, -0.3543, -2.1646, -2.7785, 1.8483, -3.0315, -1.2555, - 1.4972, -1.9245, -0.2352, -1.6104, -3.0131, -2.6329, -0.0785, -0.797, 1.5024, 1.0473, 2.0133, 2.7589, -2.5219, - 1.6533, 2.0531, 2.9814, -3.0961, -2.0684, -0.3901, -2.184, 2.3155, -1.8592, 1.132, 1.1128, 0.7965, 0.5314, 1.7989, 2.1641, 0.3529, -2.6632, 0.7685, 0.7699, -1.7278, -0.4333, -0.9499, -2.2546, -0.9089, -2.6286, 3.0658, 1.1392, - 3.0299, 2.965, 0.5465, 0.4118, 1.0695, 2.5317, -0.5767, 3.0433, 2.1932, -1.2721, -0.301, -1.7933, 1.5132, 1.4526, - 0.0133, -3.1309, 2.8985, -2.5001, 0.138, -2.4948, 1.9545, -3.104, -2.2429, -0.4499, -1.4445, -2.7502, -1.8656, 2.2069, 2.5903, 3.0796, 0.7788, -2.4352, -0.9949, 2.5841, -0.9185, -1.3471, 2.1708, 2.932, 2.7598, -1.0366, -1.6394, 1.9978, -1.9206, -0.0063, -1.8118, -0.8479, -0.4, 2.6379, -2.8897, -2.226, 1.1691, 1.3259, -1.8453, 0.1419, -1.0573, 0.2584, -1.8664, -2.899, 2.059, -2.6357,1.1674, -2.8084, -1.4057, 1.6803, 0.9545, 1.2812, -0.8491, 2.3694, -1.6234, 2.3959, -3.1302, -0.5943, -0.7173, -1.3555, 0.1152, 2.9257, 0.1545, -2.7791, 1.2426, -1.0182, -0.8065, 0.1854, 0.801, 3.1331, 2.8639, 0.9404, 2.4878, -3.0275, -1.3191, 0.6822, -1.8471, 2.99, 1.1623, 0.2434, -2.0788, 1.8251, - 0.1847, 3.0396, 2.456, -1.1919, -2.7707, -2.849, -2.2808, 1.4714, 1.173, -2.7606, -0.5904, 2.3479, 1.4218, 2.3622, 1.1549, -2.8037, -1.2747, 2.5382, 2.444, 1.7613, 0.8204, 1.9545, 1.7344, 2.32, 2.4931, 0.3401, 2.4837, 0.3092, - 2.5374, -1.2417, 2.2657, -0.6848, 0.1385, 2.8111, -0.0813, 1.6038, 0.306, 0.1498, -0.2475, 1.7777, 1.5003, 1.76, - 2.2296, -1.1881, -0.2957, 1.273, -2.3659, 1.8992, 2.4211, 1.237, 0.8424, 2.4786, 2.1191, 0.5487, -1.1815, -2.2836, -0.305, -0.5241, 1.1354, -2.7208, -1.9471, -2.5454, -2.4394, 1.6644, -1.1058, 1.271, -2.726, -1.035, -1.0208, 1.6941, 2.2791, 2.4859, -0.7646, -1.094, -2.6288, 1.647, -1.0884, -2.8976, -0.0936, -0.7805, 2.7471, -1.2824, 0.4958, 2.3901, 1.5389, 2.0544, 2.7157, 3.12, 1.1034, -2.2996, 1.8945, 1.0447, 2.0676, 1.4196, 0.0101, -0.9121, - 0.5465, -1.8303, 0.9435, 1.5598, 1.5495, -0.8483, 2.2828, -1.5853, -1.1499, -2.8627, 2.8161, 2.2307, -2.8206, - 1.9031, -1.7991, -3.0295, -1.3205, -2.5945, 0.4205, -2.3175, 2.2743, -0.0649, 0.8355, 0.2846, -1.7516, -2.4758, - 2.3271, 1.6818, -1.2413, 2.7883, 1.3789, -0.7931, -0.8827, -2.6342, -0.9506, 2.8425, -0.974, 0.2926, 0.8368, 2.9246, -2.7953, -1.0153, -2.9302, -1.0799, -0.9755, 1.5051, -3.0551, -0.0833, 0.8372, -0.5757, 1.5767, -2.7143, -0.3028, 0.6853, 0.4946, 2.7901, -0.2754, 2.8477, 2.9567, 1.6118, 1.9578, 3.0757, 1.9127, 3.0605, -0.2462, -3.0747, -1.2398, 2.553, -1.3591, 2.1923, 2.9265, 2.65, 0.3241, -2.5515, -1.2905, 1.0049, -1.3392, -0.1246, -0.4596, -2.6858, 1.9111, -0.8181, 0.7206, -1.2744, -2.9308, 2.4092, 0.49, 0.8252,1.7843, -0.2407, -0.6762, -2.6188, -2.2227,1.5286, -2.633, -2.0446, 3.1195, -0.5387, -0.4992, 1.2423, -2.5913, -0.0978, -1.9597, -1.5364, -1.823, -1.7051, -1.4051, -1.0483, 1.7238, 1.8766, -1.315, 1.6773, 0.7047, 2.1603, 2.7404, -0.2323, -1.1616, 2.5455, 0.5986, -0.8734, -1.0231, -1.5822, 2.5314, -0.12, 0.5225, -1.9022, -0.8098, 0.1832, -1.9278, 2.0641, -1.9915, 2.9894, -3.1154, 2.8948, -1.5324, - 2.3445, 1.3305, 1.552, 0.6162, -2.7473, 3.0373, 0.0712, 0.7067, 2.7141, -1.7484, -3.0572, -0.7746, 0.9101, -0.8804, 2.6432, 3.0156, -0.0846, 2.5476, -1.3325, -0.8517, 0.6987, 2.0508, -1.5175, -0.1458, 0.5713, -2.126, 2.324, 0.5702, 1.5594, -1.8402, -0.2632, 1.2795, -0.7384, 0.9431, 0.6855, -0.8455, 2.7953, -1.1821, 3.1176, -1.6809, 2.1389, 0.3774, -2.5615, -0.2468, 1.4686, 3.0772, -1.775, 0.5308, -0.7634, -1.88, 2.7684, 0.4308, 2.7234, -3.0141, -0.5346, -2.0127, 0.4499, -0.8649, 1.783, -1.4746, -3.0623, 1.1503, 2.8959, -1.1253, -1.9581, -0.7753, -0.526, -0.8313, - 2.2268, 0.1514, -0.3747, -0.009, 2.5326, -1.9923, 1.8851, 0.7081, 2.8195, 2.2319, -2.5833, -2.5262, -0.0845, - 0.9877, 1.7917, 1.0366, 2.7122, 1.9388, 3.1034, 0.7783, 2.2494, 1.5942, 1.5104, 1.3489, -2.1843, 2.5767, 2.6923, 1.2355, -0.0428, 2.0905, -0.7769, -2.7711, 1.8748, -0.3336, -0.7882, -2.7677, -1.686, -0.2135, 2.8861, 2.2518, - 3.1057, -0.1879, -1.149, 2.5122, -1.5144, 0.4023, -2.9964, 2.76, 2.5872, 0.5665, 1.4675, 1.5975, 2.8178, 1.4227, - 0.9617, -1.2625, -0.7959, 0.1024, 0.9838, 2.5543, 1.4298, 0.0587, -0.9994, 2.4739, -1.7247, 2.5303, 2.7056, 0.0128, -0.0223, -0.622, -2.2063, 0.5931, -0.8273, -1.531, -0.5003, 2.6394, 0.8737, 1.9743, -2.6324, -2.1364, 2.9248, 2.1825, -1.9529, -0.6167, 0.8151, -1.6016, -2.8309, 3.0628, -0.8367, 2.7149, 1.3085, -2.196, -2.3401, 2.2259, - 1.393, 0.9294, 0.2309, 0.4327, 0.4153, -0.2772, -1.6151, 0.4824, 2.9258, -0.2701, 3.0903, 1.3016, 1.0658, -3.04, - 0.5256, 1.0396, -2.4096, -2.016, 0.2659, -1.5606, -0.6991, 2.6381, 0.5377, -2.289, -0.6613, -2.0106, -1.2206, 1.7731, -1.6652, 1.6365, 1.0325, 0.3248, -1.2587, -0.7793, -1.6252, -2.3792, -0.5205, 0.6647, -2.3822, -0.8156, - 2.1366, -1.3023, 1.3108, -2.9178, -1.9745, -0.8063, -1.1707, -0.5612, -1.6059, -2.323, -1.8859, 0.2411, -0.5741, 2.6577, -0.2918, -0.5885, 1.0669, 1.6712, -2.9256, 1.5095, 3.0081, -2.3795, 1.624, 1.2947, 2.9136, 1.4525, 1.4138, 0.2725, 1.3299, -1.5049, 1.6551, -2.1979, -2.6312, -1.5534, -1.86, 1.6799, 2.8344, -2.8671, 1.5114, -0.4549, - 1.1759, -2.4467, 2.6003, -1.3692, 1.5573, 2.577, 1.3564, -2.0681, 0.0818, -0.9157, -0.2048, 1.2397, -2.5701, 0.9174, -2.0817, -1.5078, -1.6911, -0.129, -1.1148, 2.2131, -0.2934, 2.3613, 0.7149, 1.0287, 1.9378, -0.2546, -1.9847, - 2.0392, -2.3737, 1.982, -0.2744, -2.7899, -0.0305, -0.3292, 2.7654, 3.1236, 1.6016, -1.7335, -1.2235, -2.6444, - 0.7739, -0.6025, -0.6144, 2.7133, -0.017, -1.6973, -2.9617, -2.0091, -0.0718, 0.836,1.4252, -0.4182, 2.692,1.7967, -1.2029, 0.9393, 2.7636, 0.7763, -0.7347, 2.2593, -2.1186, -0.559, -2.9483, 0.316, 2.6737, 2.973, 1.6584, 1.3114, - 0.5904, -2.4422, -0.2962, 2.6285, 0.3336, -1.3885, -1.9935, -0.9967, 1.6366, -0.5725, -0.7574, -1.6176, -2.738, - 1.3533, 2.1534, 0.7574, 1.9095, -2.7111, -0.6399, 2.0798, 2.1479, -1.0989, -2.9558, 0.946, 1.6272, -1.3463, and - 2.1937.

Phases of elements in the second sequence are sequentially 1.5723, 2.9311, 2.6418, -2.1376, -0.6022, 0.5967, -0.917, -1.5913, 2.8267, 2.0084, 3.139, -1.6932, -1.5566, -1.2998, -3.0301, -2.6279, -0.8631, -3.0819, - 0.596, 2.4011, -1.8774, -2.5554, -0.3061, 0.3662, 2.8898, 2.783, 0.793, -1.1631, -1.1654, 2.8731, -1.7574, 0.3677, -1.8474, 2.8197, 2.1211, -0.8324, 1.4451, 1.8215, 2.8004, 2.7278, -1.5676, 0.097, 0.728, 0.845, -0.6983, 2.1654, - 0.5373, -1.181, -2.6521, -0.9589, 2.8588, -2.3571, -0.2595, -1.689, 0.0707, -0.9899, -2.1813, -1.6406, -1.8052, 0.5542, -3.0264, 0.8243, 2.5726, -1.765, -0.723, -0.7706, -2.274, -0.7514, 0.7933, -1.5578, -2.9939, -0.3103, - 3.0339, -2.7358, 2.8274, 1.483, 0.0942, -1.538, 0.6658, -1.8372, -2.6632, 0.0685, -1.6789, 2.1127, 0.3216, -0.7183, 2.7815, 1.8381, -1.874, 1.7789, 2.5324, 2.5662, -0.4985, 2.4523, -1.2531, -1.6966, -1.936, -0.191, 0.0555, -1.0055, 0.0627, -3.0588, 1.3481, -2.0906, 1.6996, -2.3127, -3.03, -2.5288, 2.2313, 1.1915, 2.8004, 2.5952, 1.2573, 1.6514, 2.0859, -1.4047, -1.8961, -1.3236, -0.8253, 1.3425, 2.0245, 2.7253, 0.7697, -0.5332, -2.984, 2.52, 0.7033, -0.8319, -2.8164, 1.2773, 2.796, 0.1412, -0.6757, 2.5307, -0.1996, 1.0991, -1.1195, -2.5927, -1.5434, -1.5317, -2.2686, 0.5828, -0.6326, -0.2938, 1.9088, 1.4786, -1.4025, 0.0705, -2.9835, -3.1207, -2.4796, -1.5447, 1.2887, -1.9795, -2.9609, -1.5442, 0.7909, -3.0046, -1.3242, 1.0502, 2.4503, 0.7916, -0.8843, -2.0854, -0.6431, -1.4813, 1.1054, 0.8883, 2.4538, -0.2912, -0.4657, 1.2746, -0.7088, -0.8657, -0.03,1.0025,0.9197, -1.6292, -0.8368, 2.1715, 0.4897, 0.9806, -0.8321, -0.6608, 2.8596, 2.8132, 0.7376, -2.413, -1.0724, -2.9559, -2.6221, -2.7521, 2.2832, -2.788, - 1.3236, -0.504, -1.8419, 2.2774, -2.5882, 1.1081, 0.7242, 1.8294, 1.0603, -2.4112, 0.1456, -1.2154, -0.9398, 0.1037, 2.0833, -2.1757, -0.8383, -2.6997, 1.6242, 0.5717, 0.5928, 1.4438, -0.285, 2.1431, 1.9323, 1.4565, -0.2933, -0.0773, 2.9549, -0.9209, 3.067, 2.935, -2.8147, -1.7421, 1.9807, 3.1189, 0.0913, -1.2113, 2.1868, -1.6415, 2.7011, -2.1651, -0.3705, 0.2363, 0.3182, 0.7401, -2.2598, -2.7024, 0.3367, -0.8747, -2.707, 1.1337, -0.1978, 0.3089, -2.5946, 0.5789, 2.4972, 0.3223, 1.8036, -0.5037, -1.1513, -1.613, -1.5307, -2.4126, 1.5622, -1.9665, -0.2556, 0.5696, - 0.1588, -0.9305, 0.8199, 0.0695, 2.6543, -2.1892, 1.7656, -1.2717, -2.3657, 2.615, 1.971, -1.401, -0.697, -1.4917, 2.6632, -0.4247, 2.4938, -2.6524, -1.823,1.6981,1.6891, -1.542, -0.3803,1.9378, -2.4094,1.442, -2.7727, -1.5401, 2.9791, -2.2855, -1.0751, 0.7428, -2.18, 0.9884, 3.1121, -0.4711, -0.7475, 2.567, 1.2412, -2.4718, 0.5319, 2.275, - 0.1024, 1.0757, 1.7536, 1.8188, 2.7647, -2.7647, 1.2577, -1.364, 1.0404, 2.2288, 2.4043, 2.4854, 0.2549, 2.9439, 1.8216, 1.4686, -0.7712, 2.0174, -2.4547, -1.8055, 1.0447, -1.5362, 0.674, -1.3687, -1.4144, -0.6392, 0.3009, - 3.0307, 2.3518, 1.0749, 2.9886, -2.7915, 0.8867, -2.912, -0.2595, 2.7363, -1.2167, -2.7641, 0.3645, 2.6224, -0.8341, 1.9194, 1.1316, -2.9746, 1.838, -1.1604, -2.5437, -1.2038, -0.9565, 0.6851, 0.7326, -2.0754, -2.8331, -0.1434, - 1.2695, 2.5488, -2.4997, -2.4105, -1.3012, -1.0063, 2.7575, 0.9171, -0.9029, 2.4058, -0.2011, -2.8988, -1.0828, 1.199, 1.1079, -1.4579, -1.3363, -2.2153, -2.568, 2.7679, 2.9341, 0.8518, -3.0657, 2.791, -0.1207, 1.7121, 1.6229, -0.9273, 0.5343, 2.0534, 3.1196, -2.1465, 2.0924, -0.3325, -0.0031, 2.6314, 0.7176, -1.5378, -1.3221, 0.9406, - 2.7464, -2.2577, -0.6874, -2.9042, -0.3377, 2.9607, 3.0048, 3.133, 0.9391, -0.714, -2.7849, 2.5767, 2.9119, -2.2231, 3.0753, 0.9958, -1.5927, -1.7625, 2.3173, 2.1097, 1.9679, 3.0298, -3.0215, -1.4846, -0.1309, -0.3295, -2.5654, 0.843, -1.4576, 2.0763, -2.9222, 2.9384, 0.8632, 0.0077, -1.3598, -1.7236, -2.6966, 0.0677, -2.7819, 0.5216, - 1.4239, 3.1214, 2.4033, -0.525, -0.9054, -0.2655, 0.7417, 1.8935, -1.934, -2.0629, -1.8677, 2.7591, -2.949, -2.8992, -0.6983, -1.874, -2.5972, 2.6094, -2.8963, 2.328, 2.0449, -0.4915, -1.2487, -1.6699, 0.0207, -1.4414, 0.3327, 0.9723, 0.1003, 1.7162, -0.5542, 2.6958, 2.8412, -2.9714, 0.0016, 2.7848, -2.7027, -0.6077,1.7318,0.5493, -2.2167, -1.6305, 2.0696, -1.0412, -1.7739, -2.528, 2.3373, -0.7431, -0.7328, 1.694, 2.5927, 2.9174, -1.3644, 3.0816, 2.3676, -1.0211, -2.8025, -1.4353, 2.6563, 2.3586, -2.3854, 2.2717, 1.6322, 0.9258, -0.5345, 0.9847, -1.6047, -1.3015, - 1.1687, -1.0259, 1.1561, 3.0997, 0.379, -2.1566, -0.5314, 2.6751, -0.0424, -1.2208, 0.3885, -1.8748, -1.0185, - 2.8966, -2.0045, 1.5453, 0.3516, 2.4911, 0.0251, -2.432, -0.3601, -0.1615, 0.6658, -0.2409, 1.4487, 0.9851, -0.3633, 0.6378, -1.2386, 1.2764, 2.3534, -2.7855, 2.5159, -2.9108, -1.9577, 2.3738, 0.8795, -0.5238, 0.8293, -1.1274, - 1.5171, 0.6851, 0.2641, 0.5827, -0.7916, -1.1767, 0.9234, -2.938, -0.2845, 1.6746, -1.276, -2.5909, -0.738, -0.7483, 0.6047, 2.8175, -1.6426, 2.8323, -0.5344, -1.9892, -1.9574, 0.181, 2.2917, -0.2794, 2.481, -1.4487, -0.2365, - 0.6933, 0.3239, -0.6537, -1.7689, 1.8173, 1.4386,1.2149, -1.447, -0.9347, 0.6857, -1.5541, 0.4181, 2.3992, -2.4803, 2.051, 1.2821, -1.1996, -1.349, 1.7148, 2.9088, 2.2843, 0.8384, 0.6998, 3.0435, 0.9518, 1.4401, 0.859, 0.6647, 2.8135, -1.4419, 0.9012, -2.4841, 2.971, -3.0321, 0.7018, 0.6994, -1.9279, 2.1722, -1.9018, 0.7553, -1.9029, - 0.8862, -0.9276, -0.4237, 2.8939, -0.3969, -0.2529, 2.3797, -0.4085, -0.6197, 2.8033, -2.4171, -1.5279, 2.8659, 1.6764, -3.0522, -0.0376, 1.7835, 1.9711, -0.8114, 3.1113, -0.3162, 2.6637, 1.9617, -2.6366, 0.048, 3.0342, -1.7162, -0.7071, -2.4868, -1.1714, -1.0693, -0.0099, -1.3276, 3.0725, 2.241, -0.4832, -0.0261, 1.9247, -2.5744, -3.1081, -1.3038, -2.1256, -1.0851, 0.5833, 2.9702, 1.334, -0.4609, 2.7726, 1.9937, -0.0594, -2.6637, -0.8275, -1.4505, 0.2264, 1.8599, 2.6316, -1.5547, -0.1022, -0.0504, -0.3984, 1.9174, 1.1008, -3.0601, 0.0379, -3.1245, -1.9246, - 2.9359, 1.1307, -0.4941, -1.6624, -2.6169, 0.9079, -1.5432, 0.4126, 2.5083, -1.4491, 0.7627, -3.0285, -3.0124, - 0.3631, -1.7515, 0.7666, 1.8876, 1.488, -0.7028, -2.8358, 1.4812, 2.6975, 1.9561, 0.1562, -0.7498, -0.3806, -2.2922, -1.5241, -0.1932, 1.2665, 1.9503, 0.3744, -1.6178, 2.4307, 1.3959, 1.4541, -3.0562, 2.2338, -1.6593, 0.6265, 0.8492, 2.627, 0.3604, 2.8348, -1.2122, 2.0897, 0.7701, -2.9215, -1.0886, 1.8817, 0.3184, 0.8078, 0.2342, -2.2289, 2.6419, -1.6531, -2.0939, -2.3686, -2.443, -0.4308, -3.0956, -0.9688, -2.8319, 1.4468, 0.5053, -2.2915, 1.1912, -1.4945, -2.303, 2.4291, -0.8246, -2.4306, -2.6169, 2.4742, -0.5466, -2.489, 0.1764, 1.5203, -2.5772, -1.587, -0.0087, 1.5389, -2.7715, 2.8333, -2.8129, 2.6191, 2.354, -1.3152, -1.2946, 2.4221, -0.4861, -2.0271, 3.0853, -1.3663, 1.9456, -0.74, -1.5495, 0.1851, -0.4204, -0.0319, 0.0327, -2.2409, -0.8458, -2.6354, -1.8237, -0.0959, -0.3225, - 0.4799, 2.5601, 1.9492, 3.138, -1.6096, -0.2277, 2.9185, -1.151, -2.4156, 2.5588, 2.5353, 1.7259, 0.5152, 0.5748, 2.4943, -1.049, 1.5525, 2.574, 2.6537, -0.0564, -1.273, -1.9324, -2.6385, -1.9687, -2.2961, -2.5525, 1.4904, - 2.3085, 1.3061, 0.6167, -1.3299, -2.6105, 1.8582, 2.767, -2.0664, -2.2067, 1.6196, 1.7305, 0.0707, 2.583, 3.0678, 2.3181, -1.1084, 0.6239, 0.0684, -0.5634, 0.3964, -1.1351, 2.1352, -0.3326, 0.0154, -1.9355, -1.6958, -2.439, - 0.7328, -2.9417, -0.482, -2.2023, -2.9495, 2.7303, 1.6593, 3.1012, -0.1351, -1.5009, 2.6831, -1.3841, 2.8534, - 0.9353, 0.2922, 1.1229, -1.0831, 1.4624, -2.1965, -1.5566, -2.2156, 0.3964, 2.5906, 3.0749, -2.852, -2.2742, 1.9099, -0.5039, -2.0302, 0.5484, -1.3163, -1.3744, -2.0265, -2.789, -2.2874, 1.4864, -2.6965, 2.3566, 2.5259, -1.0454, - 0.5839, -1.6673, -0.5317, -0.5052, 2.534, -2.6746, -0.7811, -2.697, 1.9285, -1.3578, -2.1694, -1.8594, 0.1941, - 0.9686, 0.052, 2.9747, 0.3174, 2.6193, -0.4394, 2.2741, -1.0031, -1.3714, 2.2587, 1.3278, 0.9741, -2.3848, 0.5114, -1.4888, -3.0077, -1.6748, 0.1681, 2.0837, 1.5419, -2.0378, -0.5175, 2.2315, 1.367, -2.7154, 2.4978, -2.8236, 2.3268, 2.2724, -1.9876, -2.6856, -2.4866, 0.2484, -2.493, -0.0187, -0.9852, -1.8108, -0.5423, 0.734, -0.4557, - 2.8733, -1.9971, 1.3537, 0.5275, -0.984, 0.4198, 2.7651, -3.1232, -0.0816, 2.6628, -0.859,1.7198, -2.9413, -1.7834, -0.6183, -1.1363, 3.0296, -0.9903, 1.0413, 2.3829, 0.0377, -1.2273, -2.5846, -0.4366, -1.8626, -1.1847, -1.1916, 0.3036, -0.1194, 2.7409, -1.1938, 0.289, 0.9348, -0.9222, 2.3865, -1.7052, -2.8687, 0.0809, -0.8635, 2.2507, 2.5413, 2.8789, 2.5528, 2.5513, -2.1448, -0.4085, -2.0401, 0.3846, 1.7859, 2.1582, -0.5741, -0.9074, -3.0192, 1.3483, 3.0438, 0.4721, -0.4632, 2.3713, 3.0616, -2.2039, -1.4748, 2.0555, 1.4388, 2.4993, 0.3168, -1.0172, 0.3529, -0.0724, -0.8947, 0.3938, -2.2325, 2.3008, 1.5834, -2.0352, 0.6247, 2.1543, -0.9252, 0.8864, -2.9184,1.7173, -0.6943,1.223, 0.8452, 2.3889, -2.6242, 0.3858, 2.3227, -2.7122, -0.7454,1.4984, 3.1241, -1.083, -0.9637, 0.9974, -2.4262,1.4927, 1.5499, -0.6862, 1.8856, -2.9329, 2.1711, 2.3663, 1.3698, -0.5768, -0.3262, 2.011, 3.0345, 2.6081, -3.1052, 1.6996, -0.3031, 1.2792, -0.8199, 0.3467, 1.3845, -1.527, 3.0488, 0.9238, 0.1103, -1.7844, 1.402, -1.8954, 0.4428, -1.7957, -2.5781, 2.2343, 2.1197, 0.7736, -0.2487,1.4491,1.9216, 2.0258, 0.4206, -0.2209,-1.0211, 1.8374,1.4431, -2.8259, -0.4021, 1.8643, 1.6598, -0.6981, -2.515, 2.1942, 0.2825, -0.0899, 0.835, -0.7084, -1.2355, -1.3786, 0.4366, 1.0862, -1.1463, -1.5874, 3.0132, 0.0853, -2.1217, -0.4762, -1.3605, 0.4843, 1.934, 1.5475, 2.8199, -3.0046, 1.7361, - 0.5253, -1.9183, -0.372, 1.9136, 0.822, -1.3341, 0.9453, 0.4767, 0.778, -1.8205, 2.9941, -1.063, -1.5453, 0.9467, 1.5572, 0.4922, 2.8849, 0.1944, 2.8799, 0.5266, 0.1468, -2.6691, 2.0776, -0.61, 2.7846, -2.1709, -2.0553, -0.0203, 2.2946, 0.2793, 0.1613, 2.3351, 0.5102, -0.807, -1.1595, 2.4475, -1.8091, -0.4122, -2.4747, -2.1188, 2.3736, - 2.6286, -0.3923, -2.3166, -1.1192, -0.5868, -1.7537, 1.2574, 1.2373, 2.6348, 0.5235, -3.0461, 0.4982, 2.2472, 2.3242, -2.8379, -0.506, -1.7413, -2.1142, 0.7324, -0.7424, -1.2755, -0.4761, -0.5387, -2.8612, -2.134, 2.2473, - 0.8324, 2.5548, -2.7567, -0.1427, 2.1991, 1.5295, 1.6073, 2.614, 1.4985, 1.7458, 1.8226, 1.7525, -0.8006, -2.1335, 2.115, -1.653, 1.3976, -1.6636, 2.3426, 1.9587, -1.6483, -0.1216, 0.8536, -2.075, -0.6605, 1.9033, 2.8514, 2.563, 0.1568, -2.759, 2.93, 3.0744, -2.4924, 2.7483, -0.1206, -2.1098, 2.9852, -2.9826, -0.6826, 1.6933, 1.8756, 0.5675, -0.9109, 2.7372, -0.7518, 3.029, -1.2, 1.6744, -1.2863, 2.8482, 1.1199, 1.7835, -2.0487, 0.5848, -1.0219, 0.6876, 2.0245, -1.2515, 1.0833, 2.7454, -1.6518, -1.1029, -2.4006, -1.7215, 2.945, 1.9577, 1.7907, 1.3826, -2.2406, - 2.3535, -1.2602, -1.7564, 3.0259, -3.0095, -1.5962, -0.768, -0.4004, 0.3713, -1.6508, -2.9152, -1.2097, -2.8931, -1.1599, 0.2755, -0.2323, 0.5896, -2.5229, 2.8545, 0.8194, -1.2235, -2.8337, -1.9785, 2.2573, -1.6541, -2.4314, 0.8092, -0.3178, -2.9178, -1.9814, -1.7914, -0.8717, 1.9335, -0.4176, 2.0123, 0.3016, -1.4941, -1.8125, -0.3544, 1.8571, -1.2032, -1.9974, 3.0217, -0.1716, -1.1472, 1.1935, -1.9267, 2.0144, 1.4832, 1.6784, -1.2307, 0.5658, - 1.0951, -1.9847, 0.1884, -2.7275, -2.6875, 2.7802, 3.1013, 1.7014, 2.1053, 2.6223, -1.5386, -2.2505, -0.4518, 1.7801, 2.7006, -2.4945, 2.0773, 1.797, -2.6919, -1.8366, 1.1242, 2.5021, -0.0674, -2.9907, -1.8211, -1.6265, 2.2353, 2.7663, 2.9158, -0.3706, -2.1404, 1.7241, 2.157, 2.4405, 0.3128, 2.1074, 1.2341, 2.076, -1.0776, -2.3771, - 1.8382, -1.0923, 1.1769, -1.0438, 0.8114, -2.7518, 2.0011, 0.2995, 1.6067, -0.5445, -0.3709, -0.3053, 0.8058, 2.4615, 1.0439, 2.3815, -0.8765, 2.9372, -2.255, 0.0504, 1.5461, -1.537, 0.7459, -2.0043, -2.8943, -1.4331, 0.6304, 2.4814, 2.4318, -2.5982, -1.0008, -1.5233, -1.3096, 3.0227, -0.3079, -0.5796, -2.5518, 1.1964, -3.0993, -1.216, 0.5822, -2.8796, 1.5251, -0.4019, 1.5861, -0.1934, -1.3231, 1.4243, 1.0264, 1.5054, 0.2051, 2.7168, 2.4372, -0.0957, -0.8006, -2.4234, 2.8443, -1.542, -0.4478, 2.8814, 2.7572, -0.2146, 1.5512, 0.6784, -2.7665, -2.2806, -2.8596, 0.3131, 2.1244, 1.3654, -1.4235, -2.9558, -2.5546, -0.3616, 2.4802, -0.0167, -2.3885, -1.9851, 1.8461, -3.1157, 1.8527, -0.4278, 2.838, 3.1372, 1.9577, 0.4254, 0.7939, -0.3938, -1.485, 1.7427, -1.1227, -2.117, -2.1758, 0.2026, 0.3892, 3.0215, -2.0977, -2.2384, 0.3634, -2.3746, 0.1144, -2.646, -1.9981, 2.3071, -2.506,1.6059, -2.7912, 2.9423, 1.5975, -2.9197, 1.5566, 1.2969, -2.4289, -2.3433, 2.3825, 1.4933, -1.0373, -0.8796, 1.3236, -2.7696, -1.7294, - 1.1627, -1.1743, 1.4288, 0.5649, -1.2802, 0.7625, 0.1789, -2.628, 0.6601, -3.034, -2.1164, -0.7382, -2.7552, 0.0751, 0.3532, -2.1032, -2.6098, 1.6983, 1.6511, -1.9201, 1.3286, 1.1548, 1.3791, 1.6664, 0.8845, 3.0245, -0.2057, -0.6331, -1.589, -2.0421, -0.6627, -0.8067, 1.8053, 0.1887, 0.8926, -2.6012, 0.4162, 0.7079, 2.1366, 0.9192, 3.0327, 0.5052, -3.1406, -2.1485, -2.6113, -2.0795, -2.7291, -0.814, -0.8743, -1.21, 1.1028, -0.8773, 1.3943, -3.039, -2.6989, - 1.2341, 2.2177, -1.1823, -0.6112, -0.0726, 0.0483, -0.438, -2.6716, -3.1211, 0.2502, -1.1487, 0.0094, 1.9892, - 0.7051, 2.3774, 2.9746, 2.5266, -0.1762, 1.9575, 2.6117, 0.8982, 0.5659, -1.9529, -0.5937, 2.8234, 2.447, 2.3066, 0.6739, -0.0844, 1.8405, 1.5183, -1.5127, 1.8737, 2.3081, 0.9106, 3.056, 1.515, 0.4366, -2.3359, 1.6865, -3.0465, - 1.1309, -0.8581, 1.9853, -0.0062, 0.4832,1.8503, -2.0767, 2.696, -0.9374, 2.9267, -1.762, -2.5754, 2.3764, 0.2067, -0.5482, -2.4101, -1.541, 1.5832, -2.3973,1.7336,1.5725, -1.9263, 0.2257, -1, 1.9657, 2.8777, -0.31, 0.224, 0.3002, -2.1666, 0.1501, -0.2111, -2.619, -3.0517, 0.8147, -0.717, 1.3419, 2.2627, -1.3101, -0.0046, -0.1161, -0.2078, - 0.9058, -2.1087, 1.5052, -1.108, 2.5317, 1.1074, -0.2161, -1.805, -0.1221, -0.3539, -0.0179, -1.1773, 0.453, -2.842, 1.5306, -2.1325, -0.9571, 0.1311, -0.8164, -1.6703, 2.9963, -2.7649, 2.4727, 1.4029, -2.7967, -0.4889, 2.222, 0.8158, 2.2378, -0.019, -2.6618, -1.3824, -0.6242, -1.1363, 2.4618, -2.9879, -2.1144, -0.7248, 0.2867, 0.7133, 2.962, 0.9672, 1.8393, -0.303, 1.8966,0.1966, -2.4525, 1.8146, -2.6542, -2.5839, -0.4989, -1.6177, 2.2954, -2.6398, 1.0999, -2.9521, -1.6101, -2.1416, 1.7776, -2.8499, 1.6192, -0.7136, -2.8679, 1.887, -2.4305, 1.4267, -1.3502, - 1.1618, -0.7824, 2.5383, 3.0025, -1.6097, 2.6159, -2.653, -2.9136, 0.1538, -2.5254, -2.8827, -2.2423, -1.5594, - 0.7378, 0.3748, 0.8031, 2.0336, -0.8782, 1.8463, -0.2732, -1.7588, 0.9432, -1.5349, 0.1235, -1.0372, 2.7807, - 2.5879, 1.4101, -2.8285, -2.1778, 0.3301, 2.3092, -2.5479, 1.45, -2.1798, -0.7183, 2.7174, -2.9269, 1.6002, -1.6817, 1.4951, 1.9189, 0.1424, -2.0772, -1.2025, -2.6646, -1.5999, -1.7565, 2.8211, 0.4067, 1.1252, -0.7485, 0.9608, 2.7346, 0.7206, -1.2929, 0.7963, 1.0629, 0.3919, 3.1127, -3.0913, 2.1238, 0.745, 1.6833, -2.7769, -1.262, 1.0222, 2.4608, 1.8735, 2.0672, 0.775, 0.8999, -2.811, 1.2146, -0.5013, 2.5488, -0.5567, -0.5415, -2.6046, 1.1966, 0.1596, -2.5525, -0.2889, 3.0316, -2.1736, 0.3563, -1.3844, -2.422, 1.6586, -2.9336, 2.777, 0.2942, 0.4966, 2.1746, 3.0823, -1.7539, -2.0568, -2.5794, -2.9963, -2.0453, 0.968, -2.8622, -1.9851, -0.5789, 2.6955, 2.1798, 1.0244, 3.0927, 3.1279, -2.2631, -2.9705, 0.7468, 0.5866, 1.0908, -0.7239, -2.2071, 2.6251, 2.377, -1.4254, -1.7399, -1.6288, 1.5557, 1.6631, -3.1362, -3.059, 2.5207, 2.6327, -1.2632, 2.7774, -2.0316, 1.7865, -1.0435, 0.2074, 2.8553, 0.1644, 0.6032, -1.0163, -1.2614, -3.0251, 1.6606, -0.9564, 0.3834, 1.6051, 1.9282, -2.3178, 1.6622, 2.4132, -1.5233, - 1.8394, -0.1786, -1.4423, 2.2074, -2.0814, 2.8784, -1.2248, 0.8623, 1.8549, -0.8915, 0.6093, -1.1337, -1.7246, 0.8837, 3.0359, 1.8266, -2.6569, -1.7067, -2.252, -0.9364, -2.6598, -1.217, -1.1099, -2.2857, 1.1417, 3.1056, 1.1317, -0.5257, -0.114, 2.4784, -2.7697, 3.0105, -1.3621, -2.2672, 1.3317, -2.4293, 0.6992, -1.7386, -2.4953, 1.9345, 1.2824, -0.1252, 0.5063, 1.9009, -0.4149, 0.0702, -0.0984, -0.0978, -1.3646, 2.7504, -2.5913, -1.3226, - 0.6256, 2.2281, -0.9418, -0.889, 0.3359, 1.5889, 1.0745, -2.4922, 1.0435, -0.229, -2.0223, -1.8989, 0.7528, 0.2716, -2.0842, -0.0803, -0.9137, -1.5308, -2.1054, -2.5743, 0.355, -2.6164, 1.6795, -0.7863, -0.1923, 1.5714, -0.2946, 1.7681, 1.5444, 1.8985, -1.2025, -2.9515, 2.532, -1.7701, -0.8912, 1.7122, 0.6611, -2.1975, -1.8906, -0.7381, 2.7095, 0.7364, 0.8031, 2.1472, -0.5385, 1.0253, -0.8257, -1.9229, -0.2193, -0.2699, -0.2929, -3.1369, -0.0157, 0.2244, -1.6818, 0.6648, -1.2343, 1.5563, 1.28, 2.8342, 2.2926, 2.9997, 0.0427, 2.8468, -1.6474, 2.9671, 1.9689, 0.0118, -2.6522, 2.6743, 0.8031, 0.9451, -0.7928, -1.2748,0.7698, -3.0023, 3.1354, 0.7087, 2.5889, -1.4858, 1.7081, -0.5555, 0.2937, -0.4254, 2.6388, 1.4503, 2.9413, 0.5326, 0.2134, -0.7581, 0.0353, 2.425, -2.2127, 0.2541, 0.777, - 0.3771, 2.7778, 2.1043, -1.0074, 2.6724, -0.1199, -2.1535,1.7545, -2.1107, -1.4963, -0.555, -2.47, -0.5708, 0.2109, -0.7501, -1.2329, -0.154, 2.0276, -0.6942, -2.1388, 0.776, 1.9747, -1.2612, -0.1389, -0.5726, 2.105, 2.1645, - 0.5481, 2.8294, -1.169, 1.5918, -0.195, 1.4284, -1.463, 0.7543, -1.5398, -2.0106, 1.9982, 1.3547, -2.3487, 1.1028, 2.3805, -0.0937, 0.9587, 2.8299, -0.7674, 0.0742, -1.443, -2.4955, -0.7802, -2.7595, -1.262, 0.7254, -0.7879, - 2.6696, -2.3528, -2.7404, 2.4825, 2.1887, -0.1706, 2.3743, -3.0047, -1.9176, -1.536, -0.3231, 0.3271, -1.9144, - 2.7555, -2.5669, 3.0184, 2.6312, -0.9324, -1.218, 0.6325, -0.8862, -1.392, -0.1283, 0.682, 2.5704, -0.8436, 2.9038, -1.937, 2.2679, 0.774, 1.5945, 2.2452, -2.1158, -2.7475, 2.1954, -1.0511, 1.4664, -2.7019, 0.7469, -1.8564, 1.7391, -0.5685, 1.9035, -2.3785, -2.6962, and 1.5287.

Phases of elements in the third sequence are sequentially -2.2306, -0.5767, 2.0281, 0.1622, -0.4484, - 0.3445, 0.8597, 1.7544, 1.4444, -2.7726, -1.6179, 1.322, 0.3014, 2.3723, 1.5751, -2.427, -0.3576, -1.9507, 0.0197, 2.7292, 1.2944, 1.8685, 0.641, -0.3846, -0.6026, 2.0471, -1.4985, -0.7106, -2.9888, 2.7138, 2.2861, 0.8861, 1.9366, 2.8947, 3.0326, -2.3946, -2.8644, -1.5241, -0.0836, -2.8714, -1.5082, 1.1446, -2.5045, 0.4777, -2.3713, 0.1649, 2.6743, 2.438, 0.6771, -0.2446, -1.621, -0.3445, 2.4618, 0.7065, -3.013, -0.6374, -0.7475, -2.4782, -0.3108, - 0.7439, 0.9115, -1.8658,1.78, -0.556, -1.2966, -3.0979, -1.2241, -0.1467, 0.7989, -1.1337, 0.9154, -1.5081, 2.2929, -1.4077, -2.4782, 2.7304, 1.7671, 2.4558, -0.5028, 1.9572, 3.009, 3.1165, 0.5495, 2.1501, -1.7948, 0.567, 2.0922, - 1.6549,1.7898, -2.2649, 2.3313, 0.4936, 2.6871, -2.3781, -2.0446, 2.182, 2.7237, -1.9138, -1.2954, -0.3829, 0.0135, -1.7907, -1.7965, -0.859, 1.0062, 2.7518, -1.4117, 2.8507, -0.8267, 2.0656, 0.8203, -1.4787, 1.8405, -0.7081, - 1.8798, -3.1377, 0.1247, 1.269, 2.8567, -1.286, -2.0734, 1.6061, 1.3802, 2.1813, -0.0515, 0.214, -2.2358, -3.0939, -1.7097, -0.5646, -2.2512, 1.0922, 3.0854, -3.0165, -0.5697, 0.4129, -0.4235, 3.0123, 1.8452, 1.556, 0.4429, 0.87, 1.9883, 1.7262, -0.9641, -1.9575, 3.1265, 0.0211, -0.176, -2.2682, 0.0189, -1.2266, 0.2653, -0.1751, 1.3074, - 2.0919, -2.5978, -2.8645, -1.0477, 0.1586, 1.163, 0.9297, 1.5128, 2.2677, -2.9004, 2.6528, 2.0742, 0.7141, -0.8797, -1.8222, 2.9962, 0.9505, -1.6144, -1.3935, -0.1368, 1.5053, -0.3879, -1.6422, 0.1382, 1.7192, -0.5728, 2.0902, 2.2847, -0.2974, -0.3978, -1.7622, 2.9205, 0.0548, 2.9393, 1.7529, 2.0078, 1.4811, 3.0797, 0.1706, -0.2571, 1.9848, -0.4618, -0.8422, -0.6513, 0.053, -0.733, -1.0473, 0.964, -0.0765, 2.8176, 0.9361, 1.8088, -1.2842, -0.6472, 0.5957, -2.6208, -0.9366, 1.538, -0.0005, 2.1453, 0.4209, 2.8374, 3.1404, 2.9413, 0.0023, 1.9583, 1.631, -0.6061, 1.1704, 1.4008, 0.5733, -2.1848, 0.0603, -2.2193, 2.0156, 0.9267, -1.3102, 2.5175, 0.727, -3.0444, 0.7659, -0.4542, -2.2025, 0.0677, -1.9511, -1.1986, -2.3375, -1.9482, -2.9605, 2.5177, 2.8212, -1.1259, 0.2841, 2.5706, -2.808, -0.2261, - 2.5412, 0.006, -2.1568, -0.4797, 2.7644, 2.9882, 0.1153, -1.7352, -0.6911, -3.1071, 2.7283, -0.7993, 0.6259, - 0.8984, 0.4954, -2.5657, -2.6608, 2.8718, 2.4257, 1.209, -2.6997, -0.3953, -1.5401, -0.5684, 1.341, 2.707, 1.2048, 2.9857, -1.8436, 0.3991, -0.6547, 2.5595, -0.2005, 2.5072, 1.1226, 1.8429, 0.3379, -0.5717, 1.0894, 0.4266, -0.7649, 1.5978, 0.2446, -1.3988, 2.274, 1.0623, 1.0844, 0.2966, 1.8057, -0.365, -2.1274, -1.8911, 2.4966, -1.519, -1.6288, 2.1351, -3.0616, -3.0523, 2.372, -1.106, -0.9851, -2.7809, 1.043, 0.2236, -2.4537, 1.0829, 2.1141, 3.0343, -0.0417, -1.4101, -0.1536, 0.1667, 2.2848, 0.1992, -0.9025, -1.075,1.8331, 1.1002, 2.9287, 2.1031, -2.1244, 2.0764,-0.3756, -0.7473, 0.2375, 2.4538, 2.2285, -0.2525, 0.984, 0.5377, 3.0195, -0.3275, 2.4521, 1.937, 0.2291, -0.7051, -2.2637, 2.5577, -1.6227, -0.5221, 2.7623, -1.7562, 0.9002, -1.3417, -1.5674, 0.4957, 3.0047, -2.6709, -0.7203, 2.9133, - 2.9345, -1.9911, -0.6751, 0.8407, 3.0569, 1.6982, -2.1219, -0.0154, -2.9123, -0.7898, 1.5207, 2.9583, 2.5853, - 0.4872, -1.0295, -1.7558, 0.0506, 2.1378, -0.7748, 0.3991, 0.3265, 2.5709, 0.4889, 0.7197, 3.1269, 1.3631, -0.2064, 2.5337, -1.3274, 2.4196, 0.0713, 1.4629, -2.9585, 1.3289, -1.1615, -0.0245, -1.7125, 2.0118, 1.6004, 2.3844, - 1.0695, -1.0468, -0.3664, 0.1951, -0.7128, -0.8527, -1.2486, -3.0241, -3.1406, 0.7028, -2.3031, -0.183, 2.2516, - 1.2026, 0.5421, 2.388, 0.5785, 1.1045, -2.1363, 1.8898, -0.1539, -2.9703, -1.4584, -1.194, -1.4839, 2.8309, -1.7104, -1.5782, -0.6903, -0.0896, 1.255, 1.0623, -0.7675, 1.5116, 2.7541, 2.1763, -2.2446, 1.4737, -0.8998, -1.1078, - 2.8522, 2.8003, 0.0183, -1.3482, -0.3758, -0.1711, 0.9903, 2.9662, -2.369, 0.0751, 3.1332, 0.0398, 2.3083, -2.3431, -1.5961, 2.1378, 2.8421, -1.6101, 2.5852, -2.2042, 2.4007, 2.2683, -1.8114, 2.4978, 2.3623, 2.4113, -1.4882, - 2.4555, -2.6256, 2.946, 2.7878, 2.2618, 0.6205, 2.1172, -0.5291, -1.6313, -1.4632, -0.8573, -1.9425, -1.043, - 1.3526, -0.2063, 0.7948, -2.8231, -2.9657, 1.3184, 0.2239, 0.6607, -1.2226, 1.2459, 1.1619, -1.4765, -2.8175, 0.3325, 2.4349, 0.7238, -1.8374, -1.1975, -0.3878, -2.3852, -1.6918, 0.9247, -1.4446, 1.9626, -0.5446, 0.8392, - 1.4251, -1.4436, -2.2898, 3.1148, -1.3585, -0.1261, 1.871, 1.5963, 3.0023, -0.9586, 0.8594, -2.6591, 0.4748, - 0.6127, 0.2318, 1.086, -0.9696, -3.1042, -1.7275, 0.1739, -0.7997, -2.0477, -1.0065, 2.3995, 1.4762, 1.303, -0.2464, 2.1039, 0.0609, -1.4262, 2.5147,1.5759, -2.0002, -1.0864,1.1616, -2.7175, 2.6723, 2.0165, 3.0805, -0.9596, 0.8281, -0.3266, 3.0428, 2.5257, -0.0124, 1.866, 1.9336, 2.9649, 1.891, -0.7945, -1.223, -1.3892, 2.5287, -2.3001, -2.9272, 1.3024, -2.9782, 2.2999, 2.0059, -0.7233, 2.0229, -0.1382, 0.1251, -0.1415, 1.926, 1.6622, -1.0615, -2.5257, - 1.8099, -1.9081, -0.1394, -0.8794, -0.9171, 0.2837, -0.9253, 0.0924, -0.9012, 3.0689, -1.6614, 1.6986, -1.908, - 2.923, -1.0963, -2.574, 1.0895, -0.2412, 1.9335, -2.6677, -1.4364, 2.6394, 1.4867, -2.7494, 2.4013, -0.2346, - 1.8718, -0.7885, 2.2552, 0.8667, -1.3678, 2.2333, -1.4705, -2.6787, -1.5351, 1.3406, 0.2725, -1.0347, 2.5095, - 2.2793, -2.5632, -0.0212,1.1081,0.6482, -0.2339,1.4003,2.0805, -1.8211, 2.1921, -0.3474, 0.1233, 0.2081, 2.6602, -1.0734, 1.1957, -2.3613, -1.9911, 0.3292, -2.1641, -0.1103, 2.2464, 0.8471, -0.2099, -2.6896, 1.0531, 0.6899, - 2.9319, 3.0246, 2.0709, -1.5837, -1.163, -3.0516, 2.4745, 2.6401, -1.3244, -0.005, -1.088, 2.5462, 2.6322, -1.1996, -1.2405, 0.8965, -2.6332, 0.402, -0.0964, -0.4399, -2.8718, -2.0207, 0.0816, 0.8667, -0.6277, -0.5851, -2.1163, 1.2013, 1.9538, -0.7748, 1.831, 0.6056, -2.785, -2.0163, -0.83, 2.2236, -1.7635, -0.6848, -1.2773, -2.8182, -1.2477, 0.4815, -1.2119, 2.7338, 1.3563, -0.5708, 1.9825, 1.7659, -0.4178, -0.4546, -1.016, -0.4949, -0.2093, -2.4499, - 0.4748, 1.7125, 0.0315, -0.4058,1.6417,1.1229, -1.4578, 0.8532, -1.5073, 2.7482, -1.8888, 0.7683, -3.1181, -2.935, 0.1173, -2.8116, 0.665, 1.2997, -2.7404, -2.4662, 2.8169, -0.45, -1.7455, 0.7852, -2.5797, -0.5032, -2.7531, - 1.1005, -0.3135, -1.172, 1.947, 0.9225, 0.8006, 0.2843, -0.6361, -1.8655, -2.7341, -1.2997, -1.0882,1.1631,2.8025, 2.2401, -1.4136, 0.4408, -2.1093, -0.4315, -1.9058, 2.2097, -1.6869, 3.006, 1.0571, -1.2341, -2.4823, 1.5597, - 1.2837, 1.2756, 1.3547, 1.9643, 1.59, 1.4263, -1.3503, 1.2692, -2.9832, 1.8731, 2.9544, -0.1642, 0.9706, -0.1929, - 0.319, -2.5349, -2.3841, -2.4976, 0.8833, 0.6438, 2.9818, -1.6488, 2.7493, -0.2262, 2.4657, 2.8291, 2.1306, 0.6285, -1.1469, -0.1706, 2.0029, -1.6355, 0.0017, -2.3818, -1.6582, -1.9786, -1.441, 2.8807, -0.5449, 2.9761, 2.9611, - 2.0166, 2.6884, 1.0146, -2.8594, -2.7513, 3.0547, 3.0875, -0.7067, -1.6041, 2.8499, 0.7416,1.3834,1.6878, -2.5718, -2.0879, -0.0793, -0.5967, 0.7019, -0.6591, 0.7401, -1.0661, -2.7181, 0.9717, 1.093, 0.8285, -1.2277, 0.1105, 2.2829, -0.375, 0.8297, -1.0505, -1.3625, 0.2018, -1.4543, 1.5996, -2.9218, 2.6421, 1.9627, -1.6973, -0.7397, - 1.0435, 0.2126, -1.73, -0.4721, 0.7848, 1.6966, -3.0903, 1.7579, 2.2923, 0.7631, 2.3011, 2.0214, -2.2305, -1.2063, 1.7211, -1.3049, -1.6436, -1.536, 1.457, -0.0763, -1.2178, -3.0461, 0.0586, 1.0467, -2.522, -1.3759, -1.957, - 0.0395, -1.5381, 0.0104, -2.638, -0.2271, 1.3345, -1.3344, 0.5146, -2.9337, -1.8477, -0.3538, 1.8041, 0.2478, - 2.2368, 0.8208, -0.1483, 1.049, 3.1216, -0.6051, -1.3298, -2.6964, -1.2548, -0.9426, -0.2674, 0.6928, -1.933, - 1.7147, 0.2974, -1.7234, -3.1197, 2.8079, 1.1588, 1.7229, 0.8186, -0.1874, 2.9207, 1.1132, -2.0132, -1.9035, - 0.5995, -0.8759, -1.4602, 2.0481, 3.1287, 2.7604, -0.7074, 1.299, 0.3544, -0.7573, -2.9039, -2.2536, 0.9487, 1.9808, 1.7251, -1.5303, 2.1355, 2.8078, 0.397, 1.3443, 1.2524, -0.987, 1.4577, 2.6957, -2.8084, -1.9988, -1.2708, 2.1682, 2.1587, -1.9398, -0.936, -3.099, -2.7474, -2.3893, 1.775, 0.5335, 1.1825, -2.0175, 0.2358, 2.945, 0.3989, 1.7132, - 0.1918, 2.6042, 1.8222, 1.2966, -1.4807, 2.7058, 0.6844, 1.03, 0.3526, 1.8222, 2.7203, -0.0329, 2.8696, 1.8351, 2.3964, -2.4142, -3.0155, -1.9808, -1.0195, 2.4342, -1.8842, 1.2639, 0.7436, 2.3911, -1.1392, 2.0208, -0.5777, - 2.2151, 1.8336, -0.4648, -1.6229, -0.7431, 2.4524, 1.3634, -1.8771, -2.0382, -2.6858, -0.7279, 2.7613, 0.6855, 2.5542, 2.8403, -1.478, 2.467, 2.2639, 0.9234, -2.4641, -2.9125, 2.8638, -1.5852, 2.7918, -0.2184, -0.3084, 2.0235, -1.997, 1.0882, 1. 7925, 0.9528, -1.7154, -2.5727, -0.8688, 2.5477, -0.1116, 1.3643,2.7746, -1.5351, 1.6927,0.9302, -1.721, 0.8451, 0.2847, -2.3848, -2.6412, -3.1367, -0.7973, -2.4086, 2.1955, 0.9171, 0.657, -0.129, -0.205, -0.5057, -2.2072, 1.1248, 0.5316, 2.2981, 0.5839, -2.3143, 1.8511, -2.2429, -0.2561, -2.5957, 2.6159, -0.5208, 1.5618, 2.5285, -1.6926, -2.632, 1.8247, -2.0125, -0.6541, -0.2978, 1.695, 1.1367, 0.5571, -2.3909, -0.7576, -1.6166, - 1.4846, -0.8979, -2.6454, -1.4227, -2.9234, -0.4302, 0.062, -1.0051, -2.2186, 1.9912, 3.136, 2.0785, -0.2131, - 2.6656, -2.6995, -0.0921, 3.0856, 2.1465, 2.4343, 2.1434, -0.5061, -1.3823, 0.4358, -2.5938, -1.7153, -1.296, - 0.5057, 2.9901, 1.2278, 1.4613, -0.694,1.9965, -1.7379, -0.5363, 0.802, -2.3984, 1.1146, 0.7519, -2.5928, -0.2324, -3.0591, 1.8448, 0.4675, -2.56, -1.3058, -0.1331, -0.541, -1.6535, -1.3112, -1.3849, 0.7717, -2.737, -1.1771, - 2.9505, -0.0557, -0.9701, -0.746, 0.4234, -2.6934, 2.7895, -0.3659, 0.5512, -0.8756, -2.7684, -0.9947, -0.2066, - 2.7608, 2.0145, 2.0894, -2.1826, 2.1581, -2.9187, 1.8661, 1.6179, 1.6096, -2.8399, -2.162, 2.3772, -1.2317, 2.1551, 2.9892, -2.224, -1.0121, -1.0246, -1.041, 2.323, -2.3273, -2.5375, -0.0737, 1.4976, -2.1083, 1.7119, -1.9844, 0.9668, -0.5661, 2.252, 3.1316, -0.2229, -1.4298, -1.8732, -2.7368, 2.9249, -0.0609, 2.3354, 2.8103, 2.2641, - 2.3153, -2.3686, 1.768, -1.5033, 0.5406, -0.2638, -2.4793, -1.1065, 3.1397, 0.4636, -2.3099, 2.7417, 2.5525, 1.0461, -2.2524, 1.4767, 1.6451, 1.9908, -1.8701, 2.4714, -1.0517, -1.3241, -1.4929, -0.9639, 1.9198, 0.6053, 0.2234, 1.9138, -0.0395, -2.2628, -1.2952, -3.0938, 0.1926, 2.8808, -2.5816, 0.5451, 1.0839, -2.4845, -2.6729, 1.6518, 2.1839, 2.3542, 2.877, -0.7642, 2.6634, -0.1151, 0.2246, -1.4157, -1.0347, -1.6418, -0.8169, 2.2136, -2.9525, - 0.0041, 1.8036, 2.5519, 2.0653, -0.7756, -2.3947, -1.935, -0.7307, 1.7551, 0.9005, 0.84, -2.647, 3.0327, -0.9403, 2.0691, 1.4241, -2.546, -0.0531, -2.0667, 3.0945, 1.6511, -1.3153, -0.189, 2.1558, 1.3133, 1.0742, 3.0224, 1.0646, 1.5618, -2.8411, 1.7591, 1.1983, 2.1662,1.3946, 0.1331, -1.5446,1.4907, -0.1957, 1.3724, 1.6304, -1.5483, -0.856, 0.9975, 1.1045, 0.8391, -2.569, -1.4184, -2.8662, 0.1187, -0.8872, -0.27, 0.6172, -1.1078,1.9433, -1.8972, -0.5412, -3.0871, 2.8471, -0.8133, 0.4368, 2.9102, -1.854, -0.8913,1.2649, -0.0954,1.2467, -1.6567, 0.0915, 2.5621, 1.0751, 2.6193, 0.7525, 2.0232, -2.4385, -1.4943, 3.0367, 1.4246, 0.0073, 0.0671, 1.0965, -1.9728, 3.1041, 1.0015, -1.3881, 0.9807, -0.8629, 3.0446, -2.4646, 1.3547, -1.2937, -2.3564, -2.6468, 2.4328, -2.6555, 1.2938, -2.7767, -2.0584, 2.7489, -2.0829, 1.9662, -2.9502, 1.3246, -0.6619, -0.6324, -0.6808, 2.4381, -2.6101, -1.9539, -1.1808, 0.9372, 0.395, -0.4894, -0.8788, -2.7351, -0.6774, -0.1537, -2.6361, 2.9823, 2.3301, 2.8699, -1.5624, 2.8698, -0.285, - 3.0689, 1.1182, -0.1271, -3.0244, -1.4988, 0.2154, 2.5264, -0.3668, -1.7097, -1.5218, -0.4177, -1.4593, -1.5794, -1.0177, 1.6347, 2.263, -0.6554, -1.3322, 1.0158, 0.4244, -0.6564, 0.8558, 1.3191, -2.3044, 0.8333, 2.9107, -1.6173, 0.6946, 1.7501, 1.4471,0.5692, 1.5901, -1.6738, 2.0367, -1.6104, -2.3508, -2.6878, -1.2225, 0.4753, 0.0351, 0.1723, -1.0105, 1.0363, 1.5015, 0.7149, 1.2955, 0.8503, -0.1095, 2.5814, -1.158, -0.9966, -1.7494, -3.141, 2.0131, 1.105, -2.9395, 1.6005, 2.4537, -0.3047, -1.4934, -0.223, -1.0653, 0.4324, -2.5905, 2.9295, 0.5867, -2.7434, 2.0932, - 2.2076, -1.4028, 0.947, -2.9329, 1.5987, 1.4094, -2.6474, -0.4687, -1.083, 0.9833, -1.6888, 1.1776, -2.7221, 1.1524, 1.2595, 2.687, -2.7747, 1.5505, 2.1274, -0.8865, 1.7654, 0.6262, 2.8519, 1.6889, -1.1902, 1.5068, -0.9887, 2.8078, -0.238, 0.5326, 2.8266, 2.3338, 1.8189, 1.2467, -1.7145, -2.536, 0.7606, -1.7961, 1.9703, 3.0276, -1.9763, 2.4388, 0.4055, 0.7502, -2.5965, 2.7355, -0.3233, 1.2171, 2.2241, -3.0884, -0.3431, -0.9378, -3.0093, -1.0239, -2.601, 0.8176, 1.5205, 0.8773, -2.037, 0.257, -1.806, 2.4055, 0.898, 2.8483, -2.2727, -1.0285, 1.7747, 2.5847, 1.1702, - 1.8775, -0.8375, -2.2643, -1.1412, -0.4581, 1.0635, -0.3518, -0.2723, -1.323, -1.037, 0.2468, -3.0231, 1.9303, - 1.2786, -1.2358, 1.1319, -1.876, 2.4051, 2.9291, -1.6161, -2.2613, 2.6127, 1.1956, 0.0792, -1.8121, 0.0035, -2.3764, 2.1224, -1.6855, -0.7898, 2.4341, 0.436, -1.505, 2.5995, 1.5763, 1.2697, 0.2046, 2.9472, 2.4122, 2.9076, -2.774, 2.4835, -0.1556, 1.1247, -2.2667, 2.8676, -0.4149, 1.2386, 2.6034, -3.0222, 0.7106, 2.9603, -0.8075, 1.1908, 1.027, -0.3771, -2.4485, 0.4639, 1.3063, 0.0149, -2.3588, 1.9641, -1.8777, 1.2114, -2.2683, -0.3626, -1.4844, 2.5147, 2.8452, -2.2903, -2.0009, 2.3382, 2.1807, 2.0095, -0.253, 2.8319, 1.693, 2.0196, -0.6993, -2.0804, -1.1508, 1.8229, 0.5927, 1.1095, 1.8924, -1.754, -2.1049, 2.6611, 2.3518, 0.7987, 1.681, 1.7554, 1.5361, -0.5657, 0.1295, 0.5111, 1.1667, -2.7066, 0.5353, -2.4773, -2.2481, 0.6412, -0.2446, 1.0654, 0.2361, 1.8612, 2.5272, 2.1814, -2.2306, 2.4291, 2.7505, 2.2791, -0.1029, 0.9438, 2.7048, -1.2447, -1.232, 2.7742, -0.811, 1.5138, 2.6212, -1.1471, -1.3193, -1.1853, 2.39, 0.7889, -0.6834, -0.3049, -2.5989, -1.5438, 2.1397, 1.1204, -1.2148, 1.0686, -0.1231, 0.2866, 1.6742, -0.4466, 2.433, -0.9408, -0.8174, 2.6134, -0.9354, -3.1182, -1.8083, 0.8987, 2.8712, 1.3238, 2.5455, -0.0685, 1.6742, - 2.9461, 1.8058, -3.0044, -0.3412, -0.5279, -0.1627, 0.3876, 0.9508, -1.1904, 1.1176, 0.3429, -2.638, 0.3318, 0.2495, -2.0004, 2.1428, -1.3106, -1.3848, 1.7615, -1.423, -1.7357, -1.0332, -2.1882, 2.5138, -0.4607, 1.1755, -1.064, - 0.2243, 0.9124, -2.3395, -1.9747, 1.7598, -2.8017, 0.3165, 0.416, -1.9405, -3.095, 0.9684, -1.4523, -2.677, -2.5885, -0.6626, -2.2878, -3.0863, 1.1021, 1.2072, 0.7671, 1.5649, 1.9023, -0.0971, 0.8473, 1.5099, -3.1083, -2.8145, 1.6798, -2.1391, -0.9526, -2.0059, 1.4719, 2.3483, 1.5087, 1.8296, 1.2535, 1.5061, -1.6992, 2.0694, 3.1276, 2.6487, 0.6129, 1.8244, -2.7882, 3.0917, 1.5633, -0.7345, 2.4244, -2.1933, -2.0995, 1.1928, 0.3133, -2.5147, -0.8156, - 2.1069, -1.3503, -2.6317, 0.0258, -2.6783, 2.4239, -2.8044, -2.2983, -1.1039, -0.2164, -1.1416, 1.7551, 2.8108, 2.1295, -2.0959, 2.2941, 1.4157, 3.0803, -1.9785, -1.2464, -0.5639, -0.7461, 2.0492, 0.7872, -1.0032, 1.5091, - 2.6107, -0.6688, 0.592, 1.4021, 2.5731, -2.1164, 0.5657, 1.9779, -0.5721, 2.8203, -2.1246, 2.9874, 2.2432, 3.0527, -1.3858, 0.6265, -0.2621, 0.5108, 1.2269, -1.2095, -2.1927, 0.5921, 2.8224, -0.5005, 1.7834, 2.0833, 0.1636, 1.0704, 1.6163, -1.4678, 0.746, -2.4797, -2.1032, 1.5698, -1.318, -2.3716, -2.5068, -0.3385, 0.5733, -2.8056, 1.5324, - 0.1916, 2.78, -0.446, -2.3767, -0.6442, 2.2653, -2.8799, 1.2935, 2.4355, 0.4865, -2.9831, 0.4073, -0.8048, -1.7554, -2.9253, 1.6532, 2.1052, 2.346, -0.9641, 1.1007, -2.719, 0.2762, 2.0565, 0.186, -2.8221, -1.1711, -2.5563, -0.0007, -2.1785, -1.8199, -2.4948, 0.49, 1.4202, 2.0062, 1.5324, 0.8934, 2.1538, 2.3868, -0.8077, 2.2088, 1.0823, 2.6354, 1.7841, -0.7389, 1.9662, -0.765, 2.8875, -3.0603, -3.0265, 0.5865, -1.4856, 2.7975, 1.0421, 0.139, 2.6463, -2.5194, -2.4089, 1.3707, -0.6255, -1.6194, -2.6036, -1.566, -1.9877, 0.5234, 1.8123, -0.8735, -1.7486, -2.1002, -0.1181, -1.9464, 2.9321, -1.7665, -1.1851, -1.7511, 0.2604, -1.8809, -3.0966, 0.1183, 1.2612, 0.2301, -3.0784, -2.4263, 1.7153, 0.6189, 2.1472, 1.1517, 2.2308, 0.048, -2.8244, 1.7713, 2.1564, -0.5113, -1.0179, 0.8405, -1.9442, 1.4702, -2.6455, 3.0587, 1.0048, -2.9809, -1.1982, -1.2569, 2.1155, 1.3535, 1.1877, -0.6037, -2.7627, -2.5318, 0.6772, 0.4697, -0.893, 2.9112, 2.2189, 2.8734, -2.9307, 2.3146, 0.933, -2.0083, -0.5891, -2.3615, 2.3176, -3.0912, -2.2732, 0.1091, 1.2364, 2.9925, 1.8992, -2.3659, -2.6112, 0.7131, 0.0813, -0.3478, -0.3238, 0.5795, -1.6445, 0.7921, - 1.4101, -0.4788, -2.4966, -2.4079, 1.167, -0.7732, -0.855, -0.0694, -2.6013, -2.5457, -1.1254, 2.4957, 2.5938, - 1.353, 1.7698, 2.6342, -0.9802, 0.4206, 1.7794, -1.9821, 3.1247, -0.8408, -0.3734, 0.2398, -1.2056, 0.5617, 2.3448, 2.9487, 0.8179, -2.3718, -2.0507, 2.4754, -0.9178, -0.4486, -2.9188, 1.1968, -2.6561, 0.5327, 0.4523, 1.6068, 1.0042, 1.5349, -2.7779, 0.4626, -1.1521, -2.0862, 1.0307, -0.4285, -3.1011, 2.9205, 0.8186, -1.029, -2.2889, - 0.0855, -0.4366, 2.6178, -0.7868, 0.0588, 0.1456, -0.1804, -2.9545, -0.3876, 2.3508, 2.8411, 0.8119, -3.0537, 1.7557, -3.0008, -2.3665, 0.39, 0.9941, 2.1413, 3.0925, -1.9775, 0.6968, 0.1508, -0.9286, -2.6386, 1.1663, 3.0008, 1.1786, 0.0786, 2.0138, 0.7796, -0.4264, 0.876, -2.7608, -0.1399, -2.5491, -2.4892, -2.6759, -1.9906, 0.228, 2.515, 1.4885, 2.5471, 1.8231, 2.0186, -3.0752, 2.6877, 2.1497, -1.0958, 2.7314, 2.1246, -2.185, 0.9539, 1.5611, 1.2896, 1.3601, 0.2332, 0.0857, -0.5509, -2.7313, 1.7218, 3.1111, 2.9491, 0.6416, -0.1273, -2.5108, 2.6207, -0.6769, 1.5678, -0.5472, 1.7911, -0.4203, 1.5576, -0.4039, -2.451, -2.3416, 0.4876, -2.3323, 1.9416, 0.8699, 0.8765, -1.2851, 1.4656, 1.4882, -2.6958, -0.0753, 2.0479, -2.1906, 0.9224, 2.3031, 0.6213, 1.4072, 2.4514, 2.7112, and 0.8728.

Phases of elements in the fourth sequence are sequentially -2.213, -1.502, 1.4152, -0.3643, -2.1123, - 2.6015, -0.3799, -1.9509, 1.5314, -0.8247, -0.5483, 1.825, 2.0729, -0.0496, 2.2695, 0.8174, -1.9048, 1.6014, 1.2412, 1.7919, -3.0122, -1.8302, 0.8534, -1.8348, -1.6293, 1.1722, -1.4697, 1.8495, -2.878, 0.5686, -0.0672, -2.9298, 2.5202, 0.4651, -1.4185, -1.7772, -0.5531, -2.4106, -0.5145, -0.5603, 2.1254, -2.1428, 0.8169, -0.1949, -0.3622, -0.9933, -2.1166, 2.3659, -1.8744, -2.1223, -2.8655, 1.9, -1.1997, 2.0323, -1.2144, -1.5223, -1.8229, 2.6752, - 1.7475, -0.1714, 0.0145, -0.3755, -2.8789, -1.2779, -0.2461, 2.0552, -0.9817, -2.3763, -2.2545, 1.6471, 2.3054, 0.5602, 2.6279, -1.4061, 2.8669, -1.5968, -2.0524, -0.0661, -0.8399, 0.7441, -2.63, -1.7142, -0.7342, 0.1041, 0.2898, 2.3413, -1.2904, -1.9834, -1.6048, 1.2423, -2.2331, 3.0898, 0.5619, -1.3252, -1.125, 0.9342, 1.8532, 1.0724, -1.2997, 0.9114, 0.1454, 0.1885, 0.2212, -1.8401, -0.9643, 2.7607, -1.7624, -2.635, -2.6548, 1.0059, -2.8721, 1.1599, -0.033, 2.0645, -2.0906, -0.174, -1.6894, -2.0702, -1.7885, -1.0282, -2.7761, -2.5983, 2.1728, -0.4338, 2.057, 3.0362, -1.7572, 1.1602, -1.1878, -2.7589, 0.1457, 2.0248, -0.3319, 0.0249, 3.1095, 0.9697, 1.796, 1.9263, 1.7337, 1.098, -0.4241, -1.2441, 3.0379, -2.7657, 1.8331, -0.3564, 1.1888, -0.6397, -1.9724, -1.0199, 1.3549, - 2.3718, 2.2338, -2.2694, -2.3406, -0.051, 1.4501, 0.3033, -2.226, -2.2293, -0.9428, 0.6589, 0.6102, -2.1439,1.6488, 0.7894, 0.7859, -1.1055, 2.6801, -2.3893, -2.56, 0.5683, 2.2617, 0.42, -0.3642, 2.162, -1.9457, -1.8371, -1.9271, - 0.3072, -0.1698, 0.1088, -2.7644, 1.6859, 1.3495, -2.6058, -2.3232, -2.9012, -0.1583, -2.8044, 0.8174, 0.9446, 1.3301, 1.5712, -1.4778, -2.8445, 2.2509, 0.4788, 2.0109, -1.3006, -3.1032, -0.9246, 0.9926, -2.0661, -0.6445, 0.7021, -2.9912, 0.8229, 0.2396, 0.3757, 0.3204, -1.9942, 2.2698, -2.8883, -0.3568, -2.577, -1.1538, -1.0839, - 0.0103, -1.6783, 2.1202, -2.3099, -0.8758, -2.3243, -1.9181, 1.7071, -2.7466, -0.8439, -2.1881, -0.7454, -0.1833, -0.9754, -1.4087, 2.3604, -1.185, -2.3002, 1.2386, 2.7995, 0.0732, 2.9902, -2.522, -0.1181, 1.8528, 1.499, 0.6285, 1.9575, 2.0376, 3.0431, 1.531, -0.2991, -2.5389, 2.4257, 1.3511, -2.9092, 2.9662, -0.711, 3.1399, -2.8062, 0.0379, 2.8937, -1.905, -2.0742, -2.8741, -0.6219, 0.1176,1.4086, -1.9014, 1.5618, 0.5744, 0.5658,2.7278, 3.0006, -0.2634, 0.3267, 1.9985, -2.2452, -1.6765, -2.2071, -3.0309, -1.1093, 0.6665, -0.9751, 1.9172, -0.3092, 2.9102, -2.1169, 2.5419, -1.0036, 1.5655, -2.3688, -2.5653, -2.0779, 0.954, 2.5486, 1.9627, 0.5289, 1.5992, 2.122, -2.7585, 0.7197, 0.3659, -2.0246, 0.0164, -1.3449, 0.2479, -1.115, 2.1721, 0.2334, -1.2085, 2.1105, -2.5006, -0.7932, 0.3863, 0.1489, 2.7894, 1.1781, 1.2058, -2.0777, 1.1515, -0.5301, 1.0441, -2.6145, 0.4866, -1.0519, 2.0478, 2.1596, 2.2656, 1.0684, 1.3891, 0.9435, 2.2249, 2.0989, 0.9751, -2.3078, 1.0222, 1.0202, -2.0121, 2.7873, 0.5784, 2.427, 2.0812, 0.6451, 0.1776, -3.017, 2.6089, -0.1704, -2.6403, -1.167, 2.4938, -0.5472, 0.1147, -0.0943, 1.6829, -1.9451, 1.4355, 1.1827, -2.1619, 1.7972, 2.5332, 1.531, 2.4113, -0.9047, -0.1248, 2.3321, -2.6193, 0.8376, -1.0716, -1.6082, 1.6178, 1.4194, -2.595, 1.8002, 1.1662, 0.7827, 0.3456, -1.31, -0.692, -1.5605, 0.8715, -0.5127, -2.349, -0.2013, 2.4762, -2.6302, -2.8687, 1.9721, -1.4541, 1.1126, -0.6397, -0.6605, 2.7955, -2.5558, 1.9451, 1.1956, 2.7897, -1.0152, -1.4848, - 1.1396, 2.5191, 1.3648, 0.5144, 3.016, -1.9711, -2.3206, 0.8139, -0.1196, 3.0682, 0.4183, 0.8782, 2.9961, -0.0353, -0.813, -1.4895, -2.9009, 2.648, -3.1178, -1.4297, -0.1115, 2.814, 2.7176, -0.0124, -1.7904, -1.5391, -2.3262, - 2.9197, 0.6514, -2.3172, 0.7819, 0.6952, -0.9077, 1.3126, -2.0426, -3.0106, -1.6854, -1.1842, 0.9281, -0.0577, 0.7583, 2.893, -2.9886, -0.4062, 0.7284, 0.1419, -1.3498, -1.8169, -2.5078, -2.1001, 2.5567, -1.4608, -2.4369, - 1.1483, -0.2187, -2.1475, -1.7873, 2.42, 0.0684, 2.7557, 1.4031, 2.2993, 1.1776, -0.7449, 1.5005, 2.9049, -1.0387, -1.7952, -1.4086, 1.1844, 2.1325, -1.294, 0.9859, 1.7441, 2.5059, -2.3314, 1.6838, -2.3763, 0.5123, 1.3007, 1.4073, 1.8175, -1.3262, -0.7768, -0.2004, -2.2703, -0.0658, 2.8849, 2.2962, -1.0172, -1.5758, 1.7914, -0.1329, -1.6624, -2.5735, -0.5062, 2.5467, 1.4913, -2.8927, 0.9327, 2.6578, 0.6369, -2.2598, -0.5171, -1.1357, -0.5154, -0.9441, - 2.4341, -0.3234, 0.5652, -2.9727, -0.632, 0.2599, 0.2738, -0.2297, 2.1852, 1.1885, -0.3246, 1.7515, 0.3529, 0.6998, 2.3806, 2.3811, -1.693, -1.8896, -2.0014, -2.4052, -0.0955, -2.3359, -0.705, -1.7923, -2.5953, -2.9742, 0.9175, - 2.2862, -1.5003, 2.208, 1.1385, -0.0613, -1.2614, 2.7851, -2.8461, -1.4631, 2.285, -0.322, -3.0881, 0.8225, 2.9539, 0.2755, 2.2665, 0.4097, -0.602, -2.4039, 0.4108, 2.5409, -1.1352, -2.8703, -1.816, -0.0746, -2.7882, -2.3768, - 2.5438, 0.1739, 2.7007, 0.1474, -1.2238, -2.8866, -2.1654, -2.8821, -2.3907, -1.101, 0.3956, -2.6136, -2.2937, - 2.5044, -1.1112, 1.6602, -1.4001, -0.4108, 1.5125, 2.2979, 1.0478, 1.0136, -2.3768, -1.2285, 1.5035, 0.5948, - 2.3922, 2.3693, -0.6281, 2.4979, -2.6947, 0.9939, -2.3778, 2.0495, 2.321, 0.0539, -1.2442, 2.0475, -2.0386, -2.8806, -1.9626, -0.8493, -2.3314, 0.776, -1.0789, -1.8187, 1.068, 1.0456, 1.4678, 2.5616, 3.1293, 1.3801, -1.1695, -1.1312, 2.1315, -2.7214, 0.6805, -2.4011, 2.2774, -2.9199, 2.5744, -2.4695, 2.2777, 1.8889, 2.0072, -1.4262, -0.7458, 0.2166, -3.0434, 2.0345, -2.2687, 2.1044, 1.6715, -1.4926, 2.7935, -0.0532, -3.0503, -1.7006, -2.9836, -0.075, 1.5145, -0.2066, 0.3117, 2.6909, 2.719, 1.5529, 1.7126, -0.1954, 3.1051, -1.2654, 1.9637, 2.5569, 0.3226, -0.3829, -0.2338, -2.1862, 0.3987, 1.2238, -2.6011, 1.5804, -1.3549, -2.7095, 0.1828, -1.6728, -0.5914, 2.9029, 2.2527, 0.1656, 1.0755, -2.787, 2.9935, 1.3788, -1.8425, 1.3975, 0.4071, 0.8033, 1.4048, 3.0147, -3.1372, 2.6238, 1.4704, - 1.31, 1.5364, -1.9406, -0.9409, 2.0958, -2.038, -0.9428, 0.6014, 0.7254, -2.9287, -2.2196, -1.3499, -1.1197, 0.4218, 1.1227, -1.6826, -1.7332, -1.3381, 0.1897, -0.4928, 2.482, -2.5079, -1.9612, 3.0974, -2.9681, -2.1169, -1.8343, 0.029, -3.0341, 0.3653, 1.9487, 2.2902, -1.3139, 2.5518, 2.7076, 0.8482, 1.7906, 1.7258, 2.8105, 1.1084, 1.624, - 1.461, -2.5904, 0.8949, -2.9839, 2.073, 0.8846, 2.9707, 2.4324, -2.3565, -1.4623, 2.3701, -2.6469, 0.7286, 0.7596, 2.3996, 1.4636, 0.9827, -0.0605, -2.1773, -1.7314, -2.3101, -0.5391, -2.9845, 2.6661, -0.6264, 2.2505, 1.7612, 2.2681, -0.0139, -1.5401, -0.4693, 1.8856, -2.836, 0.0386, -1.3406, -2.8438, -2.3776, -0.9668, 2.2687, 2.9744, 2.5546, 1.2735, -2.5307, 2.4443, 0.7434, 1.9276, -0.2853, -2.2481, -2.1461, 3.1186, 1.1065, -2.6885, -0.062, 1.7972, 0.8219, 2.7245, -1.5097, -2.558, 2.5409, 0.8807, 0.4742,1.0811, -2.6118, -0.0502, -0.1781, 2.6549,1.9227, -3.0055, -1.1641, 2.3627, -0.6466, -1.2587, -2.7494, 2.9243, 2.5888, -2.1153, 2.1129, 1.0966, -2.8551, 0.2625, -1.7901, 0.1149, -1.1212, -1.3525, 2.4124, -0.268, -0.6874, 0.8835, 0.6042, 0.1415, 0.7964, 2.1415, 1.536, -1.2955, 1.2748, 2.4454, 2.6058, 1.992, -0.8547, -0.2962, 1.4291, -2.8427, -0.5136, 1.3629, -0.1156, -0.9471,2.6373,0.0542, 0.5936, -1.7866, -2.7658, -1.3635, 2.1609, 1.819, 0.5478, -2.2737, -1.2246, -2.2155, -2.6954, -0.9406, -2.949, 0.4522, - 2.3492, 2.6081, -1.1485, -0.5516, 2.6616, 0.1724, -1.6111, 0.595, 1.8191, -0.7322, 3.0141, -1.787, -1.1771, 0.7178, -1.5376, -1.0872, 0.368, -2.7804, -2.2391, 1.1562, 1.4102, -0.047, -2.912, 1.776, 0.8321, 3.0953, 0.2258, -0.0152, -1.0594, -1.9792, 1.115, -1.686, -2.9972, 0.4811, 0.4457, 2.2751, -0.5919, 2.0896, -2.326, 2.2331, -1.9486, 0.7236, -2.0909, 1.7056, 2.7744, -2.9389, -2.3939, -1.4763, 0.7596, 0.7512, -1.0976, 0.4322, 0.3283, 1.2992, -2.7889, - 2.5293, 2.4565, -3.0617, -0.8579, 1.9558, 1.7538, 0.2395, 2.7587, -1.2159, 1.052, -0.2181, -2.3765, -3.0574, - 0.6893, -1.8762, -0.4813, 1.1715, -1.8591, 0.9856, 1.1816, -1.1444, 2.2681, 1.6516, -1.1799, 1.8539, -2.9615, 2.2219, 2.3089, -1.3496, -2.0187, 0.5802, 2.47,1.0393, -1.5672,1.5649, -2.4917, -1.0473, -0.5696, -1.3301, 0.2295, -0.245, -0.1061, 2.9212, -1.2861, 2.324, -0.2548, -0.9726, -2.2677, 0.9499, 1.6276, 1.4678, -2.2272, -1.8156, 2.4143, 0.889, 1.2442, 0.6991, 0.3353, 0.6461, -0.5691, -0.3873, -1.5148, 0.1112, 0.7696, 1.2828, -0.4923, -0.993, -0.4492, 1.6607, 1.4315, 1.5297, -0.7757, -2.1358, 0.5809, -2.837, 0.4431, -1.8654, -1.3214, -1.1104, -0.2342, 2.5283, 1.5989, 0.5678, -1.5704, 0.8468, -0.1373, 1.0929, 0.4672, -2.1355, 2.563, -0.5064, -2.5266, -2.6702, -2.681, -0.1666, -1.4672, 0.512, -0.2019, -2.8977, -2.2369, 2.0799, 2.3006, 2.1395, 0.9216, 0.0854, 1.9242, -1.4776, 0.3672, 2.6526, 1.0229, 1.7001, 0.1255, -0.0397, 0.561, -2.8052, 1.7979, -0.8903, -0.0786, -2.026, 2.287, -1.9223, 1.0859, 0.6989, 1.2852, 0.2999, -3.0628, -1.8618, 1.8763, 1.2099, -0.9609, 2.2303, -0.0663, 2.2513, -1.0697, -0.7796, 1.8754, 0.4454, -0.079, 2.3637, -2.7885, 0.3533, 0.2896, -0.2755, -0.3626, -2.5085, -1.0757, -0.1137, -1.2157, 0.2666, -1.5463, 1.3709, 0.7209, 2.4108, -0.122, 1.2689, 0.47, 2.2711, 3.0959, -2.4189, 0.7311, 2.6439, -1.0328, 0.5985, 0.6006, -2.5213, -1.8255, 1.9857, 2.9078, 2.6419, -2.1263, 1.6521, -1.7059, -1.2481, 0.1998, 1.2389, -2.1199, -0.0996, 3.0458, -1.1944, -0.0494, 3.0159, -2.9738, -0.5746, -2.3149, 0.8474, 2.0404, 1.6063, 2.2937, 1.2427, 2.0189, 1.4524, -1.6182, -2.755, 0.9979, -1.0188, -2.6636, -2.9034, 1.9674, -2.3888, 1.0437, 0.1993, - 1.4208, 2.4166, -3.1175, 2.4495, -2.0656, 2.2449, -2.2086, -0.7184, 0.0259, -2.4055, 0.7344, -1.6554, -0.2056, - 0.041, -2.9665, -2.8979, -1.7198, 2.9856, 2.9667, -0.0269, -1.6931, -1.9534, -2.1904, 0.5811, 2.4898, 2.8914, 2.134, -1.0317, 1.0398, 1.8159, -0.5416, -1.9152, -1.3475, -1.4196, -0.3361, 2.8536, -2.4038, 0.5711, -2.5816, 2.232, - 1.6952, -1.0095, 2.5753, 2.0007, -0.3713, -0.4142, 1.5205, 2.2011, -2.658, 0.2691, 0.5485, -2.3119, 1.5932, 0.4475, 1.6685, 0.7863, -2.314, -0.0699, -0.7918, 1.5483, 1.0757, -1.8364, 1.9594, -3.11, 2.0319, -2.8268, -0.8746, 3.108, -0.3292,1.3092, 0.1438, 1.2433, -2.5527, -2.2151, 0.2824, 0.8464, 0.2035, 2.4885, 3.0122, 1.1165, -1.5173, 2.9432, -1.7236, 2.5119, 0.0028, -2.5181, 1.153, 2.0354, -2.6047, -2.5393, -1.3947, -2.6828, 0.1006, -0.7167, 1.7502, - 1.3668, -1.5293, -2.8196, 2.8986, 0.2975, -0.4003, -2.4664, 1.2646, 0.9766, 1.6341, -0.1183, 0.871, 2.5198, -0.9917, 1.4624, -3.029, 2.8993, 3.0382, -2.6797, 0.8514, 2.2572, -1.0883, 0.0176, 2.375, 1.6303, 2.0524, 1.8408, 1.7845, 1.4545, 0.863, -2.726, 0.4069, 0.0932, 1.5556, 1.3838, -1.8661, -1.2431, 1.7999, 0.7613, -0.1999, 1.8166, -2.1877, 2.9732,1.1971, -1.1444, -1.863, 1.7898, -2.5077, 2.5173, -2.3755, -2.268, 1.2335, -2.0323, 1.3512, -3.034, 0.9122, 1.633, 0.206, -0.1646, 3.0813, 1.7099, 2.5626, 2.8096, 2.1721, -0.5753, -3.1167, -0.3856, -2.1079, -1.5443, 2.0145, 1.0789, -2.0615, 0.5948, -0.0601, 0.9176, -0.5851, -1.3959, 1.9216, -1.1962, -0.4056, -2.598, 3.0627, 2.7064, - 1.5478, 0.5861, 0.2744, -0.6697, 0.2063, -1.477, -0.87, 2.6129, 1.2551, 2.3205, -1.6061, -1.9409, -0.5685, -1.2726, -2.1974, 1.3703, 1.6519, -1.1241, -2.8914, 0.8097, -1.2928, 3.1215, 0.6009, 0.5547, -2.1414, 2.78, -3.0995, -2.8076, 2.6198, 2.3855, 2.605, -0.3105, 0.8311, 1.9797, -0.9956, -2.7327, -1.7115, -1.8104, -0.6919, 0.2359, -1.7882, - 1.7535, -2.34, -2.6011, -0.3472, 0.9218, 1.4684, -2.361, 1.4744, 0.5046, 0.4671, 1.668, 0.0499, -2.1078, 2.3598, 2.6483, -1.563, 1.1422, 0.3581, -2.2843, 0.9001, 2.3271, -0.4132, 2.1708, -0.9288, 1.6684, -0.3897, 1.8128, -0.1088, -0.6109, -2.8919, -3.0457, 2.0297, 0.3113, -0.7445, -0.6924, 3.1289, 0.2011, 2.0846, -1.184, 1.5474, 1.82, -1.9971, 0.1144, 0.3972, 0.5228, 3.0974, -2.1909, -0.9007, 1.1521, -2.0231, -1.9516, -3.058, 0.579, 3.0767, 1.0655, -2.6787, 1.4044, 0.5088, -2.2937, 2.9434, 1.922, -2.6377, -0.6789, -0.6643, 2.447, -2.5198, 0.9344, -1.5258, 1.8864, -0.1956, 1.4753, 2.636, -0.5074, 0.5973, -1.6175, 2.7999, -0.354, 1.8547, 0.1954, 1.6913, 0.7461, 1.6056, 1.6813, -0.7203, 1.7652, -2.842, -1.188, -2.1263, 2.7112, -0.4336, 0.1849, -0.9985, 0.1149, -2.4325, -0.7659, -2.5233, -0.8464, - 1.6161, 0.7277, -2.516, -2.258, -0.8712, -1.8697, -0.2839, 0.6554, 1.6069, 1.8657, 0.3125, 0.3715, 2.2215, -2.7069, 2.2295, -1.7455, -2.5463, 2.3281, -1.8224, -0.2419, -2.5947, 0.5718, 2.3175, -2.5497, -0.8711, 2.1529, -1.7399, - 0.2202, -0.1544, 0.9741, -1.1272, -1.2251, 1.0479, 1.1122, 1.4956, -0.814, -0.9809, -2.0734, -0.3753, 0.4243, 0.2375, 0.2954, 0.4277, -1.7904, -0.8734, -0.2239, -2.6783, 2.0404, -1.6032, 2.0271, -0.3812, 1.3231, -0.3859, - 0.7159, 1.3122, -0.2348, -2.4575, -0.5809, -0.7232, 0.0264, -1.5612, 2.2851, 3.0574, 0.1669, -1.1567, -1.4043, - 2.017, -0.7859, -2.8246, -0.3964, 1.2919, 2.8029, 2.5637, -1.3728, -0.4037, 2.3173, 1.3595, 0.4736, -1.6211, 1.4098, 1.3285, 1.1103, 0.1901, -1.3762,1.7737, -1.7666, 0.4357, -3.0423, -2.2132, 0.1138, 1.0742, -2.255, 2.4746, -0.1284, 2.0895, 1.818, -1.0164, -2.0259, 1.0405, 0.6951, 1.7235, 1.6218, -0.0921, -1.3357, -1.0699, -1.191, 2.6987, -1.9337, -2.8775, -2.0393, -2.0911, -1.6044, -0.3448, 0.2054, 1.1765, -0.0314, 0.9123, 2.8054, -2.0852, 1.3124, -1.2291, 1.2214, -2.0138, 1.5814, 1.0456, -1.2663, -1.5378, -0.7079, -0.5224, -2.9416, -0.9413, 2.6956, -0.7182, -0.0129, 1.5905, -1.1367, 2.277, 2.6378, 3.1118, -0.2499, 1.8289, 1.011, -1.7247, -2.7817, 0.5725, 2.4995, 2.3253, -2.1481, 1.9209, 0.6216, -2.5372, -2.124, -1.6155, -0.8932, 0.8618, 1.4699, 1.6001, -1.8528, 3.1245, -1.9765, -0.8318, - 2.2709, 2.7785, -3.0447, 0.7209, 0.0678, 2.7123, 1.1787, -3.0721, 2.895, 0.519, -0.5808, -1.7686, 2.9653, 0.8564, - 2.1029, -1.941, 2.8647, 1.2444, -1.7596, -0.3998, 1.6791, -0.5528, -0.2226, 3.0903, -0.1679, 1.6418, -1.9122, - 2.2046, 2.5833, 2.1723, -0.1677, 0.7904, -1.4933, 2.7413, 2.9951, -0.1088, -1.3723, -2.5787, -2.4811, -2.4051, 2.219, -1.2101, -2.748, 2.5218, -3.1129, -2.8081, 1.231, 0.5892, -2.4486, -2.1441, -1.8999, -2.5154, -2.9525, 1.6034, 1.7511, -2.1533, -0.5225, 2.2505, -1.1984, -0.1394, -0.11, 2.2196, -2.7893, 1.7693, 0.9175, -1.5492, 2.5253, -2.2591, -1.9033, -2.5462, 3.1, -1.4596, -1.0927, 2.4556, -1.587, -2.0886, 2.4267, -0.1747, -1.7528, 0.7092,-0.3066, 2.7322, 2.4385, -1.4963, 1.5013, -2.803, -0.5719, -2.5721, 0.2992, -2.3461, 1.1308, -1.8517, 2.0443, - 3.0128, 0.3921, -0.6355, 1.8864, -0.4043, 0.5485, -2.7415, 0.2971, 2.4263, -1.3666, 1.3594, 0.437, -2.8772, 2.3555, -0.4912, 2.7196, -2.4114, -2.6782, -2.1831, 2.8514, 1.7763, 0.6269, -1.1579, 0.9862, -1.4253, 2.191, -1.2576, - 0.8052, 2.8375, -0.4082, -1.1678, -2.7582, -2.9105, 2.5134, 2.7403, -2.0832, 2.1224, -0.7135, 1.7186, -1.7054, - 0.7035, 0.2153, 2.4966, -0.6884, 1.8799, 2.4919, -2.8893, -0.9846, -1.16, -2.9383, -1.6105, -2.0786, -2.0535, - 1.8567, -2.5043, -0.7676, -0.8742, 0.9477, 1.2873, 1.7357, -2.397, -0.4989, -3.1003, -0.5726, -1.6028, -0.4653, 1.8084, 2.4598, 1.5975, 0.0444, -1.0681, -0.0843, -3.0466, 1.5773, 2.3877, -0.0098, -0.027, 0.8521, 0.7331, -2.951, -1.137, 2.2173, 0.3936, -1.3313, -2.8867, -2.4019, -1.3381, 2.5121, -1.14, -2.6332, -3.0332, 1.8081, 2.4416, - 1.7371, -2.8853, -1.4003, -2.0459, 0.38, 1.4463,2.3571, -2.5697, -0.4953, -2.9699, -3.0581, 2.1279, 2.6077, 2.1956, 1.4987, 0.8584, -0.4571, 0.649, 0.7831, 2.477, -1.694, 1.3946, 0.3259, -2.9958, 2.1661, -1.2965, -0.6091, 0.1447, - 2.7673, -1.7051, -1.5359, -3.0887, -0.3437, 1.915, -2.2476, -2.1987, 1.116, -1.9064, -1.417, 2.5755, 2.5206, 0.646, -2.726, -2.0468, 1.3971, -0.6313, 1.341, -1.3135, -1.4663, -2.7425, -3.1027, 1.6677, -1.7535, -2.3209, -2.156, 0.3982, -2.3076, -1.5978, -0.0126, -0.1829, 0.5379, -1.045, 0.5192, 2.275, -0.8415, 1.753, 2.2705, -2.7132,1.8267, 1.2538, 3.059, 1.4028, -1.8062, 0.816, 2.951, -1.5827, 0.5831, 1.149, -0.3083, -1.7914, 0.7894, -1.8101, 2.9031, - 1.3169, 2.2389, -0.2222, 1.2727, -1.2122, 2.7672, -0.5631, -1.2224, 0.3851, -0.1405, -2.6863, 0.6228, -1.7872, - 2.948, 0.902, 0.6463, 1.5138, 3.1192, 1.1292, 0.2747, 2.3762, 0.7184, -2.783, -1.4326, 0.5822, 1.1806, 0.7144, - 2.7166, -2.7849, -3.0647, 0.0927, 0.2959, -2.5809, 1.7778, -1.98, -1.6496, -2.6233, -1.5121, -0.2971, -2.2701, 1.122, 2.0864, 1.4162, -0.185, -2.8197, -1.6697, -2.7207, -2.4155, 2.9802, -0.9198, -1.0144, -1.3696, 1.6821, 1.0481, 1.325, -2.2498, -1.6285, -0.7247, -1.3903, 1.3048, -1.8886, -2.0644, 1.0354, 2.2815, 2.1703, -2.5699, - 2.0539, 2.7214, 1.9949, -0.9014, -0.0397, -1.6805, -2.8365, -1.2029, 2.1586, -3.1346, 1.7459, -1.5108, 1.8293, - 1.2023, 2.8779, 2.7395, 0.4693, -1.5864, -2.4385, 1.9164, 0.6088, -2.7367, -2.3784, -2.0815, -1.3784, -1.2152, - 1.7916, -1.8038, 1.9371, -1.7174, 3.067, -1.6508, -3.018, -1.8371, 2.2039, 2.7315, 0.7826, -0.7152, -2.3517, - 2.6607, -2.0037, 0.6592, 0.9569, 2.2858, 0.3576, 1.2501, 1.1204, -2.4929, -1.8953, -2.7541, -0.9575, -0.7018, - 0.0016, -2.6357, -1.18, 0.7171, -2.7702, -1.0066, 1.4416, -3.0308, 0.194, -2.1554, 2.2649, 0.815, 1.0857, -1.6402, -0.5124, -1.6804, -2.0478, -2.8709, 1.1555, 3.0013, -2.812, -0.5322, 0.2872, -2.6985, -0.9855, 1.8344, -3.0038, - 2.4066, 1.1988, -2.6329, 0.059, -2.9571, -2.2129, 0.1486, -1.0501, -0.2528, -2.7312, -1.1596, 1.845, 0.648, 2.6508, -1.3647, -0.2797, 0.688, -2.4497, 0.2811, -1.0384, -3.0034, 0.5353, -1.3557,1.4813,1.6573,1.9317,2.36, -2.1243, 3.0256, 0.685, -0.2242, -1.272, 1.3405, -1.1414, 1.4644, 1.6899, -2.2005, -0.3276, -0.2629, 0.2626, 0.2867, -1.1529, 2.5358, -1.1393, 2.7312, -0.2533, -1.4614, -2.2064,1.5442, -2.8093, 2.6494,1.4352,0.6204,1.6243,2.3965,1.9858, 0.7821, 2.1848, and 2.232.

The data processing method in the embodiments of this application is described above, and a processing apparatus in the embodiments of this application is described below.

FIG. 9 is a schematic diagram of a structure of a data processing apparatus according to an embodiment of this application. Referring to FIG. 9, the data processing apparatus includes a processing unit 11 and a sending unit 12.

The processing unit 11 is configured to obtain a sequence set. The sequence set includes a plurality of sequences, and there is at least one first sequence in the plurality of sequences. An auto-ambiguity function of each first sequence is in a drawing pin form, and side lobe energy of a cross-ambiguity function between each first sequence and another sequence in the sequence set is less than a first threshold.

The sending unit 12 is configured to send a signal based on a sequence in the sequence set. The signal is used for velocity measurement and/or ranging.

Optionally, the data processing apparatus 10 may be the radar in the method embodiment, or the data processing apparatus 10 may be a part of a radar. The data processing apparatus 10 may have any function of the radar in the method embodiment. For specific details of the function, refer to the method embodiment. Details are not described herein.

Optionally, the processing unit 11 may perform S801 in the embodiment in FIG. 8.

Optionally, the sending unit 12 may perform S802 in the embodiment in FIG. 8.

It should be noted that the data processing apparatus shown in embodiments of this application may perform the technical solutions shown in the foregoing method embodiments. Implementation principles and beneficial effects of the data processing apparatus are similar to those of the technical solutions, and details are not described herein again.

The data processing apparatus in the embodiments of this application is described above, and a possible product form of the data processing apparatus is described below. It should be understood that any form of product that has a feature of the data processing apparatus described in FIG. 9 falls within the protection scope of this application. It should be further understood that the following description is merely an example, and the product form of the data processing apparatus in the embodiments of this application is not limited thereto.

In a possible product form, the data processing apparatus described in the embodiments of this application may be implemented by a general bus architecture.

The data processing apparatus includes a processor and a transceiver that is internally connected to and communicates with the processor. The processor is configured to obtain a sequence set. The sequence set includes a plurality of sequences, and there is at least one first sequence in the plurality of sequences. An auto-ambiguity function of each first sequence is in a drawing pin form, and side lobe energy of a cross-ambiguity function between each first sequence and another sequence in the sequence set is less than a first threshold. The transceiver is configured to send a signal based on a sequence in the sequence set. The signal is used for velocity measurement and/or ranging. Optionally, the data processing apparatus may further include a memory. The memory is configured to store instructions to be executed by the processor.

In a possible product form, the data apparatus described in the embodiments of this application may be implemented by a general-purpose processor.

The general-purpose processor that implements the data processing apparatus includes a processing circuit and an output interface that is internally connected to and communicates with the processing circuit. The processing circuit is configured to obtain a sequence set. The sequence set includes a plurality of sequences, and there is at least one first sequence in the plurality of sequences. An auto-ambiguity function of each first sequence is in a drawing pin form, and side lobe energy of a cross-ambiguity function between each first sequence and another sequence in the sequence set is less than a first threshold. The output interface is configured to send a signal based on a sequence in the sequence set. The signal is used for velocity measurement and/or ranging. Optionally, the general-purpose processor may further include a storage medium. The storage medium is configured to store instructions to be executed by the processing circuit.

Alternatively, as a possible product form, the data processing apparatus described in this embodiment of this application may further be implemented by using the following components: one or more FPGAs (field programmable gate arrays), a PLD (programmable logic device), a controller, a state machine, gate logic, a discrete hardware component, any other suitable circuit, or any combination of circuits that can perform various functions described in this application.

It should be understood that each of the data processing apparatuses in the foregoing various product forms may have any function of the radar in the method embodiment. Details are not described herein.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It can be clearly understood by a person skilled in the art that, for the purpose of convenient and brief descriptions, for a detailed working process of the foregoing described system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc. The foregoing descriptions are merely specific embodiments of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

**Claims**

1. A data processing method, comprising:

   obtaining a sequence set, wherein the sequence set comprises a plurality of sequences, there is at least one first sequence in the plurality of sequences, an auto-ambiguity function of each first sequence is in a drawing pin form, and side lobe energy of a cross-ambiguity function between each first sequence and another sequence in the sequence set is less than a first threshold; and

   sending a signal based on a sequence in the sequence set, wherein the signal is used for velocity measurement and/or ranging.

2. The method according to claim 1, wherein
   when a delay falls within a first preset range and a Doppler frequency shift falls within a second preset range, the auto-ambiguity function of the first sequence is in the drawing pin form, and the side lobe energy of the cross-ambiguity function between the first sequence and the another sequence in the sequence set is less than the first threshold.

3. The method according to claim 1 or 2, wherein
   when the delay is not equal to 0 or the Doppler frequency shift is not equal to 0, an amplitude of the auto-ambiguity function of the first sequence is less than an amplitude, of the auto-ambiguity function of the sequence, that exists when the delay is 0 and the Doppler frequency shift is 0.

4. The method according to any one of claims 1 to 3, wherein elements in any sequence in the sequence set have a same amplitude.

5. The method according to any one of claims 1 to 4, wherein a quantity of first sequences is the same as a quantity of sequences comprised in the sequence set.

6. The method according to any one of claims 1 to 4, wherein the sequence set comprises a first sequence, a second sequence, a third sequence, and a fourth sequence, and a length of each sequence in the sequence set is 256;

   phases of elements in the first sequence are sequentially 1.3372, -0.7508, 2.4208, 1.0981, -1.7484, -1.4805, -1.0832, 2.3573, 2.7391, 1.8235, 1.1159, 0.2621, 0.0297, 2.9655, 0.415, 1.2484, -1.3389, 0.5881, -2.7544, 0.5955, - 0.2352, 3.0236, -0.3206, -0.4823, 2.6652, -2.1769, -1.1551, -0.2582, 1.5444, 0.1485, -3.1123, -2.4393, 2.7188, - 0.8051, 1.2812, -0.2575, -0.288, 0.8964, 0.3922, -0.1448, 1.7185, 0.932, 1.5779, -0.373, -2.9282, 1.0764, 2.9456, - 1.3059, -1.6774, 0.6249, 1.513, 2.1999, 0.7985, -0.9413, -0.1421, -1.5825, -0.5013, 2.8216, -1.8911, 2.0524, 2.4415, -0.3531, -3.0747, 2.71, 0.1451,1.4872, -1.6203, -2.6817, -0.5574,3.0216, 1.7929,0.0825, -0.5173, 2.1203, -1.9371, -2.0033, -1.481, -1.4985, -1.8181, 1.2204, -2.439, -1.2832, 2.7836, 3.0928, 2.9742, -3.0527, 2.6695, -1.3749, - 1.1852, -1.0663, 2.1085, -0.0894, -2.1134, 0.1614, -0.8619,1.0484, -1.7855, 0.2761, 2.1206, 1.1929, 1.7064, -1.647, 0.3998, 2.2085, 0.1338, -0.0309, -1.7499, -1.7497, -0.916, 2.3535, 1.8872, 2.2148, -0.7038, -2.2879, 1.1006, - 1.0454, -0.9157, 1.3686, -2.5787, 2.0612, 0.9012, -0.712, -0.0621, 1.4119, -1.3805, 0.1252, -0.1993, 1.1973, - 1.0755, -1.5419, -1.5599, -0.4889, -0.6943, 1.801, 1.6276, -0.1009, 1.7748, -2.0425, 2.1383, 1.9799, 1.8885, 3.079 1, -1.5371, 1.4575, -2.8354, -1.3508, 3.123, 0.0679, 2.3792, 2.0165, -2.8971, 0.3397, -2.805, 1.0301, 0.2302, -2.9165, -2.3968, -1.5703, 2.093, 0.4566, -0.2589, 2.6883, 1.4209, 0.2824, -2.2379, -1.3436, -2.4362, -2.3034, 2.746, 2.9363, 0.1145, 2.4887, 2.6591, -1.9402, 0.4813, -3.1281, 1.4317, 1.8275, -1.2527, -1.3687, 0.1239, 1.2785, 1.8774, 0.2091, 2.6042, -2.8658, -2.0554, -2.8609, -3.118, -2.5135, -1.796, 0.4843, -2.8328, -1.1098, -2.7793, -0.0439, -2.4507, 2.3603, -2.3718, -0.2061, -1.5561, 2.4824, 1.5196, 2.5063, -2.699, -1.3795, -2.9652, 0.9475, 0.2329, -0.6948, - 0.0872, -2.6749, -1.7352, -2.1366, 2.6774, 2.8629, 1.1213, -2.4862, 0.798, -0.0426, 2.9199, -2.0014, 0.3553, 1.037, -0.8347, 2.3107, 1.973, 1.7783, -2.3005, -0.74, -2.8278, -2.7335, -2.3486, -2.8155, -1.6179, -0.6183, -3.0143, 2.4131, -2.131, 2.3835, 2.7819, -0.3599, -0.2895, -3.0059, 0.718, 2.7902, 0.6929, 2.7449, -2.8594, -2.5411, -0.0016, -1.497, -1.566, 2.9953, -1.6153, and -1.7892;

   phases of elements in the second sequence are sequentially 2.1701, -1.3721, -1.387, 1.0199, 2.371, -2.1574, 2.8432, -1.5428, 0.4262, 0.3769, 1.251, -0.5135, 1.4581, 2.597, 0.6276, -2.0017, -2.4969, -2.9415, -2.963, -0.0687, -1.0276, -2.4406, -1.5261, -1.9528, 1.588, -2.7293, 1.1041, -0.9098, 1.2924, -0.5511, -2.472, -1.921, -0.834, - 2.221, -1.9066, 1.9813, -2.4506, 0.696, -2.7094, 1.8823, 1.6452, -0.121, -2.628, 2.888, 0.5753, 1.7822, -2.0754, 0.3761, 1.5069, -2.8297, -2.9521, -0.5208, -1.0034, 0.5833, 2.2468, -1.4293, 2.9318, -1.8951, -2.0785, -2.8152, - 1.9929, -1.3951, 2.1419, 0.0872, -0.4188, 0.3305, -2.6701, 2.3754, 0.2746, 2.1817, 1.5224, -2.3449, -2.6994, - 2.3268, 2.3958, -2.7374, 2.3053, 0.2607, 1.5518, -2.2538, 0.8824, -1.4509, -0.709, -2.4095, -3.1079, 1.0264, - 2.4974, -0.6884, 2.3158, 1.3602, -2.1774, -2.5885, -0.0123, 0.1038, 2.3596, 1.4706, 0.6877, 2.3203, 1.0498, 0.0108, -3.1005, -0.3399, 0.651, 0.9822, -1.1769, 0.0755, 2.0145, -2.1149, 3.0807, 0.6854, 1.5925, 1.2919, -2.509, -2.8266, -3.0847, -1.3901, -0.8465, -1.2709, 0.0888, -2.0371, -0.1881, -0.8546, -1.5478, 2.2421, 3.1237, -2.0712, 0.4533, 2.8654, 0.7529, -1.4502, -0.2041, -2.1242, 1.4324, -1.2137, 3.1197, 1.3448, -0.8495, -0.4875, 2.1082, -2.593, - 2.9275, 2.8997, -2.1501, -2.6388, -3.126, 2.5225, -0.0164, 1.182, 3.0537, 2.181, -1.2816, 2.2817, -3.1338, -0.9109, 0.1709, -1.3392, -3.0606, 2.9419, -1.8142, 0.1363, -0.5697, 0.2432, 1.81, 0.5712, 2.6591, 1.897, 2.8699, 0.9568, 2.6117, 2.0245, -1.1407, 0.5264, 1.3575, -2.4046, 1.2018, -1.5937, 2.0978, 0.9696, -0.3904, -1.6556, -3.113, 1.437, 2.5174, 1.1375, 2.8997, -0.9927, 1.8852, -0.4604, -1.1975, -0.6921, -1.843, -1.7812, -1.9583, -2.6961, -0.5019, 0.8952, -1.8718, 2.6733, -0.9904, -1.2148, 2.8867, -0.7309, 0.6332, 0.173, 2.2876, 2.2738, -3.0122, 1.0959, -2.5998, -1.1488, 1.8041, 3.0937, -2.6477, 0.2974, -2.9313, 1.0493, 1.3734, -2.5689, 2.0916, -0.5451, 1.3798, 2.4595, 1.3882, -0.1184, -2.2831, 2.2264, -2.6779, -1.2342, -1.5632, -2.0721, -2.8024, 0.9416, 1.6936, -0.7469, -0.6974, -1.5304, -1.1069, 2.9761, -1.5897, -2.9481, 0.0723, -2.8037, -0.2758, 2.9573, 1.1695, 0.5146, 2.5002, 1.7468, -2.9571, - 0.2823, 0.6641, -2.7882, 0.7087, 0.671, -2.0358, and 2.1565;

phases of elements in the third sequence are sequentially -0.7311, 2.8019, 2.2678, -0.702, 0.285, 2.2131, 2.3346, -0.4979, 1.4361, 0.1395, -2.4765, 0.4408, -2.4477, -1.8956, 2.8251, -2.2018, 3.0224, -2.2596, -2.8767, 2.2063, - 1.3943, -1.9958, -2.3281, 1.0313, 0.3367, -2.8324, 1.59, -2.4723, -2.7368, -1.5353, 0.4812, 0.806, 1.978, 2.4672, - 0.2372, -3.0434, -1.915, 1.3779, -2.8899, 0.2387, -0.2027, -1.3939, -0.2243, -2.9651, 1.9485, 0.2863, 1.1601, 2.6477, -0.9743, -0.5489, 2.092, -3.0488, -1.548, -2.6208, 2.7985, 2.435, 3.0324, 1.379, -2.5044, 2.2106, 1.7946, - 0.0763, -2.5634, -0.283, 3.0384, 0.2883, -1.4215, 1.6725, 1.0796, 1.8275, -2.344, -2.6457, -0.2568, -0.8846, 2.0333, 1.4161, -2.9933, 2.3626, 2.871, -0.9942, 2.0525, -2.5156, -0.5758, 1.6753, -1.2924, 1.1019, 0.3798, 3.089, -2.8119, 0.9082, 1.2263, 1.5443, -2.6883, -1.8698, -2.5612, 2.0729, -1.9239, -0.3158, 1.0755, -0.8799, -2.859, -1.3312, - 1.9979, -3.09, 1.8959, -2.3081, 2.9484, 1.4795, 2.1269, 0.5487, -2.3028, 1.8919, -2.2552, 1.3628, -2.0575, -2.5907, -1.7424, -0.4144, 1.8564, -0.4413, -0.5799, -2.5916, -2.716, -0.8031, -2.6967, -2.7678, -1.4188, 0.0584, -2.7812, 2.2044, 2.1008, -2.8792, -0.4309, -2.407, -1.0629, 1.2344, -2.1574, -2.8909, -0.9816, -0.4264, 0.8359, 0.4351, - 1.6063, 1.6633, 2.1297, 1.8806, -0.5653, -0.5501, -0.0819, -1.6164, -1.9562, -1.6347, 1.3506, -1.6418, -2.2899, - 3.0781, 0.424, -1.771, -0.2049, -2.5323, -1.4033, 0.3059, 0.3418, -2.2528, 2.3458, 1.9178, 1.7355, -0.2467, 1.358, 0.3111, -0.9469, 0.8757, 0.7687, 1.7479, -1.0623, -1.3385, 1.2778, 0.0928, 1.7108, -2.8423, 1.7494, -2.4048, - 1.0408, -0.4245, -0.9764, -2.0117, 1.3887, -0.5852, 0.8287, 2.2308, -1.2048, 2.024, 1.7852, 2.8722, 0.5365, -0.1655, -0.1806, 1.1853, -2.1708, -1.706, 1.3267, 0.8625, -0.2843, -1.7137, 1.4119, -1.5456, -0.1931, -1.3508, -2.3536, - 2.8767, 0.8842, 1.256, 0.3568, 0.2911, 2.2876, 0.6698, -0.5403, 2.1393, 0.1265, -1.0955, 0.0416, 2.3547, 1.9427, - 1.9217, 2.9748, -1.063, 2.621, -0.7785, 0.2702, -2.4311, 0.1047, 0.795, 1.3864, -0.4294, 2.5538, 3.0411, -0.1391, - 1.5677, 0.9112, 0.6698, -2.8096, -2.9085, -0.5993, 0.8378, -1.2799, -0.3668, 0.4389, -0.1067, 2.7201, -1.055, 2.6405, 2.2521, 1.3815, 0.5583, -1.228, and -0.9861; and

phases of elements in the fourth sequence are sequentially 1.061, 2.9843, 1.895, -1.5971, 2.8777, 0.705, 1.1682, 1.1245, 1.9303, 1.2356, -2.3753, -2.722, -2.7998, 0.8435, -2.7826, 0.588, 2.4875, -0.8478, 0.6696, -1.9823, 2.4349, 1.7041, -1.2757, -1.6578, 1.4145, 2.0717, 3.04, -0.2645, 0.6012, 1.9531, -1.4472, -0.7329, -0.281, -2.029, -2.1846, -2.8223, -2.2961, 0.7176, -0.6814, -1.1031, 2.9774, 1.1502, 0.1281, 2.2324, 1.2947, -2.3618, 1.5582, -1.8937, 1.6456, 0.1363, 2.2982, 1.1255, -2.6386, -2.3869, -2.5052, -1.5637, 2.2169, 2.0599, 0.7548, 1.7308, -2.0564, 2.1186, 2.515, 1.4517, -2.4809, 1.4232, 2.7843, -1.1895, -0.7919, 1.6308, 2.5694, -1.5364, -2.1053, 0.4632, 1.112, -3.1378, 0.4789, 0.9382, 1.135, -0.2018, -0.4927, -2.4897, 0.4839, 0.0635, -2.2038, -2.7582, -2.7959, 1.7074, -0.9146, 1.4253, -0.3862, -2.5403, 2.169, -2.1516, -2.6091, -1.0022, 0.0772, 1.2431, -0.5202, 0.1359, -2.5602, -0.044, 1.1396, -0.0015, -2.4113, -1.3293, -1.4395, -0.5467, -2.606, 1.4824, -0.6818, -1.8276, -1.2394, 1.597, -0.3141, 1.4748, 3.0729, 0.1328, 1.6233, -2.4023, -2.7495, -2.0783, 2.0178, 2.5981, -2.7884, -2.6772, 1.1734, 1.3987, 1.1437, -2.6861, -0.2326, -1.831, 3.0711, -0.06, -0.0704, 2.812, 0.0403, 1.5871, 1.1506, -0.9629, -1.647, 2.472, 2.7315, 2.8252, -0.9627, 2.3496, 0.6323, 2.9034, 2.0765, 2.7488, 0.2843, -0.1067, 1.6317, 0.1768, 2.8531, -1.2039, 2.1871, 0.533, 0.3601, 2.9191, 1.3809, 2.9839, -2.4448, 0.8689, -2.6027, -1.2544, -0.3754, 0.6281, -1.3977, -0.255, -1.1744, 0.1064, -2.9134, -2.6756, -1.6601, 0.7311, -0.3027, -0.9627, 2.9799, 1.0197, -1.2653, -1.6897, 2.3611, -3.0892, 1.4714, 0.4272, 2.1008, -0.8339, -0.9029, 1.6565, -2.061, -2.3052, 0.0532, -2.1089, 1.1815, 3.0791, -1.8425, -2.762, 1.4289, -0.0628, 2.7451, 1.3438, 2.6595, -1.6191, -2.7623, -2.27, 0.5242, -0.8721, -0.3107, -0.1204, -2.1194, 0.5053, 0.9072, 1.9209, -0.4539, -0.2282, -0.9786, 0.8866, -1.5881, -1.6584, 1.3551, 0.2466, -2.3105, -0.7844, 2.3299, -0.1213, -2.215, -2.3149, 2.7682, -1.971, 0.3086, 0.502, -2.8237, 1.0002, -0.2494, -1.4453, 0.5184, -1.619, -2.1585, -1.9069, 1.4864, -2.4179, -2.7398, 0.1529, 1.2195, 0.9594, -2.6996, 2.592, 1.8508, 1.7086, 1.763, -1.2147, -3.1275, -2.7576, -0.2502, and 1.9691.

7.  The method according to any one of claims 1 to 5, wherein the sequence set comprises a first sequence, a second sequence, a third sequence, and a fourth sequence, and a length of each sequence in the sequence set is 512;

phases of elements in the first sequence are sequentially -2.1105, 2.7454, -2.1499, 2.6802, -1.1291, -2.2445, 2.3126, 2.5881, 0.5826, -0.0766, 2.6303, -1.8169, -1.9768, -1.1953, 0.538, 2.1496, 1.0815, 1.3538, -2.7423, 2.759, 1.0709, 2.3424, -2.1413, -1.2298, 1.407, -2.6907, 0.5182, -0.708, -2.2089, -2.4465, -2.8986, -2.4976, -0.0963, 0.4135, 2.4194, 2.5912, 0.5188, -2.1093, -0.5129, -2.9034, 2.3285, 1.6245, -2.2985, 2.4633, 1.3058, -1.4584, 1.5284, -2.7742, 2.5203, -2.1476, -3.079, 1.1566, 0.5155, -2.1169, 1.1515, -2.9254, -0.5113, 2.5798, 0.7815, -2.7631, - 2.3841, -1.9011, -3.0012, 2.4741, -1.5959, -0.5463, -3.1093, -1.3425, -2.2048, -1.3603, 2.3921, 1.7467, 1.3034, 1.4379, 2.4451, 1.3369, -2.2361, 1.5143, -1.51, -0.9705, 0.6697, -1.7128, -0.205, 3.0624, 0.2425, -2.9706, -2.4413, 0.3382, 0.0585, 2.6962, -0.3676, 1.7483, 0.9392, 1.8367, -2.9052, -1.8563, -0.6473, 0.1776, -0.676, -1.669, -2.4725, -2.0806, -1.1318, 2.367, 2.6811, 0.0051, -1.7979, -2.9857, -0.7879, 2.1188, 0.603, -2.2814, -1.2952, 2.4084, 2.4423, -1.969, -1.7098, -2.6259, -2.8768, -1.9446, 2.2419, 0.0149, -0.3913, 2.61, -1.9068, -1.6117, -0.7071, -1.4237, 1.9495, 0.41, 1.4489, 1.4032, -1.6696, -2.3742, 1.2182, 1.6537, -2.3067, -2.5816, 2.2336, -1.8909, 0.7162, -2.5476, 0.9153, -2.2565, -1.2829, -2.582, 2.1297, 2.7134, -0.9509, 2.386, 0.4782, -1.2119, -2.8951, -1.9756, 2.8996, 0.038, 1.8809, -1.4174, 2.8197, 2.1564, -2.9553, -2.276, 0.0978, -0.7395, 0.5237, 1.213, 0.08, 0.8986, 0.4271, 1.5327, - 0.183, -1.7421, -1.5647, -1.6839, 2.8569, -1.9308, -0.0164, 2.2585, -1.5969, 2.0773, -0.7832, -0.4249, -2.4842, 0.0767, -0.7189, -2.5527, -0.0933, -0.6364, -0.572, 0.8302, -0.902, -0.1546, 0.5365, -2.6638, -0.5302, -1.9754, - 3.1003, -2.0003, 1.4768, 1.4415, -2.6673, 2.1743, -0.9592, -2.3258, -0.229, 0.5343, 2.623, 1.8934, -3.1365, -1.004, 1.8599, 3.0803, -2.2626, -0.3931, -1.3502, 0.5576, -2.7606, 1.6654, -1.2737, -2.761, 2.3353, 0.6133, -0.2, -1.6791, 2.7674, -2.7123, -0.7118, -0.4424, 1.5747, 2.7762, 2.9568, 0.8979, 1.882, -1.9664, -1.3726, 2.7626, 2.6777, 1.3779, 1.844, 0.1314, -1.634, -0.3631, 3.0929, 0.0694, -1.7874, 1.5397, 1.4216, -0.4228, 2.7735, -2.0388, 0.461, 2.4996, 0.9591, 1.7931, 1.7919, 1.5564, 0.8379, 1.7245, 0.2682, 2.6893, 2.1801, -1.899, 2.2774, 3.0861, 1.3053, -1.9069, - 0.8838, 0.7035, -0.207, 2.0985, 0.3901, -0.5023, 2.576, -1.4021, -1.0127, 2.1652, -0.9966, -1.2957, -0.7779, - 3.0529, 2.7891, 0.9865, 2.046, -2.3455, 1.7896, -0.0824, -1.577, 1.0993, -1.897, 0.0951, 2.61, -1.3949, -2.8704, 2.1053, 2.4479, 2.9305, -2.2771, -3.0051, 1.1279, -2.3202, -0.2563, -0.127, 1.8145, 1.4142, -3.066, -1.157, 0.6104, -0.0837, 1.886, -3.0668, -1.171, -1.1433, -2.0282, -2.8625, 0.0801, 2.1766, 1.2824, -0.9624, -0.6822, -2.6888, - 2.8036, -0.8975, 0.5275, -2.6525, 1.4374, 0.832, -2.7328, -2.075, 2.8376, -2.6253, 0.344, 2.5785, 2.819, 2.472, 1.4774, 1.6881, -1.8372, -2.1896, -2.7849, -1.3209, 2.992, 1.1669, -1.7676, -1.3301, -2.1503, 0.167, -2.8628, 1.8651, 0.0514, -0.3434, -3.0507, -0.0759, 1.7538, -0.3626, -3.1401, -1.8967, -1.1984, 1.5096, -1.5478, 2.4787, - 0.5814, 2.8989, 0.9388, 0.6709, -2.6631, -1.5369, -1.3674, -2.0672, -0.2212, -0.8312, -0.7153, 1.7393, -2.6573, - 0.7339, 2.9586, -2.4911, 2.808, 2.5092, -2.5382, 3.1268, 1.569, -0.7463, -0.3661, -1.3678, -1.7346, -1.5407, 0.5935, -2.0022, 2.6685, -0.6249, 2.112, -2.8259, -1.8316, -1.4339, 0.4345, 2.3205, 2.8426, 1.9757, -2.7595, 0.2176, 2.4886, 1.3164, 0.3807, -2.6097, 1.8592, 0.7116, 2.4593, -1.705, -2.9182, -0.0184, 2.8296, -2.3055, 0.7475, -0.0564, 2.2374, 0.7474, 0.2512, 2.6764, -0.99, -0.9894, -1.9716, 0.1977, 1.2425, 1.313, -0.4236, 0.423, -2.2943, 2.6927, 0.6174, 0.4819, 0.7785, -2.8371, 0.9482, -0.093, 2.7863, 1.8903, -2.9987, -3.0866, -1.7616, 0.6753, -2.2548, 1.803, 2.6082, 0.4504, -0.4067, -0.5082, -2.8416, 2.1296, 1.7431, 0.5231, 0.9746, -2.7585, -1.1586, -0.4691, -2.9417, -1.4371, - 2.4419, 0.895, -1.7961, 0.2948, 0.8189, 1.2922, -0.1813, 0.8849, -1.2599, 1.088, 1.855, 0.2454, -2.7319, 0.7567, - 0.3504, -1.1795, -0.2382, -1.1103, 1.7082, -0.835, -2.2531, 2.8325, 0.7025, 2.0337, -2.9871, 0.2331, 0.7845, - 1.3952, 1.3525, 0.1725, 0.9643, 2.6787, -0.797, -0.4523, 0.1767, 0.637, -0.1203, 0.4188, -2.6388, 2.5954, 0.2774, 2.713, -2.9775, 0.1604, -2.3701, -0.9566, 1.7424, -1.686, 1.0692, 0.31, 1.6555, -0.7323, -2.0694, 0.2727, 1.3742, and 1.9157;

phases of elements in the second sequence are sequentially 3.0192, 3.0209, 2.7844, 1.4849, -1.128, 1.6569, 2.1593, 0.6097, -2.6057, 0.5294, -0.0615, -1.69, 1.7999, -2.9856, 1.9468, -1.4144, 0.1067, 1.1969, 0.1883, -0.0375, 1.9337, 2.7693, 2.2142, 1.1128, -0.1985, 2.9284, -2.4576, -0.3793, 1.956, -0.7491, 2.8667, -1.211, -1.5488, 1.866, 3.0115, 2.0021, 3.124, 3.1063, -1.1475, -1.48, -0.1933, -0.0171, 0.2338, -1.7864, -0.2611, 2.7388, -0.3579, 1.4425, -1.6516, -0.7427, -0.4608, 2.6415, 2.7301, 2.9456, -1.4786, 0.4901, 0.772, 1.3896, -0.5238, -1.7108, 1.0773, - 0.7892, -2.1363, -0.3729, 1.1007, -2.8498, -0.3774, -0.2658, 3.0681, -2.0613, 1.797, 0.2772, -2.1443, -1.8437, 2.9026, -2.8185, -0.888, -1.8993, -1.7259, -1.6947, 1.3501, -2.7813, 0.6659, -0.8242, 1.1122, -0.6805, -1.2703, 1.2131, -0.8708, -1.7965, 2.3495, -0.4052, -0.563, -1.0209, 0.8365, 1.3068, -2.8664, -2.7411, -1.6275, -2.7537, - 2.5246, 3.0224, 2.8112, 2.7806, 0.1395, -1.7896, 1.2965, -1.7708, -1.1077, 2.302, -1.8765, 1.9079, -0.2459, -0.4963, 2.837, -2.5941, 2.4793, -1.4036, 2.0021, -1.2541, 2.4326, -1.2609, 1.5638, 1.199, 1.2828, 0.4671, 1.7528, -1.1351, -0.9649, -3.1369, 0.6883, 2.3679, -1.5183, -0.8438, 1.1649, 0.4392, 1.326, 1.7261, -1.1819, 1.9665, -2.9776, - 0.0788, -1.2501, -0.1945, 0.2548, 2.3403, -1.9412, -2.3497, -0.4736, -3.1365, 2.3693, -0.1294, 0.7708, 0.9577, - 0.2644, 0.114, 0.8386, -2.4865, 2.4612, 1.784, -0.4601, -2.7013, 2.7333, 1.6116, 1.5644, -2.7282, 2.8788, -1.5519, 2.2012, 2.2425, -0.05, 2.3208, 2.6684, -1.8068, 1.2222, 0.9995, 2.5732, 0.0917, 1.0415, -0.5431, -2.7994, -2.5922, -1.68, -1.3327, 1.2882, -1.1492, -0.7571, -0.2563, -1.6684, 0.634, 0.5781, -2.9138, -1.4012, -1.9052, 1.7858, - 2.7289, 2.1521, -3.1036, 0.4264, 3.065, 0.859, 0.7103, -1.7999, 2.3675, 2.2567, -0.0658, -1.5374, 0.8981, -2.5055, 2.0658, 0.3298, -3.011, -0.049, -2.2376, -1.2131, -3.1389, 2.715, 3.0712, -0.1161, -2.4271, -0.8862, 1.2509, - 2.3863, 1.673, 1.958, -2.267, 3.1137, -1.7515, -1.5565, -1.6786, -0.1996, 0.7365, 1.4906, -1.6594, -0.4415, -0.9893, 0.8889, -1.9152, -2.6304, -2.6574, 0.1605, 1.2638, 0.3066, -0.7427, 1.2197, -1.4248, -0.2842, -1.3715, -1.7798, 2.7464, -2.3573, -0.3798, -2.7326, -2.1172, -2.8036, 0.1784, 0.3722, 1.7859, 1.0365, -1.9075, -2.729, 2.0267, 0.7679, -1.768, 2.3824, -0.4658, 1.7892, -2.7481, -1.6582, 2.0039, -2.6672, -2.3028, -0.4677, 1.9354, 2.721, 0.0328, -1.3605, 0.8127, 0.7848, 1.3141, 1.0839, 0.5722, 2.9996, 1.8174, -1.6489, -2.8897, -0.4481, 2.0619, -2.9214, - 2.7597, 1.7739, -1.9996, -2.5191, 2.6816, 1.8332, 2.7706, 0.2973, -0.8344, -0.6115, 2.9875, 2.214, 1.8329, 0.8885, -0.8341, 1.4381, 0.2673, 1.9625, -0.9181, 1.8882, 2.4168, -0.087, 1.6799, -2.3694, -1.6376, -0.1136, 0.5218, 1.6265, 0.1558, -2.8714, 1.3942, -2.19, 1.5227, -2.8869, -0.0809, 2.5284, 0.3145, 0.8169, -2.1694, 0.721, 0.0475, 2.7297, 2.9884, 2.7127, -1.2266, 2.1679, 0.9572, 0.4919, 1.1542, -0.9099, 1.2792, 0.6011, -1.0128, -2.4337, 3.036, 3.1067, -2.6737, -1.9792, -1.9218, 1.0044, -1.9823, -0.3073, 1.4071, -3.1184, 3.0585, -1.3349, -0.9278, 1.9615, 0.5656, - 3.1256, 2.2883, 1.8844, 0.4585, -0.7954, 3.1273, 2.4257, -2.715, 2.1884, 1.01, -2.1265, -2.3709, -0.5282, 1.5096, - 2.3471, -1.0902, 0.6104, 0.2893, 0.1485, -1.0201, -1.0152, -1.5201, -0.6145, 1.9226, -0.6122, -0.7705, -1.2726, - 2.8186, 0.4848, 2.3636, 0.4646, -3.067, -1.6367, -0.8794, 0.6947, -2.1683, -0.7961, 1.3499, 2.1723, 0.9654, 2.7463, 2.4699, -1.5153, 2.359, 1.6837, -1.3669, 2.5014, -0.0762, -2.7946, 0.941, 0.2541, 0.251, -1.7145, 1.1764, -0.263, 2.6797, -1.8366, 2.4366, -1.069, -0.1617, -1.1437, 1.7302, -2.5413, -1.0059, -2.1705, -0.3349, 0.5919, -1.9569, 2.1923, 1.7994, 0.8729, 0.7466, -0.9421, -0.1961, -0.7885, -1.2721, 0.1066, -1.8097, 1.8603, 2.3625, -0.9716, 2.7389, 0.5463, 0.3916, -2.4367, -1.5555, -1.3585, 0.2255, -0.7066, -0.117, -0.4073, 0.2546, 2.8864, -2.7433, - 0.5913, 0.7254, 0.8145, -1.1953, 2.5525, -0.5269, 1.6937, -2.6123, 2.603, 2.0046, -2.8325, 0.2393, 0.636, -1.5431, 2.4081, 2.1222, 1.1437, 1.2229, -2.2422, -0.6734, 1.0966, 1.1676, 2.6266, 1.0535, -2.8501, 2.7789, -0.4466, -2.6699, -2.741, -2.7071, -1.5179, -0.3301, -1.1533, 2.6488, -2.1721, 1.057, 0.6359, -3.126, -0.8757, 0.7469, -2.9494, 1.6895, 1.1956, 2.5322, -1.0186, 0.935, 0.6006, -0.7928, -0.4468, -1.0864, 2.4841, 0.5355, -1.7739, 2.4122, -0.7805, 0.7754, -1.7731, 1.3549, -0.9192, and -0.4245;

phases of elements in the third sequence are sequentially -1.0795, -2.5791, -2.4598, -0.5924, 1.0815, -2.3171, 0.7844, 1.2667, -2.2972, 1.6171, 1.03, -0.6735, 0.7238, -0.3003, 1.7859, -2.8641, 0.833, 1.497, 0.7029, 0.9854, 1.6644, -0.7, -2.013, -0.2225, 0.0142, -1.0055, 2.9791, 0.5565, 0.8988, -2.6545, 0.1973, 2.3356, 1.2019, 2.3485, - 0.9636, 2.0271, -0.2721, -1.6995, -0.8209, 0.2772, 1.851, -1.519, -1.5699, 3.0614, -1.9974, 0.6755, 0.4923, -1.2997, 0.5718, 0.3842, 3.091, 0.7326, -1.4874, 1.9498, -2.4845, 1.6123, -2.3639, 0.3585, -1.4534, -3.1094, 1.3488, 2.5214, 2.8029, -2.2884, -1.9588, -0.5117, -1.9367, -2.3749, -2.3784, 0.9125, -0.1022, 2.371, -2.3846, -0.2631, -1.35, 0.76, 2.6376, 2.8458, 2.7875, 0.6814, 0.6253, 0.2912, 1.9104, 0.7214, -2.041, -2.7613, 1.0123, 2.1805, -0.0579, - 1.9334, 1.5849, 2.9529, 0.1039, 0.9608, -0.0184, 0.4302, 2.2558, -2.6467, 0.9939, -0.7602, -2.6582, -2.5183, - 0.9617, 2.9197, 2.9306, -0.4622, 0.8565, -2.9185,1.2011, -1.9419, -1.7164, -3.1405, -3.0637, -0.79, 2.5301, -2.557, 3.1133, 0.468, 0.3231, -0.442, 0.7857, 1.3391, -0.2134, 2.5554, -0.0864, -0.8473, -0.5396, 0.8011, -0.9687, 1.4666, 1.8204, -1.3043, 0.8803, 0.6145, 0.6187, -1.6257, -0.6089, -2.1716, -2.1682, 1.9191, -0.7464, 0.5884, -0.4182, 2.511, 1.463, 1.7364, -3.1298, 1.6556, -1.9379, 2.8066, -0.5292, 2.4132, 2.2647, -1.7671, 1.0925, 1.7022, -1.8428, 0.578, -0.7912, -0.0047, -2.8261, 1.4738, -2.8354, -1.634, -1.0501, -0.1417, -2.7093, 0.7898, -1.9144, -0.6035, - 0.5114, 1.3314, 1.5583, -3.0273, 0.0978, 1.8077, 0.6128, -1.5024, -1.0637, -2.8042, 2.0172, 0.7015, 3.1113, 1.9989, 1.7587, -1.4301, -1.4471, 0.4203, 0.3226, 1.7863, 2.6203, -1.0947, 1.3839, -2.1797, -2.2745, 0.7053, -3.0789, 0.6917, -1.5333, -2.2288, 2.1197, 1.7006, -0.721, -2.8588, 2.255, 2.2451, -2.1284, 1.8046, -2.2253, -2.5962, - 3.0269, -2.9609, -1.1764, 0.0043, -0.8306, -2.1796, -3.0145, -2.6855, -2.867, 1.7563, 2.1019, 1.7325, 1.7514, - 0.4206, 1.9653, -1.2043, 0.5678, -0.789, 1.131, -1.5576, 0.7179, 3.0153, -2.6846, 1.0482, -2.7522, -1.1406, -1.696, -2.7422, 0.2134, -1.677, 2.5441, -0.8704, -1.7055, -2.7988, -0.6848, -1.7542, -0.028, 1.2559, 2.1302, 2.4461, - 1.7175, 0.6895, 2.9196, -1.7696, -0.0178, 1.1554, -1.5745, -0.3421, -1.2073, 1.7945, 1.424, 1.585, 0.3265, -2.1377, 0.1798, 0.1097, 2.6955, -1.5506, 3.0585, 0.5952, 1.7022, -0.8932, -2.3257, -1.664, 1.0226, 0.9433, -3.0229, 2.91, 2.5344, -1.8197, 3.1339, 0.7303, -1.2281, -2.2971, -2.6479, -2.916, -1.0393, 1.6667, -3.0493, -0.5094, -2.6197, - 0.3726, -3.1121, 2.1016, -2.4206, -1.7731, -2.6106, -1.1454, 1.2744, -0.6975, 2.2349, -2.9665, 1.8498, 0.4642, - 2.243, 0.7039, 0.3274, -0.8337, -2.0905, -2.4186, -2.0378, 2.892, 1.6497, -2.393, -1.7288, 1.7183, 0.5562, 0.6583, 0.6642, -0.0981, 1.2342, 0.0095, 2.8954, 0.6431, 0.8767, -1.1654, 1.6604, 3.124, -1.2557, 0.6627, -2.2503, -1.1898, -1.5636, 1.075, 1.9317, -0.8994, -1.4422, 0.3253, -2.623, 2.5071, -0.3135, 2.4573, 2.2516, -0.7291, 1.8484, -1.6677, -0.7121, 2.3688, 3.0447, 2.625, 2.5892, -2.8401, -2.5696, -0.3009, 1.2613, -1.7687, -2.5125, 1.0923, 2.7245, 1.2043, 2.9854, -1.6294, 2.9716, -1.3922, -2.6723, -2.6587, 1.6868, -1.2972, 0.0938, -2.935, 1.6126, -2.2353, -3.0748, - 0.7531, 0.4581, 0.6186, 2.0092, 1.5417, -2.2229, 0.574, 0.126, -2.1479, 2.3167, -1.2877, 2.7197, 1.256, 1.6623, - 1.2182, -2.2754, 1.3243, 3.0371, -1.526, -2.2343, 3.0369, -1.0012, -1.9673, -1.1983, 1.5606, 0.6707, 2.3028, - 1.9856, -2.8294, 2.8409, 1.7424, 0.9698, -0.0331, -2.3138, -1.9668, -1.512, -1.2465, -1.8786, -2.8347, -1.9291, 1.7108,-2.2844, 1.7259, 1.7743,-1.1878,1.3882, 0.6492,-1.1723, 2.4631, 1.4974,1.4404,1.3215,-1.2397,-0.0658, 2.7973, -2.6225, -0.6954, 1.2443, 1.3149, -1.8851, 0.8677,1.2636, -2.5172, -1.7356, 2.5487, -1.4622, 0.0139, 2.856, 0.0053, -1.4135, -1.0782, -0.358, -0.0774, 1.282, -0.4408, -1.411, -2.8151, -1.5776, -1.5232, 0.0998, -2.5297, 0.5579, -0.2283, 2.9494, 1.7449, -2.721, -1.6992, 2.3604, -0.9737, 1.7217, -2.0561, -2.4381, -1.9944, 0.7402, - 0.1161, -1.5294, 2.8551, -2.2716, -2.5302, 0.0018, -2.9134, 0.4909, -0.9281, 1.1387, 0.3869, 1.7459, -0.3757, 1.7032, -1.1268, 2.819, -2.3066, 2.3565, 1.8695, 0.0085, -1.192, 1.3734, 0.9354, 1.2282, -2.4915, -1.0795, 0.9794, 0.6733, 0.8243, -1.6766, 2.7628, 0.3094, 3.0082, -3.0439, -2.5962, -3.0717, 2.3231, 1.9216, 0.7814, -0.796, 2.6736, -2.6084, -1.3276, 0.8754, and 1.2277; and phases of elements in the fourth sequence are sequentially 3.0123, 0.5835, 1.1371, -3.0951, -2.5286, -1.9804, 1.6211, -0.392, -2.5499, -0.7099, -0.1692, -1.1328, -2.4206, -2.4332, -0.8881, -3.0597, 0.9013, -3.1373, 0.9194, -2.5919, -1.8593, -1.1851, -0.3759, 2.5936, 0.0655, 3.1337, -0.1588, -0.403, 1.7078, -1.1191, -1.7841, 0.6387, 1.0203, 0.3628, -2.0542, 2.9582, 2.1007, 3.0295, 1.8753, 2.2264, 0.1886, -0.9647, 0.1855, 1.3637, 0.347, 0.6011, 1.7617, -0.9258, 2.0938, 1.3566, 0.3216, -0.6779, 1.6792, 2.7682, -1.2203, -1.1981, -1.1433, -1.4294, -2.784, 1.0346, -2.6923, -2.8245, 1.539, -2.5821, 0.4978, 2.7492, -1.0357, 1.279, -1.7753, -2.8659, 0.9287, -3.1346, - 1.0218, -3.0215, -2.6176, -0.3551, 0.9558, 1.697, 2.5703, -2.0113, -3.1384, 1.6137, -0.7649, -1.3651, 0.3244, - 2.2301, -2.4712, -1.9965, 0.3197, 2.0955, -0.2956, -1.0952, -3.0611, -0.9674, 1.7615, -1.6169, -2.0426, -1.8613, 0.0799, -0.7323, -0.8712, 3.018, -1.156, 2.2671, 0.8369, 0.0081, -0.0595, 1.0205, -1.1555, 0.9765, -0.8119,1.5878, 1.6834, -2.9698, -2.1428, -1.0866, -0.9744, -0.4074, -2.1455, -0.6967, -2.0256, 1.3817, 1.4645, -2.3978, -2.0557, 1.1878, 1.7306, 0.705, -1.3785, 1.3181, -1.7411, -1.784, -0.6787, 2.7425, -0.488, -0.5668, 0.2928, -2.3449, 1.2311, 0.8143, -2.447, 2.805, 2.1685, -2.3232, 1.5004, 1.2755, 1.5061 ,2.8,1.5387 ,0.8779, -1.3223, 1.3264, 0.4834, 1.0891, -2.25, -1.2888, 1.4306, 2.9746, 0.219, 1.1644, -0.2619, 0.3807, 2.9315, -0.783, 2.2998, 1.5997, -1.1448, -1.8605, 1.2735, 0.2524, 1.4104, 3.0569, 0.5428, -2.9275, 0.1825, -1.7817, 0.8966, -0.3427, -1.6165, -2.3229, -2.9526, 0.0156, 1.1055, -0.1452, 0.3211, 2.3537, 1.9355, -0.2639, 0.6587, -2.1447, 1.7984, -2.7935, -0.0483, -1.1046, - 0.6228, 0.2916, -2.8671, -2.5066, -2.945, 1.3709, 1.8547, 0.2011, -0.3952, -0.3243, 0.849, 0.5462, 2.4507, 1.1968, 1.4355, 2.7837, 3.1051, -1.3384,1.3732, -1.6112, 0.5981, 1.8273, -2.3988, -0.7566, 0.3464, 0.305, -1.8018, -1.1606, 0.7482, -1.1324, 3.0927, 0.8572, -1.7701, 1.7797, -1.7584, -2.1056,1.0595, -1.499, -0.5822, -1.204,1.73, -0.8551, -0.7908, -1.1039, -0.0017, 0.1337, -2.2833, 1.3195, 0.2997, -1.0575, 2.2953, 2.6668, -1.6709, -2.8204, 0.7834, 2.8037, 0.8875, -0.5708, 2.4037, -2.7857,1.2647, -0.2775, -0.3293, 3.1372, 1.4855, 2.8477, -0.0663, 0.1867, 0.3127, -0.0574, 1.3072, -2.2642, -2.0017, -0.9928, -2.788, -0.5725, 1.8832, -1.2355, 1.4684, 2.5182, 0.9747, 1.6539, 1.5005, 0.8231, -0.5045, -2.7646, -2.1734, 1.5692, 0.7244, 1.9958, 1.9286, -1.1445, 0.1755, -0.5099, 0.1045, - 2.9392, -0.6585, 1.1518, 2.0185, -1.5894, -2.6222, 2.433, -1.7674, -0.4915, -0.0471, -3.0401, -1.369, 0.487, - 2.7436, 1.7053, 0.6082, -1.4852, 1.3657, 1.8245, -0.628, 2.5784, 0.687, 2.8207, 0.867, 1.0954, 1.6593, 2.019, - 2.6137, 1.5781, -3.0453, -3.0213, -0.5331, -1.1801, -2.9898, 2.4626, -3.0417, 0.3861, -1.0466, 1.7206, 2.6488, 2.3995, -1.5993, -1.858, 1.8448, -0.0352, 1.6745, -1.6983, -2.2721, 0.598, -2.0077, 1.4515, -0.3978, 0.1538, - 2.8164, 1.7746, -2.4466, 2.7602, 2.498, 1.5086, -2.6137, -1.6101, 0.3965, 1.8764, 2.0507, 1.2397, 2.1863, 0.0258, 1.1561, 1.1045, 0.935, 1.1222, -1.1705, -2.5027, -1.9101, -2.5205, -2.4018, 1.8161, 0.4349, -2.4537, 1.4396, 2.8816, -1.0416, -0.1813, -3.0216, -2.9309, 0.2593, -2.9664, 2.0021, 2.4922, -0.9576, -0.1153, -2.0047, 1.2913, -1.7721, 0.59, -0.4545, -0.9309, -2.8527, 1.0169, 2.8026, -1.7331, -0.1862, 2.3819, -0.4696, 0.5555, -2.0132, -2.8804, - 1.272, -2.0094, 2.1736, 0.0626, -1.4458, -0.9737, -1.4807, -0.6618,1.5572, 0.8228, 0.1009, -2.284, -0.2869, 2.4618, -1.4547, -0.5199, 1.1696, 1.9863, -0.0221, 0.7814, 0.8558, 2.2155, 2.6814, -2.8157, -1.6287, 1.5078, -0.1133, 1.5003, -0.8745, -2.3156, 0.4334, 0.5164, 0.5241, -0.2641, -0.1591, 0.8207, 2.3963, -1.7247, -2.8819, -0.8891, - 2.9162, 1.6822, -1.4876, 2.9044, -3.0231, -0.6716, -2.8503, -3.0249, 2.3785, 0.4475, -2.0209, -0.0557, -2.1557, 1.3973, -1.3423, -2.4042, 2.619, -1.8037, 0.8574, 1.6014, 0.415, -1.6709, 0.3373, 0.881, -0.9435, -2.5588, -2.3626, -1.4172, -1.8762, 2.793, -0.0688, -2.4413, -2.6698, -2.9818, 2.5816, -0.4914, -0.0145, 1.077, -2.2344, -1.0058, 2.3526, 3.0563, -2.6861, 1.0785, -2.2341, 0.4861, 1.6506, -0.1896, 1.7374, -2.6776, 1.9091, 2.0569, -0.2478, 0.7472, 2.522, -3.003, -2.5074, 1.0143, -1.2411, 0.3736, 0.7384, -0.9272, -3.089, 2.7469, -0.2733, 2.8739, -1.662, -2.5246, -0.636, 0.5689, -0.0723, -0.9186, 0.2425, -2.8616, -0.0004, and 0.0813.

8. The method according to any one of claims 1 to 5, wherein the sequence set comprises a first sequence, a second sequence, a third sequence, and a fourth sequence, and a length of each sequence in the sequence set is 1024;

   phases of elements in the first sequence are sequentially 0.0733, -0.562, 0.6222, -1.1501, 2.9956, -0.6646, 1.1977, -3.0444, -1.217, -0.7249, 1.0835, 0.4894, -1.1359, -2.9362, -1.8032, 1.9563, 1.7789, -2.0071, -1.964, - 0.7257, -1.147, -0.4765, -0.6276, 1.6978, -2.0182, -1.5585, -2.2299, 2.4992, -1.1127, 0.234, -1.7083, 0.3735, 0.9539, -0.1089, -0.4316, -2.8891, -2.0727, 2.4379, 0.5675, 1.3241, 2.798, -2.6718, -2.1598, -1.5837, 1.5658, - 2.9066, -3.1396, 2.6183, 2.9198, -0.6489, 0.7407, -1.5674, 2.976, 1.4301, 1.1198, -2.8168, -0.6983, 1.2398, -2.6757, 2.0844, -2.5637, 0.23, -2.6768, -2.4842, -1.2115, -0.8223, 2.5999, 1.9427, 2.8651, 0.1254, -2.3611, 1.6401, 0.0686, 2.3849, 0.9262, -2.5639, 0.739, 1.5301, 2.872, -2.4084, 1.898, -1.0593, -2.4292, -2.7106, -1.4083, 0.5231, 2.4781, -0.7892, 1.2816, -2.5762, 0.0623, -0.0946, -2.8342, -1.6004, -0.3793, 2.2992, -1.2174, 2.451, -1.0588, 1.5319, 2.1776, 0.6089, -1.786, -2.605, 0.3795, -2.9227, 2.435, -1.3127, -2.1321, -2.2946, -3.1065, 1.8567, 1.8641, 0.5987, 1.5668, -0.8505, 1.8774, -0.1003, 2.5756, 2.4312, 1.6454, -0.809, -0.9425, -0.4008, -0.5777, -1.2942, -0.0818, 2.4265, 1.5209, -0.8534, 1.6664, -0.1802, 0.4628, 0.5892, 0.5168, 0.4157, 0.0247, -1.4162, 1.6559, -1.647, -0.8092, -2.8958, 2.2366, -1.9902, -1.8664, 0.7184, 2.0021, 0.8381, 2.0571, -2.3849, 2.9745, 1.5274, -0.1776, -1.4285, - 2.8098, -2.8761, 2.5289, -0.7966, -3.1308, 0.8796, -1.5071, -2.2335, 0.5773, 0.9118, 1.0812, 1.5463, 0.2242, - 2.2933, -1.7269, -0.376, 0.0794, 1.7349, 0.0581, 0.1937, 1.3618, 0.3817, 1.4507, -0.6215, -2.9234, 1.7954, 2.2343, 1.0335, -1.1142, 2.0402, -3.0731, 1.2697, 0.9909, -1.4337, -2.2368, -0.572, -0.7416, -0.507, 1.5834, 2.0558, - 1.8066, 1.0189, 2.475, -1.7763, -0.952, -2.9137, 2.8809, 2.2043, -0.654, 2.8416, 1.5914, -1.0667, 0.7663, 2.5446, - 0.1447, -2.6975, -0.0945, 1.9032, -3.09, 2.0113, -1.4975, 1.6842, 0.3079, 0.4684, 2.365, -2.7845, -2.2678, -0.7466, 1.8018, 0.7952, -0.2957, -0.5293, 1.3387, 0.5389, -2.6679, 0.395, -0.8296, 2.2949, 2.6403, -1.2975,1.4792, -0.6332, 0.6843, 2.6615, -2.1601, 2.9243, -0.3396, 1.7595, -1.6658, -0.1149, -0.0637, -1.0577, -1.7875, -2.5372, 0.4145, 2.8565, -0.6423, 1.9835, -2.2593, 0.207, 0.4669, 2.7585, -0.5219, 2.373, -2.3099, -0.9404, 0.066, -0.819, -0.7605, -0.5656, 0.1448, 3.0472, 1.2612, -1.8772,1.5626, -2.0472, 0.5684, -1.1276, 2.3887, 0.622, -2.606, -1.5216, -1.0834, -3.1064, -2.9215, 1.9539, 1.7834, -1.9313, -1.9279, -2.9221, -0.9172, -3.1205, 2.8471, -1.1031, -2.1156, -2.4757, 1.4071, 2.7833, 0.4616, -0.6468, 1.8276, 0.2132, -0.034, -3.101, -3.0007, 2.3604, -0.4207, -0.894, -0.8225, -0.5988, -2.9146, 0.663, -1.8217, -0.9141, -2.8429, 0.9685, 3.0929, -2.6342, -1.728, -2.8571, -2.3487, -2.3359, 2.4434, - 1.5805, -0.3247, -0.7039, 0.1338, -0.4004, -0.4311, -1.503, -1.0057, 1.2853, -2.2092, -1.954, -1.6545, -1.4017, 2.8069, 2.2797, -0.8679, 0.593, 1.8113, 1.3772, 2.073, 0.7113, -1.928, -2.9212, 0.6691, -0.5886, 1.6602, -2.2417, 1.9808, 2.8659, -2.8685, -0.3586, -1.008, 0.4231, -0.5133, -1.8972, -3.05, 2.7304, -0.5662, -1.776, 2.4306,1.1265, -1.595,-0.2775,1.6407,1.8024,-0.9171,-0.9814,1.861,-2.9059,2.6197,0.5853,1.8178,-0.4937,- 1.4052,2.6055, 0.4408, 1.0804, 2.1619, 0.7687, -2.6918, 1.4664, 2.6107, -2.8215, 0.8654, 1.1439, -2.554, -0.0473, -1.64, -0.1286, -2.2304, 1.8205, 2.4829, -0.9217, 0.8454, -0.3101, 0.4279, 2.4353, -1.8976, -0.4061, -2.1607, 1.1063, 2.5113, 1.7661, 3.1124, 0.589, -1.9499, -3.0977, -2.4886, -1.32, 1.6102, 0.0109, -1.3057,1.4457, -2.3508, -0.6022, -3.0759, -1.038, -1.6172, 0.3475, 2.9801, -2.7083, -1.0034, -2.7684, -1.7371, 1.8962, -0.9942, 2.5781, 0.4893, -0.1057, 2.6569, 2.3229, 1.2153, -1.4955, -2.7503, -1.3536, -2.9301, 0.4326, 2.5254, -2.3758, 2.2353, -2.8503, -1.7434, 1.3271, 2.388, 2.4947, -0.7097, -2.6643, 0.8199, -1.8171, -0.5217, 1.8446, 2.0991, 2.004, -2.8898, 0.239, 2.7216, - 2.7028, -2.632, -1.8497, 2.2453, -1.4491, 2.5543, 1.3841, 1.0323, -0.9575, 3.0647, 2.847, 1.4798, 1.8782, 1.3203, 2.4736, 1.468, 1.4312, 3.0688, -1.6883, 0.445, 1.2145, 1.13, -1.9652, -2.0698, -1.2748, 2.3279, -1.9739, -0.8955, - 2.0323, 3.1075, 0.5727, 1.2454, -2.9187, 0.1944, 0.2176, -1.997, 0.0142, 2.7035, -0.2495, -1.3168, 1.1029, -1.6198, 2.0411, 1.081, 0.0146, 1.4776, -1.3273, -2.8594, 2.383, -2.1511, 0.6007, 1.1136, 1.466, 2.0272, -2.2002, -2.4317, - 2.2425, -2.483, -2.7018, -1.4051, -1.8589, 3.0444, 0.5997, 1.4011, -0.0267, 0.2109, -0.9138, 2.1629, 3.042, 1.9362, -1.0246, -2.6453, -0.682, 0.4221, 0.4408, -0.4217, 2.4994, -1.4182, -1.3068, -2.8827, 2.4987, -2.0754, -2.9127, 2.6645, -1.5124, -1.5614, 3.0214, -3.0069, 0.4605, -2.7432, 2.9223, -0.279, -0.68, 0.012, -2.8888, -1.5542, 2.2904, -0.3074, -2.6988, -2.4857, -0.0563, -3.0811, 0.4939, 2.6272, 1.3604, 1.0943, 2.4681, -1.0786, 1.398, 0.0549, - 3.0882, 0.2683, 0.5441, -2.1115, -2.5258, 2.8837, 1.2985, -1.934, -0.3134, 1.7939, -2.7069, 2.3573, -0.0295, - 1.7089, 0.4351, -1.0453, 0.1282, 3.0502, -2.231, -0.9887, 0.179, 0.2704, 2.1086, -2.1887, 0.3251, -0.4128, 1.6376, 2.2373, 0.4431, -0.1821, 1.4456, -0.9405, -2.1515, 1.7513, -1.1093, 0.6923, 0.2968, -1.3214, -2.6574, 1.9762, - 1.2191, -2.7016, -0.1742, -0.112, 0.634, -0.0293, -1.8007, -2.1371, -2.6427, 2.2124, -2.1029, -1.4785, 0.5746, 2.6166, -1.2825, 2.7257, -2.0754, 0.2081, -1.915, 1.9718, -2.3454, 1.4713, -1.6237, -3.1055, 2.4987, 1.5532, - 1.4755, -2.5251, -2.2366, -0.4286, -1.2621, -0.8108, 0.7915, -0.6997, 2.6097, -1.3536, -0.0246, -2.6665, -1.3506, 0.4419, -2.9359, -1.9661, -0.3701, -1.6559, 2.713, 2.7105, 2.6539, 0.3958, 1.5964, 0.8065, -2.5745, -3.0524, - 2.9246, -2.0991, -3.0294, -2.4828, -2.7972, -0.1458, 2.4638, -1.1169, -0.3569, 2.2368, 1.2047, 2.176, -1.5042, 2.2264, -0.1134, -2.7512, 1.0159, 1.9577, 0.4894, 1.313, -2.2325, -3.1255, 1.6872, -2.6599, -2.4587, -1.1634, 1.2466, -1.1942, 0.073, -0.0829, -1.174, -0.9112, -2.6124, -3.0943, -2.5905, -0.7957, 0.3913, -0.6117, 1.9407, 0.9619, 3.0062, 3.0268, -0.6487,1.3928, -0.3801, -2.58, -1.8477,1.5652, -2.9857, -0.3674, 2.5279, -1.0045,1.5722, 0.6516, -0.4182, -0.6592, -2.4489, -1.0203, 0.4102, 2.1165, -3.0539, -2.4781, -0.975, -1.706, 0.8069, 2.3716, 0.5457, -0.3328, 2.2044, 0.5416, 0.314, 0.3813, 0.0461, -2.117, 2.8772, -0.153, 0.5406, -1.3106, -0.954, 2.5656, 0.3202, -1.7609, -2.5813, -0.839, 2.4188, -1.9463, 0.5006,1.6059, -0.4619, -2.129, 0.4887, -0.0082, 0.6021, 1.0135, 0.6501, -2.4611, 0.9696, 0.2894, -3.0844,1.7581, -0.4167, 0.9768, 0.932, -2.4894, -1.1982, -1.9184,1.7773,0.9169, -0.6072, -0.7742, 3.0235, 1.6454, -1.7544, 2.0975, 1.7095, -1.6808, -0.3982, -1.028, -0.2061, -1.0488, 0.5192, - 1.5671, -2.1669, -1.5047, 1.3227, -2.2547, 2.454, 1.9777, 3.1155, -0.0466, -2.9495, -2.5304, -1.0786, 0.8852, - 0.0332, -1.7983, -1.1623, 0.0087, -1.7973, 2.3708, -0.9337, -0.6569, -0.1175, -0.9187, 2.0178, -2.7753, 0.047, - 2.6448, 1.0108, 0.1158, -1.4748, -2.3243, -0.6589, -0.8539, 2.3854, -2.7781, -0.0287, -2.054, 1.0181, 0.0326, 1.0317, 3.1254, 1.6517, 3.0746, -1.3264,-2.5367, 2.8441, 1.9215, 0.7675, 1.7931, -0.2911, 1.5313, -2.0437, 1.5159, -2.9319, -3.0878, 0.2015, -1.3806, 0.4938, -1.9534, -0.2304, -2.6982, -0.6175, 0.6704, -0.8537, 0.3225, 0.6947, 1.6967, -0.6826, -1.4039, -2.2599, -1.8527, -0.736, 0.7651, 3.0915, 0.3763, 1.4093, -0.4427, 2.3978, -1.7771, - 1.45, -1.8556, -3.127, 1.8789, 1.268, -1.9172, 2.4949, 2.9805, -2.5355, 0.0654, 2.9595, -2.4409, -1.7352, 1.3913, - 1.3703, -1.0819, 0.3882, 1.6589, 2.9863, -1.1459, -1.8565, 0.8479, -2.252, 2.6591, 2.4672, -1.6473, 2.6727, 1.9543, -0.8728, 2.087, 1.8738, -2.9183, 2.4938, -1.9298, -1.4496, 2.8372, -0.8007, 1.3976, 0.5528, -0.8136, -0.6846, - 1.683, 2.0595, 0.472, -2.1896, -0.2527, 2.4877, 2.2684, 2.7996, 0.2238, -1.2996, 1.8259, 0.672, 1.4645, -1.9448, 0.6314, 1.7241, 0.7328,-2.975,- 1.7513, -1.3949, -2.5658, 1.6303, -2.5815, -0.0318, -1.248,2.7519, 2.2843, 2.7906, 1.3568, 1.817, -1.6826, -0.6694, 2.0727, -2.273, 1.5892, 0.8352, 2.7871, 2.1975, -2.9715, 0.1369, 0.1986, -3.1324, 2.3537, -2.3722, -1.478, -1.7486, -2.3671, -0.0809, -1.8814, 2.4421, 0.2485, 1.3555, -0.5009, 0.1449, 0.1231, 3.0884, -0.6734, -2.4563, -1.3364, -0.1126, 0.4192, -1.9188, -1.3897, 0.1434, -1.4579, -0.9196, -0.4974, -1.4802, -3.1011, 2.7508, 0.9572, 1.1928, -2.6102, 1.2294, -0.1006, -0.2273, 2.8176, -0.1606, 0.7812, -2.1535, -0.6869, - 2.0035, -2.5763, 1.4402, -1.4737, 1.8974, 0.3466, 2.916, -2.6602, -2.3501, -2.2223, -2.7557, 1.7615, -1.9572, 0.2498, 3.0117, -0.5062, -1.9885, 1.9332, 1.9023, -0.1606, 2.3013, 0.5249, -2.5942, -1.1135, 2.5809, 1.685, 0.8182, -1.8507, 2.7902, -2.0991, -0.15, -1.2429, -2.7242, 0.6873, -2.6691, -2.7833, -2.41, -2.6237, -2.1962, 0.7563, - 0.2842, 1.9823, -0.3597, -0.2074, 2.0497, 0.5281, and -3.0121;

phases of elements in the second sequence are sequentially 2.7735, -0.4194, 3.0514, -3.1096, -0.718, 1.8088, - 1.8988, 0.6073, 0.3831, 0.9086, 3.0679, -0.9202, -2.6345, -1.2965, -2.3998, 2.4442,1.9756,1.7519, -1.8915,1.8008, -0.2775, -0.6908, -0.0153, 1.4705, 0.4698, -1.3217, 0.5215, -0.1619, -0.6943, 0.8551, 3.1051, -0.3341, 2.9603, - 0.5511, -0.5437, -1.9304, 0.6973, 0.5763, 0.5347, 0.6545, 1.7333, 3.0679, -1.318, -2.9854, 2.4966, 0.0047, -0.3557, -2.6988, 0.1721, -3.0111, 1.9011, 2.2041, 2.6123, 0.3823, -2.0241, -2.5745, 2.084, -2.8432, -1.6637, -1.096, 2.9029, 2.2091, -1.9699, -0.3819, -1.4813, 0.0733, -0.198, -0.1958, 3.0658, -1.8349, 2.7692, 2.8026, 0.359, 0.6155, 1.4993, -1.3389, 0.3253, 3.1135, 0.3769, -2.6479, -0.6706, -0.5624, 0.4817, 2.7851, -1.48, -1.0127, 1.9601, 0.9703, -2.4416, -2.6667, 1.5533, 1.7394, 1.488, -2.8163, -2.6788, -0.3635, 2.3727, 0.3858, 0.4546, 1.8208, 0.7801, -0.7901, 0.5938, 0.7082, 2.645, -1.6615, 0.761, 0.7935, 2.1433, 1.0704, -1.8892, 0.5634, -2.0776, 1.2414, 1.3523, 0.5813, 2.7967, - 2.9703, 0.3265, -0.1783, -1.9175, 0.8458, 2.3466, 1.2412, 0.6776, 1.004, -1.1366, -2.8091, 2.7183, -1.1109, 0.7537, -1.6035, -1.9156, -2.1921, 2.7526, -0.1949, -1.4516, 2.6569, 1.9368, -0.5261, 2.7126, 0.9862, -1.3312, 1.3773, - 2.0565, -2.4026, -2.8944, -2.0555, -0.2302, 1.3838, -0.3071, -1.3102, 0.4306, -0.765, -2.5378, -2.0748, 2.7232, 1.1945, -2.4846, -3.0216, 2.699, -2.5611, -1.8317, 1.0895, 2.7355, 0.4222, -1.9106, -0.6664, 2.7129, -1.4013, 0.8353, -0.2276, 1.2522, -2.228, 1.1751, -0.6157, -2.4922,1.5471, 1.3539, 3.0748, 1.4639, -1.5527, 1.0342, -0.178, 0.2987, -0.6569, -1.9837, -1.5157, 2.47, -2.9328, -0.4645, -1.3063, 1.207, -0.836, -1.2497, 1.0876, 1.6644, 0.3464, -2.875, 1.6536, 3.0017, -0.1186, 2.6137, -0.2543, -0.0627, 1.5337, -0.0124, 2.5327, -0.3993, 1.7617, -2.8755, - 1.5632, -2.8512, -2.8568, -1.2778, 1.0321, 2.1224, 0.6397, -2.9915, -2.1367, -1.2582, 0.8702, -2.5889, 0.5797, 1.1693, 2.708, 2.6073, 2.7787, 1.4704, -2.0439, -1.6628, 2.9471, -3.1206, -2.6889, 2.0347, -2.5355, -2.4022, 2.6983, 2.2995, 2.1602, 2.2661, 2.1667, -1.4156, -1.6268, -0.9999, 0.6363, 0.3881, -1.9946,1.9653, -0.3479, 0.3707, 0.5817, 1.1676, -1.8923, -2.4431, -1.5895, 1.2031, 3.0927, -0.8937, 2.7584, 0.5636, 2.0818, -3.0778, -2.2198, 2.6219, 1.1418, -0.7047, -1.3374, 2.9663, -2.031, -0.7258, -1.282, -2.0712, 1.4643, -1.9204, 0.2153, 2.5535, -2.338, - 0.8332, -1.8395,1.887, -2.4615,1.4809,0.5617, -0.7474, -2.039, -0.4809, -2.2327,1.4888, -2.1469, -1.103, 0.0614, 2.544, -2.9908, 1.3029, -0.9629, 1.8992, 1.5805, -0.5971, -1.6328, -0.7884, 0.4151, -3.1273, -2.8622, 0.4486, 3.1077, 0.8561, -0.7146, -3.1104, -0.3749, -1.9636, 1.8495, 2.1374, -0.8367, -0.1445, -2.9918, 3.0821, 2.2533, 2.7898, -1.3978, -1.2959, -2.832, 0.2072, -2.4589, 2.7814, -1.8879, 1.4898, -1.3517, 1.89, 1.2362, 3.041, 1.5538, - 2.4804, -0.7722, 2.4894, 2.4549, -3.1032, -1.4467, -1.2847, -2.7867, 1.9404, -0.4238, 1.0102, 0.9523, 0.5209, 2.1408, 1.6144, 1.0236, -1.2513, 2.2725, 2.137, -0.1402, 0.0414, -0.4409, -0.0436, -2.7984, -0.5532, -2.6698, - 2.9713, -3.0399, -0.1219, -3.1301, -0.0152, 0.7547, 0.5426, 2.673, -1.396, 2.6387, -0.7029, 0.7788, -0.0276, - 0.3682, 2.1644, 0.977, 0.5093, 2.7491, 1.1696, -2.6684, -1.1645, -2.407,1.7252, -2.0503, -2.3117, -1.3015, -1.8781, -2.0645, -2.7718, 2.1223, 2.8762, -3.0344, -0.1818, 3.1118, -1.5053, 0.885, -1.1222, -2.5596, -2.4527, 2.2243, 1.553, -1.0244, 2.3292, -1.9205, -1.8253, -0.5109, 3.0084, -0.1745, -0.2927, 2.5312, -2.9738, -1.5558, -1.0011, 1.1454, 0.847, 0.1111, -1.1174, 1.4073, -2.0858, -0.6812, 1.9002, 2.4494, 1.4352, -3.1037, 1.9166, -0.4512, 0.4898, -0.1464, 0.1255, 2.4566, -1.5057, -1.7124, 2.6336, -2.0931, 0.4601, -1.395, -0.7847, -2.6044, 0.9348, -2.8755, - 0.3074, -0.4776, 0.1728, -0.3337, 0.1209, 2.8542, 1.0574, -0.0836, 1.9865, -2.1293, -1.5048, 0.8677, -1.2105, - 2.3674, 2.2148, 0.5008, 2.1464, 2.5713, -1.8624, 2.5289, 2.2206, -0.4746, 2.4662, -0.8595, -1.2757, 0.9905, 2.0049, 2.5687, -1.2158, -2.2665, 0.8414, 2.9883, 2.6386, 1.8095, -0.9384, 1.1077,2.9422, -0.2702, 1.0307, 1.9721, -0.1343, 2.0018, 0.8354, 1.3677, -2.5012, -0.7189, -2.6644, -1.4853, 1.8398, -0.8563, -0.6949, -1.4306, -1.639, -0.7606, 0.7502, 0.5407, 0.1065, -2.4269, -0.0304, 0.2389, -2.2126, -2.1331, -0.945, -0.1291, -2.5823, 1.0044, -2.553, 0.8127, -0.7199, 3.0762, 1.2956, 0.1405, -1.1549, -2.9004, 0.206, -0.1307, -0.3134, -2.0772, -3.0156, -2.3518, 2.5051, 0.1856, 0.1786, 2.573, -2.8854, -1.3558, -0.2908, -2.6276, 1.5515, -0.6002, 0.1932, -1.2672, -1.8282, 3.0987, -1.4258, 2.277, -1.692, 2.5138, 1.7266, -2.5852, 0.4203, 0.8612, 1.1359, -2.7558, 2.4199, -2.4722, -0.9156, -2.1931, 0.6907, 0.9602, 0.7361, 1.1695, 0.7425, -0.3272, 1.5333, -0.5111, 2.6612, 2.7912, 1.295, 1.1988, 2.3181, - 0.1665, -2.1305, -2.2409, 1.1668, 1.9091, -2.7116, -1.147, -1.5606, 2.5093, -1.0391, -2.6698, 0.4427, -1.5702, 1.3425, 1.6317, 1.1093, 1.4096, -0.5857, 2.818, -2.1689, 1.5717, -0.779, 2.0367, 2.0745, -0.4164, -1.2606, 3.0636, -0.8192, -0.91, -0.8934, -2.5377, 0.0649, 1.3139, 3.0901, -0.2312, 2.36, -3.0559, -2.9677, 0.6369, 2.1101, 1.7432, 2.084, 0.1099, 1.349, -3.0933, -0.1036, 2.1836, 2.0216, 2.8205, -0.9364, -2.222, 0.6103, 0.8439, 1.9946, 1.9489, 0.6529, -2.6688, 0.0754, -1.6475, 0.8223, -2.9105, -1.0163, 1.4914, 2.2789, 2.0507, 1.0389, 2.9707, -2.5253,1.0246, -1.816, -0.7755, 0.0229, 3.0995, 0.4795, -2.0163, 1.6083, -1.3541, -2.7425, -1.6254, 1.2311, 2.5221, 1.3469, - 1.1849, -1.3223, -1.9141, -1.7807, 2.3026, 2.346, -2.5786, 3.0705, -1.1574, 0.2759, -3.1284, -1.3754, 0.6154, - 1.2614, -2.2156, -2.562, -1.7351, -1.117, -2.4602, -1.6649, -3.0089, -1.223, 1.4966, 0.8188, 1.1148, 2.1443, - 0.3767, 2.629, 2.5627, 0.91, -0.0605, -0.6598, -2.9323, 1.1932, 1.0697, -0.3862, -2.2424, 0.101, 0.3093, 2.2638, 1.6679, -1.7849, 2.4882, 2.1054, 2.3377, -2.8057, -1.8616, 1.3325, 2.9859, 0.0923, -1.0055, -2.5269, 1.3109, 1.0564, 2.8811, 2.0472, -1.8855, 0.3166, 0.7331, -3.0185, 1.5563, -2.6147, -1.2883, 2.5164, -2.5287, -1.647, -3.0717, 2.0493, 3.0432, -0.4244, 0.3484, -0.675, -3.1089,1.6871, 1.6704, -2.0914, 0.1094,1.0745, -0.1339, 2.6615, -0.4288, -2.1474, 2.1336, -1.1914, 3.002, -1.6662, 0.7799, -0.1591, -2.241, -0.1959, -0.0335, -2.8237, -0.6028, 0.6702, - 0.3405, -0.698, 2.9073, 2.825, -1.9927, 2.1488, 0.4571, -1.4645, 0.5942, -2.0192, 2.6536, -1.6171, 3.1061, 1.5816, 2.077, -0.9051, 2.2955, 0.7656, 1.0998, -1.3156, -2.7807, -0.8783, 1.1314, 0.3955, 1.3635, 3.0912, -2.8332, -1.4676, 2.583, -3.1377, -2.3512, -2.3708, 1.2482, -1.2109, 1.0794, 2.1927, 1.8384, 1.824, -2.5389, 2.3724, 2.8942, 1.4788, 0.3965, 1.3309, -2.3939, 2.3215, 2.6592, 2.1042, 0.1797, 1.9788, -0.654, -1.8168, -2.9549, -0.9728, -0.91, -2.4277, -0.7662, 0.2055, 2.5333, 1.6789, -0.775, 0.3188, -1.0525, 2.7446, -1.3127, 0.1232, -2.5142, 2.0735, 2.7489, -0.014, 0.8891, 0.8534, -3.0374, 0.6508, -0.7442, -1.2638, -0.9085, 0.4159, 1.4778, -2.6969, 1.6773, 2.7124, -2.1034, 1.8772, -1.1306, 1.7834, 2.4317, 0.0758, 0.1722, 1.1422, -1.9283, 2.2191, 0.6448, 1.0807, 0.4659, -0.7211, 0.9536, 2.1689, -1.1227, 2.2201, 0.5641, 2.8997, -1.3087, 0.6495, 1.9605, -1.1986, 2.6574, 2.4733, -1.4429, -2.517, 2.6856, -2.4605, -1.5925, -2.602, -0.4271, 0.0925, 0.5848, 0.9701, -1.0054, -0.5257, -3.0622, -1.4436, 1.2628, -0.6027, 2.2067, 2.4832, -0.8795, -2.1568, -0.9734, 1.6907, 2.7773, 0.7382, 0.2845, -2.8008, -0.3943, 2.4783, 0.4461, -1.213, -0.2204, -1.9567, -2.3127, -0.2579, -1.7719, 1.4829, 2.1239, 0.553, -2.0042, 1.971, -0.0082, -1.8177, -0.6985, 0.1728, 2.5916, -0.3756, -0.7267, -2.4248, 1.7513, 2.6945, -2.1001, -1.7297, -0.9193, -0.5035, 2.932, 2.5522, - 1.9593, 0.562, -1.3363, 2.1726, 1.4588, -1.1791, 1.6012, 2.1416, 2.9517, 1.3768, 2.6012, 2.6113, 1.4977, 2.401, - 2.5078, 2.0397, 0.4602, 0.1471, 1.1404, -3.0374, 0.5175, 2.515, -0.1842, -2.2388, -0.4462, 3.0959, 2.6998, 3.0196, 2.6515, 0.6934, 0.7827, -2.1424, -2.7662, -2.9977, -2.4959, -2.4528, 2.3072, -1.3098, 0.9819, -0.0118, 0.2544, 2.9981, 2.2506, 0.7189, -1.0694, -2.7127, -1.2079, -0.7996, 1.5166, 2.2429, -1.757, -3.12, 2.5329, 2.1702, 1.4973, -0.4982, -2.9513, -1.5829, -1.7299, 2.0746, -2.2827, 2.5027, -0.5595, -0.055, 1.1208, 2.6557, 2.6664, -2.2686, - 0.0507, -2.9118, 1.7567, -2.0519, 0.0175, -3.1147, -1.3505, -1.476, 0.9322, -1.4639, -1.3835, 2.5456, 0.2331, 1.1095, 0.8709, 2.1335, -1.2815, 1.6431, -2.9984, 2.5552, -0.6884, 2.5104, -3.1415, 0.7502, 0.8039, 2.3061, 1.707, -2.2052, 2.0321, 0.4652, -0.6324, -1.8413, -0.1407, 2.2434, -0.1063, -0.5097, -2.7691, -0.9195, 0.0198, -0.7453, -0.3633, -0.9083, 3.0939, -1.4651, 2.3037, 0.0203, 1.3132, 1.9111, -1.0466, -3.0961, 1.6149, -0.9383, -1.3633, - 0.2322, 3.0105, -1.0062, and -1.9498;

phases of elements in the third sequence are sequentially 0.8525, 2.5466, 2.8687, -2.9791, -2.625, -0.4421, - 2.9572, -2.2528, 3.085, -2.348, 2.2172, -3.0475, 0.0545, -2.8578, 2.7916, -2.9509, 0.4252, 2.6045, -0.0482, 2.897, -1.5014, -1.5822, -0.7623, 0.0191, -2.7034, -2.8005, 0.198, 0.3387, -1.5873, 3.0017, -1.3205, 0.6886, -1.6463, 2.3941, 1.3987, -0.8611, 1.9899, 2.4322, -1.9666, 2.5252, -0.882, -1.761, -0.4994, 2.6081, 0.3159, -2.8505, 0.0387, -0.8622, -2.3666, 0.1694, 1.1841, -2.8271, -0.4667, -0.8759, -0.9869, -1.9298, -2.058, -2.091, -1.4116, 1.3203, 2.4576, 1.5902, 1.3298, -2.6106, -1.7026, -0.8573, -3.1008, -2.0065, 0.2051, -2.4192, -1.3345, -0.6664, -2.24, - 2.4916, 2.6777, 1.0717, 1.987, -1.3501, 0.4511, -2.2192, 2.4511, 0.5982, -0.0293, 2.1826, 2.1609, -0.95, 2.7081, 0.3625, -1.0469, 0.7546, 2.182, 2.2201, -0.5502, -2.1244, -2.6579, -0.7337, -1.108, -1.21, 1.2955, 1.0577, 0.5138, -2.3329, 2.8128, 2.8155, 1.5473, 2.2792, 2.948, -2.4637, -2.9464, -0.2048, -2.525, -2.199, 0.2663, 3.0884, -2.9623, -2.9476, 0.8105, -0.7731, -0.4875, 2.4891,1.8903, -1.9521, 0.013, 0.2031, -1.0722, 2.277, -1.4899, -0.3251, 2.8097, 1.2719, -2.5375, 0.7407, -1.6227, 2.4724, 0.1847, -1.0446, -0.6669, -2.3885, -2.3276, -2.7381, 2.8205, 0.6282, - 1.8781, -0.0752, 1.3126, 1.2678, -3.0056, -0.9632, 2.718, -2.8413, -2.3607, -1.4367, 0.2678, -1.2049, 0.8624, - 1.9527, 0.4851, -1.4313, -2.4146, -1.238, 2.6702, -0.5256, 2.6918, -2.9593, -1.212, -1.3814, 1.7731, -0.0852, 2.8814, -1.7392, 1.1555, 1.3765, -0.977, 0.9848, -2.1429, 2.1255, -2.3911, -0.3509, 1.1936, 0.1444, -0.4733, - 2.6888, -0.5236, -1.7741, -2.8457, -1.6882, -2.4072, -2.8078, -0.8924, 2.8559, -2.7989, -1.3238, 1.546, -0.7785, -1.0843, -0.2281, -2.3444, 1.1225, -1.5444, -1.0573, -0.297, 0.7995, -0.4759, -1.5939, 0.9713, -0.3242, 0.934, - 0.4345, -1.9342, -2.3161, 0.7183, 3.0973, -2.8692, -1.0265, -1.9294, -2.1724, 1.8304, 1.7028, 2.6488, 2.1084, - 0.4311, 1.337, 2.0139, 0.6629, 3.056, -2.1181, -2.6487, -1.0814, 1.0842, -1.6907, -0.44, -0.7516, 2.4517, -0.4314, 0.9619, -2.8274, -1.19, -0.4703, -0.0504, 0.2892, -2.5298, -2.1694, 1.2477, 0.3054, -2.1731, -1.6481, 1.3478, 0.2346, -1.3335, 1.6819, 1.7316, 2.8922, 0.1465, -1.5692, -1.2664, -0.3049, -2.3303, 2.8767, 1.5834, -1.3566, 0.6813, -0.9118, -0.6333, -1.7166, 0.4982, 2.1268, -1.3337, -2.7757, 1.6874, -1.8032, 2.5256, 2.2742, 0.8156, - 0.7338, -0.3915, -2.3645, -2.7146, -0.5973, -2.4131, -2.8232, 0.2029, 1.4422, -0.2816, 0.5204, -0.4115, 2.8698, 2.9733, 1.3413, -1.8267, -1.1893, -2.1925, -1.0578, -2.0236, 0.9678, -2.3578, 0.0802, -2.5779, 0.294, -0.832, 1.6401, 2.0363, -1.9322, -1.3077, 3.0727, -0.7788, 0.3939, -0.2684, 1.2009, 2.5651, 2.4243, 1.7909, -2.529,1.2758, 2.0726,1.8109, -2.1356, 0.5889, 0.977, -2.5463, -0.1539, -1.593, 1.6538, 2.9963, -1.2518, -0.5634, -1.892,1.8398, -1.3179, -1.2278, -0.8582, 2.2986,1.9392, -1.9717, 2.455, 2.458, -1.9029, 2.5731, 2.982, -1.8044, -2.8103, -1.6497, -2.1884, 1.6576, 2.1889, -0.9714, -2.5988, -1.4174, -2.0719, 2.1775, -0.8684, 2.5715, -2.6243, -1.1062, 2.6231, 1.5078, -1.0221, -0.5301, -0.1984, 0.4052, 3.1276, -2.3376, -2.7643, -1.2713, 0.615, 2.7579, 1.3973, -0.5289, 2.411, -1.8014, 1.6589, 0.0306, 2.677, 0.7104, -1.3267, -0.4434, -2.0806, -2.2292, -2.6818, -2.4194, -0.1901, -2.5677, - 3.0913, 1.1593, 2.7004, 2.9695, -0.2954, 2.6585, 1.1218, 2.1562, -2.5341, 0.6574, -3.057, 1.5587, 1.2581, 0.4256, - 2.8155, -2.4341, 1.9851, -2.1581, -1.1755, -1.2073, -1.9618, -1.0467, 0.94, 2.9304, 1.7894, -2.9247, -0.5108, 2.7843, 2.1992, 2.4199, -0.5441, 2.4552, 1.2344, -1.5319, -2.7865, 3.1178, -3.0369, 1.7887, 2.5186, 2.6991, -0.972, -1.5236, 0.4682, -1.3466, 2.1328, 0.5583, -0.3665, -3.0188, 3.0608, 1.2059, 1.6343, -2.3275, -0.5307, 1.8994, - 0.3696, -1.5582, 0.277, -1.8067, 2.3033, -3.0682, 1.5686, -0.8879, -0.4759, 0.5563, 1.5152, -3.0654, 0.5834, 1.71, -1.5631, 1.2897, 2.7364, -1.0625, -3.1139, 2.9762, 2.136, -2.2354, 2.7522, 3.1016, 1.5256, 0.716, -2.1608, -0.9142, -2.258, -0.9547, -0.113, 2.6695, 1.7863, 1.1007, -1.3571, -2.8753, -1.2519, -0.6775, 2.2587, 1.9702, -1.1403, - 2.9641, 0.9798, -2.5364, 0.7697, -2.5869, -1.6276, -2.663, 2.4958, 2.2221, 0.8703, 0.8632, 2.0747, 3.0542, -3.1007, -1.8105, -2.7633, 2.3598, 2.5214, -1.5029, -1.1027, 2.3719, -3.1098, 0.515, 0.4714, 1.3104,0.1918, -2.3443,1.3923, -1.3976, -1.1376, -0.9506, -1.7889, 1.3793, -2.1702, -0.3721, -2.4113, 0.0924, 2.6266, -1.3592, -1.5562, 0.2323, 2.8333, -1.7183, -1.1456, 1.7347, -2.8257, -0.2238, -2.2805, -0.5224, -1.867, 0.1178, 0.7427, 0.5194, -2.3998, 2.1184, -0.0756, -1.927, 2.3511, -1.0376, -0.6775, 2.1225, 2.1923, 3.128, 3.0792, -1.2166, 2.5602, 1.254, -1.3732, 2.4273, -1.7316, -1.0545, 0.9808, 1.5454, 0.7289, -0.4641, -0.6774, 1.0733, 2.566, -0.1348, 2.8606, -2.1049, - 2.9834, -1.5746, -1.5981, -0.3436, 0.4231, -1.381, 2.0941, -1.9725, -2.2056, 2.4727, 1.8791, 1.5282, -0.7792, - 3.013, -0.8533, 0.1039, -0.9674, -0.1657, -0.7711, -0.2726, -2.1853, -0.8533, 2.9388, -1.5087, -0.6087, 0.8454, - 1.1968, 0.1552, 1.566, -2.4156, 2.0944, 0.4699, -0.4837, -1.389, 2.4704, -2.6678, 2.305, -1.6242, 1.3558, -1.8681, -2.7531, 0.9091, 2.5793, 1.1084, -1.8506, -2.32, 0.6409, -2.6749, -3.0196, -2.9454, 1.9939, 0.6138, -2.4844, 1.0101, 3.0716, -0.6846, -1.2683, -1.9652, -0.0454, -2.0284, -2.0477, -1.198, -0.6121, 1.7388, 0.4117, -1.9524, -0.7508, -2.6429, -2.3647, -2.9431, 2.0944, 1.1075, 1.6693, 1.6472, 1.4917, -1.0717, 2.8004, 0.5512, 1.4491, -2.9988, - 2.9644, 1.4108, -2.9652, 0.1411, -1.747, -2.2458, 1.4415, -0.1629, -0.5275, 3.0032, -2.5454, 2.8935, 0.303, -0.7304, 1.9713, -2.953, -1.618, 0.0609, 3.0213, -1.4076, 1.3785, 2.9373, 1.1785, -0.0677, -2.0949, 1.7106, -1.2554, 2.5052, -0.3108, -0.7149, 0.2223, 1.0153, -2.0057, -1.7213, 0.8104, -0.5673, -0.5788, 0.5164, 0.6335, -2.8947, -1.1725, 1.709, 3.0848, -2.2665, 0.1489, 0.1543, 1.0018, -2.5994, 0.4107, -1.5732, 0.5841, 2.5307, -0.9389, 2.4242, 2.6476, -2.1373, 0.0015, -1.5902, 0.5252, -0.0239, 1.1323, -2.1976, 1.0105, 1.1569, -2.6716, 2.8431, 0.285, -1.1279, - 1.2432, -2.2594, -1.4438, -2.2786, 0.3713, 0.8924, -0.2503, -1.3631, 1.9231, 1.4631, 1.6902, 3.0264, -0.1492, 0.6528, 0.43, 0.9624, 2.5665, 1.1034, 3.0634, -0.297, 2.0002, 0.3666, 1.1735, -0.2717, 2.949, 0.9234, 1.2225, - 0.9115, -2.3953, -2.3499, -0.7395, -2.7573, 2.1774, 2.8016, 0.0175, -1.0084, -0.9707, -1.8157, -0.4117, 0.0657, - 0.6275, 0.2354, -2.0626, -1.196, 2.1002, 3.0169, -2.9807, -3.0474, 2.9428, -1.3005, 1.0344, 0.1148, 1.6058, 2.3434, -2.9572, -0.3546, 1.2639, -2.0568, -3.0899, 2.558, 2.3705, 2.3313, -0.2495, -1.8047, 1.9171, -0.5978, -1.7531, 2.3196, -0.9975, 2.7977, 1.3578, -1.7992, 0.6672, -0.2218, -2.7782, -0.8452, -2.4064, -0.8628, -1.8367, -2.2902, -1.1204, 1.9909, -0.0894, 2.7945, 2.3312, 0.8729, 2.9868, -1.7397, 2.5492, -0.1958, 2.5708, 1.5279, 2.5929, -2.42, 1.2459, 0.0639, -1.7039, 0.4484, 2.3062, 3.105, -0.0057, 1.8608, -1.2151, -3.0393, -2.326, 0.485, -2.8203, -2.2832, 0.4392, -2.8753, 1.0571, 0.5658, -1.5251, -1.8657, 0.7306, 1.6983, -2.6548, -1.8358, 0.3644, 0.7943, 0.5887, - 1.3518, 2.539, 0.2735, -0.9698, 1.0568, 1.2566, -0.3236, 0.1264, -0.4632, 1.4216, 1.0238, 3.0774, -0.3323, -1.9027, -2.6015, 1.4417, 1.3248,-1.0451,-2.9548,-2.271,2.7176,1.4663,2.3581,-1.7322,0.2749, 2.0218,-2.4246,1.0861, -0.4923, 1.2468, 0.0475, -2.3336, 0.8423, 2.4133, -0.0522, 2.9753, 2.4698, 2.8881, -2.8308, -3.1023, 1.5731, 1.7199, 0.2924, -3.0562, -0.7458, -1.3667, -0.9477, 3.1387, -2.1075, 0.6756, 1.1355, 1.4216, 2.1218, -2.8837, -2.0342, - 1.8568, -2.8549, -1.4624, -0.4579, 2.1252, -2.1524, -0.9224, -2.1666, -2.5039, -3.0963, 2.9376, 3.0529, -0.1591, -1.6237, -0.291, -2.8991, 0.4164, 2.9863, -2.1556, 1.9817, -0.8091, -1.7207, -2.9675, 1.2006, 2.0326, -1.9608, 0.0114, -1.1195, -1.5063, -1.3324, -0.383, -2.8901, 3.0082, -2.2547, 0.1841, -2.9606, 0.5595, 2.773, 0.9056, 3.135, 2.2906, 2.3132, -1.1147, -2.5709, -2.9169, 0.6142, -2.1899, -0.9368, -0.0021, -2.6367, -0.1837, -0.2663, 0.403, 2.7436, -2.4231, 2.6025, -1.0288, -1.8815, 1.1107, -2.1903, 2.8398, -0.2394, -2.4696, 1.1881, 1.5756, -3.0688, - 1.8407, 1.2181, -2.547, 3.032, -0.2019, 1.7823, 1.9651, 0.0117, -2.7653, 2.4385, -0.457, -1.5962, -1.2879, 0.5044, 0.4572, -0.6245, -3.0406, -0.2872, 0.8215, 2.0184, -1.8191, -3.1055, -2.5267, 2.7659, 1.6506, -1.0252, -2.4647, 2.1717, -3.0281, 2.7597, 2.0802, -1.4408, -0.3205, -1.4832, 2.5598, 2.3854, -2.9056, -0.5536, -1.3668, -2.7558, 0.2626, 1.7296, -0.5248, -1.7297, 2.1917, -2.7273, -2.703, -2.335, 2.1498, 0.4759, 2.6308, 0.5003, -0.91, -0.3628, 0.2013, -0.6479, -0.5155, 2.9606, -2.0017, 2.8095, -0.7921, 1.1082, 2.8186, -1.7688, 0.2584, -2.0879, 2.6306, - 2.814, 2.0231, 0.0723, 2.413, -2.5656, 0.6019, -2.253, -2.6265, -1.1865, and 2.7337; and

phases of elements in the fourth sequence are sequentially -2.7624, 0.2735, -2.4601, 1.0058, -1.9861, 2.8255, 1.0201, 0.8517, -2.5726, -1.9455, 1.8432, 2.363, 0.8723, 0.346, 0.7442, 2.1305, -1.4806, -2.7503, 2.5454, 0.6447, - 0.2149, 0.9587, 0.4538, -1.0901, 0.0699, -0.9521, 1.6619, 0.3801, -1.306, 2.9059, 0.3914, 2.5269, -0.912, -1.1249, -1.5245, -2.3079, 1.8377, 1.455, -1.5247, 0.887, 1.759, 2.0028, 1.4231, 0.485, -1.5498, 0.9009, 1.4559, -2.7739, - 1.6441, 2.5995, 1.3495, 0.1409, -2.888, 1.3826, 1.6884, -1.18, 1.2818, -0.0515, -2.9185, 0.2634, 1.0009, 1.0634, 3.0406, -2.0859, -2.6501, 0.0783, -1.807, 0.074, -2.6906, 0.2569, 1.2867, 1.5457, -2.9328, -2.2782, 0.16, -2.3497, -0.1545, -1.7299, -3.0501, -0.4913, -2.089, -0.0171, 0.2921, -0.5632, -1.0164, 2.4704, -0.0513, 0.3133, 0.6777, 1.7279, 0.1046, -2.7823, -1.6688, -2.3432, 0.4671, 2.0496, 3.1029, 1.2714, 2.1158, -2.08, -2.2662, -3.0056, 0.6677, 2.9393, 2.6029, -0.5845, 1.3828, -3.1066, 0.3752, -1.9418, -1.9517, -1.7675, -1.1024, -3.06, -2.2549, 2.2594, - 3.1142, 1.5387, -2.1752, -0.0043, 1.1353, -2.0127, 1.0013, -0.206, -3.1053, 1.4642, -2.5521, -0.1365, 1.6734, 1.9102, -1.7538, -0.4687, -0.4396, -2.9113, 2.8765, 0.8822, -1.4741, -2.4556, -0.6802, 2.6898, -2.5874, 2.8916, - 2.2231, 1.034, -1.4142, 0.1764, 1.6432, 2.9196, 1.4351, 2.8553, 1.4849, 0.9375, -3.0453, 2.5663, -1.9937, 2.3203, 2.5911, -1.6029, 1.6264, 2.6864, 1.7059, 1.7178, 2.9768, -0.9981, 0.5697, -1.322, -0.8156, 0.5491, 1.6634, -2.7758, -0.6186, 2.7402, -0.0518, -2.921, -2.6291, 0.3039, -1.2517, -1.9557, 2.9735, 1.0919, 0.0126, 0.0001, 1.7375, 0.7442, 3.068, 1.69, 0.3825, 2.9187, -1.4138, -1.6145, -1.0188, 1.4841, 1.8558, 2.1684, -1.2681, 0.6738, -0.6482, 0.7829, 0.8682, -0.3694, -1.1796, -3.1014, 2.278, 1.0747, -1.4663, -1.0668, -2.6944, 3.0578, -2.831, 0.7671, -2.3287, 2.3871, -1.399, -0.9223, -2.1211, 2.1817, -2.7112, 0.4022, -2.5798, -1.4629, -2.0026, -2.6756, -1.2128, 3.0842, - 1.263, 1.7202, 1.0434, 0.1297, -1.9791, 2.9184, 0.9347, -2.5802, 2.1398, -0.7652, -2.7619, -0.093, -2.0317, 0.3574, 0.058, -2.0688, -1.5911, 2.7208, -0.6883, 3.0906, 1.0832, 1.2146, 0.5985, 2.0932, 0.0299, -0.016, 0.9641, -0.9518, -2.9992, 2.5954, -2.5005, -0.7188, -0.4412, -0.2953, 0.1173, 2.7067, 0.0927, -0.4754, 0.5721, 2.9124, -2.6769, 1.3236, -1.1161, -3.0478, 2.6164, -2.1501, 2.032, 2.2784, 1.5056, 2.7846, -3.082, -0.1276, 2.6479, 2.2766, -1.3029, 2.3569, 2.5638, -2.0417, -0.6727, 0.6959, -2.8863, -1.3809, -2.951, -2.5269, 0.0952, 0.3935, 2.4891, 1.9392, - 1.9475, -0.9299, 2.0242, 2.2389, 0.4785, 0.67, 1.9238, 1.1151, 1.2672, -2.1823, -1.049, -1.9176, -0.6392, 0.9306, - 0.2777, 2.1748, -1.3258, 1.1095, 0.2789, -2.6773, -1.2234, 0.9705, -2.0481, 2.582, 1.3277, 1.6602, 2.3803, 2.6397, -0.8765, -2.0272, -1.3194, 1.8297, -0.6283, 1.4674, -2.297, -3.1201, -2.1417, 1.3857, 0.865, -1.5371, 1.0421, 0.0516, -1.3553, -0.6997, 2.2785, -1.0057, 0.4699, -2.4129, 1.1732, -1.7652, -1.5337, 1.7409, -1.9162, 2.0938, - 0.5727, 1.2735, 0.8398, -1.7091, 1.5531, -3.0429, 1.4593, 1.8577, 2.9148, -2.9725, -0.9948, -2.124, -2.6654, 2.318, 2.6346, -0.0955, 2.3415, 2.8939, 0.049, 2.895, 1.271, -1.8835, 2.2769, 2.8703, 0.8668, 1.9477, 2.1302, -1.7089, 2.6107, -1.9706, -1.5149, 2.3128, -0.7039, -0.8313, -2.1963, -3.1033, 2.7816, 0.2197, 0.1741, 1.8654, -2.5262, 0.204, -1.7236, 1.7239, -1.3446, -1.7705, 0.0992, -2.239, -2.0111, 3.1233, -0.4424, 0.4778, 1.8024, 2.6968, 2.1499, 2.2787, -1.5944, -1.4243, 2.6013, -1.4653, 3.0078, -2.9325, 1.9503, -2.1119, -2.9469, 2.1254, 2.6416, 1.5763, 1.1408, -1.991, -2.8318, 2.3869, 1.214, -0.6592, -0.8227, -0.0784, -2.9027, -1.4046, -0.3433, -2.0923, 2.2776, 2.4817, -1.3459, 0.3984, 0.3625, -2.8266, -2.1481, -2.1715, -2.2077, -2.2369, -3.0009, 1.0724, -1.8601, -1.8448, -1.5666, 0.3011, 1.0493, 2.2846, 0.751, -0.3735, 2.7752, 1.2213, 1.9671, -2.7726, -1.0376, -0.1897, 0.7092, -0.2032, -1.3413, -2.3359, 1.8161, -1.8797, 1.5868, -0.7762, 1.6876, -0.3187, -2.8863, 1.5211, -0.8573, -0.2685, 1.9169, 3.0742, 2.5946, 2.7679, 2.9682, -1.5031, 0.4743, -2.4701, -0.095, -1.5743, 0.7641, -2.3067, 2.029, 3.0957, -2.5426, -0.31, -1.3074, 0.8845, 0.7994, -0.1571, -2.5327, 1.735, -0.0969, -1.5498, 0.4192, -2.7253, 0.1996, -2.8666, -2.144, -2.2883, -0.543, 2.1546, 2.9809, -0.5165, 0.1785, -3.0073, 0.7149, -3.1352, 0.6472, 1.9805, -0.1588, 0.4491, 1.2927, 2.6397, 0.4432, 2.9006, 2.6239, 0.8782, -1.8865, 0.7653, 1.512, -1.9577, 2.7404, -3.0029, 3.0379, 0.0894, 1.2153, - 2.2059, -0.2481, 0.1983, -1.7503, -3.0651, -0.9108, -1.1718, -0.9564, -1.9887, 2.4326, 0.4161, -0.3616, 2.5172, - 1.0901, 2.2332, -1.7778, 0.3364, 1.6366, -1.151, -0.8624, -1.12, 3.0383, 2.4574, 0.6156, 1.7553, 0.7284, -2.3475, 1.0809, -1.1728, -1.1246, -1.84, -0.2467, 0.1918, 0.4482, 2.9843, -1.2285, -0.993, 2.8021, -1.7082, -0.8749, 2.6584, -0.2265, -1.5629, -2.5091, 0.1786, -0.6601, -1.6162, -1.6694, -1.4393, -0.8651, -1.7297, -0.2912, -2.7257, 1.564, 2.9796, -0.7626, -0.2449, 2.2951, -2.0767, 2.2675, -1.5036, -2.581, 1.1627, 2.4127, 0.7989, 0.9203, 1.1923, 1.9844, -0.9065, 2.0455, -0.2632, -1.1831, -2.4376, 2.7277, -2.8731, -0.9495, -1.3607, -0.4625, 0.9825, 2.9662, -0.029, 0.2858, 1.3217, 1.6125, 1.5106, -2.2895, 0.8448, 2.3875, -1.6233, -1.3405, -1.9552, 1.0754, 2.9416, 1.2698, -1.3988, -1.6335, -2.2458, 1.4172, 1.5815, 2.0519, 0.0068, -2.3455, -3.0903, -1.9954, 2.0935, 3.1115, -2.1358, -0.2418, - 2.3707, 0.877, -1.4126, -2.8299, 1.9835, -1.6089, -0.668, -1.5469, -3.1011, -2.8573, 0.3573, -0.9066, 1.4207, 1.5001, 1.3466, -1.9391, 2.1308, -1.3519, -0.7802, 0.1859, 0.4739, 0.5634, -1.0993, -2.0536, 2.4348, -0.268, - 2.6115, -2.1533, 1.1484, 2.6066, 2.3991, 0.5518, -2.1908, -0.5884, 3.0161, 2.6264, 2.7561, -1.9513, 0.5996, 1.2812, 0.566, -1.7562, -1.2712, -1.6029, 2.1816, -0.3922, 2.0793, 1.5149, 3.0493, -0.7817, 2.5694, -2.5958, 0.886, -1.301, 2.026, 0.9222, 0.5555, 2.1394, 0.8301, -1.6615, 1.0247, -2.9838, -1.3758, 1.1392, 2.1769, 1.5978, 2.3957, 2.1628, 1.6323, 1.0814, -1.5404, 1.2354, -0.6151, 2.6729, -0.5199, -1.672, -2.0712, 0.8375, 0.7003, -0.7848, -1.1851, 2.234, -1.2562, -1.0287, -0.6723, -1.8381, 0.2757, -1.4786, 2.5769, 0.6357, 1.3385, 0.7202, 2.6127, -1.4913, 0.3686, 2.7317, 2.8841, -2.4371, -0.2974, 2.8427, -2.1948, -0.4327, 3.0191, 0.9975, -0.9354, 1.2422, 2.2774, -1.1427, - 2.5351, 0.4026, -0.833, 2.4587, -2.5288, -2.5193, -2.8336, 2.9931, -1.4505, -2.7511, -1.697, 1.1439, -2.3839, - 2.7966, 1.8537, 2.1102, -2.5955, -0.7483, 2.5854, -1.6787, 1.8434, -0.5561, -0.8313, -1.2456, -2.233, 2.1675, - 1.1865, 1.0192, 2.7302, -0.7725, -0.1444, -0.8942, -1.0542, 0.9287, -1.8285, 1.4029, 2.3814, -1.4998, -1.7921, - 0.0791, -0.1985, 1.9596, 2.5968, 2.9396, -1.5332, -0.4394, 2.0889, -0.9805, 0.2721, -0.9778, -1.7539, 1.6635, 0.9383, -0.2689, -2.6347, -1.4193, -2.1584, -0.7235, -2.3656, -0.0932, -0.5417, -1.284, 0.8526, 2.951, 1.4672, 0.2179, -0.3974, 2.1758, -2.8307, -2.6732, -1.3108, -3.0681, 2.1019, -1.4294, 0.62, -2.1052, -2.7503, -2.5259, 1.4048, 0.7862, -0.1035, 1.4313, -0.5693, 0.9399, 0.7903, 0.5979, -0.4651, -2.0286, -2.3785, 2.8089, -1.0877, - 3.0768, 3.0871, 1.3518, -0.6851, 1.1816, 0.4084, -0.968, 2.0656, 0.4707, 2.6465, -1.1032, -0.4397, 0.883, 1.9341, 0.2067, -1.7892, -1.1294, 0.0236, 2.2447, -0.0016, -2.4569, 1.3011, 0.1323, 0.2324, 1.7881, 0.0594, 1.6305, -2.9253, 2.3082, -0.4737, -2.5163, 2.5077, -1.8836, 1.0646, 0.9688, 0.7899, 3.095, -2.4143, -1.5081, 2.2982, 0.9434, 0.2172, 1.7886, -0.9015, 0.519, -0.3429, 1.9083, 0.4161, -0.4014, -0.1439, 2.8468, -0.2496, -0.1074, -1.8299, -1.9181, 0.0392, 2.9364, 0.781, -2.2655, 1.0548, 2.8672, -0.6338, -1.9739, -0.0019, 2.5911, 2.6105, 0.0259, 2.599, 2.6628, - 0.4585, 0.5407, -1.4802, -2.5833, 1.8603, -2.6858, -1.5378, 0.49, 0.567, -0.6726, 0.2153, 0.1086, 1.6661, 1.6909, - 2.9275, 1.969, -2.0858, 0.665, -0.0527, -0.6775, 0.8972, 3.0223, -2.7193, 1.037, 0.5287, -1.1766, 2.6554, 0.7623, - 0.2427, 2.8591, 0.3513, -1.8704, -2.6839, -1.7824, -1.8646, 0.3107, -3.0856, -1.0893, 0.7007, -0.4378, -0.6749, 0.6442, 1.2368, 0.0144, -1.5965, 0.6782, 1.1261, -0.8265, 0.542, -1.1398, 2.3988, 2.2829, 0.1548, 1.517, -0.7876, 2.1919, -0.5733, 0.4783, -2.1834, 0.6489, -1.9519, -1.7456, -2.2118, 2.7953, -2.1047, -0.475, 2.8607, 0.1561, 1.9828, 2.8, -1.0371, 1.0586, -0.8251, 3.1114, - 1.1304, -2.3755, -0.4181, 1.4725, -2.8783, -2.5808, 2.4726, -3.0484, -2.5004, -2.665, -0.0327, 0.8694, 2.8987, -2.6134, -0.6152, 0.4549, 1.6674, -0.8223, 1.9084, -2.0607, -2.342, - 2.3367, 2.9468, 1.9363, 1.1442, -0.9012, - 2.8198, -0.7618, 1.4613, 2.2532, 1.2715, 2.5618, -0.8798, 1.1688, 1.7843, 2.2798, 2.0602, -2.8122, 3.0213, 3.1026, -0.8799, -0.5199, -1.8542, -0.1395, -1.5732, 2.5801, -0.5741, -2.7435, - 2.537, 2.3652, and 0.4826.

9. A data processing apparatus, comprising a unit configured to perform the method according to any one of claims 1 to 8.

10. A data processing apparatus, comprising a processor and a transceiver that is internally connected to and communicates with the processor, wherein

the processor is configured to obtain a sequence set, wherein the sequence set comprises a plurality of sequences, there is at least one first sequence in the plurality of sequences, an auto-ambiguity function of each first sequence is in a drawing pin form, and side lobe energy of a cross-ambiguity function between each first sequence and another sequence in the sequence set is less than a first threshold; and
the transceiver is configured to send a signal based on a sequence in the sequence set, wherein the signal is used for velocity measurement and/or ranging.

11. A computer-readable storage medium, configured to store a computer program, wherein the computer program comprises instructions used to perform the method according to any one of claims 1 to 8.

Sequence

101

Signal

Reflected signal

102

FIG. 1

Obtain a sequence set  S201

Initialize a quantity of iterations and m  S202

Define a matrix $\Lambda_p$ and a matrix $U_{K,p}$  S203

Define a matrix U, and determine a real number $\lambda_U$  S204

Calculate a matrix $C_{s_m^{(t)}}$ and a matrix $A_{s_m^{(t)}}$  S205

Determine a real number $\lambda_m^{(t)}$  S206

Calculate a first reference sequence $S_{ac1}$  S207

Calculate a second reference sequence $S_{ac2}$  S208

Calculate an updated sequence $S_{ac}$ of a sequence $S_m^{(t)}$  S209

TO
FIG. 2B

TO
FIG. 2B

FIG. 2A

CONT.
FROM
FIG. 2A

CONT.
FROM
FIG. 2A

Determine
whether side lobe energy of the
updated sequence $S_{ac}$ is greater than
side lobe energy of the sequence
$s_m^{(t)}$

S210

Yes

Update the
sequence $S_{ac}$

S211

No

Update each of the sequence $s_m^{(t)}$ and a sequence $s_m^{(t+1)}$ to
the sequence $S_{ac}$

S212

Yes

Increase
m by 1, and determine whether
m is less than or equal
to M

S213

No

No

Increase
t by 1, and determine whether t is
greater than a preset threshold

S214

Yes

Output an updated sequence set

S215

FIG. 2B

FIG. 3

FIG. 4

FIG. 5A

Cross-AF between a sequence 1 and a sequence 2

FIG. 5B

Cross-AF between a sequence 1 and a sequence 3

FIG. 5C

Cross-AF between a sequence 2 and
a sequence 1

FIG. 6A

Auto-AF of a sequence 2

FIG. 6B

Cross-AF between a sequence 2 and a sequence 3

Amplitude of the AF

Doppler frequency shift

Delay

FIG. 6C

FIG. 7A

Cross-AF between a sequence 3
and a sequence 2

FIG. 7B

Auto-AF of a sequence 3

Amplitude of the AF

0

−20

−40

−60

−10

−5

0

5

Doppler frequency shift

−30

−20

−10

0

Delay

10

20

10   30

FIG. 7C

| Obtain a sequence set | S801 |

$\downarrow$

| Send a signal based on a sequence in the sequence set | S802 |

FIG. 8

| Data processing apparatus 10 |
| Processing unit | 11 |
| Sending unit | 12 |

FIG. 9

## INTERNATIONAL SEARCH REPORT

| International application No. |
| --- |
| **PCT/CN2020/137456** |

| A. | CLASSIFICATION OF SUBJECT MATTER |
| --- | --- |
| | G01S 13/02(2006.01)i;  G01S 7/41(2006.01)i |

According to International Patent Classification (IPC) or to both national classification and IPC

| B. | FIELDS SEARCHED |
| --- | --- |

Minimum documentation searched (classification system followed by classification symbols)

    G01S

Documentation searched other than minimum documentation to the extent that such documents are included in the fields searched

Electronic data base consulted during the international search (name of data base and, where practicable, search terms used)

    CNPAT, CNKI, WPI, EPODOC: 雷达, 序列, 互模糊, 自模糊, 旁瓣, 阈值, 小于, 阀值, 发送, 图钉, 预设, 相位, 编码, 多相, lobe, ambiguity, radar, function, side, fuzzy, train, cod+, beam, phase

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 107991655 A (NANJING UNIVERSITY OF AERONAUTICS AND ASTRONAUTICS) 04 May 2018 (2018-05-04) description, paragraphs [0007]-[0032] | 1-5, 9-11 |
| A | CN 101813768 A (INSTITUTE OF ELECTRONICS, CHINESE ACADEMY OF SCIENCES) 25 August 2010 (2010-08-25) entire document | 1-11 |
| A | CN 110531323 A (SHENZHEN RESEARCH INSTITUTE OF WUHAN UNIVERSITY) 03 December 2019 (2019-12-03) entire document | 1-11 |
| A | CN 107329120 A (INFORMATION ENGINEERING OF UNIVERSITY, PLA) 07 November 2017 (2017-11-07) entire document | 1-11 |
| A | CN 104977567 A (CHONGQING UNIVERSITY) 14 October 2015 (2015-10-14) entire document | 1-11 |
| A | US 2019207322 A1 (ANALOG DEVICES, INC.) 04 July 2019 (2019-07-04) entire document | 1-11 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 February 2021** | **17 March 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/137456**

| Patent document cited in search report | | | Publication date (day/month/year) | Patent family member(s) | | | Publication date (day/month/year) |
|---|---|---|---|---|---|---|---|
| CN | 107991655 | A | 04 May 2018 | None | | | |
| CN | 101813768 | A | 25 August 2010 | None | | | |
| CN | 110531323 | A | 03 December 2019 | None | | | |
| CN | 107329120 | A | 07 November 2017 | CN | 107329120 | B | 20 August 2019 |
| CN | 104977567 | A | 14 October 2015 | CN | 104977567 | B | 31 July 2018 |
| US | 2019207322 | A1 | 04 July 2019 | DE | 102018131937 | A1 | 04 July 2019 |
| | | | | US | 10670712 | B2 | 02 June 2020 |

Form PCT/ISA/210 (patent family annex) (January 2015)

**REFERENCES CITED IN THE DESCRIPTION**

**Patent documents cited in the description**

- CN 201911330617